Europäisches Patentamt

European Patent Office

Office européen des brevets

(11) Publication number: **0 010 660**
**B1**

(12) **EUROPEAN PATENT SPECIFICATION**

(45) Date of publication of patent specification: **02.01.85**

(51) Int. Cl.⁴: **G 01 V 1/22, G 01 V 13/00**

(21) Application number: **79103905.0**

(22) Date of filing: **11.10.79**

(54) **Method and apparatus for seismic geophysical exploration.**

(30) Priority: **30.10.78 US 955745**

(43) Date of publication of application:
**14.05.80 Bulletin 80/10**

(45) Publication of the grant of the patent:
**02.01.85 Bulletin 85/01**

(84) Designated Contracting States:
**BE DE FR GB IT NL**

(56) References cited:
**FR-A-2 102 838**
**FR-A-2 174 223**
**US-A-2 982 943**
**US-A-4 010 442**
**US-A-4 112 412**

(73) Proprietor: **PHILLIPS PETROLEUM COMPANY**
**5th and Keeler**
**Bartlesville Oklahoma 74004 (US)**

(72) Inventor: **Tims, Harold Arthur**
**Route 4 Box 67B**
**Bartlesville, Oklahoma (US)**
Inventor: **Montgomery, Orin Carroll**
**2507 Hill Drive**
**Bartlesville, Oklahoma (US)**
Inventor: **Elliott, Sheldon Ellwood**
**Flat 6 10 Ashley Place**
**London, SWI (GB)**
Inventor: **Doggett, William Nance**
**1532 S. Osage**
**Bartlesville, Oklahoma (US)**

(74) Representative: **Dost, Wolfgang, Dr.rer.nat.,**
**Dipl.-Chem. et al**
**Patent- und Rechtsanwälte Bardehle-**
**Pagenberg-Dost-Altenburg & Partner Postfach**
**86 06 20**
**D-8000 München 86 (DE)**

Courier Press, Leamington Spa, England.

# 0 010 660

## Description

This invention relates to a system and method for seismic exploration. In a specific aspect this invention relates to a seismic exploration system in which a plurality of remote geophone monitoring means are coupled to a central control and recording station by means of a two-way RF link. In another specific aspect this invention relates to a seismic exploration system in which a two-way RF link is utilized to provide a central control and recording station with information regarding the operational status of a plurality of remote geophone monitoring means to thereby increase the reliability of the seismic exploration system. In still another aspect this invention relates to a seismic exploration system in which error detection and retransmission of data, as required to correct any errors detected, is utilized to increase the reliability of data transmitted by means of a two-way RF link which couples a central control and recording station to a plurality of remote geophone monitoring units.

The seismic method of mapping geological subsurfaces of the earth involves the use of a source of seismic energy and the reception of the seismic energy by an array of seismic detectors, generally referred to as geophones. When used on land the source of seismic energy generally is a high explosive charge electrically detonated in a borehole located at a selected grid point in a terrain or is an energy source capable of delivering a series of impacts to the earth's surface such as that used in Vibroseis systems. The acoustic waves generated in the earth by the explosion or impacts are reflected back from pronounced strata boundaries and reach the surface of the earth after varying intervals of time, depending on the distance and the nature of the subsurface traversed. These returning acoustic waves are detected by the geophones, which function to transduce such acoustic waves into representative electrical signals. The plurality of geophones are arrayed in a selected manner to detect most effectively the returning acoustic waves and generate electrical signals representative thereof from which data may be deduced concerning the geological subsurface of the earth.

Many different types of geophones are commercially available. Preferably the Mark L15B geophone manufactured by Mark Products, Inc. is utilized in the present seismic exploration system.

It is common today in seismic exploration to utilize forty-eight or more geophone stations simultaneously for every shot-point location. The geophone stations are commonly laid out in a line which is referred to as a "seismic exploration spread". A forty-eight channel spread will usually extend for 11.2 to 14.4 km (seven to nine miles). In many seismic systems utilized today in seismic exploration, the geophone stations are electrically connected to a central recording apparatus by means of long multiconductor or coaxial cable. The electrical signals generated by the geophone stations are coupled through the cable to the central recording apparatus.

It is well known that numerous problems are involved in the use of long cables to bring the signals from the geophone stations to the central recording station. Resistivity losses can be quite high; the lines tend to pick up extraneous electrical noises; the cables tend to dictate that the arrays of geophones be linear; the geophone intervals are fixed by the construction of the cables; laying out the cable itself may be a major undertaking, such as in jungles, swamp or marsh; the cables are subject to attack by animals as well as humans; the cables are subject to water infiltration and mechanical damage; and the cables are expensive and require repairs, upkeep and spare parts in remote areas.

There have been many attempts to develop improved seismic geophysical exploration systems which, among other things, eliminate the use of long cables. The most common attempt has been the development of RF links to replace the long cables previously utilized. Many of these attempts have centered around the use of remote geophone monitoring units which are equipped with radios capable of transmitting the data obtained by the geophone stations to the central recording unit. However, numerous problems have been encountered in the implementation of RF communication systems in seismic exploration systems. The primary problem encountered has been the lack of reliability of the data received at the central recording station. Under noisy conditions data is lost during transmission and data is erroneously received causing unacceptable error rates in the data recorded at the central recording station. Also under noisy conditions, the time of the shot by the seismic energy source may be uncertain and thus lead to degradation of the seismic data.

In an effort to correct these problems which have been encountered in the use of a RF link between a plurality of remote geophone monitoring units and a central recording unit, more recent systems have employed recording systems at the remote geophone monitoring units. The remote geophone monitoring units are controlled via a one-way RF communications link between a central control unit and the remote geophone monitoring unit. Data received by the geophones is converted to digital data by means of the remote geophone monitoring unit and is recorded in a recording unit which is a part of the remote geophone monitoring unit. After the survey has been completed the recording unit is simply picked up and carried to the central location.

Use of a recording unit and a one-way RF communications link eliminates problems in the transmission of data from the remote geophone monitoring means to the central recording unit but causes additional problems which are undesirable in a seismic exploration system. The principal problem inherent in such systems is that there is no means by which an operator can determine if the remote geophone monitoring units are operational and there is also no means by which an operator can determine if the seismic exploration system is operational because the data being obtained is n

2

**0 010 660**

available until the survey has been completed. The system inadequacies can lead to lost time and thus economic loss if one of the remote geophone monitoring means is not operational or if a particular set of geophones is not operational or if the recording system at the remote geophone monitoring means is not operational. Other subsystem failures can also lead to a loss of data. This loss of data or system inoperability cannot be determined during the survey because no data is available to the operator during the survey. Thus, system reliability is greatly reduced even though the problems inherent in the use of cables have been overcome by use of a one-way RF communications link to control the remote geophone monitoring units.

In US—A—4 112 412 a remote storage unit S used as a storage register within remote geophone means is disclosed. Once data is removed from the storage register for transmission, the data is irretrievibly lost. US—A—4 010 442 discloses the transmission of a confirming signal that the remote unit is operationable but does not disclose transmission of the data obtained during the self-test.

It is thus an object of this invention to provide a seismic exploration system in which a plurality of remote geophone monitoring means are coupled to a central recording and control station by means of a two-way RF link. It is another object of this invention to provide a seismic exploration system in which a two-way RF link is utilized to provide a central recording and control station with information regarding the operational status of a plurality of remote geophone monitoring units to thereby increase the reliability of the seismic exploration system. Still another specific object of this invention is to provide a seismic exploration system in which error detection and retransmission of data, as required to correct any errors detected, is utilized to increase the reliability of data transmitted by means of a two-way RF link which couples a central recording station to a plurality of remote geophone monitoring means.

In accordance with the present invention which is set out in claims 1 and 10, a seismic exploration system is provided which includes a seismic energy source for generating acoustic waves through the earth and a plurality of remote geophone monitoring means, each of which is positioned in relatively close physical proximity to one or more geophone stations. Each of the geophone stations is coupled by means of a short conductor to the remote geophone monitoring means associated therewith, so that electrical signals generated by the geophones in the geophone stations can be transferred from the geophone station to the associated remote geophone monitoring means. A remote geophone monitoring means is also used to control the seismic energy source.

A central recording and control unit is linked to the plurality of the remote geophone monitoring means, including the remote geophone monitoring means controlling the seismic energy source, by means of a two-way RF link.

Control of the seismic exploration system is initiated from the central recording and control unit and also the data obtained during the seismic survey is recorded for processing at the central recording and control unit.

Prior to every shot or impact from the seismic energy source, the central recording and control unit interrogates only the remote geophone monitoring means which are to be used to record a particular shot to determine if the remote geophone monitoring means are operational and can be used for recording purposes. Each remote geophone monitoring means has a specific address. When addressed by the central recording and control station the remote geophone monitoring means performs a self-test and transmits the results of the self-test to the central recording and control station. Each remote geophone monitoring means is tested in this manner until all of the remote geophone monitoring means, which are to be utilized in recording seismic data from a particular shot or impact, have been tested. If any remote geophone monitoring means fails to pass the self-test, indicating that the remote geophone monitoring means is not operable, the activation of the seismic energy source is delayed until the remote geophone monitoring means has been put into an operable condition or has been replaced by an operable remote geophone monitoring means.

After the operability of all of the remote geophone monitoring means, which are to be used in recording a particular shot or impact, has been established, a fire command is issued from the central recording and control station to the remote geophone monitoring means which is controlling the seismic energy source. The seismic energy source is activated in response to the fire command and energy is imparted into the earth.

The energy which is reflected is sensed by the geophone stations, converted to electrical signals and transmitted to the remote geophone monitoring means where the seismic data is stored in memory in digital form.

After the data has been stored in the memory of the plurality of remote geophone monitoring means, a first remote geophone monitoring means is addressed by the central recording and control station and is commanded to transmit the data stored in memory to the central recording and control station. The data is retrieved from the remote geophone monitoring means memory and is transmitted to the central recording and control station over the RF link. Error detection is utilized to insure that the data received at the central recording and control station is valid. If the error rate is unacceptable then the central recording and control station commands the remote geophone monitoring means to retransmit the data. The retransmitted data is utilized to replace the erroneous data of the first

3

transmission and this procedure is continued until the error rate of the seismic data transmitted from the first remote geophone monitoring means is acceptable. After acceptable data has been received from the first remote geophone monitoring means and recorded at the central recording and control station, data is retrieved from the remaining plurality of remote geophone monitoring means in a manner similar to that previously described for the first remote geophone monitoring means. After all data from a shot or impact has been recorded at the central recording and control station, the procedure set forth in the preceding paragraphs is repeated until a seismic survey of a desired area has been completed. Different remote geophone monitoring means may be used to change the spread configuration if desired.

Other objects and advantages of the invention will be apparent from the detailed description of the invention and the appended claims as well as from the detailed description of the drawings in which:

Figure 1 is an illustration of a possible physical arrangement of the components of the seismic exploration system of the present invention;

Figure 2a is a block diagram of the central recording station of the present invention;

Figure 2b is a block diagram of the remote telemetry unit of the present invention;

Figure 3 is a schematic diagram of the RF interface illustrated in Figure 2b;

Figure 4 is a schematic diagram of the RF receiver and the RF transmitter illustrated in Figure 2b and in Figure 3;

Figure 5 is a schematic diagram of the digital phase locked clock illustrated in Figure 3;

Figure 6 is a schematic diagram of the transmit data and control logic illustrated in Figure 3;

Figure 7 is a schematic diagram of the memory control unit illustrated in Figure 2b;

Figure 8 is a schematic of the memory location write control illustrated in Figure 7;

Figure 9 is a schematic of the write address counter illustrated in Figure 7;

Figure 10 is a schematic of the read address counter illustrated in Figure 7;

Figure 11 is a schematic of the status logic illustrated in Figure 7;

Figure 12 is a schematic of the 4 phase memory clock logic illustrated in Figure 7;

Figure 13 is a schematic of the memory cycle control logic illustrated in Figure 7;

Figure 14 is a schematic of the memory illustrated in Figure 2b;

Figure 15 is a schematic of the test interface illustrated in Figure 2b;

Figure 16 is a schematic of the calibrator card illustrated in Figure 2b;

Figure 17 is a schematic of the voltage divider network illustrated in Figure 16;

Figure 18 is a schematic of the preamplifier illustrated in Figure 2b;

Figure 19 is a schematic of the notch filter and the alias filter illustrated in Figure 2b;

Figure 20 is a schematic of the gain ranging amplifier system and the A/D conversion system illustrated in Figure 2b;

Figure 21 is a block diagram of the power supply regulator illustrated in Figure 2b;

Figures 22a and 22b are schematics of the voltage regulators illustrated in Figure 21;

Figure 23 is a block diagram of a separate testing unit for the remote telemetry unit illustrated in Figure 2b;

Figure 24 is a schematic of the ramp generator illustrated in Figure 23;

Figure 25 is a schematic of the reference voltage source illustrated in Figure 23;

Figure 26 is a schematic of the voltage controlled oscillator illustrated in Figure 23;

Figure 27 is a schematic of the sine wave shaper illustrated in Figure 23;

Figure 28 is a schematic of the sawtooth wave generator illustrated in Figure 23;

Figure 29 is a schematic of the output network illustrated in Figure 23;

Figure 30 is a schematic of the RF transmitter illustrated in Figure 2a;

Figure 31 is a schematic of the RF receiver illustrated in Figure 2a;

Figure 32 is a block diagram of the 2900 microprocessor system illustrated in Figure 2a;

Figure 33 is a schematic of the interrupt logic illustrated in Figure 32;

Figure 34 is a schematic of the conditional branch logic illustrated in Figure 32;

Figure 35 is an illustration of the location of a random access memory utilized to develop and test programs for the 2900 microprocessor illustrated in Figure 2a;

Figure 36 is a schematic of the PROM bug RAM illustrated in Figure 35;

Figure 37 is a schematic of the decoding logic illustrated in Figure 36;

Figure 38 is a schematic of the computer-to-computer interface illustrated in Figure 2a;

Figure 39 is a schematic of the command formatter illustrated in Figure 2a;

Figure 40 is a schematic of the decoding circuit illustrated in Figure 39;

Figure 41 is a block diagram of the data formatter illustrated in Figure 2a;

Figure 42 is a schematic of the clock signal generation circuit illustrated in Figure 41;

Figure 43 is a schematic of the decoding circuit illustrated in Figure 41;

Figure 44 is a schematic of the parity count circuit illustrated in Figure 41;

Figure 45 is a block diagram of the magnetic tape unit, the magnetic tape controller and the magnetic tape interface illustrated in Figure 2a;

Figure 46 is a schematic of a first control unit illustrated in Figure 45;

Figure 47a and 47b are schematics of a second control unit illustrated in Figure 45;

Figure 48 is a schematic of the interface illustrated in Figure 45;

Figure 49 is a schematic of the gate illustrated in Figure 48;

Figure 50 is a schematic of the decoder illustrated in Figure 48;

Figure 51 is a block diagram of the data display unit illustrated in Figure 2a;

Figure 52 is a timing diagram associated with the data display system illustrated in Figure 51;

Figure 53 is a timing diagram associated with the data display system illustrated in Figure 51;

Figure 54 is a schematic of the first-in first-out memory illustrated in Figure 51;

Figure 55 is an illustration of the manner in which the sample-and-hold circuits, illustrated in Figure 51, are addressed;

Figure 56 is a schematic of the control logic illustrated in Figure 51;

Figure 57 is a schematic of the data display control illustrated in Figure 51;

Figure 58 is a schematic of the AGC circuit illustrated in Figure 57;

Figure 59 is a schematic of the full wave rectifier and the integrator illustrated in Figure 58;

Figure 60 is a schematic of the central recording station countdown circuit illustrated in Figure 2a;

Figure 61 is a schematic of the decoding circuit illustrated in Figure 60;

Figure 62 is a schematic of a first counter illustrated in Figure 60;

Figure 63 is a schematic of a second counter illustrated in Figure 60;

Figure 64 is a schematic of the enabling circuit illustrated in Figure 60;

Figure 65 is a schematic of the output circuit illustrated in Figure 60;

Figure 66 is a schematic of the switch-and-display interface and the portion of the operator and display panel which is related to the switch-and-display interface, both of which are illustrated in Figure 2a;

Figure 67 is a schematic of the address and command decoding and buffering circuit which is illustrated in Figure 61;

Figure 68 is a schematic of the roll along panel interface and the portion of the operator control and display panel which is related to the roll along panel interface, both of which are illustrated in Figure 2a;

Figure 69 is a schematic of the data display control panel and the data display control panel interface illustrated in Figure 2a;

Figure 70 is a schematic of the time base generator illustrated in Figure 69;

Figure 71 is a schematic of the address decoding illustrated in Figure 69;

Figure 72 is a schematic of the self-scan interface illustrated in Figure 2a; and

Figure 73 is a schematic of the magnetic tape panel and the magnetic tape panel interface illustrated in Figure 2a.

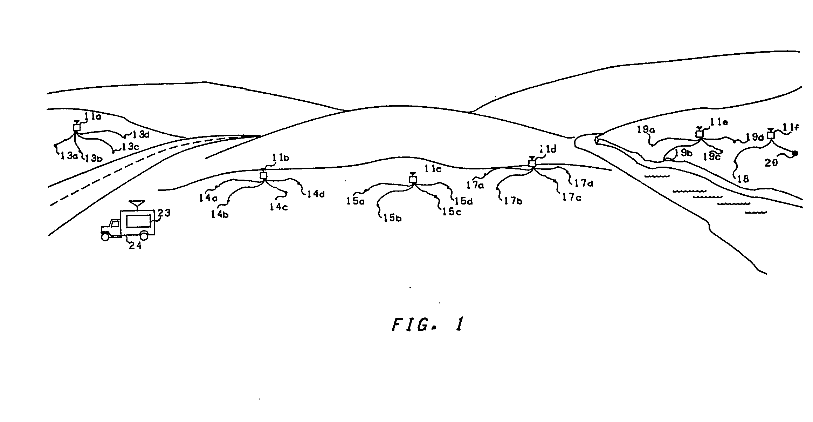

Referring now to the drawings and in particular to Figure 1, there is illustrated a portion of a geophone spread. The geophone stations 13 a—d, 14 a—d, 15 a—d, 17 a—d, and 19 a—d, can be made up of a plurality of individual geophone sensors arranged in a predetermined manner so as to obtain maximum cancellation of noise and maximum signal resolution. Each of a plurality of remote geophone monitoring means (referred to hereinafter as an RTU) 11 a—e is associated with a respective group of the geophone stations. In the presently preferred embodiment, each group is composed of four geophone stations. Each RTU 11 a—f is equipped with a radio antenna and an associated transceiver. A shot point 20 having an RTU 11f and a geophone station 18 associated therewith is utilized to supply seismic energy to the earth. In this preferred embodiment, the shot point 20 is an explosive charge located in a shot hole but other types of seismic energy sources may be utilized if desired. The operation of the seismic exploration system is controlled by the use of a central recording and control unit (referred to hereinafter as the CRS) 23 which is conveniently located in the vehicle 24. The CRS 23 also has an antenna and transceiver associated therewith. The CRS 23 is designed to be portable and may be located in other facilities such as a helicopter, boat, or any desired structure.

Only a portion of the geophone spread is illustrated in Figure 1 for the sake of convenience. If a common geophone spread having 48 geophone stations is utilized, then twelve RTUs are utilized in the preferred embodiment of this invention to monitor the 48 geophone stations with the output of 4 geophone stations being supplied to each RTU. A thirteenth RTU is needed to control the shot point and would be also available to monitor two other geophone stations if desired. In modern seismic techniques, several hundred geophone stations may be laid out in a single, long, extended line or in two or more substantially parallel lines. If desired, additional geophones can be located in transversing line segments. If only 48 geophone stations are being used to monitor each shot, then only the twelve RTUs associated with the 48 geophone stations, which are to be used to monitor a particular shot, and the RTU associated with the shot point are activated by the CRS 23 located in truck 24. A first shot is then fired and the seismic data is recorded at the CRS 23 located in vehicle 24. A different set of RTUs may then be activated to record the next shot. This procedure is continued until the seismic survey is completed. The vehicle 24 may be moved easily to stay in range of the RTUs being used to monitor a particular shot.

If a plurality of geophone spreads are used it may be possible to fire a shot and record the results for a first spread and, while a second shot is being readied for the first spread, a first shot can be fired for a second spread and the results recorded at the CRS 23 located in truck 24. In this manner the use of the seismic exploration system is enhanced.

As is illustrated in Figure 1, the system of the present invention is particularly applicable to situations in which the terrain presents substantial variations. The use of the RF link between the CRS 23 and the plurality of RTUs 11 a—f provides a means by which varied terrain may be surveyed without the need to place cables across roads, large depressions, mountainous areas, rivers, jungles, or other similar areas. The individual geophone stations and their associated RTUs may be set out as illustrated in Figure 1 and the CRS 23 may then be moved to convenient locations to monitor and control the seismic exploration system.

All operations start with the CRS 23 located in vehicle 24. When it is desired to fire a shot to collect seismic data, the CRS 23 first turns on the RTUs, which have been activated during deployment thereof, and which are associated with the geophone which are to be utilized to monitor a particular shot to be fired. The CRS 23 then interrogates each of these RTUs to determine if the RTU is operable. If any RTU is found to be inoperable, then the RTU is either repaired or replaced before the shot is fired. If all of the selected RTUs are operable, then the CRS 23 issues a fire command to the RTU 11f which is controlling the seismic energy source 20. The shot is fired in response to the fire command and the reflected energy is sensed by the geophone stations 13 a—d, 14 a—d, 15 a—d, 17 a—d and 19 a—d. The geophone stations 13 a—d, 14 a—d, 15 a—d, 17 a—d and 19 a—d transduce the reflected acoustical energy to analog electrical signals and then these electrical signals, representative of the seismice data, are supplied to the RTUs 11 a—e. The analog electrical signals are sampled, with the sampled values being converted to digital data and stored in memory at the respective one of the RTUs 11 a—e.

After the seismic data has been stored in memory at the RTUs 11 a—e, the CRS 23 first interrogates RTU 11f to determine the time at which the shot was fired (uphole data). The geophone station 18 provides the "uphole" data to the RTU 11f. Once this information has been obtained, the CRS 23 begins an interrogation of the RTUs 11 a—e to obtain the seismic data stored in memory at the RTUs 11 a—e. RTU 11a is first addressed and commanded to send the seismic data stored in memory in RTU 11a. In response to this command, data is transmitted from RTU 11a to the CRS 23. The CRS 23 checks this data to determine if errors are present in the data. If the error rate of the data transmitted from RTU 11a is greater than a specified limit, the CRS 23 commands the RTU 11a to retransmit the data. The data is retransmitted from the RTU 11a in response to the retransmit command and the retransmitted data is again checked for errors. The retransmission is utilized to replace bad data in the first transmission. This process is continued until the seismic data stored in the memory at the CRS 23 has an acceptable error rate.

After the seismic data has been obtained from RTU 11a the CRS commands RTU 11a to shut down and all functions of the RTU 11a, except the functions which monitor commands from the CRS 23, are shut down to conserve battery power. The CRS 23 then commands RTU 11b to transmit the seismic data stored in memory in RTU 11b. The seismic data is obtained from RTU 11b in the manner previously described for RTU 11a and this procedure is continued until the data has been obtained from all the RTUs which were utilized to record the seismic data from the particular shot fired.

After all of the seismic data from the particular shot has been stored in memory in CRS 23, a second shot may then be fired to obtain a second set of seismic data. The shot point 20 may be moved and the same RTUs utilized to record the shot or different RTUs may be utilized to record the shot. It is very common to shut down RTU 11a and turn on RTU 11g, not illustrated, in such a manner so as to extend the spread being utilized to record a shot without actually having to move geophone stations or RTUs. This technique is commonly referred to as "roll along".

The procedure set forth in the preceding paragraphs is repeated for the second shot and for any number of subsequent shots until the seismic survey is completed. The seismic data stored in memory at CRS 23 can be shipped or otherwise taken to a central processing facility where the seismic data can be interpreted.

The seismic exploration system of the present invention, as illustrated in Figure 1, has the advantage of providing a reliable two-way RF link which facilitates compiling of the seismic data at a central location while avoiding the need for long cable runs. Error detection techniques are utilized to increase the reliability of the twoway RF link, and systems status checks are utilized to increase the reliability of the seismic exploration system and to ensure that the seismic exploration system is operational during the seismic survey. The seismic data obtained from the RTUs 11 a—e and transmitted to the CRS 23 is displayed at the CRS 23 in such a manner that the operator can determine if the system is operable without having to process the seismic data. Also, alarms are provided at the CRS 23 to indicate if a portion of the system is malfunctioning so immediate remedial action may be taken.

The seismic exploration system of the present invention has been illustrated and described in a very general nature in Figure 1. The following description is a more detailed description of a preferred embodiment of the seismic exploration system of the present invention. The detailed description of the seismic exploration system is set forth in terms of a single RTU 11a and CRS 23. The control of the seismic energy source 20 is also described in detail.

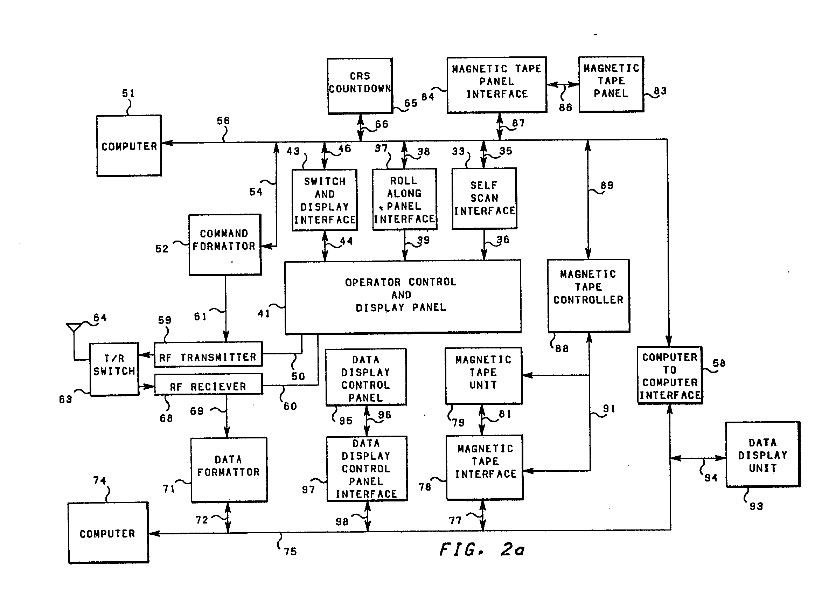

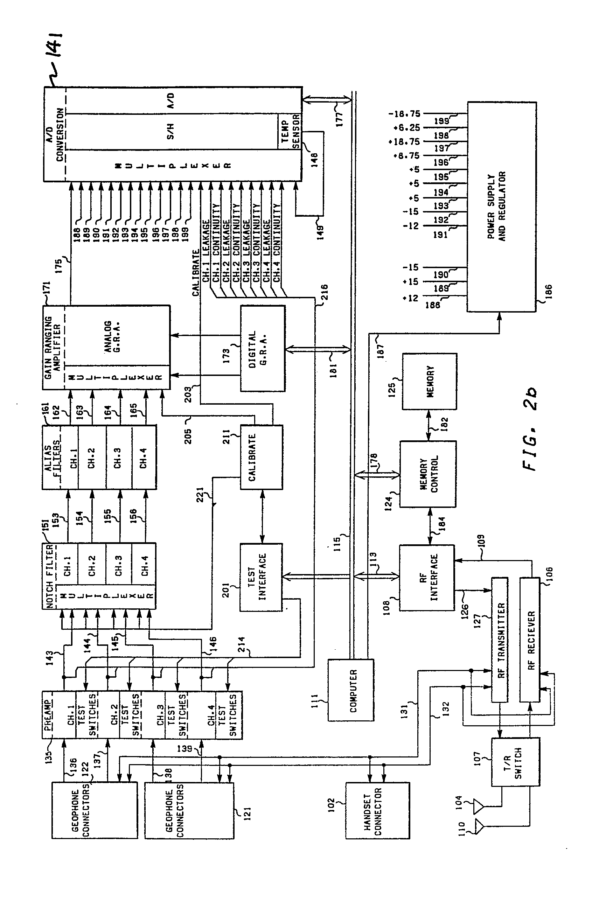

The CRS 23, illustrated in Figure 1, is illustrated in block diagram form in Figure 2a. The RTU 11a, illustrated in Figure 1, is illustrated in block diagram form in Figure 2b. It should be noted that RTU 11f, which is illustrated as controlling shot point 20 and geophone station 18 in Figure 1, can be identical to RTU 11a. Thus Figure 2b will be utilized to describe not only the monitoring of the geophone stations but also the control of the seismic energy source utilized to impart energy into the earth. Figures 2a and 2b represent a complete illustration of the seismic exploration system of the present invention in block diagram form. In the following description, the seismic exploration system of the present invention, as illustrated in Figures 2a and 2b, is described as an integral system and thus Figures 2a and 2b are referred to alternatively throughout the following description.

Referring now to Figures 2a and 2b, the seismic exploration system is under the control of computer means 51 which is located in the CRS illustrated in Figure 2a. The operator inputs information into computer means 51 from the operator control and display panel 41. System operation is initiated from the operator control and display panel 41. To begin a seismic survey the CRS, illustrated in Figure 2a, is first energized. An operator then carries the RTU, illustrated in Figure 2b, to a desired location. The operator who is deploying the RTU communicates with the operator at the CRS by means of a handset connector 102.

After the RTU, illustrated in Figure 2b, has been deployed at its desired location, the operator at the CRS, illustrated in Figure 2a, will assign the RTU a number and will also assign to each RTU four station numbers. The RTU number and the four station numbers are stored in memory in computer means 51. When the operator at the CRS desires to communicate with a particular RTU, the number of the RTU is input to computer means 51 and computer means 51 issues the proper address to the RTU with which communication is desired to be established.

When the four station numbers are input to the computer means 51, the computer means 51 automatically issues a test command which will be referred to as a normal test. The normal test command is input to the command formatter 52 through bus 54 which is operably connected to the computer bus 56. The computer bus 56 extends from computer means 51 to the computer-to-computer interface 58. The normal test command is converted from parallel data to serial data by the command formatter 52 and is input to the RF transmitter 59 through signal line 61. The transmit/receive (t/r) switch 63 is placed in a transmit position and the normal test command is transmitted by the RF transmitter 59 through antenna 64 to the RTU illustrated in Figure 2b. The normal test command is received at antenna 104 and is relayed to the RF receiver 106 through the t/r switch 107. The t/r switch 107 is normally in a receive mode. The normal test command is supplied from the RF receiver 106 to the RF interface 108 through signal line 109. From the RF interface 108, the normal test command is input to computer means 111 through bus 113 which is operably connected to the computer bus 115.

In response to the normal test command, computer means 111 implements a number of tests of the RTU. The four geophone stations which are connected to the RTU through the geophone connectors 121 and 122 are checked for continuity, response, and leakage. Basic performance tests are performed on the geophones and the RTU and all of the power supply voltages are checked to insure that sufficient power is available for operation of the RTU.

The test interface 201 and the calibrate card 211 provide the required voltage levels and the control signals which are utilized in the normal tests. The test interface 201 and the calibrate card 211 essentially act as interfaces for computer means 111 and allow computer means 111 to control the performance of the normal test.

Data obtained during the normal test is supplied to the multiplexer associated with the analog to digital (A/D) conversion system 141. This analog data is sampled, with the samples being held and then converted from analog to digital form. The resulting digital data is then stored in memory unit 125.

The temperature of the RTU is checked during the normal test. The RTU is designed to operate from −20°C to +70°C. Temperature sensor 148 supplies a signal 149 which is representative of the temperature of the RTU to the multiplexer associated with the A/D conversion unit 141. Signal 149 provides an indication of the temperature of the RTU and thus allows an operator at the CRS to determine if the RTU temperature is within the design limitations.

The battery voltages which are supplied from the power supply and regulator 186 are supplied as inputs to the multiplexer associated with the A/D conversion unit 141. These signals are illustrated in Figure 2b and are designated as signals 188—199. The voltage levels of signals 188—199 will be described more fully in connection with the detailed description of the power supply and regulator 186. The voltage levels are multiplexed and converted to digital form and are stored in memory. This test provides the operator at the CRS with the information concerning the availability of power to the RTU.

The A/D conversion unit 141 is also calibrated during the normal test sequence. A sequence of input voltages are supplied by calibrate card 211 by means of signal 203 to the A/D conversion unit 141 to check the linearity of the response of the A/D conversion unit. The response of the A/D conversion unit 141 is stored in memory and provided as a means by which the A/D conversion unit 141 can be calibrated if the test shows that the A/D conversion is not calibrated. The gain ranging

7

amplifier system 171 is calibrated by providing a signal 205 from the calibrate card 211 which is provided to the multiplexer associated with the gain ranging amplifier system 171. Signal 205 is representative of a percentage of a full scale input to the gain ranging amplifier system 171. The gain ranging amplifier system 171 amplifies signal 205 in various stages and these amplified signals are supplied via signal line 175 to the multiplexer associated with the A/D conversion unit 141. This test data is converted into digital form and stored and is later used to calibrate the gain ranging amplifier system 171 during the data acquisition sequence for the RTU.

Leakage test, continuity test and levitate test are performed on the geophone units. These tests provide an operator with information as to the operability of the geophone units.

After the computer means 51 has issued a normal test command, enough time is allowed for the normal test to be completed by the RTU. The length of time waited is determined by the CRS countdown 65, which is connected to the computer bus 56 through bus 66. After the CRS countdown 65 indicates that the RTU has completed the normal test, the computer means 51 commands the RTU to send the test data. This command is transferred to the command formatter 52 and the RF transmitter 59 and thus to the RTU RF receiver 106 in the same manner as previously described for the normal test command. In response to the command to send data, computer means 111 retrieves the normal test data from memory means 125 through memory control 124 and the normal test data is supplied to the RF interface 108. The normal test data is converted from parallel to serial form and is supplied to the RF transmitter 127 from the RF interface 108, through signal line 126. The t/r switch 107 is placed in a transmit mode and the normal test data is transmitted from the RF transmitter 127 by means of antenna 104 to antenna 64. The normal test data is thus supplied through t/r switch 63, which is in a receive mode normally, to the RF receiver 68. In normal test data is supplied to data formatter 71 through signal line 69. The normal test data is converted from serial to parallel format in the data formatter 71 which also performs a parity check to detect errors in the data transmitted from the RTU to the CRS. The normal test data is then transmitted to the computer means 74 through bus 72 which is operably connected to the computer bus 75. The computer bus 75 extends from computer 74 to the computer-to-computer interface 58.

Computer means 74 maintains a count of the number of errors in the normal test data transmitted from the RTU. This count is transmitted to the computer means 51 through computer bus 75, the computer-to-computer interface 58 and computer bus 56. The computer means 51 then makes a decision as to whether the error rate of the normal test data transmitted from the RTU is acceptable. If the error rate is acceptable the computer means 51 sends an acknowledge command to the RTU and the RTU shuts down all power except the power to the function which monitors commands from the CRS, to conserve battery power. If the error rate is not acceptable the computer means 51 does not send the acknowledge command but rather sends a retransmit command. In response to the retransmit command, the RTU will again transmit the normal test data. A parity check is performed on the retransmitted normal test data by the formatter 71 in the same manner as previously described. The good data blocks in the retransmitted test data is utilized to replace bad data blocks in the initially transmitted normal test data, which is stored in memory in computer means 74, and in this manner the error rate is reduced.

The capability to detect errors in the data that is transmitted from the RTU and to command retransmission of the data in which the error rate is unacceptable is utilized to increase the reliability of the RF link which connects the RTU to the CRS. The lack of reliability of the RF link has been a serious problem in prior art systems, as has been previously discussed, and the use of error detection and retransmission of the normal test data is one of the primary features of the present invention which presents an improvement over the prior art in that the reliability of the RF link between the CRS and the RTU is thus increased.

The error count of the new normal test data, which represents a compilation of the first normal test data transmitted and the retransmission of the normal test data, is again checked to ascertain whether or not the error rate is acceptable. If the error rate is acceptable, then an acknowledge command is sent to the RTU from computer means 51 and the RTU shuts down power. If the error rate is again not acceptable, a retransmit command will be issued and this procedure is continued until either acceptable data is obtained from the RTU or an operator decided that the data is acceptable even though there are errors still present in the data.

The procedure outlined in the preceding paragraphs is continued until all of the RTUs and the geophone stations have been deployed. After all the RTUs have been deployed, the operator will set up a particular spread configuration by selecting the RTUs to be utilized to monitor the particular shot and by selecting a particular shot point. After the spread configuration has been set up, the operator will implement a second normal test from the operator control and display panel 41. The second normal test command is supplied to the switch and display interface 43 through signal line 44 and thus to computer means 51 through bus 46 which is operably connected to computer bus 56. In response to the second normal test command from the operator control and display panel 41, computer means 51 will address all of the RTUs which have been selected as part of a particular spread configuration and will send a normal test command to all of the RTUs thus selected. This command is transmitted to the RTUs in the same manner as previously described and all of the RTUs will perform the same normal test, previously described, at the same time. After the period of time allowed for the RTUs to complete the normal test has passed, the computer means 51 will sequentially address the RTUs in the selected spread configuration to obtain the normal test data in the same manner as previously described. If the normal test data from all of the selected RTUs indicates that all of the RTUs in the particular spread configuration are operational, then computer means 51 informs the operator through the operator control and display panel 41 that the system is operational. The operator is also informed of any malfunction in the RTUs and thus total operability of the system is ensured before the seismic survey is begun. This is the second feature of the present invention which greatly increases the reliability of the seismic exploration system embodying the present invention.

After the normal test on the RTUs in the particular spread has been performed, the seismic exploration system is ready to fire a shot and record data from the shot. In preparing to fire a shot, the operator first performs a test on the RTU which is controlling the shot point to verify that the shot point is connected to the desired RTU and to verify that the shot point is in the desired location. The command to perform a test on the shot point RTU is transmitted to the shot point RTU by computer means 51 in the manner previously described for the normal test command. The test data for the shot point RTU is transmitted back to the CRS also in the manner previously described. The test data tells the computer means 51 that the shot point location is correct. The shot point is connected to one of the inputs on geophone connectors 121 or 122. The shot point is addressed through signal lines 131 and 132 which are operably connected to the RF transmitter 127 and the RF receiver 106. The data is supplied from the shot point RTU to the A/D conversion unit 141 in the same manner as previously described for the normal test data from the geophone stations.

After the test of the RTU connected to the shot point has been completed and the test results have been verified by computer means 51, computer means 51 will automatically send out a prepare for blast command to all of the RTUs in the particular spread configuration. The prepare for blast command will instruct all of the selected RTUs to power up and prepare to receive data. At the same time that the prepare for blast command is sent to the RTUs, the computer means 51 will instruct computer means 74 to prepare to receive data. The computer means 74 will instruct the data formatter 71 to prepare to receive data. After the RTUs have been prepared to receive data, a blast command issues from computer means 51 and the shot is fired in response to the blast command. All of the selected RTUs will start gathering data at a fixed time delay after the blast command is transmitted from computer means 51.

The seismic data which is sensed at the geophone stations is converted to analog electrical signals and is transmitted from four geophone stations through the geophone connectors 121 and 122 to the four channels of the preamplifier unit 135 through signal lines 136—139. The analog seismic data is amplified by a factor of 64 by preamplifier 135 and is transmitted through signal lines 143—146 to the multiplexer input of the notch filter 151. The seismic data is not multiplexed in notch filter 151, but is supplied as four separate channels of data through the notch filter 151 to the alias filters 161 through signal lines 153—156. The notch filter is utilized to attenuate 60 Hz inference which may occur from power lines and other sources of 60 Hz power. The alias filter 161 is made up of 4 channels. The alias filters 161 are utilized to prevent aliasing resulting from the sampling functions of the data acquisition system. The alias filters 161 are well known in communications art and may simply be likened to low pass filters.

The seismic data is supplied as 4 channels of data over signal lines 162—165 from the alias filters 161 to the gain ranging amplifier system 171. The gain ranging amplifier system 171, in combination with the digital gain ranging amplifier system 173, multiplexes the 4 channels of seismic data into a single channel of seismic data and amplifies the signal as needed to supply a full range input to the A/D conversion system 141. The single channel of seismic data is supplied from the gain ranging amplifier system 171 to the A/D conversion system 141 through signal line 175. The single channel of seismic data is sampled and is converted from analog to digital data by the A/D conversion system 141. The digital data thus derived is supplied to the memory control unit 124 through bus 177, which is operably connected to the computer bus 115, and through bus 178, which is also operably connected to the computer bus 115 and to the memory control unit 124. The digital gain ranging amplifier system 173 is also connected to the computer bus 115 through bus 181. The total signal supplied to the memory control unit 124 through the digital gain ranging amplifier system 173 and the A/D conversion system 141 is a digital signal which is representative both of the analog seismic data and of the amount of gain which has been applied by the gain ranging amplifier system 171. This seismic data is supplied from the memory control unit 124 to memory 125 through signal line 182 and is stored in memory 125.

After sufficient time has passed for the data acquisition procedure at the RTUs to be completed, the CRS first obtains the uphole and timebreak information from the RTU which is controlling the shot point. If the timebreak and uphole information is within specified system limitations (in this preferred embodiment 15 milliseconds), computer means 51 will commence addressing the RTUs in the particular spread configuration. The RTUs are addressed and the data is sent from the memory in exactly the manner as has been previously described for the transmission of the normal test command and the transmission of normal test data from the RTU to the CRS. The data is checked for errors, as has been previously described, and is stored in memory at computer means 74. If the data has an acceptable error rate, the data is transferred from the memory of computer means 74 through computer bus 75 and bus 77 to the magnetic tape interface 78. The seismic data is transferred from the magnetic tape interface 78 to the magnetic tape unit 79 through signal line 81 and is thus stored on the magnetic tape in the magnetic tape unit 79. Header data and other control data needed for the magnetic tape unit 79 is supplied from the magnetic tape panel 83 which is connected to the magnetic tape panel interface 84 through signal line 86. The magnetic tape panel interface 84 is connected to the computer bus 56 through bus 87. Command inputs at the magnetic tape panel 83 are transferred to the magnetic tape controller 88 through bus 89 which is operably connected to computer bus 56. The magnetic tape controller 88 implements the commands transmitted from the magnetic tape panel 83 and controls the magnetic tape unit 79 and the magnetic tape interface 78 by means of commands transmitted over signal line 91. All of the command inputs from the magnetic tape panel 83 are processed by computer means 51 before being transferred to the magnetic tape controller 88. In the CRS, as illustrated in Figure 2a, all commands are processed by computer means 51 which controls the CRS.

The seismic data may also be displayed for the operator at the data display unit 93 which is connected to the computer bus 75 by bus 94. Essentially, the data display unit may be utilized to display the seismic data in such a manner that the operator can determine if the system is operational and may also be utilized to check the RF link between the CRS and the RTU to be sure that the RF link is operational. The format of the data and the manner in which the data is displayed is controlled from the data display control panel 95 which is operably connected to the data display control panel interface 97 by means of signal line 96. The data display control panel interface 97 is operably connected to the computer bus 75 by bus 98. Command inputs at the data display control panel 95 are transferred through data display control panel interface 97 to the computer means 51 and are then transferred from computer means 51 to the data display unit 93.

The self scan interface 33 is operably connected to the computer bus 56 by bus 35 and is operably connected to the operator control and display panel 41 through signal line 36. The self scan interface 33 provides an interface for information being transmitted from computer means 51 to the operator control and display panel 41.

The roll along panel interface 37 is operably connected to the computer bus 56 through bus 38. The roll along panel interface 37 is operably connected to the operator control and display panel 41 through signal line 39. The roll along panel interface 37 is provided to display information from the computer means 51 and primarily provides an indication of which RTUs are available to be utilized in a particular spread configuration and thus aids the operator in setting up a spread configuration.

Power is supplied to the RTU from the power supply and regulator system 186. The power supply and regulator system 186 is controlled from computer means 111 by signal line 187. The power levels available from the power supply and regulator system will be more fully discussed under the detailed description of the power supply and regulator system 186.

Audio communication between the CRS and the RTU is provided from handsets located at the operator control and display panel 41 and a handset connected to the handset connector 102. Audio signals are provided from the operator control and display panel 41 to the RF transmitter 59 through signal line 50. Audio signals are provided from the RF receiver 68 to the operator control and display panel 41 through signal line 60. Audio signals from the handset connected to the handset connector 102 to the RF transmitter 127 and from the RF receiver 106 to the handset connected to the handset connector 102 are provided through signal lines 131 and 132 which provide a bidirectional signal path.

The antenna 110, which will be referred to as an anti-theft antenna, is utilized to transmit a signal to the CRS, which indicates that the RTU is tilted. Such tilting may result from wind, an animal knocking over the RTU or unauthorized handling. The signal indicating that the RTU is tilted is generated in the RF interface 108. It is important to know when the RTU is tilted both because signals transmitted from the antenna 104 may not propagate as far if the RTU is tilted, which would result in antenna misalignment, and to indicate possible theft of the RTU.

The communications link between the CRS illustrated in Figure 2a and the RTU illustrated in Figure 2b is formed by the RF transmitter 59, the RF receiver 68, the transmit/receive switch 63 and the antenna 64, illustrated in Figure 2a, together with the RF transmitter 127, the RF receiver 106, the transmit/receive switch 107 and the antenna 104 illustrated in Figure 2b. The antennas 64 and 104 are preferably parasitic element antennas normally referred to as Yagi antennas. With a Yagi antenna design, it is possible to achieve high gain with a small physical size. The Yagi design utilized in the seismic exploration system of the present invention provides 6 db of gain. All data transmission between the RF transmitter 59 and the RF receiver 106 and between the RF transmitter 127 and the RF receiver 68 is accomplished digitally using narrow band frequency modulation. The communication system is operated in the VHF band and is preferably operated within the frequency band of 216 MHz to 220 MHz and at power level of $8\pm1$ watts. At these frequencies and power level and with the antenna gains employed, the system will transmit successfully over a 160 db path loss which represents 8 to 10 miles distance when using the seismic exploration system of the present invention in a normal terrain environment.

# 0 010 660

Because the communication system employed in the seismic exploration system of the present invention operates in the VHF range, the radio waves are propagated by means of direct waves. It is thus desirable that line of sight between the receiving antenna 104 and the transmitting antenna 64 be maintained. However, due to a certain amount of refraction or bending of the radio waves that takes place in the lower atmosphere, the receiving antenna 104 can be located beyond the horizon and still receive transmission. However, the strength of the received signal will be reduced which may cause problems if large distances are involved or if the terrain or weather conditions are unfavorable. Radio waves in the VHF frequency range may also be blocked or reflected by objects which are large in size in comparison to the wave length. In the VHF frequency range at frequencies above 100 MHz, objects such as trees and buildings will block or reflect the radio waves noticeably.

Because of the characteristics of radio waves in the VHF frequency range, it is important that the communication system utilized in the seismic exploration system of the present invention be set up carefully so as to avoid obstacles which can block or reflect the radio waves or to avoid over-the-horizon transmission if possible. In this manner, radio waves having a maximum signal strength will be received by the RF receivers 106 and 68 which will enhance the reliability of the seismic exploration system of the present invention.

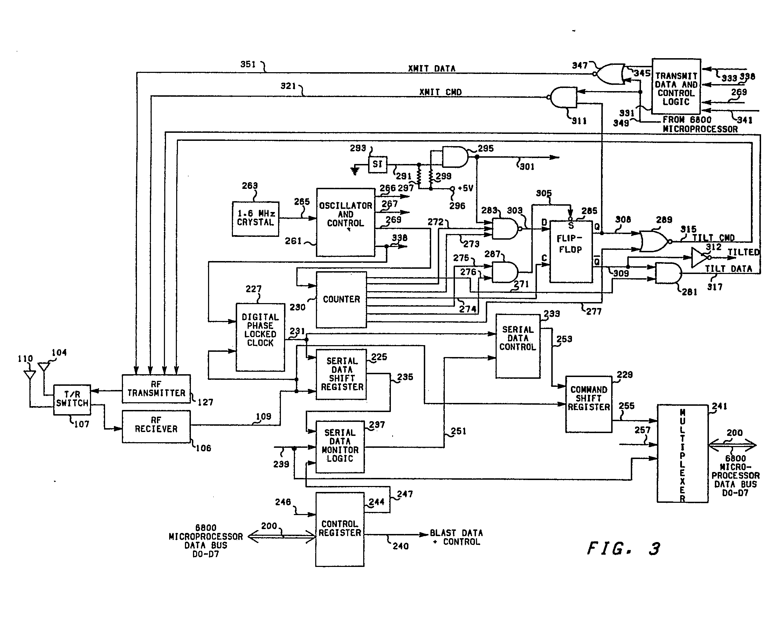

In the preceding paragraphs the seismic exploration system of the present invention has been described in terms of a functional block diagram as illustrated in Figures 2a and 2b. The following description and figures present a preferred implementation of the functional blocks illustrated in Figures 2a and 2b. Many different circuit configurations could be utilized to accomplish the functions illustrated in Figures 2a and 2b. The following circuits illustrated in Figures 3—74 are a preferred method of implementing the seismic exploration system of the present invention but the invention is not limited to these specific circuits illustrated in Figures 3—73.

Computer means 111 forms the heart of the RTU illustrated in Figure 2b. Computer means 111 is preferably a 6800 microprocessor system manufactured by Motorola Semiconductor. The 6800 microprocessor is a well-documented system. A complete description of the 6800 microprocessor may be found at pages 481—494 of "Microcomputer Base Design" by John B. Peatman, published in 1977 by McGraw-Hill Book Company, and at pages 299—340 of "Microprocessors and Microcomputers" by Branco Suchek, published in 1976 by John Wiley & Sons, Inc. These references discuss implementation of the 6800 Microprocessor system together with programming of the 6800 Microprocessor system. A number of references are also supplied by Motorola Semiconductor: M6800 Microcomputer System Design Data, (1976); M6800 Microprocessor Applications Manual (1976) and M6800 Programming Manual (1976).

Figure 3 is illustrative primarily of the RF receiver 106, the RF transmitter 127 and the RF interface 108 illustrated in Figure 2b. As has previously been described in reference to Figure 2b, the t/r switch 107 illustrated in Figure 3 is normally in a receive mode. Commands from the CRS are supplied via the communications antenna 104 through the t/r switch 107 to the RF receiver 106. The commands from the CRS are then supplied by means of signal line 109 to the serial data shift register 225, the digital phase locked clock 227, and the command shift register 229. Each command from the CRS will consist of a preamble, a sync byte, an address and a command word. The preamble is utilized simply to alert the RTU that a command is being sent from the CRS. The sync byte provides synchronization between the CRS and the RTU and the address identifies a specific RTU which is being addressed by the CRS. The command word tells the RTU 6800 microprocessor what RTU function is to be performed. The digital phase locked clock 227 detects the fact that a carrier wave has been detected by the RF receiver 106 and supplies a 6.25 KHz clock signal 231 to the serial data control 233 and the serial data shift register 225. The 6.25 KHz frequency represented by signal 231 is equal to the data rate of the transmission from the CRS.

The serial data is shifted through the serial data shift register 225 in response to the clock signal 231. The serial data is supplied from the serial data shift register 225 by means of signal line 235 to the serial data monitor logic 237. The serial data monitor logic 237 is also supplied with a signal 239 which is representative of the specific address for the particular RTU. Signal 239 is also supplied as one input to the multiplexer 241.

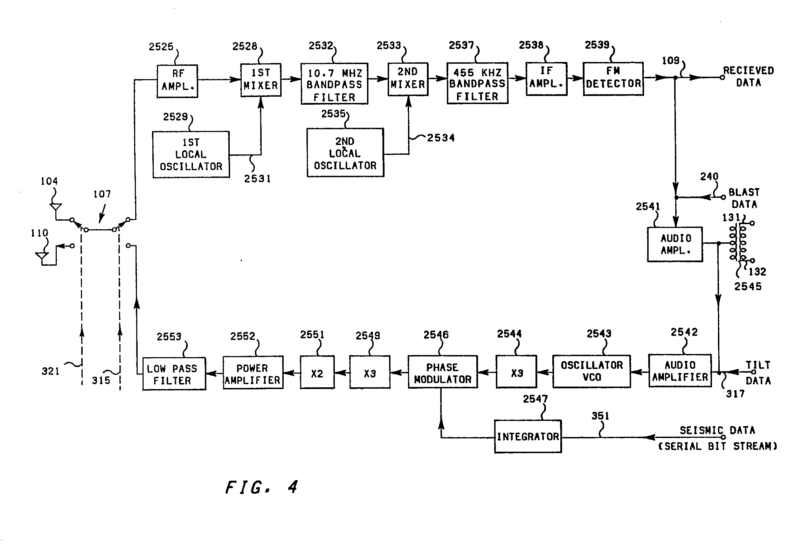

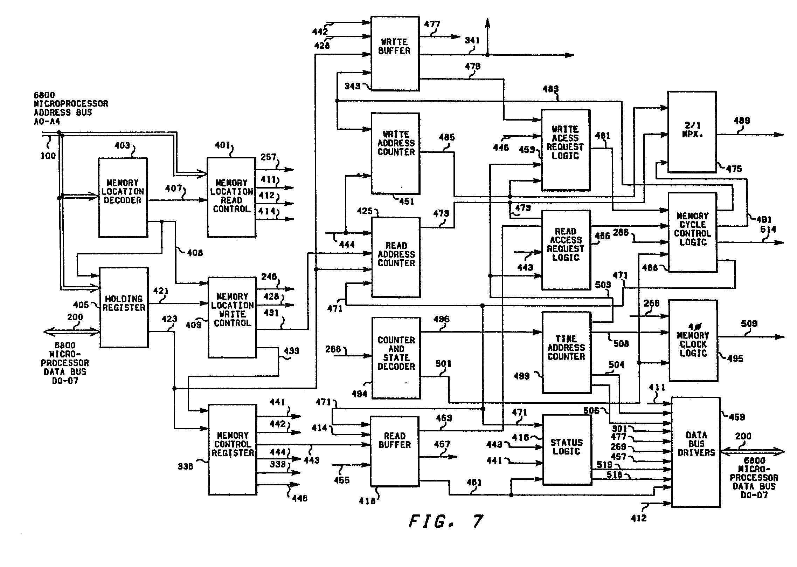

The control register 244 is operably connected to the 6800 microprocessor data bus 200. Signal 246 which is a command from the 6800 microprocessor to load data into the control register 244 is supplied to the control register 244 from the memory location write control 409 illustrated in Figure 7. The blaster control signal 240 is supplied as an output from the control register 244 and is provided to the RF transmitter 127 and the RF receiver 106 as is illustrated in Figure 4. Signal 247 is supplied as an output from the control register 244 to the serial data monitor logic 237. Signal 247 is utilized to enable the RTU to respond not only to its specific address but also to an address of all of the RTUs from the CRS.

The serial data monitor logic 237 is utilized to determine if the address from the CRS is the same as the specific address of the RTU. It is also utilized to synchronize the received data and determine if a valid preamble has been sent. If the address from the CRS is valid, the serial data monitor logic 237 will supply an enabling signal 251 to the serial data control 233. In response to the enabling signal 251 and the clock signal 231, the serial data control 233 supplies a clock signal 253 to the command shift

11

# O O1O 66O

register 229. The clock signal 253 allows the command shift register 229 to load the command word from the CRS. The command word from the CRS is supplied through signal line 255 from the command shift register 229 to the multiplexer 241 and is supplied from the multiplexer 241 to the 6800 microprocessor by means of bus 200 which is operably connected to the multiplexer 241. Signal 257, which is a command to read data from the multiplexer 241, is supplied to the multiplexer 241 from the memory location read control 401, illustrated in Figure 7. In this manner a command is supplied from CRS to the 6800 microprocessor of the RTU and the RTU 6800 microprocessor will perform a specified function in response to the command from the CRS.

Clock signals for the RTU are supplied from the oscillator and control unit 261. The oscillator and control unit 261 is supplied a 1.6 MHz signal from the 1.6 MHz crystal 263 by means of signal line 265. In response to the 1.6 MHz signal, the oscillator and control unit 261 supplies an 800 KHz signal 266, a 400 KHz signal 267 and a 3.125 KHz signal 269. The 3.215 KHz signal is supplied as an input to the counter 230. In response to the 3.125 KHz signal 269, the counter 230, which in the preferred embodiment is an F4020 14-stage binary counter manufactured by Fairchild Semiconductor, provides a plurality of outputs having different periods. Signal 271 from the counter 230 has a period of 640 microseconds and is applied as one input to the AND gate 281. Signal 272 from the counter 230 has a period of 0.3293 milliseconds and is supplied as a first input to the NAND gate 283. Signal 273 from the counter 230 has a period of 0.6586 milliseconds and is supplied as a second input to the NAND gate 283. Signal 274 from the counter 230 has a period of 0.1647 milliseconds and is supplied as a clock signal to the decoder 285 which is a flip-flop. Signal 275 from the counter 230 has a period of 1.3172 seconds and is supplied as a first input to the AND gate 287. Signal 276 from the counter 230 has a period of 2.62 seconds and is supplied as a second input to the AND gate 287. Signal 277 from the counter 230 has a period of 5.24 seconds and is supplied as one input to the NOR gate 289.

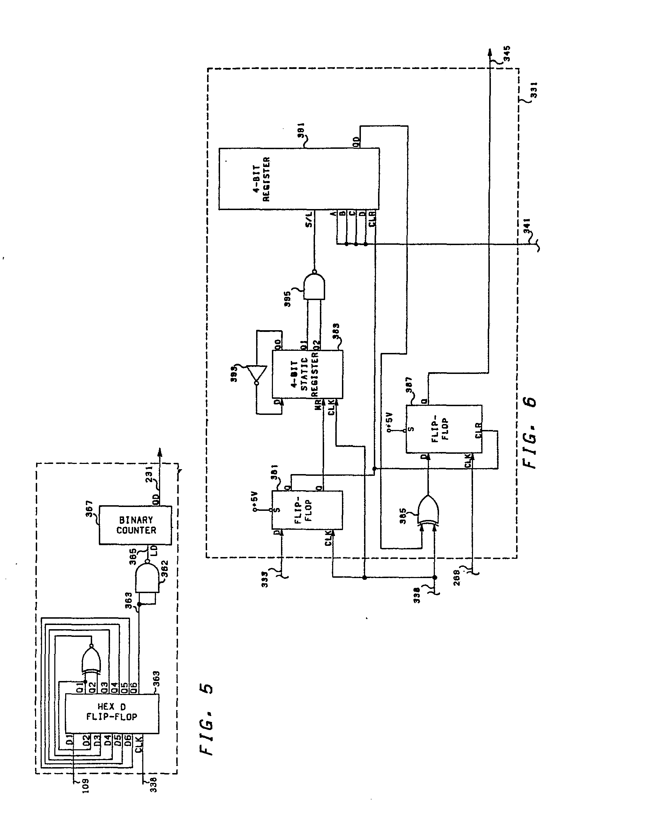

The output signal 291 from switching means 293 is supplied as one input to the AND gate 295. Signal line 291 is tied to the +5 volt power supply 296, through resistor 297. The +5 volt power supply 296 is tied as a second input to the AND gate 295 through resistor 299. The output signal 301 from the AND gate 295 is supplied as a third input to the NAND gate 283 and is also supplied to the data bus driver 459, illustrated in Figure 6.

The output signal 303 from the NAND gate 283 is supplied to the data input of the flip-flop 285. The output signal 305 from the AND gate 287 is supplied to the set input of the flip-flop 285.

The Q output of the flip-flop 285, which is represented as signal 308, is supplied as one input to the NOR gate 289 and is also supplied as one input to the NAND gate 311. The $\bar{Q}$ output of flip-flop 285, which is represented as signal 309, is supplied as a second input to the AND gate 281 and is also supplied as an input to the inverter 312. The output signal 315 from the NOR gate 289 is supplied as one input to the RF transmitter 127. The output signal 317 from the AND gate 281 is supplied as a second input to the RF transmitter 127.

Switch 293 is utilized to provide an alarm to the CRS if the RTU becomes tilted. In a radio communication system, such as is embodied in the seismic exploration system of the present invention, it is important that the RTU remain upright to insure that the communications antenna is properly aligned. After the RTUs are deployed it is possible that animals, wind, or other outside forces may cause the RTU to be tilted. It is also possible that a hunter or other person may think the RTU has been abandoned and simply try to pick up the RTU and carry it away. Switch 293 provides a means by which, upon the occurrence of any of these conditions, the CRS operator or field personnel may be altered to such conditions and thereby be stimulated to effect corrective action.

The alarm system indicating that the RTU has tilted is inhibited as long as the RTU is deployed in such a manner that the circuit card holding switch 293 is in a horizontal position. If the unit should be tilted at least 15° in any direction, switch 293 will open and will enable the tilt alarm circuitry. Switch 293 opens when the RTU is tilted, thus allowing the input of the AND gate 295, which is connected to signal line 291, to go high in response to the +5 volt power supply 296. Both inputs of the AND gate 295 will thus be high and signal 301 will go high.

When signal 301 from the AND gate 295 is high, the output signal 303 from the NAND gate 283 will go low when both signals 272 and 273 are high. This will have the effect of supplying a low input to the data input of the flip-flop 285. Similarly when signals 275 and 276 go high, the output signal 305 from the AND gate 287 will go high and the high signal will thus be supplied to the set input of flip-flop 285. With the flip-flop 285 in this state, the next time signal 274 goes high the flip-flop 285 output will toggle. Basically, as long as switch 293 is open the Q output of the flip-flop 285 will toggle low for 81.92 milliseconds each time the counter 230 sequences through the decoded states. The output signal 308, having a period of 81.92 milliseconds, is supplied to the NAND gate 311 to thereby enable the transmitter by means of signal 321 which connects the NAND gate 311 to the transmitter 127.

The output signal 309 from the flip-flop 285 is high when the output signal 308 from the flip-flop 285 is low. Signal 271 from the counter 230 and the output signal 309 from the flip-flop 285 are combined by AND gate 281 to provide a 1.5625 KHz signal 317 from the output of the AND gate 281 to the RF transmitter 127. Signal 317 is a data signal which is transmitted to the CRS to indicate that the RTU is tilted. Signal 309 is also inverted by an inverter 312 and is utilized to drive an audio alarm

12

transducer at the RTU. This audio alarm is utilized to scare away any animals or to indicate to a human who picks up the RTU that the RTU has not been abandoned. The NOR gate 289 combines the output signal 308 from the flip-flop 285 and the output signal 277 from the counter 230 to provide a tilt command signal 315. Tilt command signal 315 is supplied to the RF transmitter 127 and enables the RF transmitter 127 to transmit by means of the auxiliary antenna 110.

The transmit data and control logic 331, illustrated in Figure 3, is utilized to supply data from the RTU to RF transmitter 127 to be transmitted to the CRS. The transmit data and control logic 331 is supplied with a transmitter clock enable signal 333 which is supplied from the memory control register 336 illustrated in Figure 6. The transmit data and control logic is also supplied with a 100 KHz signal 338 and a 400 KHz signal 269, both of which are supplied from the oscillator and control unit 261. The transmit data and control logic 331 is supplied with data by means of signal line 341 which is supplied from the write buffer 343 illustrated in Figure 6. In response to the input signal, the transmit data and control logic 331 supplies a serial data line 345 as one input to the NOR gate 347. The RTU 6800 microprocessor supplies a signal 349, which is an enabling signal for the RF transmitter 127, as a second input to the NOR gate 347 and as a second input to the NAND gate 311. Serial data is supplied to the RF transmitter 127 to be transmitted to the CRS by means of signal line 351 which connects the output of the NOR gate 347 to the RF transmitter 127. When it is desired to transmit data from the RTU to the CRS, signal 321 enables the RF transmitter 127 and the data supplied by signal line 351 is transmitted to the CRS from the RF transmitter 127 through the communications antenna 104. The t/r switch 107 is placed in the transmit mode when it is desired to transmit data from the RTU to the CRS.

Commercially available components which may be utilized in the circuit illustrated in Figure 3 are as follows:

| | |
|---|---|
| Switch 293 | TS3-1094 Omni Directional Sensor Fifth Dimension, Inc., Princeton, N.J. |
| 1.6 MHz crystal 263 | AMA-713A, MIL—Type HC-33-U Erie Freq. Cont. Inc., Carlisle, Pa. |
| Oscillator and Control 261 | F4702—Fairchild Semiconductor |
| Serial Data Shift Register 225 | F4015—Fairchild Semiconductor |
| Counter 230 | F4020—Fairchild Semiconductor |
| Serial Data Monitor Logic 237 | 74C85 (two required) National Semiconductor |
| Control Register 244 | 74C175—National Semiconductor |
| Serial Data Control | F4040—Fairchild Semiconductor |
| Command Shift Register | F4020—Fairchild Semiconductor |
| Multiplexer 241 | 9LS257 (two required) National Semiconductor |
| AND gate 295, 287, 281 | 74C08—National Semiconductor |
| NAND gate 283 | 74C10—National Semiconductor |
| NOR gate 289, 347 | 74C02—National Semiconductor |
| NAND gate 311 | 74C00—National Semiconductor |
| Inverter 312 | 4049—Fairchild Semiconductor |

The RF transmitter 127, the RF receiver 106, the transmit/receive switch 107, the transmit antenna 104 and the anti-theft antenna 110 which are illustrated both in Figure 2b and Figure 3 are more fully illustrated in Figure 4. The RF transmitter 127 and the RF receiver 106 are described hereinafter in terms of blocks which are familiar to those in radio communication design. Specific designs and examples of the blocks illustrated in Figure 4 may be found in a number of references. Two specific references are: Terman, Frederick Emmons, *Radio Engineers Handbook*, McGraw-Hill Book Co., Inc., 1943 and ITT, *Reference Data for Radio Engineers*, 5th Edition, Howard W. Sams & Co., Inc., 1969.

The RF signal from the RF transmitter 59, illustrated in Figure 2a, is detected by the antenna 104 and is provided through the transmit/receive switch 107, which is preferably a DPDT relay, P/N3SAV1068A2, General Electric Co., to the RF amplifier 2525. The position of the transmit/receive switch 107 is controlled by the transmit command signal 321 and the tilt command signal 315 illustrated in Figure 3. The RF amplifier 2525 provides image rejection and establishes a low system noise figure of 4 db. The amplified signal from the RF amplifier is coupled into the first mixer stage 2528. The first mixer stage 2528 is also provided with a local oscillator signal 2531 from the first local oscillator 2529. The local oscillator signal 2531 is 10.7 MHz above the RF input signal, thus the first mixer 2528 produces an intermediate frequency (IF) of 10.7 MHz. The 10.7 MHz signal is provided from the first mixer 2528 through the 10.7 MHz bandpass filter 2532 to the second mixer 2533. The second mixer 2533 is also provided with a signal 2534 having a frequency of 10.245 MHz from the second local oscillator 2535. Thus the IF frequency produced by the second mixer 2533 is 455 KHz. The 455 KHz signal from the second mixer 2533 is coupled through the 455 KHz bandpass filter 2537 to the IF amplifier 2538. The 455 KHz bandpass filter 2537 establishes the IF bandpass for the receiver and provides high attenuation to any adjacent channel signals. From the IF amplifier 2538 the 455 KHz signal is supplied to the frequency modulation (FM) detector 2539. The FM detector 2539 is a phase- lock loop detector circuit. Command data from the CRS is thus provided from the FM detector 2539 to the RTU by means of signal line 109 which is illustrated in both Figure 2b and Figure 3.

Any audio portion of the transmission from the CRS is routed through the audio amplifier 2541 and the transformer 2545 to the handset by means of handset connector 102 illustrated in Figure 2b. The output side of the audio amplifier 2541 is also coupled to the audio amplifier 2542 which forms a part of the transmitter 127. The blast data and control signal 240 from the control register 244, illustrated in Figure 3, is provided as an input to the audio amplifier 2541. In this manner the blast data and control signal 240 can be provided to the blaster through the audio amplifier 2541 and the transformer 2545 which couples the blast data and command signal 240 to the blaster by means of signal lines 131 and 132, illustrated in Figure 2B. The blast data and command signal 240 can also be provided to the RF transmitter 127 through the audio amplifier 2541 which is coupled to the audio amplifier 2542.

The tilt data signal 317, which is illustrated in Figure 3, is also provided as an input to the audio amplifier 2542. Either the tilt data signal or a signal from the handset is amplified by the audio amplifier 2542 and provided to the oscillator 2543. The oscillator 2543 provides a frequency modulated (FM) output to the frequency tripler 2544. From the frequency tripler the FM signal is provided to the phase modulator 2546. The phase modulator 2546 is also provided with the seismic data from the RTU by means of signal line 351 which is illustrated in Figure 3. Seismic data which will be in digital form is provided through the integrator 2547 to the phase modulator 2546. The integrator 2547 is utilized to convert the digital waveform of signal 351 to a triangular waveform which is used by the phase modulator 2546. The signal from the phase modulator 2546 is phase modulated and provided to the output section of the transmitter. Thus, the handset used by the operator at the RTU, the tilt data signal, or seismic data from the RTU can enable the transmitter.

The phase modulated signal from the phase modulator 2546 is provided through the frequency tripler 2549 and frequency doubler 2551 to the power amplifier 2552. The power amplifier 2552 raises the signal to be transmitted to the desired power level and passes the signal through the lowpass filter 2553 to the antenna 104 through the transmit/receive switch 107. If tilt data is being transmitted, then the tilt data is coupled onto the antenna 110 through the transmit/receive switch 107.

A preferred specification for the transmitter and receiver illustrated in Figure 4 is as follows:

Receiver
    a. Frequency=220 MHz, crystal controlled.
    b. Center frequency stability=±0.001% (−30 to +70°C).
    c. Sensitivity=−115 dbm for 10 db or greater

$$\frac{S+N}{N} \text{ ratio (8 KHz deviation, 1 KHz mod. rate).}$$

    d. Quieting sensitivity=−110 dbm for 20 db or greater quieting.
    e. Modulation acceptance=0.2 to 7 KHz, up to 15 KHz peak deviation.
    f. Squelch—adjustable attack time of 5 to 50 milliseconds.
        —release time of 50 to 70 milliseconds,
        —squelches audio only (not data),
        —available as logic output, +5V CMOS, active low.
    g. Data Acceptance=6.25 k B/S, FSK/FM.
    h. Data Output=CMOS, +5 V.
    i. Audio Output=100 mV RMS (1 KHz, 8 KHz deviation) across handset terminals.
    j. Audio Conditioning for Blast Data (signal to Blaster)
        Input: CMOS, +5V, FSK @ 2.4/4.8 KHz,
        Output (adjustable): 150 mV RMS across geophone/handset line with handset attached.

Transmitter
    a. Frequency=216 to 220 MHz, crystal controlled.
    b. Frequency stability=±0.0005% from −30 to +50°C.
    c. Power Output=8—10 watts nominal.
    d. DC power=1.5 amps max. from +18.75 Vdc.
    e. Spurious emission suppression=60 db or greater.
    f. Audio Modulator (Oscillator 2543)
        —Direct FM (premodulation clipping/amplifier on RCVR board),
        —Deviation=5 KHz peak (1 KHz mod. rate),
        —Modulation sensitivity=2.5 KHz/volt,
        —Input impedance=100 KΩ minimum.

g. Data Modulator (Phase Modulator 2546)
—Indirect FM (Phase modulator),
—Rate=100 KB/S,
—Coding=Bi-Phase (Manchester),
—Input Level=T²L,
—Modulation Index=1.2 for 50 KHz square wave input,
—Input impedance=10 KΩ, minimum.

The digital phase locked clock 227, illustrated in Figure 3, is more fully illustrated in Figure 5. As is illustrated in Figure 5, the 100 KHz signal 338 is supplied to the clock input of a HEX-D flip-flop 361, which in this preferred embodiment is a 74 C 174 manufactured by National Semiconductor, which is configured basically as a shift register. The data signal 109 is supplied to the $D_1$ input of the HEX-D flip-flop 361. EXCLUSIVE OR gate 360, which in this preferred embodiment is a 74C86 manufactured by National Semiconductor supplies a 10 microsecond wide pulse in response to a change in the data signal 109. This pulse is then delayed by being shifted through the other stages of the HEX-D flip-flop 361. Signal 363 from the $Q_6$ output of the HEX-D flip-flop 361 is supplied to both inputs of the NAND gate 362. In this preferred embodiment, the NAND gate 362 is a 74 C 00 manufactured by National Semiconductor. The output signal 365 from the NAND gate 362 is supplied to the load input of a binary counter 367, which in this preferred embodiment is a 74 C 163 manufactured by National Semiconductor. The clock signal 231, which has been described in Figure 3, is supplied from the $Q_D$ output of the binary counter 367.

The transmit data and control logic 331, illustrated in Figure 3, is more fully illustrated in Figure 6. The transmit clock enable signal 333 is supplied to the D input of the flip-flop 381, which in this preferred embodiment is a 74 C 74, manufactured by National Semiconductor. The transmit clock signal 338 is supplied to the clock input of the flip-flop 381 and is also supplied to the clock input of the 4-bit static register 383 and as one input to the EXCLUSIVE OR gate 385. In this preferred embodiment, the 4-bit static register is one-half of a 4015 manufactured by Fairchild Semiconductor. The EXCLUSIVE OR gate 385 is a 74 C 86 manufactured by National Semiconductor. The 100 KHz clock signal 269 is supplied to the clock input of the flip-flop 387 which is identical to flip-flop 381.

The set input of flip-flop 381 and the set input of flip-flop 387 are both tied to a +5 volt power supply. The Q output of the flip-flop 381 is supplied to the clear input of flip-flop 387 and to the clear input of the 4-bit register 391, which in this preferred embodiment is a 74 C 175 manufactured by National Semiconductor. The Q̄ output of the flip-flop 381 is supplied to the master reset of the 4-bit static register 383.

The $Q_0$ output of the 4-bit static register 383 is tied through inverter 393 to the D input of the 4-bit static register 383. The inverter 393 is a 4049 manufactured by National Semiconductor. The $Q_1$ and $Q_2$ outputs of the 4-bit static register 383 are supplied as inputs to the NAND gate 395. In this preferred embodiment the NAND gate 395 is a 9 LS 00 manufactured by National Semiconductor. The output of the NAND gate 395 is supplied to the shift/load (S/L) input of the 4-bit register 391. The data signal 341 is supplied to the A, B, C, and D inputs of the 4-bit register 391.

The $Q_D$ output of the 4-bit register 391 is supplied as a second input to the EXCLUSIVE OR gate 385. The output of the EXCLUSIVE OR gate 385 is supplied to the D input of the flip-flop 387. The Q output of the flip-flop 387 corresponds to the serial data line 345 and data is supplied by the signal line 345 to the RF transmitter 127, illustrated in Figure 3.

The memory control unit 124 illustrated in Figure 2b is more fully illustrated in Figure 7. The primary function of the memory control unit 124 is to control the memory 125 and to provide an interface between the 6800 microprocessor 111 and the memory 125. In addition the memory control unit 124 provides part of the interface between the 6800 microprocessor 111 and the RF interface 108. Referring now to Figure 7, a part of the 6800 microprocessor address bus 100 is supplied as an input to the memory location read control 401, the memory location decoder 403 and the holding register 405. The A0 and A1 address lines are supplied to the memory location read control 401 and the holding register 405. The A2—A4 address lines are supplied to the memory location decoder 403. These address lines supplied by the address bus 100 provide the read and write commands as well as the location to which data is to be written or the location from which data is to be read. In response to the address, the memory location decoder 403 provides an enabling signal 407 to the memory read control 401 and also supplies an enabling signal 408 to the holding register 405 and the memory location write control 409. The enabling signal 407 allows the memory location read control 401 to decode the address from the 6800 microprocessor to determine where data is to be read from. Four control signals are supplied from the memory location read control 401. Signal 257 is a command to read data from memory location 800 C/E which corresponds to the multiplexer 241 illustrated in Figure 3. Signal 257 is provided to the multiplexer 241, illustrated in Figure 3. Signal 411 is a command to read data from memory location 800 D which corresponds to the status logic unit 416. Signal 412 is a command to read data from location 800 F which corresponds to the read buffer 418. Signals 411 and 412 are provided from the memory location read control 401 to the data bus drivers 459. Signal 414

**0 010 660**

from the memory location read control 401 is supplied to the read buffer 418 and is a command to shift data out of read buffer 418.

Data is supplied from the microprocessor to the memory control unit 124 by means of data bus 200 which is operably connected to the holding register 405. In response to signal 408, the address supplied from the address bus 100 and the data supplied from the data bus 200 is shifted from the holding register 405. The address is supplied by means of signal line 421 to the memory location write control 409. The data is supplied by means of signal line 423 to the memory control register 336, the read address counter 425 and the write buffer 343.

In response to the address supplied by signal line 421 and the enabling signal 408, the memory location write control 409 provides four output command signals which enables data to be written to specific locations. Signal 246 from the memory location write control 409 is supplied to the control register 244, illustrated in Figure 3, and is a command to write data into the control register 244. Signal 428 from the memory location write control 409 is supplied to the write buffer 343 and is a command to write data into the write buffer 343. Signal 431 from the memory location write control 409 is supplied to the read address counter 425 and is a command to write data into the read address counter 425. Signal 433 from the memory location write control 409 is supplied to the memory control register 336 and is a command to write data into the memory control register 336.

In response to the data supplied by means of signal line 433 and the command to write data into the memory control register 336, the memory control register 336 provides a plurality of output signals for control of various functions of the memory control unit. Signal 441 is a status reset signal and is provided as an input to the status logic 416. Signal 442 is an enabling signal for the write buffer 343 and is supplied as an input to the write buffer 343. Signal 443 is an enabling signal for the read buffer 418 and is supplied as an input to the read buffer 418. Signal 443 is also supplied to the status logic 416 and the read access request logic 466. Signal 444 is a clear signal for the write address counter 451 and the read address counter 425. Signal 444 is supplied as an input to both the write address counter 451 and the read address counter 425. Signal 333 from the memory control register 336 has been previously described and is supplied as an input to the transmit and control logic 331 illustrated in Figure 3. Signal 446 is a gating signal which is supplied as an input to the write access request logic 453.

Data from the memory 125 is supplied to the read buffer 418 by means of signal line 455. When data is available to be read out from the read buffer 418, the output ready signal 457 from the read buffer 418 provides an indication that data is available to the data bus drivers 459. Data is supplied from the read buffer 418 by means of signal line 461 to the status logic 416 and to the data bus drivers 459. In response to signal 457, the data bus drivers 459 will switch to data line 461 and data will be supplied to the 6800 microprocessor data bus 200 by means of the data bus driver 459.

When the read buffer 418 is ready to receive data, signal 463 is utilized to indicate this fact to the read access request logic 466. In response to signal 463, the read access request logic 466 provides a signal 469, which indicates to the memory cycle control logic 468 that data can be read into the read buffer 418. In response to signal 469, the memory cycle control logic 468 provides an acknowledge signal 471 to the read address counter 425, the status logic 416 and the read buffer 418. In response to signal 471, data, if available, is shifted into the read buffer 418.

The read address counter 425 supplies a read address 473 to the read access request logic 466 and to the 2 to 1 (2/1) multiplexer unit 475. The read address signal 473 is supplied in response to the previously described inputs to the read address counter 425.

The write buffer 343 operates in essentially the same manner as the read buffer 418. Signal 477 from the write buffer is supplied to the data bus drivers 459 and indicates to the 6800 microprocessor that data can be written into the write buffer 343. Signal 479 from the write buffer 343 is supplied to the write access request logic 453 and provides an indication that the write buffer 343 is ready to supply data. In response to signal 479, the write access request logic 453 supplies a signal 481 to the memory cycle control logic 468. Signal 481 indicates to the memory cycle control logic 468 that data can be taken from the write buffer 343. The memory cycle control logic 468 acknowledges by means of signal 483 that the current data at the output of the write buffer 343 is being transferred to the CCD memory 125. Signal 483 is supplied to both the write buffer 343 and to the write address counter 451. In response to the acknowledge signal 483, the write address counter 451 supplies a write address signal 485 to both the write access request logic 453 and to the 2/1 multiplexer unit 475. This address is provided to the memory 125 by means of signal line 489. The 2/1 multiplexer unit 475 is switched to the write address lines represented by signal 485 in response to control signal 491 which is supplied from the memory cycle control logic 468.

The 800 KHz signal 266 from the oscillator and control 261, illustrated in Figure 3, is supplied as an input to the counter and state decoder 494, the four phase memory clock logic 495 and the memory cycle control logic 468. In response to the 800 KHz signal 266 the counter and state decoder 494 provides a signal 496 having a pulse width of 10 microseconds to the time address counter 499. The counter and state decoder 494 also supplies a clock signal 501 to the four phase memory clock logic 495 and the memory cycle control logic 468. In response to signal 496, the time address counter 499 supplies a count signal 503 to the read access request logic 466 and to the write access request logic

16

453 and also supplies a count signal 508 to the four phase memory clock logic 495. The time address counter 499 also supplies a signal 504, having a pulse width of 160 microseconds, and a signal 506, having a pulse width of 2560 microseconds, to the data bus drivers 459.

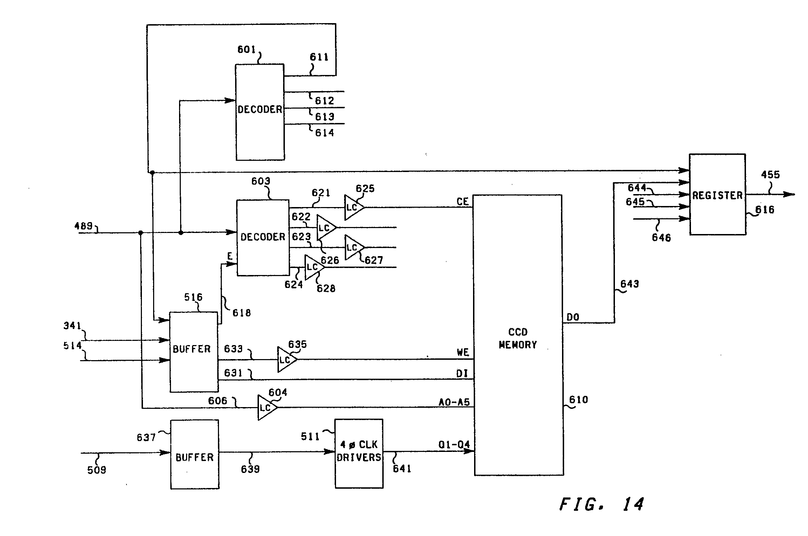

In response to signal 266 and signal 501, the four phase memory clock logic 495 generates a control signal 509 which is utilized to provide logic and control for the four phase clock driver 511 illustrated in Figure 14.

In response to the previously described inputs, the memory cycle control logic 468 generates a memory control signal 514 which is supplied to the input of buffer 516, illustrated in Figure 14. Depending on whether information is to be written into the memory or to be read from the memory, the control signal 514 will initiate the read or write operations respectively.

In response to the previously described inputs, the status logic 416 generates two output signals which are supplied to the data bus drivers 459. Signal 518 is a word available indicator and gives an indication to the 6800 microprocessor when twenty bits have been shifted into the read buffer 418. Signal 519 is a parity count which gives an indication of the number of ones in the binary data which have been supplied from the memory 610 by means of signal line 455. This parity count allows the 6800 microprocessor to add parity bits as required.

Preferred, commercially available components, which can be utilized in the memory control circuit illustrated in Figure 7 are listed below. If a single component cannot be used to perform an illustrated function, a more detailed schematic of the functions illustrated in block diagram form in Figure 7 is presented in the following paragraphs.

| | |
|---|---|
| Memory Location Decoder 403 | 9 LS 139 DM, National Semiconductor |
| Holding Register 405 | Combination of 74C175 and 74C174 |
| | National Semiconductor |
| Memory Location Read Control 401 | 9 LS 139 DM, National Semiconductor |
| Memory Control Register 336 | 74C175, National Semiconductor |
| Write Buffer 343 and Read Buffer 418 | 3341 DM, Fairchild Semiconductor |
| Counter and State Decoder 494 | F 4028, Fairchild Semiconductor |
| Write Access Request Logic 453 and Read | 74C85 (two required) National Semiconductor |
| Access Request Logic 466 | |
| Time Address Counter 499 | F 4520, Fairchild Semiconductor |
| 2/1 Multiplexer 475 | F 4019 (3 required) Fairchild Semiconductor |
| Data Bus Drivers 459 | 9 LS 367 DM (2 required) National Semiconductor |

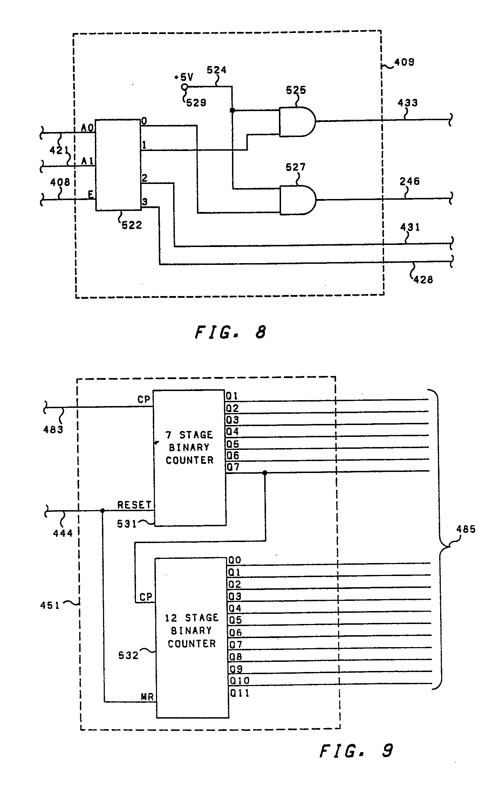

The memory location write control 409, illustrated in Figure 7, is more fully illustrated in Figure 8. The address lines 421 are supplied to the A0 and A1 input of the one-of-four decoder 522. The clock signal 408 is supplied to the enabling input of the one-of-four decoder 522. In this preferred embodiment, the one-of-four decoder 522 is an F4555 manufactured by Fairchild Semiconductor.

In response to the address 421, the one-of-four decoder 522 supplies four output signals labeled 0—3. The 0 output is supplied as a first input to the AND gate 527. The 1 output is supplied as a first input to the AND gate 525. The second input of both AND gate 525 and AND gate 527 is tied high to the +5 volt power supply 529. The AND gates 525 and 527 are preferably 9 LS 00 manufactured by National Semiconductor. The output of AND gate 525 is signal 433, illustrated in Figure 7. The output of AND gate 527 is signal 246, illustrated in Figure 7.

The output labeled 2 from the one-of-four decoder 522 corresponds to signal 431, illustrated in Figure 7. The 3 output from the one-of-four decoder 522 is supplied as signal 428, illustrated in Figure 7.

The write address counter 451, illustrated in Figure 7, is more fully illustrated in Figure 9. Signal 483, illustrated in Figure 7, is supplied to the clock pulse input of the seven stage binary counter 531. The clear signal 444 is supplied to the reset input of the seven stage binary counter 531 and is also supplied to the master reset input of the twelve stage binary counter 532. The Q7 output of the seven stage binary counter 531 is supplied to the clock pulse input of the twelve stage binary counter 532. The seven outputs of the seven stage binary counter 531 and eleven of the twelve outputs of the twelve stage binary counter 532 are utilized to provide the eighteen bits which make up signal 485 illustrated in Figure 7.

The seven stage binary counter is a F4024 manufactured by Fairchild Semiconductor. The twelve stage binary counter 532 is a F4024 manufactured by Fairchild Semiconductor.

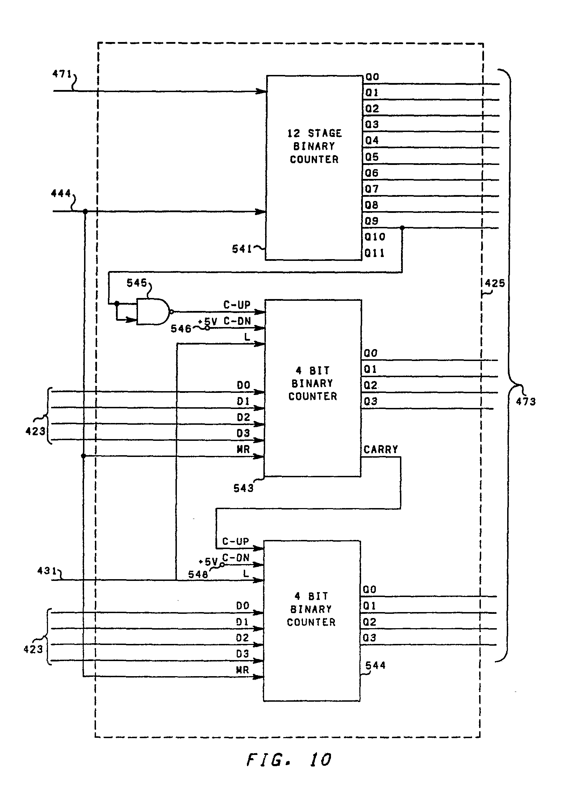

The read address counter 425, illustrated in Figure 7, is more fully illustrated in Figure 10. Signal 471 is supplied to the clock pulse input of the twelve stage binary counter 541. Signal 444 is supplied to the master reset input of the twelve stage binary counter 541 and is also supplied to the master reset of the four bit binary counters 543 and 544. Signal 431 is supplied to the load input of the binary counters 543 and 544. The data signals 423 are supplied to the D0—D3 inputs of the binary counter 543 and 544. Ten of the outputs from the twelve stage binary counter 541 are supplied as part of signal 473 illustrated in Figure 7. In addition, the Q9 output from the twelve stage binary counter 541 is supplied to both inputs of the NAND gate 545. The output of the NAND gate 545 is supplied to the

**0010660**

countup input of the four bit binary counter 543. The countdown input of the four bit binary counter 543 is tied high to the +5 volt power supply 546. The Q0—Q3 outputs from the binary counter 543 provide four more data bits to make up signal 473. The carry output from the four bit binary counter 543 is supplied to the countup input of the four bit binary counter 544. The countdown input of the four bit binary counter 544 is tied high to the +5 volt power supply 548. The Q0—Q3 outputs from the four bit binary counter 544 make up the remaining four data bits for signal 473.

Commercially available components which can be utilized in the read address counter 427 as illustrated in Figure 10 are as follows:

| | |
|---|---|
| 12 Stage Binary Counter 541 | F 4040, Fairchild Semiconductor |
| 4-Bit Binary Counter 543 and 544 | 74C 193, National Semiconductor |
| NAND Gate 545 | 74 C 00, National Semiconductor |

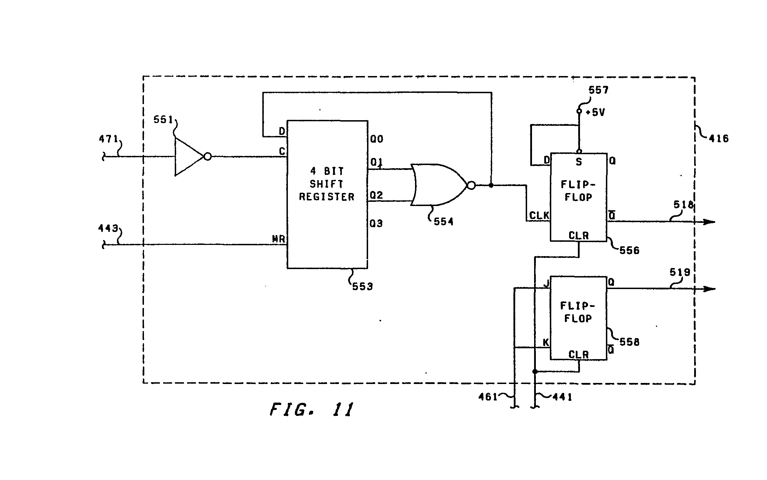

The status logic 416, illustrated in Figure 7, is more fully illustrated in Figure 11. Signal 471 is supplied through inverter 551 to the clock input of the four bit shift register 533. Signal 443 is supplied to the master reset input of the four bit shift register 553. The Q1 and Q2 outputs of the four bit shift register 553 are supplied as inputs to the NOR gate 554. The output of the NOR gate 554 is supplied to the D input of the four bit shift register 553 and is also supplied to the clock input of the flip-flop 556. This configuration results in a positive transition at the output of NOR gate 554 for every five pulses on signal 471.

The data input and the set input of the flip-flop 556 are tied high to the +5 volt power supply 557. Signal 441 is supplied to the clear input of the flip-flop 556 and is also supplied to the clear input of flip-flop 558. Signal 461 is supplied to both the J and K inputs of flip-flop 558. Signal 518, illustrated in Figure 7, is output from the $\bar{Q}$ output of flip-flop 556. Signal 519, illustrated in Figure 7, is output from the Q output of flip-flop 558.

Commercially available components which can be utilized in the circuit illustrated in Figure 11 are as follows:

| | |
|---|---|
| Inverter 551 | 4049, Fairchild Semiconductor |
| 4-Bit Shift Register 553 | 4015, Fairchild Semiconductor |
| NOR Gate 554 | 74C02, National Semiconductor |
| Flip-Flip 556 | 74C74, National Semiconductor |
| Flip-Flop 558 | 74C107, National Semiconductor |

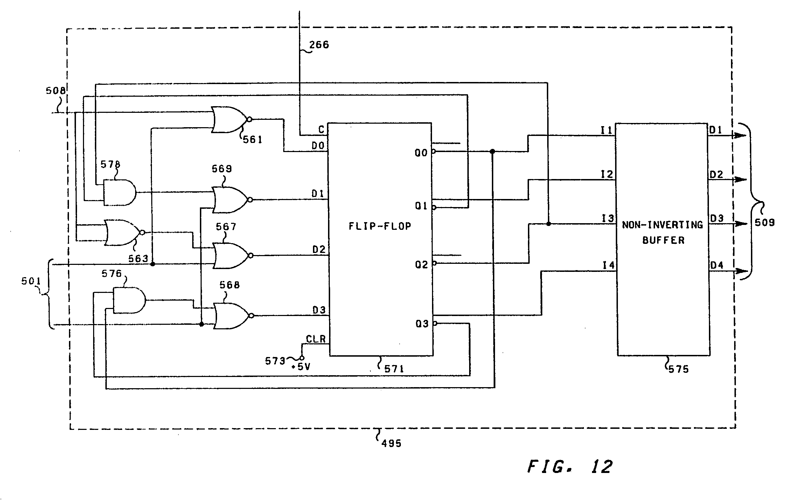

The four phase memory clock logic 459, illustrated in Figure 7, is more fully illustrated in Figure 12. Signal 508 is supplied as one input to the NOR gate 561 and is also supplied as both inputs to the NOR gate 563. Signal 501 is supplied as two signals, one going to both the second input of NOR gate 561 and the first input of NOR gate 567 and the second going to both the first input of NOR gates 568 and 569. The output of NOR gate 563 is supplied as the second input to NOR gate 567. The output of NOR gate 561 is tied to the $D_0$ input of the D flip-flop 571. The output of NOR gate 569 is supplied to the $D_1$ input of the D flip-flop 571. The output of the NOR gate 567 is supplied to the $D_2$ input of the D flip-flop 571. The output of the NOR gate 568 is supplied to the $D_3$ input of the D flip-flop 571.

Signal 266 is supplied to the clock input of the D flip-flop 571. The clear input of the D flip-flop 571 is tied high to the +5 volt power supply 573.

The inverted $Q_0$ output from D flip-flop 571 is supplied as an input to the $I_1$ input of the noninverting buffer 575 and is also supplied as a first input to the AND gate 576. The noninverted $Q_1$ output from the D flip-flop 571 is supplied to the $I_2$ input of the noninverting buffer 575. The inverted $Q_1$ output from the D flip-flop 571 is supplied as one input to the AND gate 578. The inverted $Q_2$ output from the D flip-flop 571 is supplied to the $I_3$ input of the noninverting buffer 575 and is also supplied as a second input to the AND gate 578. The noninverted $Q_3$ output is supplied to the $I_4$ input of the noninverting buffer 575. The inverted $Q_3$ output from the D flip-flop 571 is supplied as a second input to the AND gate 576.

The output from the AND gate 578 is supplied as a second input to the NOR gate 569. The output from the NOR gate 563 is supplied as a second input to the NOR gate 567. The output from the AND gate 576 is supplied as a second input to the NOR gate 568.

The $D_1$—$D_4$ outputs from the noninverting buffer 575 are utilized to provide signal 509, illustrated and described in Figure 7.

Commercially available components which can be utilized in the circuit illustrated in Figure 12 are as follows:

| | |
|---|---|
| AND Gate 576 and 578 | F 4081, Fairchild Semiconductor |
| NOR Gates 561, 563, 567, 568 and 569 | 74 C 02, National Semiconductor |
| D Flip-Flop 571 | 74 C 175, National Semiconductor |
| Noninverting Buffer 575 | F 40097, Fairchild Semiconductor |

18

**0010660**

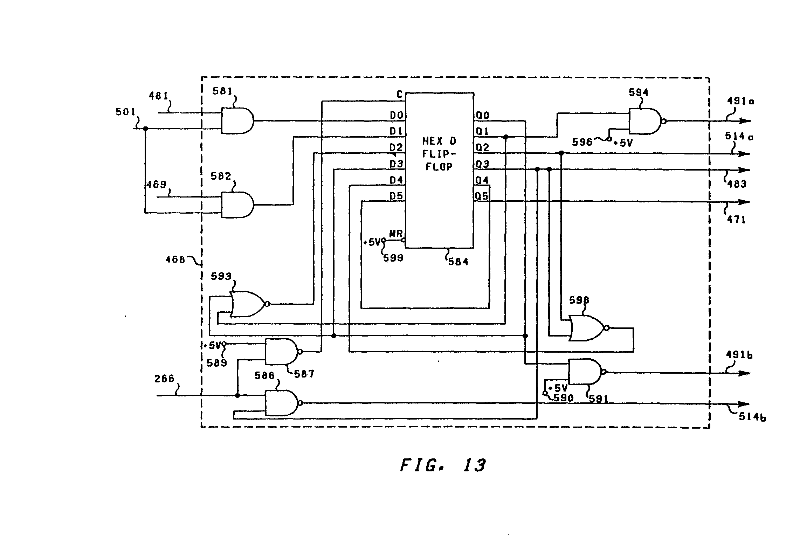

The memory cycle control logic 468, illustrated in Figure 7, is more fully illustrated in Figure 13. Signal 501 is suplied as a first input to both AND gates 581 and 582. Signal 481 is supplied as a second input to AND gate 581. Signal 469 is supplied as a second input to AND gate 582. The output of AND gate 581 is supplied to the $D_0$ input of the HEX-D flip-flop 584. The output of the AND gate 582 is supplied to the $D_1$ input of the HEX-D flip-flop 584.

Signal 266 is supplied as a first input to NAND gates 586 and 587. The second input of NAND gate 587 is tied high to the +5 volt power supply 589. The output of NAND gate 587 is supplied to the clock input of the HEX-D flip-flop 584.

The $Q_0$ output of the HEX-D flip-flop 584 is supplied as a first input to the NAND gate 591. The $Q_0$ output from the HEX-D flip-flop 584 is also supplied to the $D_3$ input of the HEX-D flip-flop 584 and as a first input to the NOR gate 593. The $Q_1$ output from the HEX-D flip-flop 584 is supplied as a first input to the NAND gate 594 and is also supplied as a second input to the NOR gate 593.

The second input of the NAND gate 594 is tied to the +5 volt power supply 596. The output from the NAND gate 594 is signal 491a which forms one part of signal 491, illustrated in Figure 7. The second input of the NAND gate 591 is tied high to the +5 volt power supply 590. The output from the NAND gate 591 is signal 491b which forms the second part of signal 491, illustrated in Figure 7. The output from the NOR gate 593 is tied to the $D_2$ input of the HEX-D flip-flop 584.

The $Q_2$ output from the HEX-D flip-flop 584 supplies one part of signal 514 illustrated in Figure 7 and is also supplied as a first input to NOR gate 598. The $Q_3$ output from the HEX-D flip-flop 584 is utilized to establish signal 483, illustrated in Figure 7. The $Q_3$ output is also supplied as a second input to NOR gate 598 and as a second input to the NAND gate 586. The output from the NAND gate 586 forms the second part of signal 514 illustrated in Figure 7. The output from the NOR gate 598 is supplied to the $D_4$ input of the HEX-D flip-flop 584.

The $Q_4$ output on the HEX-D flip-flop 584 is tied to the $D_5$ input of the HEX-D flip-flop 584. The $Q_5$ output from the HEX-D flip-flop 584 is utilized to form signal 471, illustrated in Figure 7. The master reset of the HEX-D flip-flop 584 is tied to the +5 volt power supply 599.

Commercially available components which can be used in the circuit illustrated in Figure 13 are as follows:

| | |
|---|---|
| AND Gates 581 and 582 | F 4081, Fairchild Semiconductor |
| NOR Gates 593 and 598 | 74C02, National Semiconductor |
| NAND Gates 586, 587, 591 and 594 | 74C00, National Semiconductor |
| HEX-D Flip-flop 584 | 74C174, National Semiconductor |

Memory means 125, illustrated in Figure 2b, is more fully illustrated in Figure 14. The memory utilized is a charge couple device (CCD) memory. The particular CCD memory utilized in the preferred embodiment of this invention is the P 2416 manufactured by Intel Corporation. Sixteen memory chips are utilized in the preferred embodiment of this invention. Up to four cards, each utilizing 16 chips (four banks of four chips each) can be utilized. Only one memory bank of one card is illustrated in Figure 14 for the sake of convenience but the operation of all of the memory banks is identical.

Referring now to Figure 14, the address signal 489 from the 2/1 multiplexer 475, illustrated in Figure 7, is suplied as an input to the decoder 601, the decoder 603 and the level converter 604. Two bits of the address signal 489 are supplied to the decoder 601 and also two bits are supplied to decoder 603. The remaining six bits of the address signal 489 is supplied to the level converter 604 and from the level converter 604 to the A0—A5 input of the CCD memory 610 through signal line 606. Data is supplied from the memory control, illustrated in Figure 7, by means of signal line 341 which is operably connected to buffer 516. Control signals from the memory cycle control logic 468, illustrated in Figure 7, are supplied by means of signal line 514 to the buffer 516.

Decoder 601 decodes two address bits supplied by means of signal line 489, and determines which memory card has been addressed. Four enabling signals 611—614 are supplied from the decoder 601 to a respective memory card. As illustrated in Figure 14, signal 611 is supplied as an enabling signal to the card containing CCD memory 610 and is supplied specifically to the buffer 516 and to the register 616.

In response to signal 611, the buffer 516 supplies an enabling signal 618 to the decoder 603. In response to signal 618, the decoder 603 decodes the two address bits supplied to the decoder 603, by means of signal line 489, and provides four enabling signals 621—624 to the four respective CCD memory banks located on the card which has been addressed. Signal 621—624 are supplied to level converters 625—628 and from the level converters 625—628 to the respective CCD memories. As illustrated in Figure 14, signal 621 is supplied from level converter 625 to the enabling input of the CCD memory 610. Data is supplied to the CCD memory 610 from the buffer 516 by means of signal 631 which is connected to the data input of the CCD memory 610. Control signals are also supplied to the CCD memory 610 from buffer 516 by means of signal line 633 which is supplied to the write enable input of the CCD memory 610 through level converter 635.

The logic signals for the four phase clock drivers 511 are supplied through buffer 637, by means of signal line 509, from the four phase memory clock logic 495, illustrated in Figure 7. Buffer 637 is

19

tied to the four phase clock drivers 511 by signal line 639. The output 641 from the four phase clock drivers 511 is supplied to the $\emptyset_1$—$\emptyset_4$ inputs of the CCD memory 610.

Data is supplied from the CCD memory to the data output of the CCD memory by means of signal line 643 which is connected to register 616. Data is supplied from the other memory banks located on a particular card by means of signal lines 644—646 which are also connected to the register 616. In response to the enabling signal 611, data is shifted from the register 616 and is supplied by means of data line 455 to the read buffer 418, illustrated in Figure 7.

Commercially available components which can be utilized in the circuit illustrated in Figure 14 are as follows:

| | |
|---|---|
| Decoder 601 and 603 | F4556, Fairchild Semiconductor |
| Buffer 516 and 563 | F40097, Fairchild Semiconductor |
| 4-Phase Clock Drivers 511 | D5244, Intel |
| CCD Memory 610 | P2416, Intel |
| Register 616 | 74C173, National Semiconductor |
| Level Converters 604, 625—628, and 635 | F4104, Fairchild Semiconductor |

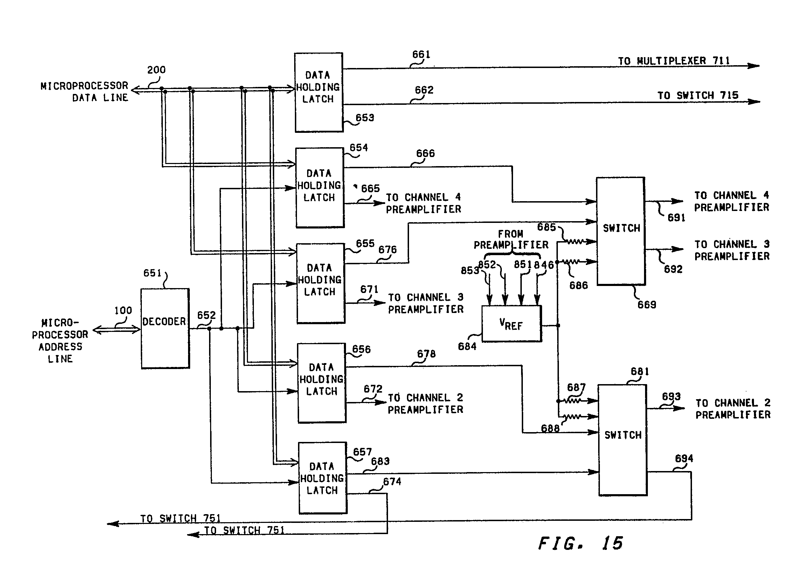

The test interface 201, illustrated in Figure 2b, is more fully illustrated in Figure 15. As has been previously stated, the primary function of the test interface 201 is to supply control signals to the calibrate card 211 and to the preamplifier 135, illustrated in Figure 2b, and also to provide a voltage source for testing the preamplifier 135. Referring now to Figure 15, the 6800 microprocessor address line 100 is tied to the decoder 651. The decoder 651 decodes an address from the microprocessor and provides a plurality of decoded address signals, which are represented by 652, to the data holding latches 653—657. The 6800 microprocessor data line 200 is also supplied to the data holding latches 654—657 and to the data holding latch 653.

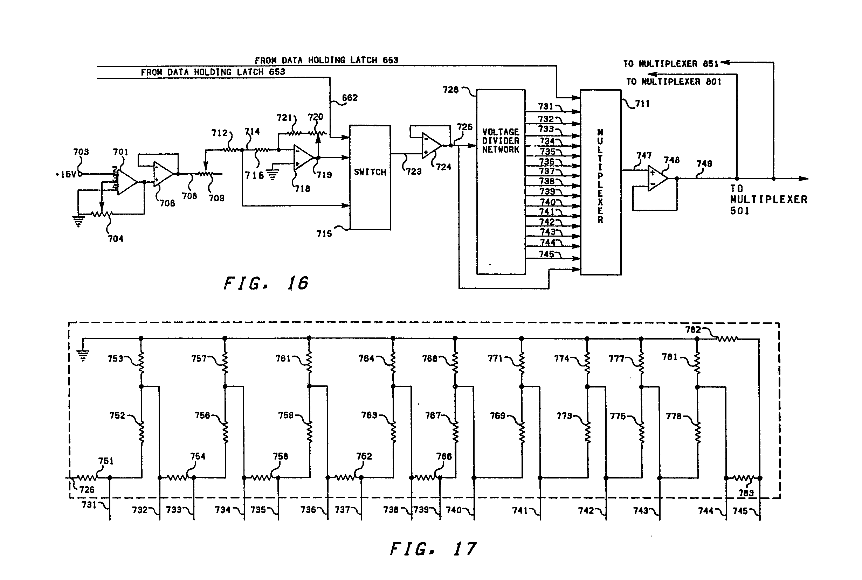

In response to the data input from the 6800 microprocessor data line 200, the data hold latch 653 generates two control signals 661 and 662. Control signal 661 from the data holding latch 653 is supplied to the multiplexer 711 illustrated in Figure 16 and is utilized to control the switching of the multiplexer 711. Signal 662 from the data holding latch 653 is supplied as a control signal to the switch 715 illustrated in Figure 15 and is utilized to control the selection of the voltage input supplied to the switch 175.

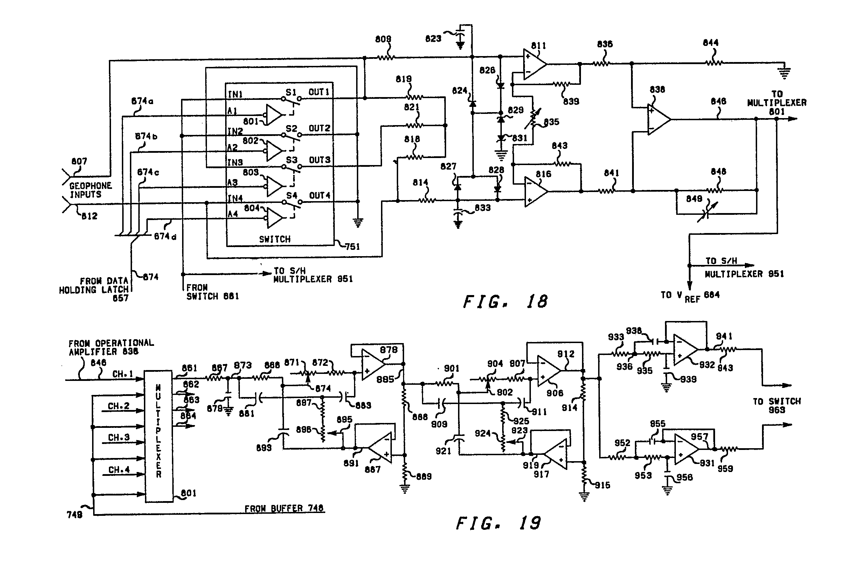

In response to the address supplied over the 6800 microprocessor address line 100 and the data supplied over the 6800 microprocessor data line 200, the data holding latches 654—657 provide two output control signals each. The data holding latch 654 provides a control signal 665 to channel 4 of the preamplifier 135, illustrated in Figure 2b. The data holding latch 654 also provides a control signal 666 to the switch 669 which controls the channel to which the voltage, applied to the switch 669, will be applied. In like manner, data holding latch 655 provides a control signal 671 to channel 3 of the preamplifier 135, data holding latch 656 provides a control signal 672 to channel 2 of the preamplifier 135 and data holding latch 657 provides a control signal 674 to channel 1 of the preamplifier 135. Signal 674 is particularly supplied to the switch 751 illustrated in Figure 18. The data holding latch 655 also provides a control signal 676 to the switch 669. The control signal 676 functions to control the supply of a reference voltage to channel 3 of the preamplifier 135 by means of switch 669. The data holding latch 656 also supplies a control signal 678 to the switch 681. Control signal 678 controls the application of a reference voltage to channel 2 of the preamplifier 135 by means of switch 681. The data holding latch 657 also supplies a control signal 683 to the switch 681 to thereby control the application of a reference voltage to channel 1 of the preamplifier 135 by means of switch 681.

The output signal from the reference voltage source 684 is supplied as an input to the switching means 669 and 681 through resistors 685—688. The output signal from the reference voltage source 684 is then supplied to the desired channel of the preamplifier by means of control signals 666, 676, 678 and 683 as has been previously described. Signal 691 from the switch 669 is supplied as a test or reference voltage to channel 4, of the preamplifier 135.

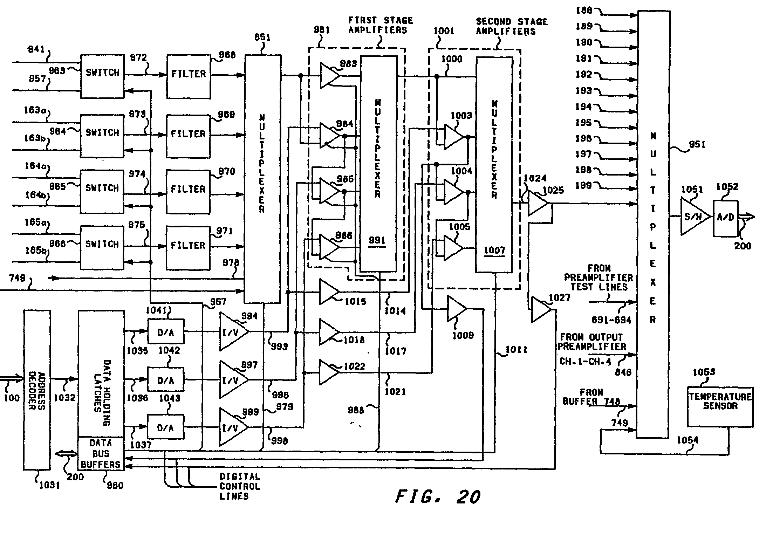

Signal 692 from the switch 669 is provided as a test voltage to channel 3 of the preamplifier 135. Signal 693 from the switch 681 is provided as a test voltage to channel 2 of the preamplifier 135. Signal 694 from the switch 681 is provided to channel 1 of the preamplifier 135 and is particularly provided as an input to the multiplexer 751 illustrated in Figure 17. Signal 694 is also provided to multiplexer 951 illustrated in Figure 20. The reference voltage source 684 is provided with the output signal 846 from the preamplifier illustrated in Figure 18 and with signals 851—858 which represent the output signals from the remaining preamplifier channels illustrated in Figure 2b.

Commercially available components which can be utilized in the circuit illustrated in Figure 15 are as follows:

| | |
|---|---|
| Decoder 651 | 74 C 154, National Semiconductor |
| Decoder 653 | 74 C 175 (2 required) National Semiconductor |
| Data Holding Latches 654—657 | MM 74 C 174, National Semiconductor |
| Switching Means 669 and 681 | DG 201, National Semiconductor |
| Resistors 685—688 | 49.K ohmn, 1%, 1/8W Film, Mepco |

20

**0010660**

The calibrator card 211, illustrated in Figure 2b, is more fully illustrated in Figure 16. As has been previously stated, the calibrator card 211 provides the circuitry for developing the precision voltages for calibration of the analog circuits of the RTU illustrated in Figure 2b. The calibrator card 211 is also utilized to provide the test voltages for the notch filter 151 illustrated in Figure 2b. Referring now to Figure 16, pin 2 of the voltage regulator 701 is tied to the +15 volt power supply 703. In this embodiment of the invention, the voltage regulator 701 is a REF 01 AJ manufactured by Precision Monolithics. Pin 4 of the voltage regulator 701 is tied to ground. Pin 5 of the voltage regulator 701 is tied to the wiper of the potentiometer 704. The output of the voltage regulator 701 is tied to the noninverting input of the buffer amplifier 706 and is also tied to the ground through the potentiometer 704.

The voltage regulator 701 provides an output signal having a voltage level of 10 volts to the buffer amplifier 706. The buffer amplifier 706 prevents loading of the voltage regulator 701 and provides an output signal 708 also having a voltage level of 10 volts. The output signal 708 from the buffer amplifier 706 is also tied to the inverting input of the buffer amplifier 706. Signal 708 is supplied to the potentiometer 709 which, together with resistor 712, comprises a voltage divider network. Resistor 712 is connected to the wiper input of the potentiometer 709. The voltage divider network made up of the potentiometer 709 and the resistor 712 is scaled so as to provide an output signal 714 from the resistor 712 having a voltage level of +8.3 volts. Signal 714 is supplied as one input to the switch 715.

Signal 714 is also supplied through resistor 716 to the inverting input of the inverting amplifier 718. The noninverting input of the inverting amplifier 718 is tied to the ground. The output signal 719 from the inverting amplifier 718 has a voltage level of −8.3 volts and is supplied as a second input to the switch 715. The output signal 719 from the inverting amplifier 718 is also fed back to the inverting input of the inverting amplifier 718 through resistor 721 and potentiometer 720.

In response to the control signal 662, which is provided from the data holding latch 653, illustrated in Figure 15, to the switch 715, the switch 715 selects either signal 719 or signal 714 to be supplied as an output. Thus, the switch 715 can supply an output signal 723 having a voltage level of ±8.3 volts depending on the command from the control signal 662.

The output signal 723 from the switching means 715 is supplied to the noninverting input of the buffer amplifier 724. The buffer amplifier 724 is provided to prevent loading of the switch 715 and provides an output signal 726 having a value of ±8.3 volts depending on the value of signal 723. The output signal 726 from the buffer amplifier 725 is provided as an input to the voltage divider network 728 and is also provided to the inverting input of the buffer amplifier 724. In addition, signal 726 is provided to the multiplexer 711.

The voltage divider network 728 provides a plurality of output signals to the multiplexer 711. The output signal 731—745 from the voltage divider network 728 are representative of signal 726 divided by powers of two. Thus signal 731 will have a value of ±4.15 volts depending on the value of signal 726. Signal 732 will have a value of ±2.075 volts depending upon the value of signal 726. The signals continue to decrease by powers of two, thus providing a plurality of input voltages to the multiplexer 711.

In response to the control signal 661, which is provided from the data holding latch 653, illustrated in Figure 15, the multiplexer 711 selects one of the input voltages to be supplied as either an impulse voltage or a calibrate voltage to the analog circuits illustrated in Figure 2b. The output voltage 747 from the multiplexer means 711 is supplied to the noninverting input of the buffer amplifier 748. The buffer amplifier 748 prevents loading of the multiplexer 711. The output signal from the buffer amplifier 748 is fed back to the inverting input of the buffer amplifier 748 and is also supplied as an input to the notch filter 151, the gain ranging amplifier system 171, and the A/D conversion unit 141, illustrated in Figure 2b. In particular signal 749 is provided as an input to the multiplexer 801, illustrated in Figure 19, to the multiplexer 851 associated with the gain ranging amplifier system, illustrated in Figure 20, and to the multiplexer 951 associated with the A/D conversion system also illustrated in Figure 20.

Commercially available components which can be utilized in the circuit illustrated in Figure 16 are as follows:

| | |
|---|---|
| Voltage Regulator 701 | REF 01 AJ, Precision Monolithics |
| Buffer Amplifier 706 and 724 and Inverting Amplifier 718 | LM 224D, National Semiconductor |
| Potentiometer 704 | 10K, 545-72HS, Weston |
| Potentiometer 709 | 500Ω, 545-72HS, Weston |
| Resistor 712 | 1.65K, 1%, 1/8W, Mepco |
| Resistor 715 | 10K, 1%, 1/8W, Mepco |
| Switching Means 715 | DG 201, National Semiconductor |
| Multiplexer 711 | MPC-16S, Burr-Brown |
| Buffer Amplifier 748 | OP07EJ, Precision Monolithics |

21

Divider network 728 illustrated in Figure 16 is more fully illustrated in Figure 17. For the sake of convenience, the resistors illustrated in Figure 17 will be referred to as having first and second terminals. The first terminal will always be referred to as being the terminal to the left or to the bottom of the resistor as illustrated in Figure 17. The second terminal of the resistor will always be referred to as being the terminal to the right or top side of the resistor as illustrated in Figure 17.

Referring now to Figure 17, signal 726 which was previously described in Figure 16, is supplied to the first terminal of the resistor 751. The first terminal of resistor 752 is tied to the second terminal of resistor 751 as is signal line 731. The second terminal of resistor 752 is tied to the first terminal of resistor 753 as is signal line 732, which is also tied to the first terminal of resistor 754. The second terminal of resistor 753 is tied to the ground.

The second terminal of resistor 754 is tied to the first terminal of resistor 756 as is signal line 733. The second terminal of resistor 756 is tied to the first terminal of resistor 757 as is signal line 734, which is also tied to the first terminal of resistor 758. The second terminal of resistor 757 is tied to ground.

The second terminal of resistor 758 is tied to the first terminal of resistor 759 as is signal line 735. The second terminal of resistor 759 is tied to the first terminal of resistor 761 as is signal line 736, which is also tied to the first terminal of resistor 762. The second terminal of resistor 761 is tied to the ground.

The second terminal of resistor 762 is tied to the first terminal of resistor 763 as is signal line 737. The second terminal of resistor 763 is tied to the first terminal of resistor 764 as is signal line 738 which is also tied to the first terminal of resistor 766. The second terminal of resistor 764 is tied to the ground.

The second terminal of resistor 766 is tied to the first terminal of resistor 767 as is the signal line 739. The second terminal of resistor 767 is tied to the first terminal of resistor 768 as is signal line 740, which is also tied to the first terminal of resistor 769. The second terminal of resistor 768 is tied to the ground.

The second terminal of resistor 769 is tied to the first terminal of resistor 771 as is signal line 741, which is also tied to the first terminal of resistor 773. The second terminal of resistor 771 is tied to the ground.

The second terminal of resistor 773 is tied to the first terminal of resistor 774 as is signal line 742, which is also tied to the first terminal of resistor 775. The second terminal of resistor 774 is tied to the ground.

The second terminal of resistor 775 is tied to the first terminal of resistor 777 as is signal line 743, which is also tied to the first terminal of resistor 778. The second terminal of resistor 777 is tied to the ground.

The second terminal of resistor 778 is tied to the first terminal of resistor 781 as is signal line 744, which is also tied to the first terminal of resistor 783. The second terminal of resistor 781 is tied to the ground.

The second terminal of resistor 783 is tied to the ground through resistor 782 as is signal line 745.

Commercially available resistors which can be utilized in the voltage divider network illustrated in Figure 17 and resistance values for the resistors illustrated in Figure 17 are as follows:

| | |
|---|---|
| Resistors 751 and 753 | 2KΩ, 0.1%, 1/8W, Mepco |
| Resistors 752, 757 and 754 | 1KΩ, 0.1%, 1/8W, Mepco |
| Resistors 756, 758 and 761 | 500Ω, 0.1%, 1/8W, Mepco |
| Resistors 759, 762 and 764 | 250Ω, 0.1%, 1/8W, Mepco |
| Resistors 763, 766, 768, 771, 774, 777 and 781 | 125Ω, 0.1%, 1/8W, Mepco |
| Resistors 767, 769, 773, 775, 778, 782 and 783 | 62.5Ω, 0.1%, 1/8W, Mepco |

The preamplifier 135, illustrated in Figure 2b, is more fully illustrated in Figure 18. As is illustrated in Figure 2b, the preamplifier 135 consists of four channels. Each of the four channels are identical and independent, therefore, for the sake of convenience, only one channel is illustrated in Figure 18. The description of this one channel is applicable to all of the channels of the preamplifier 135.

Referring now to Figure 18, signal line 674 from the data holding latch 657, illustrated in Figure 15, is actually four signal lines. As is shown in Figure 18, signal lines 674a is supplied to the A1 input of the switching means 751. Signal line 674b is supplied to the A2 input of the switching means 751. Signal line 674c is supplied to the A3 input of the switching means 751. Signal line 674d is supplied to the A4 input of the switching means 751. Signal line 674a—d are supplied to inverters 801—804 respectively and the output from the inverters 801—804 is utilized to control switches S1—S4 respectively.

Switching means 751 is preferably an HI 201 analog switch manufactured by Harris Semiconductor. Part of the internal circuitry of switch 751 is illustrated in Figure 18 to more particularly illustrate the test functions which are performed through switching means 751.

Signal line 694, which is a test line supplied from switching means 681, illustrated in Figure 15, is supplied to both input 1 and input 2 of the switching means 751. Input 1 is tied to switch S1 and input 2 is tied to switch S2.

A pair of inputs is supplied from each geophone. Geophone line 807 is supplied through resistor 809 to the noninverting input of the operational amplifier 811. Geophone line 807 is also tied to the first output of the switching means 751. The second line 812 from the geophone is supplied to the fourth input of the switching means 751 and is also supplied through resistor 814 to the noninverting input of the operational amplifier 816. The geophone signal line 812 is also tied through resistors 818 and 819 to the first output of the switching means 751.

The first output of the switching means 751 is tied to the third output of the switching means 751 through resistors 819 and 821. The third input, the second output and the fourth output from the switching means 751 are all tied to the ground. The third input of the switching means 751 is tied to switch S3 and the fourth input of switching means 751 is tied to switch S4. The four outputs of the switching means 751 are tied to switches S1—S4 respectively.

The positive side of capacitor 823 is tied to the noninverting input of operational amplifier 811. The negative side of capacitor 823 is tied to ground. The cathode side of diode 824 and the anode side of diode 826 are both tied to the noninverting input of the operational amplifier 811. The anode side of diode 824 is tied to the cathode of diode 827, to the anode of diode 828, to the cathode of diode 826, and to the cathode of Zener diode 829. The cathode of 826 is also tied to the cathode of Zener diode 829, the cathode of diode 827 and to the anode of diode 828. The anode of diode 829 is tied to the anode of Zener diode 831. The cathode of Zener diode 831 is tied to ground. The cathode of diode 828 is tied to the anode of diode 827. The anode of diode 827 is tied to the noninverting input of 816 as is the cathode of diode 828. The positive side of the capacitor 833 is also tied to the noninverting input of the operational amplifier 816. The negative side of the capacitor 833 is tied to the ground.

The inverting input of operational amplifier 811 is tied to the inverting input of operational amplifier 816 through the variable resistor 835. The output of operational amplifier 811 is tied through resistor 836 to the noninverting input of operational amplifier 838. The output of operational amplifier 811 is also fed back to the inverting input of operational amplifier 811 through resistor 839. The output from operational amplifier 816 is tied through resistor 841 to the inverting input of operational amplifier 838. The output of operational amplifier 816 is also tied through resistor 843 to the inverting input of operational amplifier 816.

The noninverting input of operational amplifier 838 is tied to ground through resistor 844. The output signal 846 from the operational amplifier 838 is supplied as the channel 1 input to the multiplexer 801 illustrated in Figure 19. Multiplexer 801, illustrated in Figure 19, corresponds to the multiplexer associated with the notch filter 151 illustrated in Figure 2b. Signal 846 from the operational amplifier 838 is also tied through the resistor 848 and variable capacitor 849 to the inverting input of operational amplifier 838. Signal 846 from the operational amplifier 838 is also supplied to the S/H multiplexer 951 illustrated in Figure 20.

Operational amplifiers 811 and 816 together with resistors 839 and 843 and variable resistor 835 make up a differential input-to-differential output operational amplifier. The gain of the differential input-to-differential output operational amplifier is determined primarily by the values of variable resistor 835 and fixed resistors 839 and 843. Only the differential signal is amplified; the common mode signal is passed unamplified.

The differential output which consists of the output signals from operational amplifiers 811 and 816 is supplied to the operational amplifier 838 which functions as a differential input to a single-ended output amplifier. The common mode signal is rejected by the operational amplifier 838 and only the differential signal is amplified. The input section to the differential input to differential output amplifier, made up of operational amplifier 811 and 816, consists of resistors 818, 819 and 821. Resistors 818, 819 and 821 provide a dc path to ground while maintaining a balanced input impedance. The resistor-diode network made up of resistors 809 and 814, diodes 824, 826, 827 and 828, and Zener diodes 829 and 831 comprise a clipping circuit which provides transient protection for the dual operational amplifier made up of operational amplifiers 811 and 816. This circuitry is provided primarily to provide protection against lightning. Capacitors 823 and 833 act simply as high frequency filters.

When the RTU, illustrated in Figure 2b, is in a data acquisition mode, switches S1, S2 and S4, illustrated in switching means 751, are open while switch S3 is closed. The geophone input signals 807 and 812 are supplied directly as inputs to the differential input to differential output differential amplifier made up of differential amplifiers 811 and 816. The difference between signals 807 and 812 is amplified in the differential input to differential output operational amplifier and the amplified signals are provided to the differential input to single ended output amplifier made up of operational amplifier 838. Amplifier 838 provides a single output signal 846 which is representative of the seismic data which has been sensed by the geophone units. Signal 846 is supplied directly to the multiplexer 801, illustrated in Figure 19, when the RTU is in the data acquisition mode.

Three tests can be performed on the geophone units when the RTU is in a test mode. These three tests are referred to as the leakage test, continuity test and levitate test. The leakage test measures the leakage resistance between the geophone string and ground. During the leakage test, the command

23

signal which is provided by means of signal lines 674 a—d causes switch S1 to close and causes switches S2, S3 and S4 to open. A voltage is supplied to the switching means 751 by means of test line 694. This voltage is supplied through switch S1, which is closed, to the geophone string through the geophone input line 807. Any current leakage from the geophone string to ground produces a voltage divider action which has the effect of reducing the test voltage supplied over the test line 694. The difference between the reference voltage which is supplied to the switching means 681 illustrated in Figure 15 and the test voltage which is supplied to the S/H multiplexer 951 by means of signal line 694 will thus be representative of the leakage resistance from the geophone string to ground.

The continuity test measures the internal resistance between the input terminals represented by signal lines 807 and 812. To perform the continuity test, the command signal which is supplied over signal line 674 a—d causes switches S1 and S4 to close and causes switches S2 and S3 to open. A reference voltage is again supplied to the switching means 571 through the test line 694 and the reference voltage is supplied through switch S1 to the geophone unit by means of signal line 807. With switch S4 closed, the current from the referenced voltage will flow through the geophone string. The voltage developed across the geophone by this current is amplified by the preamplifier system as has been previously described for the data acquisition sequence. The amplified voltage, which is proportional to the internal resistance of the geophone string, is supplied as an input to the S/H multiplexer 951, illustrated in Figure 20, by means of signal line 846.

The levitate test provides a regulated voltage across the input terminals of the geophone unit, represented by signal lines 807 and 812, to levitate the geophone units suspended mass from its normal rest position. When the voltage is released causing the mass to drop, a damped oscillatory signal is produced which is ultimately analyzed to determine the performance parameters of the geophone unit. To initiate the levitate test, the command signals supplied by means of signal lines 674 a—d cause switches S1 and S4 to close and switches S2 and S3 to open. A voltage is supplied to the switching means 751 by means of the test line 694. This voltage is supplied through switch S1 to the geophone unit by means of signal line 807. Current flows through the geophone unit to ground through switch S4. The voltage thus developed across the geophone unit is amplified by means of the preamplifier as has been previously described and is supplied by means of signal line 846 to the reference voltage source 684 illustrated in Figure 15. The reference voltage source 684 compares the preamplifier output supplied by means of signal line 846 with the original reference voltage, producing an error voltage. The error voltage is amplified and is supplied by means of test line 694 to the geophone unit in the same manner as previously described for the reference voltage. The voltage supplied to the geophone unit is thus regulated to reduce the error between the voltage supplied from the geophone, represented by signal 846, and the voltage supplied to the geophone, represented by signal 694.

The voltage is removed from the geophone by opening switches S1 and S4. When the voltage is removed from the geophone unit, the mass of the geophone coil oscillates about its original position with a damped motion resulting in the signal previously mentioned, which is represented as a voltage on signal lines 807 and 812. The resulting response signal of the geophone unit is amplified by the preamplifier as has been previously described and is provided as an input to the S/H multiplexer 951 illustrated in Figure 20 by means of signal line 846.

Commercially available components which can be utilized in the circuit illustrated in Figure 18 are as follows:

| | |
|---|---|
| Switching means 751 | HI-201, Harris Semiconductor |
| Resistors 809 and 814 | 100 ohms, 1%, 1/4W, Mepco |
| Resistors 819 and 818 | 20 K ohms, 0.1%, 1/4W, Mepco |
| Resistor 821 | 22 megohms, 5%, 1/4W, Mepco |
| Capacitors 823 and 833 | 0.1 microfarad, 1%, polycarbonate film, Elpac |
| Diodes 824, 826, 827 and 828 | IN 4404, National Semiconductor |
| Zener diodes 829 and 831 | IN 4735A, National Semiconductor |
| Operations amplifiers 811 and 816 | OP-10, Precision Monolithics |
| Resistors 839 and 843 | 6.98 K ohms, 0.1%, 1/4W, Mepco |
| Variable resistor 835 | 1K, Dale 101T |
| Resistors 836 and 841 | 10 K ohms, 0.1%, 1/8W, Matched TRW |
| Resistors 844 and 848 | 78.7 K ohms, 0.1%, 1/8W, Matched TRW |
| Variable capacitor 849 | 6.5-40PF, P/N CT-5-A-6R540-A, Mepco |
| Operational amplifier 838 | LM 224 D, National Semiconductor |

The notch filters 151 and the alias filters 161, illustrated in Figure 2b, are more fully illustrated in Figure 19. Four identical channels are provided in the notch filters 151 and the alias filters 161 but, again, for the sake of convenience, only one channel is illustrated in Figure 19. Four channels of data are supplied to the multiplexer 801. Signal 846 is supplied to the channel 1 input from the operational amplifier 838 illustrated in Figure 19. The multiplexer 801 is also supplied with a reference voltage signal 749 from the output of the buffer amplifier 748 illustrated in Figure 16. Signal 749 is provided to each of the four channels by the multiplexer 801. The output signal 861 from the multiplexer 801 is representative of the channel 1 output from the multiplexer 801. In like manner, the output signals 862—864 are representative of the channel two-channel four outputs from the multiplexer 801.

Signal 861 from the multiplexer 801 is supplied through resistors 867 and 868 to the wiping arm 874 of the potentiometer 871. The resistors 867 and 868 are tied together by means of signal line 873. Signal 861 is provided from the variable resistor 871 through resistor 872 to the noninverting input of the operational amplifier 878. Capacitor 879, which is tied to signal line 873, is provided as a high frequency filter. The positive side of the capacitor 881 is tied to the signal line 873. The negative side of the capacitor 881 is tied to the negative side of capacitor 883. The positive side of capacitor 883 is tied to the noninverting input of the operational amplifier 878. The output of signal 885 from the operational amplifier 878 is tied to the inverting input of operational amplifier 878. The output signal 885 is also supplied to the noninverting input of operational amplifier 887 through the voltage divider network made up of resistors 888 and 889. The output signal 891 from the operational amplifier 887 is fed back to the inverting input of the operational amplifier 887. The output signal 891 is also tied to the negative side of the capacitor 893. The positive side of capacitor 893 is tied to the wiping arm 874 of the potentiometer 871. The output signal 891 and the operational amplifier 887 is also tied to the wiper arm 895 of the potentiometer 896. The potentiometer 896 is tied through resistor 897 to the negative side of capacitors 881 and 883.

The output signal 885 from the operational amplifier 878 is also supplied through resistor 901 to the wiping arm 902 of the potentiometer 904. The potentiometer 904 is tied to the noninverting input of the operational amplifier 906 through resistor 907. Signal 885 from the operational amplifier 878 is also supplied to the positive side of the capacitor 909. The negative side of the capacitor 909 is tied to the negative side of capacitor 911. The positive side of capacitor 911 is tied to the noninverting input of operational amplifier 906. The output signal 912 from the operational amplifier 906 is fed back to the inverting input of operational amplifier 906. The output signal 912 from the operational amplifier 906 is also supplied through the voltage divider network made up of resistors 914 and 915 to the noninverting input of operational amplifier 917. The output signal 919 from the operational amplifier 917 is fed back to the inverting input of operational amplifier 917 and is also provided to the negative side of the capacitor 921. The positive side of capacitor 921 is tied to the wiping arm 902 of the potentiometer 904. The output signal 919 from the operational amplifier 917 is also supplied to the wiping arm 923 of the potentiometer 924. The potentiometer 924 is tied to the negative sides of capacitors 909 and 911 through resistor 925.

Signal line 912 is provided as the output from the notch filter to the alias filter 161 illustrated in Figure 2b. The notch filter illustrated in Figure 19 is a twin tee notch filter which utilizes active feedback to raise the Q of the circuit. Use of twin tee filters as notch filters is well known. Raising the Q of the circuit illustrated in Figure 19 provides a very narrow rejection band width. The twin tee notch made up of operational amplifier 878 and 887, and the associated circuitry shown, has a notch frequence of 59.8 Hz in this preferred embodiment of the present invention. The twin tee filter made up of operational amplifiers 906 and 917, and the associated circuitry shown, has a notch frequency of 60.2 Hz in the preferred embodiment of the present invention. Since the circuits are in series a resultant response is developed which rejects the 60 Hz frequency. Rejection of the 60 Hz frequency is desirable because 60 Hz interference is commonly caused by power lines which may cross the area being surveyed.

Two channels of alias filters are provided for each channel of data provided from the preamplifier 135 illustrated in Figure 2b. One channel, which is comprised primarily of operational amplifier 932 and the associated circuitry shown, has a cutoff frequency of 124 Hz. The second alias filter, which is comprised primarily of operational amplifier 931 and the associated circuitry shown in Figure 19, has a cutoff frequency of 62 Hz. The alias filters are 12-pole Butterworth low pass active filters. The capacitor and resistor values in each stage are selected to produce a response equivalent to a particular "pole pair" of the 12-pole Butterworth filter. Six distinct "pole pair" stages are cascaded to give the 12-pole Butterworth response from the overall filter. The circuitry involved in a 12-pole Butterworth filter is well known. For this reason, only a single stage of the 12-pole Butterworth filter for each cutoff frequency is illustrated in Figure 19. The output signal line 912 from the operational amplifier 906 is tied through resistors 933 and 935 to the noninverting terminal of the operational amplifier 932. Resistors 933 and 935 are tied together by signal line 936. Signal line 936 is tied to the inverting input of operational amplifier 932 through capacitor 938. Capacitor 939 is tied to the noninverting input of the operational amplifier 932. The output signal 941 from the operational amplifier 932 is tied to the inverting input of the operational amplifier 932 and is also supplied through resistor 943 to the next stage of the 12-pole Butterworth filter. The following stages of the 12-pole Butterworth filter, having a cutoff frequency of 124 Hz, have been deleted from Figure 19 and signal 941 is illustrated as being supplied directly through resistor 943 to the cutoff frequency selector circuit 963, illustrated in Figure 20.

Signal line 912 is also supplied through resistors 952 and 953 to the noninverting input of the operational amplifier 931. Resistors 952 and 953 are tied together by means of signal line 954. Signal line 954 is tied through capacitor 955 to the inverting input of operational amplifier 931. Capacitor 956 is tied to the noninverting input of the operational amplifier 931. The output signal 957 from the

**0010660**

operational amplifier 931 is fed back to the inverting input of the operational amplifier 931 and is also tied through resistor 959 to the cutoff frequency select circuit 963 illustrated in Figure 20. The cutoff frequency select circuit 963, illustrated in Figure 20, is utilized to select the alias filters utilized to provide data to the multiplexer 851, illustrated in Figure 20. Again for the sake of simplicity the following stages of the 12-pole Butterworth filter, having a cutoff frequency of 62 Hz, have been deleted and signal 957 is shown as being supplied directly through resistor 959 to the cutoff frequency select circuit 963. The following stages of the 12-pole Butterworth filters are formed exactly as has been described for the stages illustrated in Figure 19.

An impulse test is utilized to test the response of the notch filter 151 and the alias filters 161 illustrated in Figure 2b. To perform the impulse test, a voltage is supplied to the multiplexer 801 by means of signal line 749. Multiplexer 801 provides the voltage provided by means of signal 749 as an input to the notch filter and the alias filters illustrated in Figure 19. The impulse has the effect of ringing the notch filter and the alias filters and the response of the notch filter and the alias filters can thus be determined. The impulse response of the notch filter and the alias filters is provided through the gain ranging amplifier system 171 to the A/D conversion system 141, as illustrated in Figure 2b.

Commercially available components which can be utilized in the circuit illustrated in Figure 19 are as follows:

| | |
|---|---|
| Multiplexer 801 | DG 201, National Semiconductor |
| Resistors 868, 872, 901 and 907 | 49.9K, 1%, 1/8W, MFF Series, Dale Electronics |
| Potentiometers 871 and 904 | Model 85A, 10K ohms, Dale Electronics |
| Resistor 867 | 2K, 1%, 1/8W, MFF Series, Dale Electronics |
| Resistor 897, 925 | 25.5K, 1%, 1/8W, MFF Series, Dale Electronics |
| Resistor 888, 914 | 426 ohms, 1%, 1/8W, MFF Series, Dale Electronics |
| Resistors 889 and 915 | 10K, 1%, 1/8W, MFF Series, Dale Electronics |
| Potentiometers 896 and 924 | Model 85A, 2K ohms, Dale Electronics |
| Capacitor 879 | .033 microfarad, 10%, 50V, S & El Mfg. Series 25E |
| Capacitor 881, 883, 909 and 911 | .05 microfarad, 1%, 50V, S & El Mfg. Series 25E |
| Capacitor 893 and 921 | 0.1 microfarad, 1%, 50V, S & El Mfg. Series 25E |
| Operational amplifiers 878, 887, 906 and 917 | OP-10, Precision Monolithics |
| Resistors 933 and 952 | 13.7K ohms, 0.1%, 1/8W, MFF Series, Dale Electronics |
| Resistor 935, 953 | 240.8K ohms, 0.1%, 1/8W, MFF Series, Dale Electronics |
| Capacitor 938 | 0.1 mfd., 1%, 50V, C1BXXX Series, ELPAC Components |
| Capacitor 955 | 0.05 mfd, 1%, 50V, C1BXXX Series, ELPAC Components |
| Capacitor 939 | 0.02 mfd, 1%, 50V, C1BXXX Series, ELPAC Components |
| Capacitor 956 | 0.01 mfd, 1%, 50V, C1BXXX Series, ELPAC Components |
| Resistors 943 and 959 | 14.82 K ohms, 1%, 1/8W, MFF Series, Dale Electronics |
| Operational Amplifiers 932 and 931 | LM 224D, National Semiconductor |

The gain ranging amplifier system 171 and the A/D conversion system 141, illustrated in Figure 2b, are more fully illustrated in Figure 20. As has been previously stated, the output signal 941 from the alias filter having a 124 Hz cutoff frequency, which corresponds to a sampling rate of 2 milliseconds, and the output signal 957 from the alias filter having a cutoff frequency of 62 Hz, which corresponds to a 4 milliseconds sampling rate, are supplied as inputs to the switching means 963. In the same manner, signals 163 a—b which are representative of the channel 2 outputs from the alias filters, as illustrated in Figure 2b, are provided as inputs to the switching means 964. Signals 164 a—b are supplied as inputs to the switching means 965 and signals 165 a—b are supplied as inputs to the switching means 966. Control signals 967 are provided to each of the switching means 963—966 from the data holding latches 960. The control signals 967 are utilized to select the channel from the alias filters which will be supplied to the filters 968—971. Either the 124 Hz cutoff or the 64 Hz cutoff filters will be selected by the control signals 967, and the switching means 963—966 will provide data signals 972—975 respectively to the filters 968—971. The filters 968—971 are single-pole high-pass filters which are utilized to remove any DC offset from the signals 972—975. Data is supplied from the filters 968—971 to the multiplexer 851. The multiplexer 851 is also provided with a ground reference signal 978 and is also provided with a voltage reference signal 749 from the output of the buffer amplifier 748, illustrated in Figure 16. Switching of the multiplexer 851 is controlled by means of control signal 979.

The output from the multiplexer 851 is provided as an input to the first stage amplifier 981. The first stage amplifier 981 consists of four sample and hold (S/H) amplifiers 983—986. S/H amplifiers 983 has a gain of unity while S/H amplifiers 984—986 each have a gain of 16. The sampling and holding functions of the S/H amplifiers 983—986 are controlled by means of control line 988, which is provided to each of the S/H amplifiers 983—986 from the data holding latches 960.

The output signal from the multiplexer 851 is provided as an input to the S/H amplifier 983 and as a first input to the S/H amplifier 984. The output from the S/H amplifier 984 is provided as a first input to the S/H amplifier 985. The output from the S/H amplifier 985 is provided as a first input to the S/H amplifier 986. The outputs from each of the S/H amplifiers 983—986 are provided to the multiplexer 991. In this manner, gains of 1, 16, 256 and 4,096 are available from the first stage amplifier 981.

S/H amplifier 984 is also provided with the output signal 993 from the current-to-voltage transducer 994. Signal 993 is utilized as a voltage offset (Vos) compensating signal which will be more fully described in the following paragraphs. S/H amplifier 985 is provided with the output signal 996 from the current-to-voltage transducer 997. Signal 996 is also utilized as a voltage offset compensating signal in the same manner as signal 993. S/H amplifier 986 is provided with the output signal 998 from the current-to-voltage transducer 999 as a second input. Signal 998 is also used as a voltage offset compensating signal.

The output signal from the first stage amplifier 981 is provided as an input to the second stage amplifier 1001. The second stage amplifier 1001 is made up of three amplifiers 1003—1005, each having a gain of two. The output signal 1000 from the first stage amplifier 981 is provided as an input to the multiplexer 1007 and is also provided as a first input to the amplifier 1003. The output from the amplifier 1003 is provided as a first input to the amplifier 1004 and is also provided as an input to the comparator 1009. The output from the amplifier 1004 is provided as a first input to the amplifier 1005. The output from each of the amplifiers 1003—1005 is provided as an input to the multiplexer 1007. The switching of the multiplexer 1007 is controlled by means of control line 1011 which is provided from the data holding latches 960. The output of the comparator 1009 is provided as an input to the data bus buffers 960.

A second input signal 1014 is provided as an input to the amplifier 1003 from the output of the amplifier 1015. Signal 1014 is used as a voltage offset compensating signal in the same manner as signals 993, 996 and 998. Signal 1017 is provided as the second input to the amplifier 1004 from the amplifier 1018. Signal 1017 is also used as a voltage offset compensating signal. Signal 1021 is provided as a second input to the operational amplifier 1005 from the amplifier 1022. Signal 1021 is also used as a voltage offset compensating signal.

The output signal 1024 from the second stage amplifier complex 1001 is supplied through the buffer amplifier 1025 to the multiplexer 951. The output from the buffer amplifier 1025 is also supplied as an input to the comparator 1027. The output from the comparator 1027 is provided as an input to the data holding latches 960.

An address is provided to the gain ranging amplifier system by means of the address line 100 from the 6800 microprocessor which is applied to the address decoder 1031. The address is decoded by means of the address decoder 1031 and is provided to the data holding latches 960 by means of signal lines 1032. These decoded address lines control the transfer of data between the 6800 microprocessor data bus and the gain ranging amplifier system latches and buffers. Three sets of output signal lines 1035—1037 are provided from the data holding latches 960 to the digital-to-analog (D/A) converters 1041—1043.

The output from the D/A converter 1041 is provided as an input to the current-to-voltage transducer 994. The output from the D/A converter 1042 is provided as an input to the current-to-voltage transducer 997. The output from the D/A converter 1043 is provided as an input to the current-to-voltage transducer 999.

The output from the multiplexer 951 is supplied to the sample-and-hold amplifier 1051. The output from the sample-and-hold amplifier 1051 is provided to the analog-to-digital (A/D) converter 1052. The output from the A/D converter 1052 is provided to the data bus 200 of the 6800 microprocessor.

The temperature sensor 1053 is provided to give an indication of the temperature of the RTU. The output signal 1054, representative of the temperature of the RTU is provided as an input to the multiplexer 951.

In operation, 24 values which are used by the gain ranging amplifier system for voltage offset compensation, must be computed and stored in the 6800 microprocessor memory prior to each usage of the gain ranging amplifier system for data acquisition. The voltage offset compensation values are determined for the sample-and-hold amplifier 984—986 and for the amplifier 1003—1005. No value is determined for the sample-and-hold amplifier 983. To determine the required voltage offset compensation values, channel 1 is selected and its input grounded. Multiplexers 991 and 1007 are then utilized to provide the outputs of each amplifier, except sample-and-hold amplifier 983, to the multiplexer 951. The output signals are sampled, held for a sufficient time to perform an A/D conversion, and then are provided to the 6800 microprocessor by means of data bus 200 from the A/D converter 1052. A value is then computed for each of the amplifiers tested which, when applied to their respective inputs, will drive the output of the amplifiers to zero. These values for each amplifier are stored in the 6800 microprocessor memory for subsequent use in voltage offset compensation during the data acquisition sequence. The voltage offset compensation values are provided to the gain ranging amplifier system by means of the address decoder 1031 and the data holding latches 960 which provide signals 1035—1037 which are representative of the voltage offset compensation values to the D/A converters 1043. The D/A converters 1041—1043 and the current-to-voltage converters 994, 997 and 999 are time shared to provide compensating values to the particular amplifiers being utilized in the data acquisition sequence. The procedure scans the four channels and collects data from the amplifiers such that four compensation values are determined per amplifier, one for each channel. This results in a total of 24 values. These values are stored in memory to be used for offset compensation.

When the 24 voltage offset values have been stored in memory, a data collection sequence can be initiated. In the data collection sequence, the sample-and-hold amplifiers in the first stage amplifier 981 act as sample-and-hold buffers in addition to providing most of the gain. In operation, a channel is selected by the multiplexer 851 and is provided to the first stage amplifier 981. All of the sample-and-hold amplifiers 983—986 are placed in a sample mode when the data acquisition sequence is initiated. The sample-and-hold amplifiers 983—986 sample for a sufficient time to allow stabilization and, after sufficient time has passed, all of the sample-and-hold amplifiers 983—986 are set to hold simultaneously by means of control signal 988 which is provided from the data holding latches 960 in response to an address from the 6800 microprocessor. The output signal from the sample-and-hold amplifier 983 is provided from the multiplexer 991 through the amplifier 1003 to the comparator 1009. If the output signal from the sample-and-hold amplifier 983 is less than 0.5 volts, then the output signal from the comparator 1009 will provide an indication to the data bus buffers 960 that the signal output from the multiplexer 851 can be amplified by a factor of 16 without exceeding 8 volts. This insures that the input voltage limit of the A/D converter (10 volts) will not be exceeded. Generally, this is accomplished with the 6800 microprocessor by sampling the output of the comparator 1009. When this signal switches low, the output signal 1000 from the multiplexer 991 exceeds 0.5 volts.

If the output signal from the sample-and-hold amplifier 983 does not exceed 0.5 volts, then the microprocessor switches the multiplexer 991 providing the output signal from the sample-and-hold amplifier 984 to the comparator 1009 through the amplifier 1003. Again, the output from the comparator is checked to ascertain whether or not the output signal from the sample-and-hold amplifier 984 exceeds 0.5 volts. If the output from the sample-and-hold amplifier 984 does not exceed 0.5 volts, then the output from the comparator 1009 will stay high and the microprocessor will direct the multiplexer 991 to select the output signal from the sample-and-hold amplifier 985 as the output signal 1000 from the multiplexer 991. The selection of the sample-and-hold amplifiers is controlled by means of the control lines 988. This procedure is continued until the output from one of the sample-and-hold amplifiers 983—985 is found to exceed 0.5 volts or until the output from the sample-and-hold amplifier 986 is provided as the output from the multiplexer 991. The first output from the sample-and-hold amplifiers 983—985 which exceeds 0.5 volts will be selected by the microprocessor, using multiplexer 991, and the remaining sample-and-hold amplifiers will not be checked.

The compensation values represented by signals 993, 996 and 998 are utilized during the data acquisition sequence to provide the required voltage offset compensation by either adding to or subtracting from the signals which would ordinarily be output from the sample-and-hold amplifiers 984—986. When the sample-and-hold amplifiers 983—986 are set to sample, the compensation values for the sample-and-hold amplifiers 984—986 are stored in the three D/A converters 1041—1043. After the sample-and-hold amplifiers 983—986 are set to hold, the compensation values for the second stage amplifiers 1003—1005 are stored in the D/A converters 1041—1043. The new compensation values cannot change the voltage levels held by the first stage sample-and-hold amplifiers 984—986 since they are in the hold mode. This allows the D/A converters to be time shared in compensating the offset of the first and second stage amplifiers.

After the output from the first stage amplifier 981 has been determined, the output is provided as signal 1000 to the multiplexer 1007. The unamplified signal 1000 is first provided as signal 1024 from the multiplexer 1007 in response to the control signals 1011, which are provided from the data holding latches 960 in response to an address and data from the 6800 microprocessor. The output from the multiplexer 1007 is provided through the output buffer 1025 as an input to the comparator 1027. The comparator 1027 provides a determination as to whether the output from the multiplexer 1007 has exceeded 4 volts. If the output from the multiplexer 1007 has not exceeded 4 volts, then it can be multiplied by a factor of 2 without exceeding the 8-volt input limitation set for the A/D converter 1052. The output from the comparator 1027 is provided as an input to the data bus buffers 960 as has previously been indicated. The output from the comparator 1027 is held high until such time as the output from the multiplexer 1007 exceeds 4 volts. If the output from the multiplexer 1007 exceeds 4 volts, then the output from the comparator 1027 goes low and the output from the multiplexer 991 is selected as the output to be provided to the multiplexer 951. Each of the outputs from the amplifiers 1003—1005 is provided to the comparator 1027 until such time as the output of the comparator 1027 goes low. At that time the gain ranging sequence is complete and in this manner the output from the first amplifier which exceeds 4 volts or the output of amplifier 1005 is provided to the multiplexer 951. Once an output has been selected to be provided the multiplexer 951, the channel multiplexer

**O O1O 66O**

851 is then advanced to the next channel in the gain ranging amplifier and the gain ranging process is repeated.

The data which is provided to the multiplexer 951 is converted to digital form by the A/D converter 1052 and is provided to the 6800 microprocessor data bus 200 in the same manner as previously described.

The multiplexer 951 is also provided with signals 188—199 from the power supply and regulator 186, illustrated in Figure 2b. These signals, which represent the various voltage levels provided by the power supply and regulator, are converted to digital form by the A/D converter 1022 and are provided to the 6800 microprocessor data bus from the A/D converter 1052. These signals 188—199 provide an indication of the availability of power for the RTU illustrated in Figure 2b.

Commercially available components which can be utilized in the schematic illustrated in Figure 20 are as follows:

| | |
|---|---|
| Switching means 963—966 | DG 201, National Semiconductor |
| Filters 968—971 | LM 208AD, National Semiconductor |
| Multiplexer 851 | DG 201, National Semiconductor |
| Sample-and-Hold Amplifiers 983—986 | HAI-2420-2, Harris Semiconductor |
| Multiplexer 991 | DG 201, National Semiconductor |
| Amplifiers 1003—1005 | HAI-4741-2, Harris Semiconductor |
| Multiplexer 1007 | DG 201, National Semiconductor |
| Buffer Amplifier 1025 | HAI-4741-2, Harris Semiconductor |
| Comparator 1009 and 1027 | LM-239-0, National Semiconductor |
| Data Holding Latches 960 | 74 LS 75, National Semiconductor |
| D/A converters 1041—1043 | DAC 100, Burr-Brown |
| Amplifiers 1015, 1018 and 1022 | HAI-4741-2, Harris Semiconductor |
| Current to Voltage Converters 994, 997 and 999 | HAI-4741-2, Harris Semiconductor |
| Multiplexer 951 | MPC-16S and DG 508 with the output pins connected, Burr-Brown |
| Sample-and-Hold Amplifier 1051 | HA-1-2420-2, Harris Semiconductor |
| A/D Converter 1052 | MP-2814, Analogic, Inc. |
| Address Decoder 1031 | 74C20 (8 required), National Semiconductor |
| Temperature Sensor 1053 | YSI 44211, Yellow Springs, Inc. |

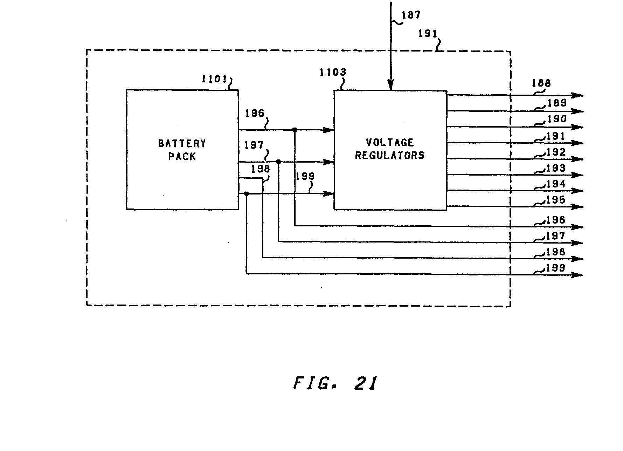

The power supply regulator 186 which is illustrated in Figure 2b is more fully illustrated in Figure 21. Referring to Figure 21, the battery pack 1101 supplies four output voltages by means of supply lines 196—199 which have been previously described in Figure 2b. Supply line 196 supplies +8.75 volts; supply line 197 supplies +18.75 volts; supply line 198 supplies —6.25 volts and supply line 199 supplies —18.75 volts. Supply line 198 is provided directly to the RTU. Supply lines 196, 197 and 199 are supplied to the voltage regulators 1103 and are also supplied directly to the RTU. The voltage regulators 1103 are also supplied with the control signal 187 from the microprocessor 111, as illustrated in Figure 2b.

In response to the voltages which are supplied by means of supply lines 196, 197 and 199 and the command signals which are supplied by means of signal line 187, the voltage regulators 1103 provide a plurality of output signals which have previously been described in Figure 2b. Signal line 188 supplies a +12 volts; signal line 189 supplies a +15 volts; signal line 190 supplies a —5 volts; signal line 191 supplies a —12 volts; signal line 192 supplies a —15 volts; signal line 193 supplies a +5 volts; signal line 194 supplies a +5 volts and signal line 195 supplies a +5 volts. The regulators 1103 are primarily utilized to set and maintain the respective voltage levels to lines 188—195 which would otherwise vary with variations in voltage levels supplied from battery pack 1101 due to depletion of charge therein with use (characteristic discharge curves), shelf life thereof, temperature thereof, etc.

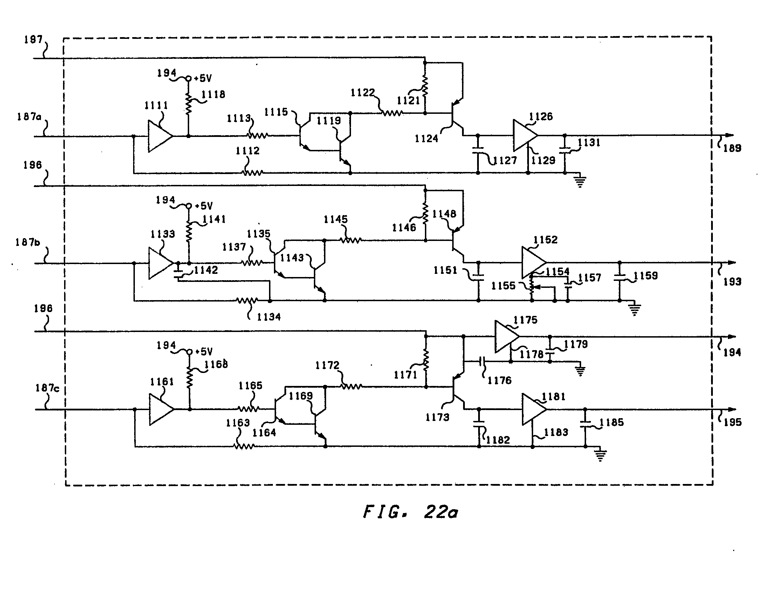

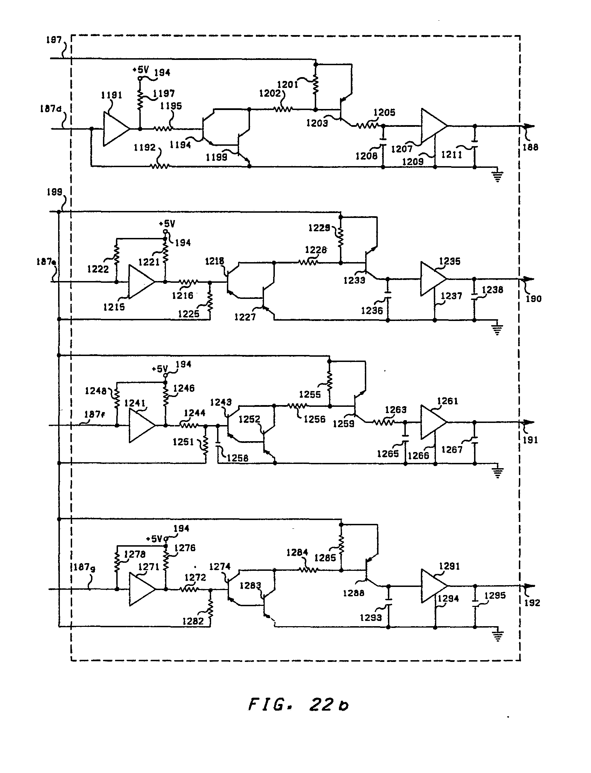

The voltage regulator circuit 1103, illustrated in Figure 21, is more fully illustrated in Figures 22a and b. Referring now to Figure 22a, signal 187a from the microprocessor is representative of a command to turn on the +15 volt supply 189. Signal 187a goes high when it is desired to turn the +15 volt signal 189 on. Signal 187a is supplied to the buffer amplifier 1111 and is also supplied to ground through resistor 1112. The output from the buffer amplifier 1111 is supplied through resistor 1113 to the input of transistor 1115. The +5 volt supply 194 is tied through resistor 1118 to the output of the buffer amplifier 1111 and through resistor 1113 to the base of the transistor 1115.

Supply 197, having a voltage level of +18.75 volts, is tied to the collector of transistor 1115 and transistor 1119 through resistors 1121 and 1122. Supply 197 is also supplied to the emitter of transistor 1124. The collector of transistor 1115 is tied to the base of transistor 1124 through resistor 1122. The emitter of transistor 1115 is tied to the base of transistor 1119. The emitter of transistor 1119 is tied to ground. The collector of transistor 1124 is supplied as an input to the voltage regulator 1126 and is tied to ground through capacitor 1127. The ground input 1129 of the voltage regulator 1126 is tied to ground. The output from the voltage regulator 1126 is supplied as supply voltage 189

29

to the RTU. The output from the voltage regulator 1126 is also tied to ground through capacitor 1131. As has been previously stated, supply voltage 189 has a voltage level of +15 volts.

When command signal 187a goes high, the output from the buffer amplifier 1111 goes high, allowing current to flow from the +5 volt supply 194 to the base of the transistor 1115. Transistors 1115 and 1119 comprise a Darlington pair. When transistor 1115 turns on in response to the signal on line 187a, transistor 1119 also turns on and allows current to flow from the base of transistor 1124. Transistor 1124 turns on and thus provides the +18.75 volt input to the voltage regulator 1126 which provides a regulated +15 volt output in response to the voltage supplied from transistor 1124. Capacitors 1127 and 1131 provide stability for the voltage regulator 1126.

Signal 187b from the microprocessor, which is a command to turn on the +5 volt supply 193, is supplied as an input to the buffer amplifier 1133 and is also supplied to ground through resistor 1134. The output from the buffer amplifier 1133 is tied to the base of transistor 1135 through resistor 1137. The +5 volt power supply is tied to the base of transistor 1135 through resistors 1141 and 1137 and is also tied to the output of the buffer amplifier 1133 through resistor 1141. The output from the buffer · amplifier 1133 is also tied to ground through capacitor 1142.

The collector of transistor 1135 and the collector of transistor 1143 are tied to the +8.75 volt supply 196 through resistors 1145 and 1146. Signal 196 is also tied to the emitter of transistor 1148. The collector of transistors 1135 and 1143 are tied to the base of transistor 1148 through resistor 1145. Supply 196 is tied to the base of transistor 1148 through resistor 1146. The emitter of transistor 1135 is tied to the base of transistor 1143. The emitter of transistor 1143 is tied to the ground. The collector of transistor 1148 is tied to ground through capacitor 1151 and is also supplied as an input to the voltage regulator 1152. The ground input 1154 to the voltage regulator 1152 is tied to ground through potentiometer 1155. The wiping arm of potentiometer 1155 is tied to ground. The ground input 1154 to the voltage regulator 1152 is also tied to ground through capacitor 1157. The output from the voltage regulator 1152 is provided as the +5 volt supply voltage 193 to the RTU and it is also tied to ground through capacitor 1159.

Signal 187b goes high when it is desired to turn on the +5 volt supply 193. When signal 187b goes high, the output from the buffer amplifier 1133 goes high allowing current to flow from the +5 volt supply 194 to the base of transistor 1135. Transistor 1135 turns on in response to the flow of current from the +5 volt supply 194 as does the transistor 1143 which together with transistor 1135 comprises a Darlington pair. When the Darlington pair, made up of transistors 1135 and 1143, is turned on, current flows from the base of transistor 1148. The transistor 1148 is thus turned on resulting in the application of the +8.75 volt supply voltage to the input of the voltage regulator 1152. In response to the input voltage, the voltage regulator 1152 provides a regulated +5 volt supply 193 to the RTU.

Capacitors 1151 and 1159 provide stability for the voltage regulator 1152. Potentiometer 1155 is provided to allow small changes to be made in the voltage level of supply 193. In some applications of the RTU, it is desirable for the level of the +5 volt supply 193 to be slightly greater than +5 volts.

The command signal 187c, supplied from the 6800 microprocessor, is representative of a command to turn on the +5 volt supply 195. Signal 187c is tied as an input to the buffer amplifier 1161 and is also supplied to ground through resistor 1163. The output from buffer amplifier 1161 is tied to the base of transistor 1164 through resistor 1165. The +5 volt supply 194 is tied to the base of the transistor 1164 through resistor 1168 and resistor 1165. The +5 volt supply 194 is also tied to the output of the buffer amplifier 1161 through resistor 1168.

The collectors of transistors 1164 and 1169, which together comprise a Darlington pair, are tied to the +8.75 volt supply 196 through resistors 1171 and 1172. The emitter of transistor 1164 is tied to the base of transistor 1169. The emitter of transistor 1169 is tied to the ground.

The +8.75 supply 196 is provided to the base of the transistor 1173 through resistor 1171. The collectors of transistors 1164 and 1169 are tied to the base of transistor 1173 through resistor 1172. The +8.75 volt supply 196 is also provided to the voltage regulator 1175 and to the emitter of transistor 1173. The collector of transistor 1173 is tied to ground through capacitor 1176 and is also tied to the input of regulator 1181. The ground input 1178 to the voltage regulator 1175 is tied to ground. The output from the voltage regulator 1175 is provided as a +5 volt supply 194 to the RTU and to the regulators 1103. The output from the voltage regulator 1175 is also tied to ground through capacitor 1179.

The collector of transistor 1173 is tied to the input of the voltage regulator 1181 and is also tied to ground through capacitor 1182. The ground input 1183 of the voltage regulator 1181 is tied to ground. The output of voltage regulator 1181 is provided as the +5 volt supply 195 and is tied to ground through capacitor 1185.

The +8.75 volt supply 196 is provided directly to the voltage regulator 1175. The +5 volt supply 194 is on at any time the RTU is operational and provides power to RF receiver 106 and to the RF interface 108 to allow a command from the CRS, illustrated in Figure 2a to turn on the computer 111 illustrated in Figure 2b. All other voltage supplies are on only when they are being utilized. The command signal 187c goes high when it is desired to turn on the +5 volt supply 195. When signal 187c goes high, the output from the buffer amplifier 1161 goes high and allows current to flow from

30

the +5 volt supply 194 to the base of the transistor 1164. Both transistors 1164 and 1169 turn on in response to flow of current to the base of transistor 1164. When transistors 1164 and 1169 turn on, current is allowed to flow from the base of transistor 1173 thus turning it on. When transistor 1173 turns on, the +8.75 volt supply 196 is applied to the input of the voltage regulator 1181. In response to the +8.75 supply being applied to the input of voltage regulator 1181, a regulated +5 volt supply 195 is provided to the RTU.

Capacitors 1176 and 1179 are utilized to stabilize the voltage regulator 1175. Capacitors 1182 and 1185 are utilized to stabilize the voltage regulator 1181.

Referring now to Figure 22b, the command signal 187d from the 6800 microprocessor is representative of the command to turn on the +12 volt supply 188. Signal 187d is supplied as an input to the buffer amplifier 1191 and is also tied to ground through resistor 1192. The output from the buffer amplifier 1191 is tied to the base of transistor 1194 through resistor 1195. The +5 volt supply 194 is tied to the output of the buffer amplifier 1191 through resistor 1197 and is also tied to the base of transistor 1194 through resistor 1195.

The collectors of transistors 1194 and 1199, which together comprise a Darlington pair, are tied to the +18.75 volt supply 197 through resistors 1201 and 1202. The emitter of transistor 1194 is tied to the base of transistor 1199. The emitter of transistor 1199 is tied to the ground. The collectors of transistors 1194 and 1199 are also provided to the base of the transistor 1203 through resistor 1202. The +18.75 volt supply 197 is also tied to the emitter of transistor 1203 as well as to the base of transistor 1203 through resistor 1201.

The collector of transistor 1203 is tied through resistor 1205 to the input of the voltage regulator 1207. The ground input 1209 of the voltage regulator 1207 is tied to ground. The supply input of voltage regulator 1207 is tied to ground through capacitor 1208. The output from the voltage regulator 1207 is provided as the +12 volt supply 188 and is tied to ground through capacitor 1211.

When it is desired to turn on the +12 volt supply 188, the command signal 187d goes high. When the command signal 187d goes high, the output from the buffer amplifier 1191 goes high allowing current to flow to the base of transistor 1194 from the +5 volt supply 194. Both transistors 1194 and 1199 turn on in response to the flow of current to the base of transistor 1194, thus allowing current to flow from the base of transistor 1203. Thus transistor 1203 turns on and switches supply voltage 197 to the input of the voltage regulator 1207. In response to the voltage input 197, the voltage regulator 1207 provides a regulated +12 volt supply 188 to the RTU.

The command signal 187e from the 6800 microprocessor is representative of a command to turn on the —5 volt supply 190. Signal 187e is provided as an input to the buffer amplifier 1215. The output from buffer amplifier 1215 is provided through resistor 1216 to the base of the transistor 1218. The +5 volt supply 194 is tied to the base of transistor 1218 through resistors 1221 and 1216. The +5 voltage supply 194 is also tied to the output of the buffer amplifier 1215 through resistor 1221 and to the input of buffer amplifier 1215 through resistor 1222. The —18.75 volt supply 199 is tied to the base of the transistor 1218 through resistor 1225.

Transistors 1218 and 1227 make up a Darlington pair. The collectors of transistors 1218 and 1227 are tied through resistors 1228 and 1229 to the —18.75 volt supply 199. The emitter of transistor 1218 is tied to the base of transistor 1227. The emitter of transistor 1227 is tied to ground.

The —18.75 volt supply 199 is tied to the base of transistor 1233 through resistor 1229. The —18.75 volt supply 199 is also tied to the emitter of transistor 1233. The collectors of transistors 1218 and 1227 are tied to the base of transistor 1233 through resistor 1228. The collector of transistor 1233 is tied to the input of voltage regulator 1235 and is also tied to ground through capacitor 1236. The ground input 1237 to the voltage regulator 1235 is tied to ground. The output from the voltage regulator 1235 provides the —5 volt supply 190 to the RTU. The output from the 1235 regulator is also tied to ground through the capacitor 1238.

When it is desired to turn on the —5 volt supply 190, the command signal 187e goes low. When the command signal 187e goes low, current is allowed to flow from the base of the transistor 1218. Both transistors 1218 and 1227 turn on in response to the flow of current from the base of transistor 1218, thus allowing current to flow to the base of transistor 1233. Transistor 1233 thus turns on and switches the —18.75 supply 199 to the input of voltage regulator 1235. In response to the —18.75 supply input, the voltage regulator 1235 provides a —5 volt regulated output supply 190.

The command signal 187f is a command to turn on the —12 volt supply 191. Signal 187f is provided as an input to buffer amplifier 1241. The output from the buffer amplifier 1241 is tied to the base of transistor 1243 through resistor 1244. The +5 volt supply 194 is tied to the base of transistor 1243 through resistors 1246 and 1244. The +5 volt supply 194 is also tied to the output of buffer amplifier 1241 through resistor 1246 and to the input of amplifier 1241 through resistor 1248. The —18.75 volt supply 199 is tied to the base of transistor 1243 through resistor 1251.

Transistors 1243 and 1252 make up a Darlington pair. The collectors of transistors 1243 and 1252 are tied to the —18.75 volt supply 199, through resistors 1255 and 1256. The emitter of transistor 1252 is tied to ground. The base of transistor 1243 is tied to ground through capacitor 1258.

The —18.75 volt supply 199 is tied through resistor 1255 to the base of transistor 1259. The —18.75 volt supply 199 is also tied to the emitter of transistor 1259. The collectors of transistors 1243

31

and 1252 are tied to the base of transistor 1259 through resistor 1256. The collector of transistor 1259 is tied to the input of the voltage regulator 1261 through resistor 1263. The input of regulator 1261 is tied to ground through capacitor 1265. The ground input 1266 of the voltage regulator 1261 is tied to ground. The output from the voltage regulator 1261 provides —12 volt supply 191 to the RTU. The output from the voltage regulator 1261 is also tied to the ground through capacitor 1267.

When it is desired to turn on the —12 volt supply 191, the command signal 187f goes low. When the command signal 187f goes low, current is allowed to flow from the base of transistor 1243, thus turning on transistors 1243 and 1252. When transistors 1243 and 1252 turn on, current is allowed to flow to the base of transistor 1259, which turns transistor 1259 on; thus switching the —18.75 volt supply 199 to the input of voltage regulator 1261.

In response to the voltage input, the voltage regulator 1261 provides a regulated —12 volt supply 191 to the RTU.

Signal 187g is representative of a command to turn on the —15 volt supply 192. Signal 187g is supplied as an input to the buffer amplifier 1271. The output from the buffer amplifier 1271 is provided through resistor 1272 to the base of transistor 1274. The +5 volt supply 194 is tied to the base of the transistor 1274 through resistors 1276 and 1272. The +5 volt supply 194 is also tied to the output of the buffer amplifier 1271 through resistor 1276 and is also tied to the input of buffer amplifier 1271 through resistor 1278. The —18.75 volt supply 199 is tied to the base of transistor 1274 through resistor 1282.

Transistors 1274 and 1283 comprise a Darlington pair. The collectors of transistors 1274 and 1283 are tied through resistors 1284 and 1285 to the —18.75 volt supply 199. The collectors of transistors 1274 and 1283 are also tied through resistor 1284 to the base of transistor 1288. The emitter of transistor 1274 is tied to the base of transistor 1283. The emitter of transistor 1283 is tied to ground. The —18.75 volt supply 199 is tied to the base of transistor 1288 through resistor 1285 and is also tied to the emitter of transistor 1288. The collector of transistor 1288 is tied to the input of the voltage regulator 1291. The collector of the transistor 1288 is also tied to the ground through capacitor 1293. The ground input 1294 of the voltage regulator 1291 is tied to ground. The output from voltage regulator 1291 is provided as the —15 volt supply 192 to the RTU. The output from voltage regulator 1291 is also tied to ground through capacitor 1295.

When it is desired to turn on the —15 volt supply 192, the command signal 187g goes low. When the command signal 187g goes low, current is allowed to flow from the base of transistor 1274; thus turning on the transistors 1274 and 1283. When transistors 1274 and 1283 turn on, current is allowed to flow from the base of transistor 1288; thus turning on the transistor 1288. When transistor 1288 turns on, the —18.75 volt supply is switched to the input of the voltage regulator 1291 which in turn provides a regulated —15 volt output supply 192.

Commercially available components which can be utilized in the circuit illustrated in Figures 22a and b are as follows: Values of capacitors and resistors are also set forth in the following list.

| | |
|---|---|
| Resistors 1118, 113, 112, 1121, 1141, 1137, 1134, 1146, 1168, 1165, 1171, 1163, 1197, 1195, 1192, 1201, 1216, 1244, 1255, 1272 and 1285 | 100 KΩ, 5%, 1/4W, Dale |
| Resistor 1122 | 1 KΩ, 5%, 1W, Dale |
| Resistor 1145 | 229 Ω, 5%, 1W, Dale |
| Potentiometer 1155 | 100 Ω, Bourns, 3329H-1-101 |
| Resistors 1172 and 1202 | 390 Ω, 5%, 2W, Dale |
| Resistor 1205 | 8.2 Ω, 5%, 2W, Dale |
| Resistors 1222, 1221, 1248, 1246, 1278 and 1276 | 56 KΩ, 5%, 1/4W, Dale |
| Resistors 1225, 1251 and 1282 | 649 K, 1%, 1/4W, Dale |
| Resistor 1228 | 33 K, 5%, 1/4W, Dale |
| Resistor 1229 | 1 MΩ, 5%, 1/4W, Dale |
| Resistor 1256 | 3.9 KΩ, 5%, 1/4W, Dale |
| Resistor 1263 | 82 Ω, 5%, 1/2W, Dale |
| Resistor 1284 | 1/8 KΩ, 5%, 1/4W, Dale |
| Capacitors 1127 and 1208 | .22 Mf, 10%, Panasonic, Type ECQ-E |
| Capacitors 1142, 1157, 1159, 1185, 1211 and 1258 | .1 Mf, 10%, Panasonic, Type ECQ-E |
| Capacitors 1151 and 1182 | .33 Mf, 10%, Panasonic, Type ECQ-E |
| Capacitors 1176, 1179, 1238, 1265, 1267 and 1295 | 1 Mf, 10%, Panasonic, Type ECQ-E |
| Capacitors 1236 and 1293 | 2.2 Mf, 10%, Panasonic, Type ECQ-E |
| Buffer Amplifiers 1111, 1133, 1161, 1191, 1215, 1241 and 1271 | 74 C 906, National Semiconductor |
| Transistors 1115, 1119, 1135, 1143, 1164, 1169, 1194 and 1199 | MPS—A14, Motorola |
| Transistors 1218, 1227, 1243, 1252, 1274 and 1283 | MPS—A66, Motorola |
| Transistors 1124, 1148, 1173, and 1203 | MPS—U52, Motorola |
| Transistors 1233 and 1259 | 2N3904, Motorola |
| Transistor 1288 | MPS-U02, Motorola |
| Voltage Regulators 1126 | LM 340-T15, National Semiconductor |
| Voltage Regulator 1152 | MC 7805CP, Motorola |
| Voltage Regulator 1175 | LM 78L05, National Semiconductor |
| Voltage Regulator 1181 | MC 7805 CP, Motorola |
| Voltage Regulator 1207 | LM 340-T12, National Semiconductor |
| Voltage Regulator 1235 | LM 320-H5, National Semiconductor |
| Voltage Regulator 1261 | $\mu$A 79M12 AHC, Fairchild |
| Voltage Regulator 1291 | LM 320 T15, National Semiconductor |

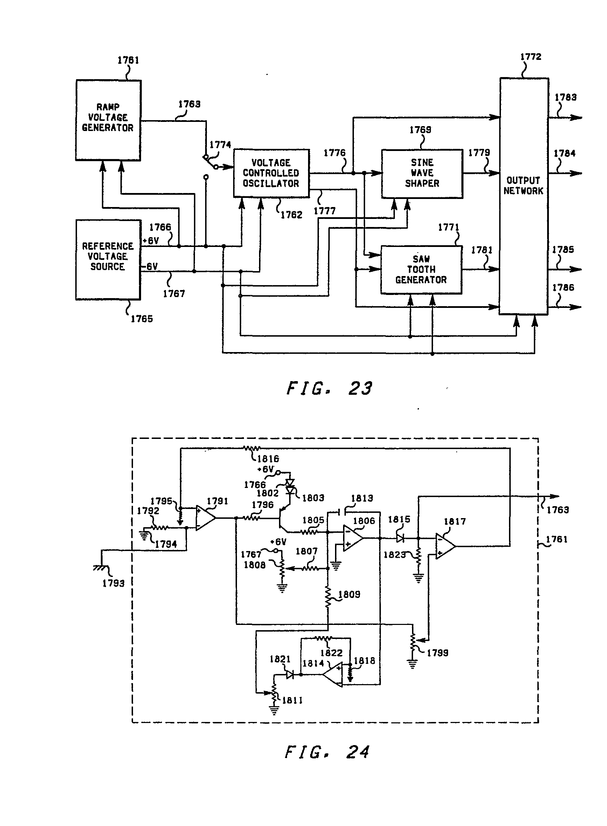

Because of the importance of being able to ensure that the remote telemetry unit illustrated in Figure 2b is operational, a separate testing unit, illustrated in Figure 23, is provided as a means for general testing of the remote telemetry unit illustrated in Figure 2b. The primary function of the testing unit illustrated in Figure 23 is to provide four output signals which can be utilized to test the four channels of the remote telemetry unit illustrated in Figure 2b. A square wave, sawtooth wave, sine wave and triangular wave are output by the testing unit to provide a means for individually identifying each channel and for determining which, if any, of the channels of the remote telemetry unit are inoperable. The testing unit illustrated in Figure 23 also provides a means by which a frequency sweep can be generated and supplied through the channels of the remote telemetry unit. This frequency sweep is utilized to test the operation of the notch filter 151 and the alias filters 161 illustrated in Figure 2b.

Referring now to Figure 23, the ramp voltage generator 1761 provides a ramp signal which is used by the voltage-controlled oscillator 1762 to generate a frequency sweep signal. The ramp signal 1763, output from the ramp voltage generator 1761, is delayed so as to allow the geophone test function to be completed and to allow the remote telemetry unit illustrated in Figure 2b to cycle to a data acquisition mode before the frequency sweep is applied to the inputs of the preamplifier 135 illustrated in Figure 2b.

The reference voltage source 1765 provides an output signal 1766 having a value of +6 volts and also provides an output signal 1767 having a value of −6 volts. The output signals 1765, 1765, 1766 and 1767 from the reference voltage source are utilized to provide power to the voltage-controlled oscillator 1762, the ramp voltage generator 1761, the sine wave shaper 1769, the sawtooth generator 1771 and the output network 1772. The +6 volt signal 1766 is also provided as a possible input to the voltage-controlled oscillator 1762 to allow generation of a constant frequency output signal.

Switching means 1774 is utilized to select either the output signal 1763 from the ramp voltage generator or the output signal 1766 from the reference voltage source 1765 as an input to the voltage-controlled oscillator 1762. If signal 1763 is provided to the voltage-controlled oscillator through switching means 1774, then the output from the voltage-controlled oscillator will be a frequency sweep. If signal 1766 is selected to be provided to the voltage-controlled oscillator 1762 through switching means 1774, then the output of the voltage-controlled oscillator will be a constant frequency signal.

The voltage-controlled oscillator 1762 provides an output signal 1776 which is a triangular waveform and an output signal 1777 which is a square wave. The output signal 1776 is provided as an input to the sine wave shaper 1769, to the sawtooth generator 1771 and to the output network 1772. The output signal 1777 is provided as an input to the sawtooth generator 1771 and as an input to the output network 1772.

The sine wave shaper 1769 operates on the triangular waveform 1776 to form a sine wave from the triangular waveform. This sine wave, which is represented as signal 1779, is provided from the sine wave shaper 1769 to the output network 1772.

The sawtooth generator 1771 utilizes the triangular waveform 1776 and the square wave 1777 to generate a sawtooth waveform 1781. The sawtooth waveform 1781 is provided from the sawtooth generator 1771 as an input to the output network 1772.

In response to the input signals, the output network 1772 provides four output signals 1783—1786 with each one being supplied to a respective one of the channels of the preamplifier 135 illustrated in Figure 2b. Signal 1783 is a triangular waveform, signal 1784 is a sine wave, signal 1785 is a sawtooth waveform, and signal 1786 is a square wave. Switching is also provided in the output network 1772 to allow the sine wave represented by signal 1779 to be provided to all four of the input channels of the preamplifier 135 illustrated in Figure 2b. Thus, either four different waveforms can be provided to the four input channels of the preamplifier 135 or a sine wave can be provided to each of the input channels of the preamplifier 135.

When it is desired to test the remote telemetry unit illustrated in Figure 2b with the testing system illustrated in Figure 23, the output signals 1783—1786 from the output network 1772 are tied to the inputs of the preamplifier 135. The output signal 1766 from the reference voltage source 1765 is tied to the voltage-controlled oscillator through switching means 1774. In response to the +6 volt input signal 1766, the testing system, illustrated in Figure 23, will provide either four different waveforms having a constant frequency or four sine waves having a constant frequency to the preamplifier 135. The signals are transmitted through the data acquisition system of the remote telemetry unit, illustrated in Figure 2b, as has been previously described and are displayed by the display unit 93 illustrated in Figure 2a. This display gives an indication of whether the respective channels of the remote telemetry unit, illustrated in Figure 2b, are operational. The output voltage from the testing system illustrated in Figure 23 may be varied to give an indication of the sensitivity of the remote telemetry unit illustrated in Figure 2b.

After this initial test is performed, the ramp voltage generator 1761 can be connected to the voltage-controlled oscillator 1762 through switching means 1774. After the preliminary test of the geophones is completed and the remote telemetry unit, illustrated in Figure 2b, has cycled to a data acquisition mode, the ramp voltage generator 1761 will output a ramp signal 1763. In response to this ramp signal, the testing system, illustrated in Figure 23, will output four different waveforms which sweep in frequency or will output four sine waves which sweep in frequency. These signals are again supplied through the remote telemetry unit, as has been previously described, and are displayed by the data display unit 93 illustrated in Figure 2a. As the frequency sweep goes through 60 Hz, the waveforms displayed at the data display unit should approach straight lines, indicating that the notch filter 151 is operational. The same phenomena should be observed when the frequency sweep goes through the cutoff frequencies of the alias filters 161, again indicating that the alias filters are operational. The testing unit illustrated in Figure 23 thus provides another method by which the operability of the remote telemetry unit, illustrated in Figure 2b, can be insured which improves the reliability of the seismic exploration system embodied in the present invention.

The ramp generator 1761, illustrated in Figure 23, is more fully illustrated in Figure 24. Referring now to Figure 24, the inverting input of the operational amplifier 1791 is tied to the common 1793 of the RTU, which is illustrated in Figure 2b, and is also tied through resistor 1792 to a separate ground 1794. The noninverting input of the operational amplifier 1791 is tied to ground through the resistor 1795. The output from the operational amplifier 1791 is tied through resistor 1796 to the base of the transistor 1797. The output from the operational amplifier 1791 is also tied through potentiometer 1799 to ground.

The emitter of the transistor 1797 is tied to the +6 volt signal 1766 through diodes 1802 and 1803. The +6 volt signal 1766 is supplied from the reference voltage source 1765 illustrated in Figure 23. The collector of the transistor 1797 is tied through resistor 1805 to the inverting input of the operational amplifier 1806. The inverting input of the operational amplifier 1806 is also tied through resistor 1807 to the wiper of the potentiometer 1808 and is also tied through resistor 1809 to the potentiometer 1811. The noninverting input of the operational amplifier 1806 is tied to ground. One terminal of the potentiometer 1808 is tied to the −6 volt power supply 1767 which is supplied from the reference voltage source 1765, illustrated in Figure 23. The second terminal of the potentiometer 1808 is tied to ground. The output from the operational amplifier 1806 is fed back through capacitor 1813 to the inverting input of the operational amplifier 1806. The output signal from the operational amplifier 1806 is also tied to the inverting input of the operational amplifier 1814 and is tied through diode 1815 to the inverting input of the operational amplifier 1817. The output of the operational amplifier 1814 is also supplied through diode 1815 as signal 1763, illustrated in Figure 23.

The noninverting input of the operational amplifier 1814 is tied to ground through resistor 1818. The output from the operational amplifier 1814 is tied to one terminal of the potentiometer 1811 through diode 1821. The second terminal of the potentiometer 1811 is tied to ground. The output signal from the operational amplifier 1814 is also fed back to the noninverting input of the operational amplifier 1814 through resistor 1822.

The noninverting input of the operational amplifier 1817 is tied to the wiper of the potentiometer 1799. The inverting input of the operational amplifier 1817 is tied to ground through resistor 1823. The output from the operational amplifier 1817 is fed back through resistor 1816 to the noninverting input of the operational amplifier 1791.

In the circuit illustrated in Figure 24, operational amplifiers 1791, 1814 and 1817 are utilized as comparators while operational amplifier 1806 is utilized as an integrator. In the quiescent state, the outputs of operational amplifiers 1791, 1817 and 1806 are negative full scale while the output from the operational amplifier 1814 is positive full scale. In this state, the noninverting input of the operational amplifier 1791 is at approximately −0.8 volts. The inverting input of operational amplifier 1817 cannot be pulled below ground by operational amplifier 1806 because of diode 1815. Since the noninverting input of the operational amplifier 1817 is being held below ground by operational amplifier 1791, the output of operational amplifier 1817 is held at negative full scale, thus producing a stable state.

When the remote telemetry unit, illustrated in Figure 2b, performs a leakage test, the common 1794 of the testing system illustrated in Figure 23 is forced above the RTU common 1793 through resistor 1792. Operational amplifier 1791 senses this as a negative pulse at the inverting input. When this negative pulse drops below −0.8 volts, the output of operational amplifier 1791 switches to positive full scale. The noninverting input of operational amplifier 1817 then moves above ground. Therefore, the output of operational amplifier 1817 switches to positive full scale. This drives the noninverting input of operational amplifier 1791 to approximately +.8 volts. The two commons 1793 and 1794 can then return to the same potential and the circuit will remain in the new state.

When the output of the operational amplifier 1791 was in the quiescent state, the transistor 1797 was held on. Thus, the output of the operational amplifier 1806 was held negative full scale. In the active state, the transistor 1797 is turned off. The output of operational amplifier 1806 begins a linear increase in voltage at a rate determined by the setting of the potentiometer 1808. The output signal 1763 will remain at zero until the output of the operational amplifier 1806 reaches approximately +0.6 volts. When the output of the operational amplifier 1806 reaches approximately +0.6 volts, the output signal 1763 from the ramp voltage generator will begin to follow the output of the integrator. Since the output of operational amplifier 1814 has been approximately +6 volts, the noninverting input is at approximately +0.6 volts. The output of the operational amplifier 1814 will switch to negative full scale when the output of the operational amplifier 1806 is approximately +0.6 volts. When this happens, the rate of change of the integrator output will change by an amount proportional to the setting of potentiometer 1811. The output signal 1763 will increase at this new rate until the threshold set by the potentiometer 1799 is reached. The circuit then will return to the quiescent state until another trigger pulse is received.

The ramp voltage generator illustrated in Figure 24 provides a frequency sweep at the input of the preamplifier 135, illustrated in Figure 2b, by means of the test system illustrated in Figure 23. The frequency sweep is delayed until after the initial tests of the RTU are completed and the RTU has cycled to a data collection mode.

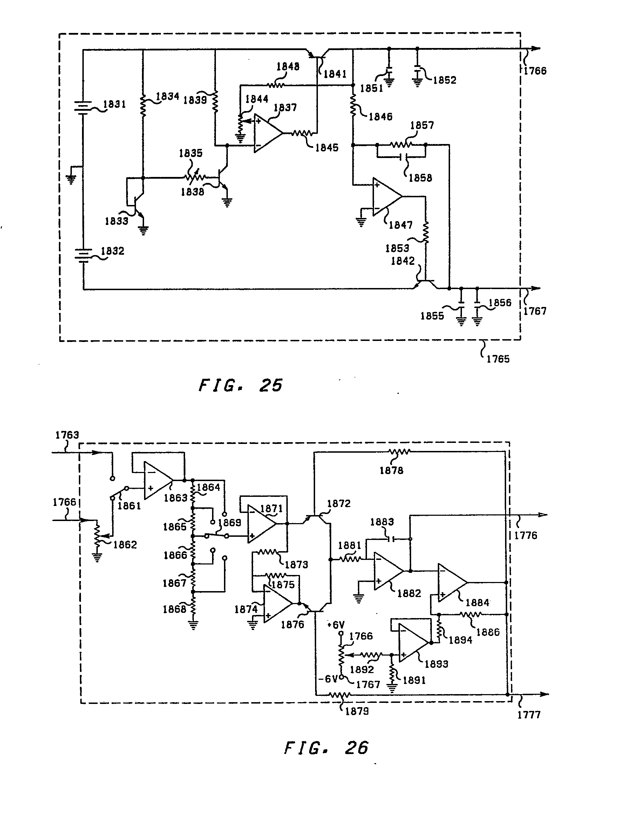

The reference voltage source 1765, illustrated in Figure 23, is more fully illustrated in Figure 25. Two 9-volt batteries 1831 and 1832 are preferably used to provide power for the testing system illustrated in Figure 23. One of the 9-volt batteries 1831 has the negative side thereof tied to ground. The second of the 9-volt batteries 1832 has the positive side thereof tied to ground. The positive side of the battery 1831 is tied to the collector of transistor 1833 and to the wiper of potentiometer 1835 through resistor 1834. The positive side of the battery 1831 is also tied to the inverting input of the operational amplifier 1837 and to the collector of transistor 1838 through resistor 1839. The positive side of the battery 1831 is also tied directly to the emitter of transistor 1841. The negative side of the battery 1832 is tied directly to the emitter of the transistor 1842.

The base of the transistor 1833 is tied to the collector of the transistor 1833. The emitter of transistor 1833 is tied to ground. The collector and base of the transistor 1833 are also tied to the wiper of potentiometer 1835. One terminal of the potentiometer 1835 is tied to ground. The second terminal of the potentiometer 1835 is tied to the base of transistor 1838. The collector of the transistor 1838 is tied to the inverting input of the operational amplifier 1837. The emitter of the transistor 1838 is tied to ground. The noninverting input of the operational amplifier 1837 is tied to the wiper of potentiometer 1844. The output from the operational amplifier 1837 is tied to the base of transistor 1841 through resistor 1845. The collector of the transistor 1841 is tied through resistor 1846 to the noninverting input of the operational amplifier 1847. The collector of the transistor 1841 is also tied through resistor 1848 to one terminal of potentiometer 1844. The second terminal of the potentiometer 1844 is tied to ground. The collector of the transistor 1841 also provides the output signal 1766, which is illustrated and described in Figure 23. One terminal of capacitors 1851 and 1852 is tied to the signal line 1766. The second terminal of the capacitors 1851 and 1852 is tied to ground.

The inverting terminal of the operational amplifier 1847 is tied to ground. The output from the operational amplifier 1847 is tied through resistor 1853 to the base of the transistor 1842. The collector of the transistor 1842 supplies the output signal 1767, which is illustrated and described in Figure 23. Capacitors 1855 and 1856 both have one terminal tied to the signal line 1767. The second terminal of capacitors 1855 and 1856 is tied to ground. The collector of the transistor 1842 is also tied through the resistance capacitance network made up of resistor 1857 and capacitor 1858 to the noninverting input of the operational amplifier 1847.

In operation, a reference voltage is established at the inverting input of operational amplifier 1837 by the combination of transistors 1833 and 1838 together with resistors 1834, 1839 and potentiometer 1835. Resistors 1848 and potentiometer 1844 act to establish a sampling voltage at the noninverting input of the operational amplifier 1837. Operational amplifier 1837, which acts as a comparator, functions to detect any difference between the reference voltage and the sampling voltage. If a difference between the sampling voltage and the reference voltage is detected, the operational amplifier 1837 acts to provide a correction signal through resistor 1845 to the base of transistor 1841. Transistor 1841 turns on and functions to change the output voltage level represented by signal 1766 in such a manner that the sampling voltage and the reference voltage will be equal.

The transistor 1841 may be considered to be analogous to a variable resistor where the resistance is a function of the voltage applied to the base of transistor. Thus, as the output voltage represented by signal 1766 tends to diminish with an increase in load or a decrease in battery life, the sampling voltage will also tend to diminish proportionately as will also the output voltage from the operational amplifier 1837. This results in a tendency for the base-to-emitter voltage of transistor 1841 to increase, which further results in transistor 1841 being turned on harder, decreasing its resistance, and thus it tends to allow more current to pass to the load. As the current passing to the load increases, the output voltage represented by signal 1766 and the sampling voltage tend to increase and the base-to-emitter voltage for transistor 1841 tends to decrease until the sampling voltage again equals the reference voltage.

The regulator illustrated in Figure 25 functions within certain limits of the voltage supplied from the batteries 1831 and 1832 and the current supplied to a load. This particular regulator is designed to operate between battery voltage limits of 9.0 to 6.2 volts DC and current limits of approximately 0 to approximately 15 milliamps.

The use of the transistors 1833 and 1838 to generate the reference voltage is considered to be the novel feature of the circuit illustrated in Figure 25. Because the reference voltage generator, illustrated in Figure 25, is designed to generate stable reference voltages with an absolute minimum of battery drain, the forward voltage current characteristics of the base emitter junction of a silicon transistor as the basis for the generation of the reference voltage. Resistor 1834 biases the current to the base-emitter junction of transistor 1833 to such a level that the base-to-emitter voltage of transistor 1833 is essentially constant within the battery voltage excursions of 6.2 volts to 9.0 volts DC. Thus, a constant voltage is applied to potentiometer 1835 in series with the base of transistor 1838. Therefore, the collector-to-emitter voltage for transistor 1838 is held essentially constant and this collector-emitter voltage is utilized as the reference voltage.

The voltage-controlled oscillator 1762, illustrated in Figure 23, is more fully illustrated in Figure 26. Referring now to Figure 26, signal 1763 from the ramp voltage generator 1761 is supplied as one input to the switching means 1861. The output signal 1766 from the reference voltage source 1765 is provided as an input to one terminal of the potentiometer 1862. The second terminal of the potentiometer 1862 is tied to ground. The wiper of potentiometer 1862 is supplied as a second input to switching means 1861.

The noninverting input of the operational amplifier 1863 is tied to switching means 1861. The output from operational amplifier 1863 is fed back to the inverting input of the operational amplifier 1863. The output from the operational amplifier 1863 is also provided through a plurality of series connected resistors 1864—1868 to the switching means 1869. The plurality of resistors 1864—1868 are provided as a means for varying, in discrete steps, the voltage level of the signal supplied from the output of the operational amplifier 1863 to the noninverting input of the operational amplifier 1871, which is tied to the switching means 1869.

The output signal from the operational amplifier 1871 is fed back to the inverting input of the operational amplifier 1871 and is also supplied to the emitter of the transistor 1872. The output signal from the operational amplifier 1871 is also supplied through resistor 1873 to the inverting input of the operational amplifier 1874. The noninverting input of the operational amplifier 1874 is tied to ground.

36

# 0 010 660

The output of the operational amplifier 1874 is fed back through resistor 1875 to the inverting terminal of the operational amplifier 1874 and is also tied to the emitter of the transistor 1876.

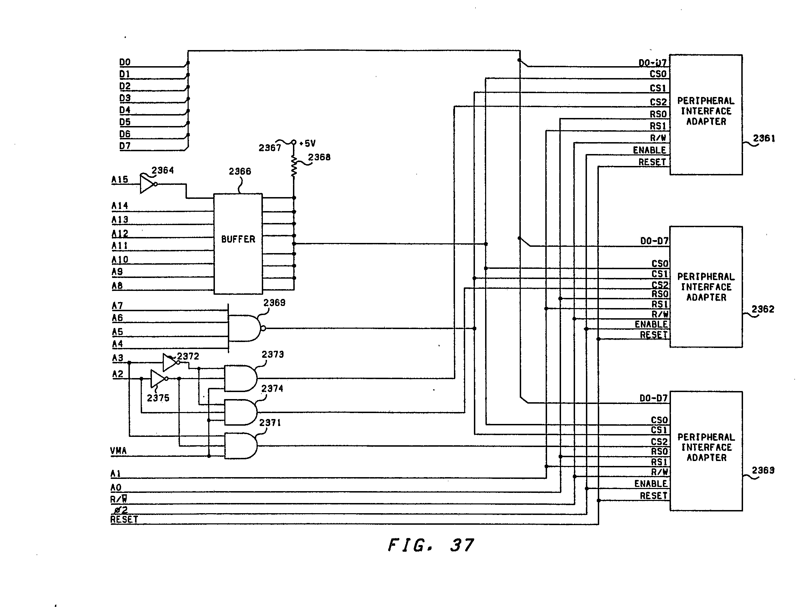

The base of transistor 1872 is tied through resistor 1878 to the signal line 1777 which is illustrated and described in Figure 23. A square wave is provided from the voltage-controlled oscillator circuit, illustrated in Figure 36, by means of signal line 1777. The base of the transistor 1876 is also tied through resistor 1879 to the signal line 1777. The collectors of transistors 1872 and 1876 are tied together and are also tied through resistor 1881 to the inverting input of the operational amplifier 1882. The noninverting input of the operational amplifier 1882 is tied to ground. The output from the operational amplifier 1882 is fed back through capacitor 1883 to the inverting input of the operational amplifier 1882. The output from the operational amplifier 1882 is also provided to the inverting input of the operational amplifier 1884 and provides a triangular waveform as an output by means of signal line 1776, which is illustrated and described in Figure 23. The output from operational amplifier 1884 is tied to signal line 1777. The noninverting input of operational amplifier 1884 is also tied to signal line 1777 through resistor 1886.

One terminal of the potentiometer 1887 is tied to the +6 volt power supply line 1776 which is supplied from the reference voltage source 1765. The second terminal of the potentiometer 1887 is tied to the −6 volt power supply line 1767 which is supplied from the reference voltage source 1765. The wiper of the potentiometer 1887 is tied through the voltage divider network made up of resistors 1891 and 1892 to the noninverting input of the operational amplifier 1893. The output from the operational amplifier 1893 is fed back to the inverting input of the operational amplifier 1893. The output from the operational amplifier 1893 is also provided through resistor 1894 to the noninverting input of operational amplifier 1884 and is supplied through resistors 1894 and 1886 to signal line 1777.

Operation of the voltage-controlled oscillator circuit illustrated in Figure 26 is as follows. First, assume that the output of the operational amplifier 1884, which is being utilized as a comparator, is low. The transistor 1872 will be on and the transistor 1876 will be off. The input-to-operational amplifier 1882, which is being utilized as an integrator, is then a positive voltage equal to the input voltage to the noninverting input of operational amplifier 1871. Thus, the output of operational amplifier 1882 decreases linearly. The output of the operational amplifier 1893 is near zero. Thus, the noninverting input of the operational amplifier 1884 is negative at a value which is determined by resistors 1894 and 1886.

When the output of the operational amplifier 1882 decreases to the value determined by resistors 1894 and 1886, the output of the operational amplifier 1884 will switch positive and the noninverting input of the operational amplifier 1884 will go positive also. The transistor 1876 will turn on while the transistor 1872 will turn off. This will cause the slope of the output from the operational amplifier 1882 to change signs. The rate of change of the output from operational amplifier 1882 is now determined by the magnitude of the voltage being supplied to the noninverting input of the operational amplifier 1871. This process continues and a triangular wave 1776 and a square wave 1777 are generated. The frequency of the triangular wave 1776 and the square wave 1777 are determined by the magnitude of the voltage being supplied to the noninverting input of the operational amplifier 1871. Thus, potentiometer 1862 and resistors 1864—1868 in combination with switching means 1869 can be utilized to regulate the frequency of the output signals from the voltage-controlled oscillator 1762.

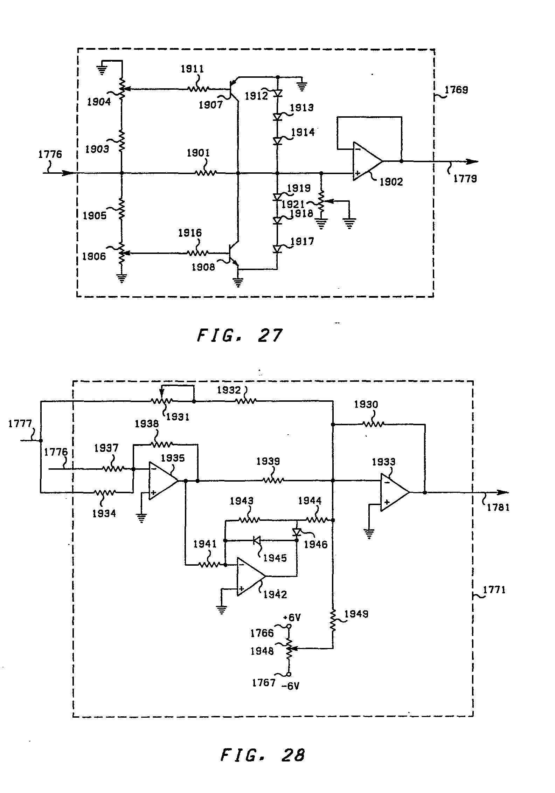

The sine wave shaper 1769, illustrated in Figure 23, is more fully illustrated in Figure 27. The sine wave shaper 1769 acts to change the triangular wave 1776 into a sine wave 1779. The triangular wave 1776, which is supplied from the voltage-controlled oscillator 1762, is provided through resistor 1901 to the noninverting input of operational amplifier 1902. Signal line 1776 is tied to ground through resistor 1903 and potentiometer 1904. Signal line 1776 is also tied to ground through resistor 1905 and potentiometer 1906. Signal 1776 is also supplied through resistor 1901 to the collectors of transistors 1907 and 1908.

The base of the transistor 1907 is tied to the wiper of potentiometer 1904 through resistor 1911. The emitter of the transistor 1907 is tied to ground. Signal line 1776 is also tied through resistor 1901 to the cathode terminal of the diode string comprising series connected diodes 1914, 1913 and 1912 with the anode terminal of diode 1912 being connected to ground.

The base of transistor 1908 is tied to the potentiometer 1906 through resistor 1916. The emitter of the transistor 1908 is tied to ground. Signal line 1776 is also tied through resistor 1901 to the anode terminal of the diode string comprising series connected diodes 1919, 1918 and 1917 with the cathode of diode 1917 being connected to ground.

The noninverting input of the operational amplifier 1902 is tied to ground through the potentiometer 1921. The wiper of the potentiometer 1921 is tied to ground. The output signal from operational amplifier 1902 is fed back to the inverting input of the operational amplifier 1902. The output signal from the operational amplifier 1902 is also provided as the sine wave signal 1779, which has been previously described in Figure 23.

Resistor 1901 and the clipping diodes 1912—1914, 1917—1919 act to round the top of the triangular wave. The potentiometer 1921 is utilized to correct the slope of the triangular wave to more closely approximate a sine wave. The transistors 1907 and 1908 are provided to further round the peak

37

## 0010 660

of the triangular wave to provide a sine wave output. Operational amplifier 1902 is provided as a buffer to prevent overloading of the sine wave shaper circuit illustrated in Figure 27.

The sawtooth generator 1771, illustrated in Figure 23, is more fully illustrated in Figure 28. Signal 1777, which is the square wave output from the voltage-controlled oscillator 1762, is provided through potentiometer 1931 and resistor 1932 to the inverting input of the operational amplifier 1933. Signal 1777 is also provided through resistor 1934 to the inverting input of the operational amplifier 1935. Signal 1776, which is the triangular wave output from the voltage-controlled oscillator 1762, is provided through resistor 1937 to the inverting input of the operational amplifier 1935. The noninverting input of the operational amplifier 1935 is tied to ground. The output from the operational amplifier 1935 is fed back to the inverting input of the operational amplifier 1935 through resistor 1938. The output from the operational amplifier 1935 is also provided through resistor 1939 to the inverting input of the operational amplifier 1933 and through resistor 1941 to the inverting input of the operational amplifier 1942.

The noninverting input of the operational amplifier 1942 is tied to ground. The output from the operational amplifier 1942 is tied through the resistor-diode network made up of resistors 1943 and 1944 and diodes 1945 and 1946 to the inverting input of the operational amplifier 1942 and to the inverting input of the operational amplifier 1933.

The wiper of the potentiometer 1948 is tied to the inverting input of the operational amplifier 1933 through resistor 1949. The first terminal of the potentiometer 1948 is tied to the +6 volt power supply line 1766. The second terminal of the potentiometer 1948 is tied to the −6 volt power supply line 1767. Both the +6 volt power supply line 1766 and the −6 volt power supply line 1767 are provided from the reference voltage source 1765 illustrated in Figure 23.

The noninverting input of the operational amplifier 1933 is tied to ground. The output from the operational amplifier 1933 is supplied as the sawtooth signal 1781, which is described in Figure 23.

Amplifier 1935 acts to add the triangular wave and the square wave to produce a summed output. The operational amplifiers 1942 and 1933, which together comprise a full wave rectifier, are then utilized to produce a sawtooth output signal in response to the summation of the square wave and the triangular wave. Potentiometer 1948 is adjusted to provide symmetry of the sawtooth wave about a zero voltage reference.

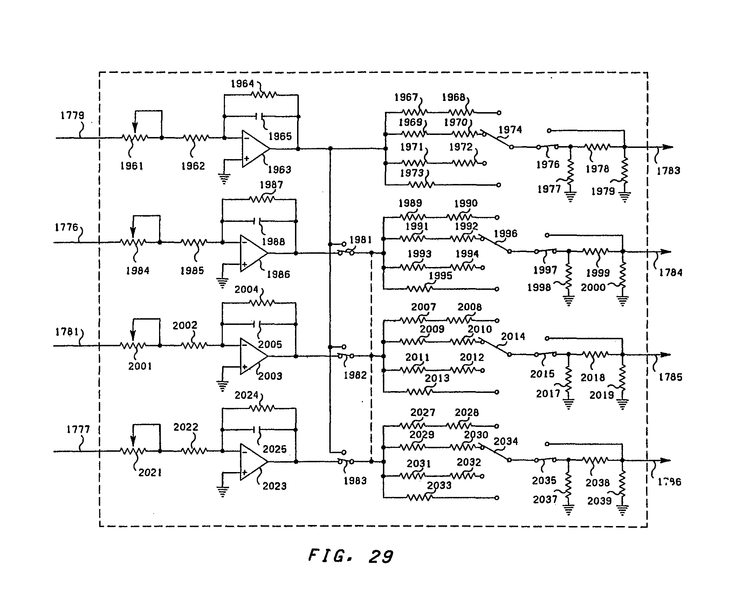

The output network 1772, illustrated in Figure 23, is more fully illustrated in Figure 29. Signal 1779 which is the sine wave output from the sine wave shaper 1769 is provided through potentiometer 1961 and resistor 1962 to the inverting input of the operational amplifier 1963. The noninverting input of the operational amplifier 1963 is tied to ground. The output from the operational amplifier 1963 is fed back to its inverting input through the resistance capacitance network made up of resistor 1964 and capacitor 1965. The output from the operational amplifier 1963 is also provided through the resistor network made up of resistors 1967—1973 to the switching means 1974. The plurality of resistance paths from the output of the operational amplifier 1963 to the switching means 1974 are provided to provide a means by which different voltage levels can be supplied as outputs from the output network 1772.

Switching means 1974 is tied to the switching means 1976. Switching means 1976 may be connected directly to the output signal line 1783 or may be connected to the voltage divider network made up of resistors 1977—1979. The output signal 1783 is the sine wave output from the output network 1772. Again, the voltage divider network made up of resistors 1977—1979, in cooperation with resistors 1967—1973, is provided as a means for attenuating the output signal 1783 if desired.

The sine wave output from the operational amplifier 1963 is also provided as inputs to switching means 1981—1983. Depending upon the position of switching means 1981—1983, either four different output signals can be provided from the output network 1772 or four sine waves can be provided from the output network 1772.

The triangular wave signal 1776 is provided through potentiometer 1984 and resistor 1985 to the inverting input of the operational amplifier 1986. The noninverting input of the operational amplifier 1986 is tied to ground. The output from the operational amplifier 1986 is fed back to the inverting input of the operational amplifier 1986 through resistor 1987 and capacitor 1988 which are in parallel. The output from the operational amplifier 1986 is also provided through switching means 1981 and the resistor network made up of resistors 1989—1995 to the switching means 1996. The resistor network 1989—1995 is utilized as the previously described resistor network 1967—1973.

Switching means 1996 is tied to switching means 1997. The switching means 1997 may be tied directly to the output signal line 1784 or may be tied to the voltage divider network made up of resistors 1998—2000. The triangular wave output from the output network 1772 is provided by means of signal line 1784. Again, the voltage divider network made up of resistors 1998—2000, in cooperation with resistors 1989—1995, is utilized to attenuate the output signal 1784 if desired.

The sawtooth waveform 1781 is provided through potentiometer 2001 and resistor 2002 to the inverting input of the operational amplifier 2003. The noninverting input of the operational amplifier 2003 is tied to ground. The output from the operational amplifier 2003 is fed back to the inverting input of the operational amplifier 2003 through resistor 2004 and capacitor 2005 which are in parallel. The output from the operational amplifier 2003 is also provided through switching means 1982 and

38

the resistor network made up of resistors 2007—2013 to the switching means 2014. Again, the resistor networks 2007—2013 is utilized in the same manner as the resistor network 1967—1973 which has been previously described.

Switching means 2014 is tied to switching means 2015. Switching means 2015 may be tied directly to the output signal line 1785 or may be tied to the voltage divider network made up of resistors 2017—2019. The voltage divider network made up of resistors 2017—2019 and resistors 2007—2013 is utilized to attenuate the output signal 1785 if desired. The sawtooth waveform is output by means of signal line 1785 from the output network 1772.

The square wave signal 1777 is provided through potentiometer 2021 and resistor 2022 to the inverting input of the operational amplifier 2023. The noninverting input of the operational amplifier 2023 is tied to ground. The output from the operational amplifier 2023 is fed back to the inverting input of the operational amplifier 2023 through resistor 2024 and capacitor 2025 which are in parallel. The output from the operational amplifier 2023 is also provided through switching means 1983 and the resistor network made up of resistors 2027—2033 to the switching means 2034. The resistor network made up of resistors 2027—2033 is utilized in the same manner as the resistor network 1967—1973 previously described.

Switching means 2034 is tied to switching means 2035. Switching means 2035 may be tied directly to the output signal line 1786 or may be tied to the voltage divider network made up of resistors 2037—2039. The voltage divider network made up of resistors 2037—2039 and resistors 2027—2033 is utilized to attenuate the output signal 1786 if desired. The square wave output from the output network 1772 is provided by means of signal line 1786.

Commercially available components, which can be utilized with the test system illustrated in Figure 23, which is more fully illustrated in Figures 24—29, are as follows. Capacitance and resistance values are also given. The components will be listed under the specific Figure number in the following list.

Figure 24

| | |
|---|---|
| Resistors 1792, 1807, 1809 and 1822 | 100 K ohms, 1%, 1/8W, TRW/IRC, Type CEA |
| Resistors 1792, 1823 and 1818 | 10 K ohms, 1%, 1/8W, TRW/IRC, Type CEA |
| Resistor 1816 | 47 K ohms, 1%, 1/8W, TRW/IRC, Type CEA |
| Resistor 1796 | 15 K ohms, 1%, 1/8W, TRW/IRC, Type CEA |
| Potentiometers 1808, 1811 and 1799 | 50 K ohms, CTS Series 362Y |
| Diodes 1802, 1803, 1815 and 1821 | IN 914, National Semiconductor |
| Capacitor 1813 | 10 Mf, 10%, 35 WVDC, Mallory, TIM Series |
| Operational amplifiers 1791, 1806 1817 and 1814 | 4741, Harris Semiconductor |
| Transistor 1797 | 2N3904 National Semiconductor |
| Resistor 1805 | 56 ohms, 1%, 1/8W, TRW/IRC, Type CEA |

Figure 25

| | |
|---|---|
| Resistors 1834 and 1848 | 100 K ohms, 1%, 1/8W, TRW/IRC, Type CEA |
| Resistor 1839 | 3.9 M ohms, 1%, 1/8W, TRW/IRC, Type CEA |
| Resistors 1845 and 1853 | 33 K ohms, 1%, 1/8W, TRW/IRC, Type CEA |
| Resistors 1846 and 1857 | 47 K ohms, 1%, 1/8W, TRW/IRC, Type CEA |
| Potentiometer 1835 | 1 K ohm, CTS, Series 362Y |
| Potentiometer 1844 | 50 K ohms, CTS, Series 362Y |
| Capacitor 1858 | .01 MF, S & EI, 25N series |
| Capacitors 1851 and 1855 | .1 Mf, Sprague, Type CKR05 |
| Capacitors 1852 and 1856 | 2.2 MF, 10%, 35WVDC Mallory, TIM Series |
| Transistor 1841 | 2N3906, National Semiconductor |
| Transistors 1833, 1838 and 1842 | 2N3904, National Semiconductor |
| Operational amplifiers 1837 and 1847 | LM324, National Semiconductor |

Figure 26

| | |
|---|---|
| Resistors 1864, 1865 and 1866 | 10 K ohms, 1%, 1/8, TRS/IRC, Type CEA |
| Resistor 1867 | 6 K ohms, 1%, 1/8W, TRW/IRC, Type CEA |
| Resistor 1868 | 4 K ohms, 1%, 1/8W, TRW/IRC, Type CEA |
| Resistors 1873 and 1875 | 47 K ohms, 1%, 1/8W, TRW/IRC, Type CEA |
| Resistor 1878 | 33 K ohms, 1%, 1/8W, TRW/IRC, Type CEA |
| Resistor 1881 | 22 K ohms, 1%, 1/8W, TRW/IRC, Type CEA |
| Resistor 1886 | 6.8 K ohms, 1%, 1/8W, TRW/IRC, Type CEA |
| Resistor 1894 | 15 K ohms, 1%, 1/8W, TRW/IRC, Type CEA |
| Resistor 1892 | 22 K ohms, 1%, 1/8W, TRW/IRC, Type CEA |
| Resistor 1891 | 10 K ohms, 1%, 1/8W, TRW/IRC, Type CEA |
| Potentiometers 1862 and 1887 | 50 K ohms, CTS, Series 362Y |
| Switching means 1861 | Toggle, SPDT, Alcoswitch, TT11DG-PC-1 |
| Switching means 1869 | Rotary, S.P., 6 Pos. RCL Electronics, Series V |
| Operational amplifiers 1863, 1871, 1874, 1882, 1884 and 1893 | 4741, Harris Semiconductor |
| Transistor 1872 | 2N3906 National Semiconductor |
| Transistor 1876 | 2N3904 National Semiconductor |
| Capacitor 1883 | .1 Mf, Sprague, Type CKR05 |
| Resistor 1879 | 33 K ohms, 1%, 1/8W, TRW/IRC, Type CEA |

Figure 27

| | |
|---|---|
| Resistors 1904 and 1906 | 10 K ohms, 1%, 1/8W, TRW/IRC, Type CEA |
| Resistors 1903 and 1905 | 33 K ohms, 1%, 1/8W, TRW/IRC, Type CEA |
| Resistor 1901 | 6.8 K ohms, 1%, 1/8W, TRW/IRC, Type CEA |
| Diodes 1912, 1913, 1914, 1919, 1918 and 1917 | IN914, National Semiconductor |
| Transistor 1907 | 2N3906, National Semiconductor |
| Transistor 1908 | 2N3904, National Semiconductor |
| Operational amplifier 1902 | 4741, Harris Semiconductor |
| Potentiometer 1921 | 10 K ohms, CTS, Series 362Y |
| Resistors 1911 and 1916 | 12 K ohms, 1%, 1/8W, TRW/IRC, Type CEA |

Figure 28

| | |
|---|---|
| Resistors 1937 and 1934 | 47 K ohms, 1%, 1/8W, TRW/IRC, Type CEA |
| Resistor 1938 | 15 K ohms, 1%, 1/8W, TRW/IRC, Type CEA |
| Resistors 1932, 1941 and 1949 | 22 K ohms, 1%, 1/8W, TRW/IRC, Type CEA |
| Resistors 1930, 1939, 1943 | 20 K ohms, 1%, 1/8W, TRW/IRC, Type CEA |
| Resistor 1944 | 10 K ohms, 1%, 1/8W, TRW/IRC, Type CEA |
| Operational amplifiers 1935, 1942 and 1933 | 4741, Harris Semiconductor |
| Potentiometer 1948 | 50 K ohms, CTS, Series 362Y |
| Potentiometer 1931 | 100 K ohms, CTS, Series 362Y |
| Diodes 1945 and 1946 | IN 914 National Semiconductor |

Figure 29

| | |
|---|---|
| Resistors 1962, 1964, 1987, 2004 and 2024 | 100 K ohms, 1%, 1/8W, TRW/IRC, Type CEA |
| Resistor 1985 | 330 K ohms, 1%, 1/8W, TRW/IRC, Type CEA |
| Resistor 2002 | 220 K ohms, 1%, 1/8W, TRW/IRC, Type CEA |
| Resistor 2022 | 470 K ohms, 1%, 1/8W, TRW/IRC, Type CEA |
| Resistors 1967, 1989, 2007 and 2027 | 1.5 K ohms, 1%, 1/8W, TRW/IRC, Type CEA |
| Resistors 1968, 1990, 2008 and 2028 | 470 ohms, 1%, 1/8W, TRW/IRC, Type CEA |
| Resistors 1969, 1991, 2009 and 2029 | 18 K ohms, 1%, 1/8W, TRW/IRC, Type CEA |
| Resistors 1970, 1992, 2010 and 2030 | 3.9 K ohms, 1%, 1/8W, TRW/IRC, Type CEA |
| Resistors 1971, 1993, 2011 and 2031 | 39 K ohms, 1%, 1/8W, TRW/IRC, Type CEA |
| Resistors 1972, 1994, 2012 and 2032 | 4.7 K ohms, 1%, 1/8W, TRW/IRC, Type CEA |
| Resistors 1973, 1995, 2013, 2033, 1978, 1999, 2018 and 2038 | 220 K ohms, 1%, 1/8W, TRW/IRC, Type CEA |
| Resistors 1977, 1979, 1998, 2000, 2017, 2019, 2037 and 2039 | 220 K ohms, 1%, 1/8W, TRW/IRC, Type CEA |
| Potentiometers 1961, 1984, 2001 and 2021 | 100 K ohms, CTS, Series 362Y |
| Capacitors 1965, 1988, 2005 and 2025 | 50 Pf, Sprague, Type CKR05 |
| Operational amplifiers 1963, 1986, 2003 and 2023 | 4741, Harris Semiconductor |
| Switching means 1974, 1996, 2014 and 2034 | Rotary, S.P. 6 Pos. RCL Electronics, Series V |
| Switching means 1976, 1997, 2015 and 2035 | Toggle, SPDT, Alcoswitch, TT11DG-PC-1 |

**0 010 660**

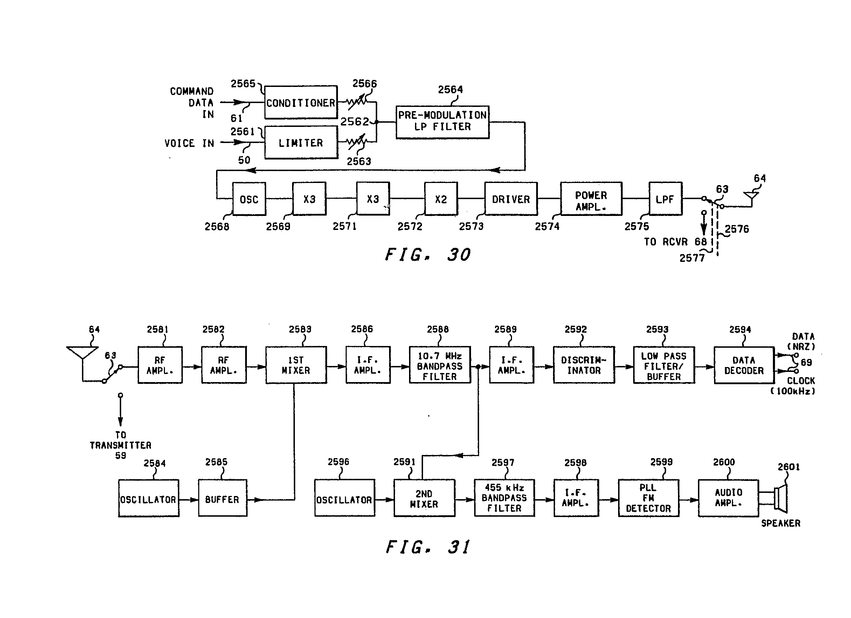

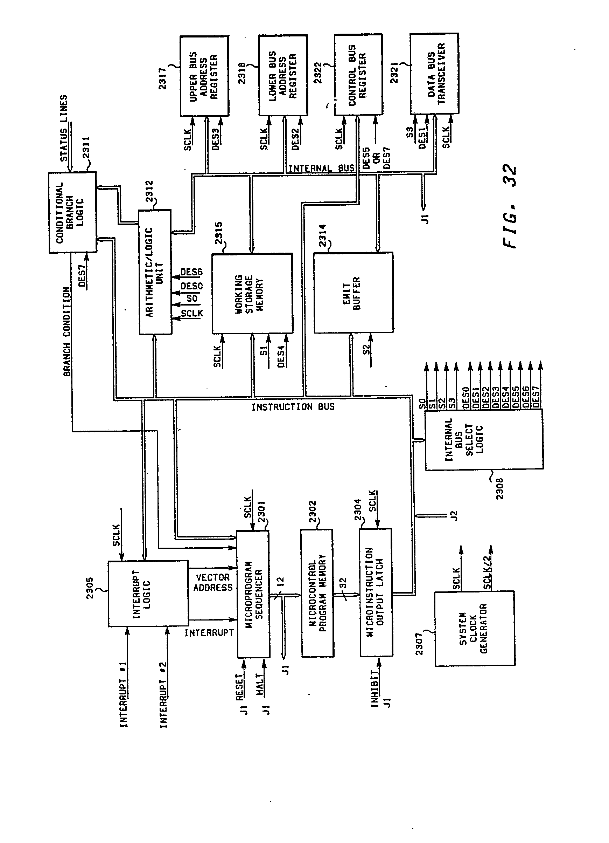

The RF transmitter 59, illustrated in Figure 2a, is more fully illustrated in Figure 30. The references applicable to the receiver 106 and the transmitter 127, illustrated in Figure 2b and previously described herein, are also applicable to the design of the well known elements of the transmitter 59 and receiver 68, illustrated in Figure 2a and more fully illustrated in Figures 30 and 31 respectively.

Referring now to Figure 30, the audio input from the operator control and display panel 41 is supplied through signal line 50 to the limiter circuit 2561. The limiter circuit 2561 provides clipping of the audio input signal. The audio input signal is provided from the limiter circuit 2561 to the summing junction 2562 through the potentiometer 2563. The potentiometer 2563 provides a means for adjusting the peak audio deviation. The summing junction 2562 is a summing amplifier. From the summing junction 2562, the audio signal is supplied to the premodulation low-pass filter 2564.

Data or commands from the 6800 microprocessor are supplied through signal line 61 in the form of a nonreturn to zero (NRZ) serial bit stream to the conditioning circuit 2565. The data or command signal is amplified and centered around ground potential in the conditioning circuit 2565. The ground centered signal is then provided through potentiometer 2566 to the summing junction 2562. The potentiometer 2566 provides deviation control for the data or command signal. From the summing junction 2562, the data or command signal is provided to the premodulation low-pass filter 2564.

The premodulation low-pass filter 2564 is a fifth order Gaussian low-pass filter. Because the data rate of the transmitter, illustrated in Figure 30, is 6.25 Kbits per second, the optimum $-3$ db bandwidth for the low-pass filter 2564 is set at 4 KHz which allows the amplitude of the narrowest pulses to closely equal the amplitude of the widest pulses. The filter also confines the higher order sidebands of the data and audio, restricting the RF spectrum to less than 30 KHz.

The output signal from the premodulation low-pass filter 2564 is provided as an input to the oscillator 2568. The oscillator 2568 is used to provide frequency modulation for the output signal provided from the premodulation low-pass filter 2564. The modulated output signal from the oscillator 2568 is provided through the frequency tripler 2569, the frequency tripler 2571 and the frequency doubler 2572 to the driver 2573. The driver stage 2573 amplifies the modulated signal from approximately 100 milliwatts to a level of 1 watt to drive the power amplifier 2574. The power amplifier 2574 brings the signal level from 1 watt to a nominal 10 watts output. The output from the power amplifier 2574 is provided to the low-pass filter 2575 to the transmit/receive switch 63 illustrated in Figure 2a. The output low-pass filter 2575 consists of a three-section pi arrangement to reduce all harmonics of the output signal to a level below the requirements of the FCC Rules and Regulations.

The transmit/receive switch 63 is normally in a receive mode. The transmit/receive switch 63 is switched to a transmit mode in response to signal 2576 which is representative of the actuation of the push-to-talk switch on the handset used for audio communication. The transmit/receive switch 63 may also be switched to the transmit mode by a transmit command signal 2577 which is provided from the 6800 microprocessor. From the transmit/receive switch, the output signal from the transmitter, illustrated in Figure 30, is provided to the antenna 64, which is illustrated in Figure 2a, and thus to the RTU illustrated in Figure 2b.

A specification for the transmitter 59, illustrated in Figure 2a and in Figure 30, is as follows:

CRS Transmitter
    a) Frequency 216 to 220 MHz, crystal controlled,
    b) Frequency stability$=\pm.0005\%$ from $-30°$ to $+70°$C,
    c) Power Output$=8$ to 10 watts nominal,
    d) Spurious emission suppression$=60$ db or greater;
    e) Audio Modulation:
        A) carbon/button handset, carbon mike or Hi-Z dynamic or ceramic mike,
        B) Adjustable clipping level (deviation control),
        C) Adjustable peak modulation control,
        D) Bias current (5 mA) for carbon mikes,
        E) Hi-Z mike preamplifier (gain adjustable from 2 to 100),
        F) Direct FM of master oscillator,
        G) Deviation$=5$ KHz peak,

    f) Data Modulation:

        A) Input$=T^2L$,
        B) Coding$=$NRZ,
        C) Data rate$=6.25$ kB/S,
        D) Varicap bias circuit (adjustable),
        E) Adjustable data deviation control (4 to 9 KHz peak range),
        F) 5-pole, Bessel function, premodulation filter,
        G) Data mutes audio modulation circuitry.

The RF receiver 68, illustrated in Figure 2a, is more fully illustrated in Figure 31. Referring to

41

Figure 31, received signals from the RTU are provided from the antenna 64 through the transmit/receive switch 63 to the RF amplifier 2581. The RF amplifier 2581 and the RF amplifier 2582 provide two stages of RF amplification prior to introduction of the received signal into the first mixer 2583. The first mixer 2583 is also provided with an input signal, having a frequency which is 10.7 MHz above the frequency of the received signal from the oscillator 2584 and the buffer 2585. The first mixer 2583 thus provides an intermediate frequency (IF) signal one component of which has a frequency of 10.7 MHz. The output signal from the first mixer 2583 is amplified in the IF amplifier 2586 and is provided to the 10.7 MHz bandpass filter 2588. The bandpass filter 2588 has a 240 KHz bandwidth centered at 10.7 MHz. The output signal from the 10.7 MHz bandpass filter 2588 is provided to the IF amplifier 2589, which forms the first stage of the data detection portion of the receiver, and is also provided to the second mixer 2591, which forms the first stage of the audio detection circuitry of the RF receiver.

The signal going to the data detection circuitry is amplified in the IF amplifier 2589 and is provided to the discriminator 2592. The discriminator 2592 is a standard discriminator transformer circuit. The output signal from the discriminator 2592 is provided through the low-pass filter and buffer circuit 2593 to the data decoder 2594. The low-pass filter and buffer circuit 2593 provides filtering of the higher order components and also provides buffering of the signal provided from the discriminator 2592 to the data decoder 2594. The data decoder 2594 generates a local data clock having a frequency of 100 KHz and also provides a nonreturn to zero (NFZ) serial data stream as an output. Both the NRZ data and the clock signal are provided by means of signal line 69 to the data formatter 71, illustrated in Figure 2a.

The output signal from the 10.7 MHz bandpass filter 2588, which is provided to the second mixer 2591, is combined with a signal having a frequency of 10.245 MHz in the second mixer 2591. The 10.245 MHz signal is provided from the oscillator 2596. The mixing of the 10.7 MHz signal from the 10.7 MHz bandpass filter 2588 and the 10.245 MHz signal from the oscillator 2596 provides an IF signal at 455 KHz. The 455 KHz signal from a second mixer 2591 is provided through the 455 KHz bandpass filter 2597 to the IF amplifier 2598. The amplified signal provided from the IF amplifier 2598 is provided to the FM detector 2599 which is preferably a phase-locked loop detector. The audio signal from the FM detector 2599 is then amplified by the audio amplifier 2600 and is provided to the speaker 2601 which may also be a handset. The speaker 2601 or the handset is located at the operator control and display panel 41 illustrated in Figure 2a. The signal from the audio amplifier 2600 is provided to the operator control and display panel 41 by means of signal line 60 as illustrated in Figure 2a.

A specification for the RF receiver 68 illustrated in both Figure 2a and in Figure 31 is as follows:

CRS Receiver
    a) Frequency=216 to 220 MHz, crystal controlled,
    b) Center frequency stability=$\pm$.001% (−30 to +70°C),
    c) Sensitivity (DATA)=−102 dbm for $10^{-6}$ BER (Bit Error Rate),
    d) Sensitivity (Audio)=−115 dbm (10 db or greater $\dfrac{S+N}{N}$ ratio, 8 KHz deviation,
           1 KHz modulation),
    e) Modulation Acceptance
           Audio:   0.2 to 4 KHz (−3 db)
                     Deviation of 15 KHz peak
                     (nominal=5 KHz peak).
           Data:    100 kB/s$\pm$5%
                    (Bi-Phase encoded)
                    PCM/FM.
    f) Audio Power Output=5 watts (4 ohm load),
    g) Audio output to handset earpiece=400 mV RMS (adjustable),
    h) Data decoding:
           A) Matched Filter, maximum likelihood detection scheme (Sample and hold, compare and dump circuits),
           B) Data clock regeneration circuitry,
           C) Data ambiguity decision circuit (50 mS decision time),
           D) $T^2L$ data output (100 kB/S, NRZ),
           E) $T^2L$ clock output (100 KHz, 0° phase).

Computer means 51 and computer means 74, which are illustrated in Figure 2a, form the heart of the CRS illustrated in Figure 2a. Computer means 51 is interfaced to the computer means 74 by the computer-to-computer interface 58 as has been previously stated.

Computer means 51 is preferably a 6800 microprocessor system manufactured by Motorola Semiconductor. Computer means 74 is a 2900 microprocessor system manufactured by Advanced Micro Devices. The 2900 microprocessor system features a very fast cycle time of 225 nanoseconds.

The 2900 microprocessor system is utilized to reduce the load on the 6800 microprocessor system which is the master microprocessor. The 2900 microprocessor system is also utilized because of its fast cycle time which allows handling of the data rates which must be utilized in a commercially feasible seismic exploration system. The 6800 microprocessor system will not handle the data rates which must be used in modern seismic exploration.

As has been previously stated, the 6800 microprocessor system is a well documented system. The 2900 microprocessor system, which is represented by computer means 74, illustrated in Figure 2a, is more fully illustrated in Figure 32. Referring to Figure 32, the microprogram sequencer 2301 supplies the address of the next instruction to be executed to the microcontrol program memory 2302. The address of the next instruction to be executed is selected from one of four sources which are as follows:

a) the microprogram sequencer internal program counter for sequential addressing;
b) an internal push-pop stack for subroutine and interrupt address handling;
c) an internal address register loaded directly from the interrupt logic; and
d) directly from the microinstruction output latch 2304.

The microprogram sequencer 2301 is the 2909 microprogram sequencer manufactured by Advanced Micro Devices. The microprogram sequencer 2301 is a 4-bit-wide "next address" controller. The 2900 data processor uses the 2909 microprogram sequencer 2301 to generate a 12-bit microprogram memory address which is supplied to the microcontrol program memory. The 12-bit address from the microprogram sequencer is representative of the next instruction which is to be executed by the 2900 microprocessor system.

The interrupt logic 2305 is utilized to halt the microprogram sequencer 2301 upon receiving an external interrupt condition signal. The interrupt logic 2305 disables the microprogram sequencer 2301 output drivers and provides for retention of the current address information contained in the microprogram sequencer just prior to the interrupt. When the external interrupt has been cleared, the interrupt line, which is provided from the interrupt logic 2305 to the microprogram sequencer 2301, will be cleared, allowing the main program then to continue. The processor bus interrupt No. 1 and the processor bus interrupt No. 2 provide a means by which an external interrupt, such as an equipment data ready signal, may be supplied to the interrupt logic 2305. The vector address provided from the interrupt logic 2305 to the microprogram sequencer 2301 provides for interrupt handling by the microprogram sequencer 2301.

The microcontrol program memory 2302 is a 4K by 32 programmable read-only memory (PROM). The microcontrol program memory 2302 is the heart of the 2900 microprocessor system. The microcontrol program memory 2302 contains the object code which controls all of the 2900 microprocessor functions. At the start of each microprocessor cycle, a new address is presented to the microcontrol program memory from the microprogram sequencer 2301. This address from the microprogram sequencer provides access to a specific location within the microcontrol program memory 2302 which outputs a particular microinstruction word to the microinstruction output latch 2304 for execution on the next instruction cycle. The microinstruction word provided from the microcontrol program memory 2302 to the microinstruction output latch 2304 is a 32-bit data word.

The microinstruction output latch 2304 is a 32-bit-wide data latch which is loaded on the rising edge of the system clock (SCLK). The rising edge of the system clock indicates the start of each microprocessor cycle. The microinstruction output latch 2304 is loaded with the object code to be executed during the particular microprocessor cycle in which the microinstruction output latch 2304 is loaded. All microprocessor operations are specified by the object code which is loaded into the microinstruction output latch 2304 at the beginning of a microprocessor cycle.

The system clock generator 2307 provides a 4.45 MHz clock signal to the 2900 microprocessor system illustrated in Figure 32. The system clock generator 2307 may also supply a 2.22 MHz clock signal if a slower clock rate is needed to allow the use of slower memory elements. The 4.45 MHz system clock signal provides basic timing for the 2900 microprocessor system illustrated in Figure 32.

The 32-bit instruction from the microinstruction output latch 2304 can be provided to a plurality of data sources and destinations. The internal bus select logic 2308 is utilized to decode destination or source information from the 32-bit instruction which is provided from the microinstruction output latch 2304. After decoding the source and destination information, the internal bus select logic 2308 provides an enabling signal to the various sources and destinations for the instruction which is to be executed. Four source enabling signals S0—S3 are provided and eight destination enabling signals DES0—DES7 are provided from the internal bus select logic 2308 as is illustrated in Figure 32.

The conditional branch logic 2311 is provided to sense the status of selected input/output devices or the result of an arithmetic/logic unit 2312 operation and alter the next address selection of the microprogram sequencer 2301 as required. The conditional branch logic 2311 selects one of sixteen possible branch conditions for input to the microprogram sequencer 2301 as the branch condition signal.

The emit buffer 2314 is utilized to place any desired data pattern on the 2900 microprocessor's internal data bus. The 32-bit instruction from the microinstruction output latch 2304 can be programmed so as to place any desired data pattern on the 2900 microprocessor's internal data bus by enabling the output drivers of the emit buffer 2314. This allows direct access to the internal data bus for the object code from the microinstruction output latch 2304.

This means that any data word, constant, or mask bit pattern can be provided directly from a program statement.

The working storage memory 2315 is a 64-word by 8-bit random access memory (RAM) that serves as an extension of the register storage capabilities of the arithmetic/logic unit 2312. The working storage memory 2315 serves as a scratch pad storage area for arithmetic/logic unit 2312 data operations. The arithmetic/logic unit 2312 is composed of two 2901 4-bit bipolar microprocessor slices to form an 8-bit arithmetic/logic unit. The 2901 4-bit bipolar microprocessor slices are manufactured by Advanced Micro Devices. The primary function of the arithmetic/logic unit 2312 is to provide manipulation and arithmetic processing of data, input/output address information, and memory address information. The arithmetic/logic unit 2312 can supply data to the upper bus address register 2317, the lower bus address register 2318, the working storage memory 2315, and the data bus transceiver 2321. The arithmetic/logic unit utilizes internal registers for temporary storage.

The upper bus address register 2317 and the lower bus address register 2318 provide latching and buffering for all devices connected to the 2900 data processor bus. The upper bus address register 2317 and the lower bus address register 2318 are both loaded from the 2900 microprocessor internal bus from the arithmetic/logic unit 2312.

The control bus register 2322 is loaded directly from the 32-bit instruction provided from the microinstruction output latch 2304. The control bus register 2322 provides a source for synchronized external control bus signals. Control signals utilized are as follows:

VMA—valid memory address for 2900 external bus;
STROBE—provides synchronization for the 2900 external bus read and write operations;
R/W—defines a read or write operation on the 2900 microprocessor bus; and
DM—indicates an input/output operation to Data Memory (which requires a 20 bit address) when active. When DM is inactive only the lower 8 bits of address (on the external bus) are valid. This allows peripheral units to decode only these lower 8 bits for addressing purposes.

The data bus transceiver 2321 consists of two 4-bit 2904 transceiver chips manufactured by Advanced Micro Devices. The 2904 transceiver chips are connected in parallel to form an 8-bit data bus transceiver. Data is written into the data bus transceiver 2321 from the 2900 microprocessor internal data bus on the rising edge of the system clock. This data is enabled onto the 2900 microprocessor external bus by the Write signal going low. Data is written from the external 2900 microprocessor bus into the data bus transceiver 2321 during Read and Strobe coincidence on the external bus.

Commercially available components which can be utilized in the circuit illustrated in Figure 32, which have not been previously specified, are as follows:

| | |
|---|---|
| Microcontrol program memory 2302 | 82S185, Signetics |
| Microinstruction output latch | 74LS374, National Semiconductor |
| Internal bus select logic | 74LS138, National Semiconductor |
| Emit buffer 2314 | DM81LS97, National Semiconductor |
| Working storage memory 2315 | 82S09, Signetics |
| Upper bus address register 2317, lower bus address register 2318 and control bus register 2322 | 25LS07, Advanced Micro Devices |
| System clock generator | Motorola Oscillator, Motorola Semiconductor |

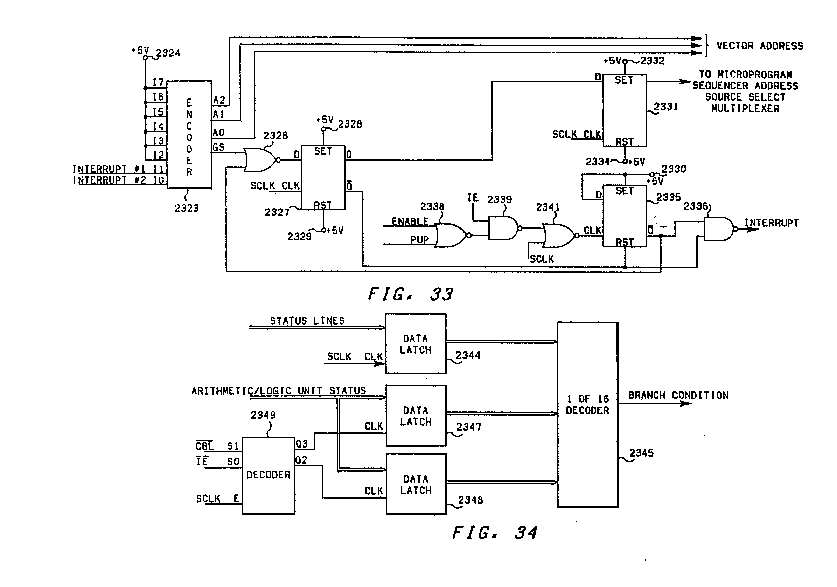

The interrupt logic 2305 illustrated in Figure 32 is more fully illustrated in Figure 33. The first 2900 microprocessor bus interrupt is tied to the I1 input of the encoder 2323. The second 2900 microprocessor bus interrupt is tied to the I0 input of the encoder 2323. The I2—I7 inputs of the encoder 2323 are tied high to the +5 volt power supply 2324. The A0—A2 address outputs from the encoder 2323 are supplied as the vector address which is illustrated in Figure 32. The group select output from the encoder 2323 is supplied as one input to the NOR gate 2326. The output of the NOR gate 2326 is tied to the D input of the flip-flop 2327. The system clock signal, which is supplied from the system clock generator 2307 illustrated in Figure 32, is supplied to the clock input of the flip-flop 2327. The set input of the flip-flop 2327 is tied high to the +5 volt power supply 2328. The reset input of the flip-flop 2327 is also tied high to a +5 volt power supply 2329. The Q input from the flip-flop 2327 is tied to the D input of the flip-flop 2331. The system clock signal is supplied to the clock input of the flip-flop 2331. The set input of the flip-flop 2331 is tied high to the +5 volt power supply 2332. The reset input of the flip-flop 2331 is tied high to the +5 volt power supply 2334. The Q output from the flip-flop 2331 is supplied to the microprogram sequencer address source select multiplexer 2301, Figure 32. The Q output from the flip-flop 2331 is illustrated as part of the vector address in Figure 32.

The $\overline{Q}$ output from the flip-flop 2327 is tied to the reset input of flip-flop 2335 and is also supplied as a first input to the AND gate 2336. The set and D inputs of the flip-flop 2335 are tied high to the +5 volt power supply 2330. An enabling signal and a pullup signal are supplied as inputs to the NOR gate 2338. The output of the NOR gate 2338 is supplied as a first input to the NAND gate 2339. An interrupt enabling signal is supplied as a second input to the NAND gate 2339. The output of the NAND gate 2339 is supplied as a first input to the NOR gate 2341. The system clock signal is supplied as a second input to the NOR gate 2341. The output of the NOR gate 2341 is tied to the clock input of the flip-flop 2335.

The $\overline{Q}$ output from the flip-flop 2335 is tied as a second input to the NOR gate 2326 and is also supplied as a second input to the AND gate 2336. The output of the AND gate 2336 is the interrupt signal illustrated in Figure 32.

Commercially available components which can be utilized in the circuit illustrated in Figure 33 are as follows:

| | |
|---|---|
| Encoder 2323 | 93L18, Fairchild Semiconductor |
| Flip-flops 2327, 2331 and 2335 | 74LS74, National Semiconductor |
| NOR gates 2326, 2338 and 2341 | 74LS02, National Semiconductor |
| NAND gate 2339 | 74LS00, National Semiconductor |
| AND gate 2336 | 74LS08, National Semiconductor |

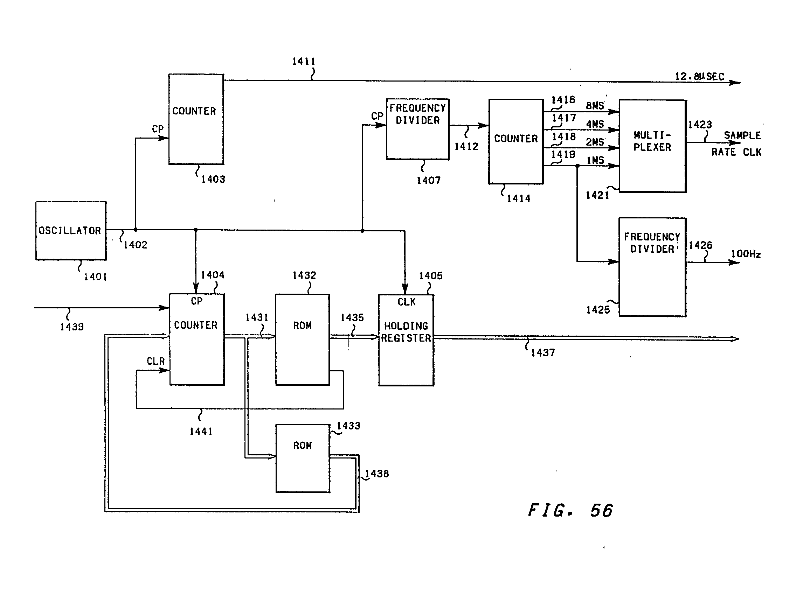

The conditional branch logic 2311 illustrated in Figure 32 is more fully illustrated in Figure 34. The status lines are supplied to the data inputs of the data latch 2344. The system clock signal, which is generated by the system clock generator 2307, illustrated in Figure 55, is provided to the clock input of the data latch 2344. The data outputs from the data latch 2344 are tied to the one-of-sixteen decoder 2345. The arithmetic/logic unit 2312 status output is tied to the data inputs of the data latches 2347 and 2348. The control bus logic signal is supplied to the S1 select input of the decoder 2349. The interrupt enable signal is supplied to the S0 select input of the decoder 2349. The system clock is supplied to the enabling input of the decoder 2349. The $Q_3$ output of the decoder 2349 is tied to the clock input of the data latch 2347. The $Q_2$ output of the decoder 2349 is tied to the clock input of the data latch 2348. The data outputs of the data latch 2347 are tied as inputs to the one-of-sixteen decoder 2345. The data outputs of the data latch 2348 are also tied to the data inputs of the one-of-sixteen decoder 2345. The one-of-sixteen decoder 2345 selects one of the data inputs to be supplied as the branch condition signal which is illustrated in Figure 32. The control bus logic signal and the interrupt enable signal, which form part of the instruction word from the microinstruction output latch 2304 illustrated in Figure 32, are utilized to clock the data latch 2347 and the data latch 2348. When the interrupt enable signal is low and the control bus logic signal is high, data latch 2348 is clocked. When the control bus logic signal is high and the interrupt enable is high, the data latch 2347 is clocked. When the control bus logic is low, which is the case during all conditional branch statements, neither data latch 2347 nor data latch 2348 is changed. This allows sequences of conditional branch statements to be executed on the same set of arithmetic/logic unit status outputs.

Provision is made in the present system to avoid the problem of changing a program in a programmable read-only memory. This method also allows the well-documented 6800 microprocessor system to be utilized to develop programs to be utilized by the 2900 microprocessor.

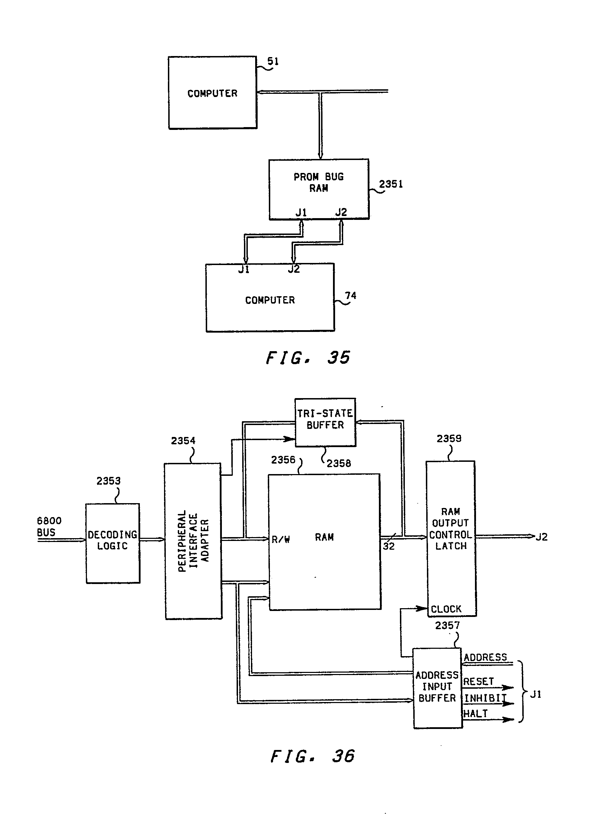

A random access memory is utilized to develop and test programs which are to be utilized by the 2900 microprocessor. The random access memory and its associated circuitry is referred to as the programmable read-only memory (PROM) bug random access memory (RAM). The PROM bug RAM is not a permanent part of the central recording station, illustrated in Fig. 2a, but rather provides diagnostic and trouble shooting capability for the 2900 microprocessor. The location of the PROM bug RAM when it is being utilized in the central recording station is illustrated in Figure 35. The PROM bug RAM 2351 is connected to the 6800 microprocessor bus and is also connected to the J1 and J2 inputs of the 2900 microprocessor 74. The J1 and J2 inputs to the 2900 microprocessor are fully illustrated in Figure 32. As is illustrated in Figure 32, the PROM bug RAM can apply a reset signal to the microprogram sequencer 2301. The reset signal is utilized to initialize the 2900 microprocessor program execution and the microprogram sequencer. The PROM bug RAM 2351 can also apply a halt signal to the microprogram sequencer through the J1 input. The halt signal forces the microprogram sequencer 2301 to enter a high-impedance (tristate) mode. An inhibit signal is applied via the J1 input to the microinstruction output latch 2304. The inhibit signal forces the microinstruction output latch 2304 into its high-impedance (tristate) mode. The PROM bug RAM 2351 has a direct connection to the 12-bit address from the microprogram sequencer 2301 to the microcontrol program memory 2302 by means of the J1 input. The PROM bug RAM 2351 is also connected to the internal bus of the 2900 microprocessor by means of the J1 input. Finally, the PROM bug RAM 2351 is tied to the 32-bit output from the microinstruction output latch 2304 by means of the J2 connector.

The PROM bug RAM 2351, illustrated in Figure 35, is more fully illustrated in Figure 36. The decoding logic 2353 decodes the address from the 6800 microprocessor and provides the decoded address information to the peripheral interface adapter 2354. The peripheral interface adapter 2354 is preferably a 6820 peripheral interface adapter manufactured by Motorola Semiconductor. The peripheral interface adapter 2354 controls the address to the random access memory 2356. The peripheral interface adapter 2354 also provides control signals to the random access memory 2356 and to the address input buffer 2357. The peripheral interface adapter 2354 also supplies an enabling signal to the tristate buffer 2358.

The random access memory 2356 is preferably a 1K by 32-bit MOS memory composed of 32 1K by 1-bit memory devices which are preferably Type 3542 manufactured by Fairchild Semiconductor. When the random access memory 2356 is being utilized, the system clock generator 2307, illustrated in Figure 32, is automatically switched to run at the system clock/2 speed. The random access memory 2356 is utilized to store the program which is to be tested.

A 32-bit data output is supplied from the random access memory 2356 to the random access memory output control latch 2359 and to the tristate buffer 2358. The tristate buffer 2358 provides isolation between the random access memory 2356 output and the peripheral interface adapter 2354. The tristate buffer 2358 is placed in the disabled mode when an address is being supplied from the peripheral interface adapter 2354 to the random access memory 2356 to prevent the random access memory output data lines from competing for control of the input data lines to the random access memory 2356. Conversely, when the peripheral interface adapter 2354 is programmed so as to allow data to be read from the random access memory 2356, the tristate buffer 2358 is enabled to allow the random access memory 2356 output data to be gated through the peripheral interface adapter 2354 to be read by the 6800 microprocessor.

The random access memory output control latch 2359 accepts the data from the random access memory 2356 and supplies the data to the 2900 microprocessor instruction bus by means of connector J2. An instruction can thus be provided from the random access memory 2356 to the 2900 microprocessor by means of the 2900 microprocessor instruction bus. The microcontrol program memory 2302, illustrated in Figure 32, is thus bypassed, allowing the random access memory 2356 to replace the microcontrol program memory 2302.

The address input buffer 2357 is a simple buffer which allows tristating of the address inputs from the microprograms sequencer 2301 during programming by the 6800 microprocessor, illustrated in Figure 32. Enabling the buffer 2357 allows the 2900 microprocessor to assume control of the random access memory 2356 when it is desired to test the program in the random access memory 2356 for the 2900 microprocessor.

Commercially available components which can be utilized in the circuit illustrated in Figure 36 and which have not been previously specified are as follows:

| | |
|---|---|
| Tristate buffer 2358 and address input buffer 2357 | 74LS367, National Semiconductor |
| Random access memory output control latch 2359 | 74LS174, National Semiconductor |

The decoding logic 2353, illustrated in Figure 36, is more fully illustrated in Figure 37. Three 6820 peripheral interface adapters are utilized to form the peripheral interface adapter 2354 illustrated in Figure 36. Referring now to Figure 37, the D0—D7 data lines from the 6800 microprocessor are supplied to the D0—D7 data lines of the peripheral interface adapters 2361—2363. The A15 address line from the 6800 microprocessor is supplied through inverter 2364 to the buffer 2366. The A14—A8 address lines from the 6800 microprocessor are supplied directly as inputs to the buffer 2366. The output lines from the open collector buffer 2366 are all tied high to the +5 volt power supply 2367 through pullup resistor 2368. The output lines from the buffer 2366 are also all tied to the chip select zero input (CS0) of the peripheral interface adapters 2361—2363.

The A4—A7 address lines from the 6800 microprocessor are supplied as inputs to the NAND gate 2369. The output from the NAND gate 2369 is tied to the chip select one input (CS1) of the peripheral interface adapters 2361—2363.

The A3 address line from the 6800 microprocessor is supplied directly as a first input to AND gate 2371. The A3 address line is also supplied through the inverter 2372 as a first input to AND gate 2373 and AND gate 2374. The A2 address line from the 6800 microprocessor is supplied directly as a second input to AND gate 2374. The A2 address line from the 6800 microprocessor is also supplied through the inverter 2375 as a second input to AND gate 2373 and as a second input to AND gate 2371. The valid memory address (VMA) from the 6800 microprocessor is supplied directly as a third input to AND gates 2371, 2373 and 2374. The output from AND gate 2373 is tied to the chip select two input (CS2) of the peripheral interface adapter 2361. The output from AND gate 2374 is tied to the chip select two input (CS2) of the peripheral interface adapter 2362. The output from AND gate 2371 is tied to the chip select two input (CS2) of the peripheral interface adapter 2363.

The A1 address line from the 6800 microprocessor is tied to the register select one input (RS1) of the peripheral interface adapters 2361—2363. The A0 address line from the 6800 microprocessor is tied to the register select one input (RSO) of the peripheral interface adapters 2361—2363. The read/write (R/W̄) signal from the 6800 microprocessor is supplied to the read/write input of the peripheral interface adapters 2361—2363. The Ø2 clock from the 6800 microprocessor is supplied to the enable inputs of the peripheral interface adapters 2361—2363. The reset input from the 6800 microprocessor is tied to the reset inputs of the peripheral interface adapters 2361—2363.

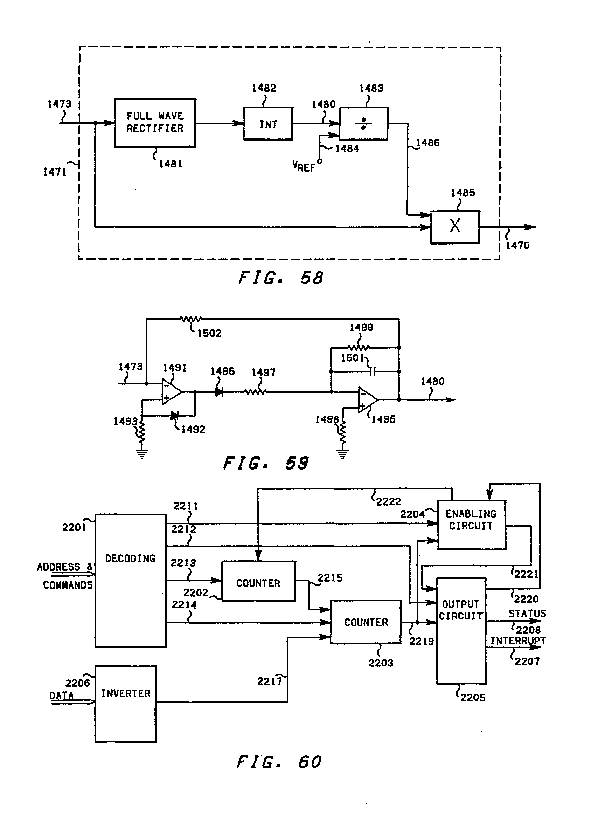

Commercially available components which can be utilized in the circuit illustrated in Figure 60 are as follows:

| | |
|---|---|
| Inverters 2364, 2372 and 2375 | 74LS04, National Semiconductor |
| Buffer 2366 | 74LS05, National Semiconductor |
| NAND gate 2369 | 74LS30, National Semiconductor |
| AND gates 2373, 2374 and 2371 | 74LS11, National Semiconductor |
| Resistor 2368 | 8.2 K ohms, RN60D, Dale |

Figures 32 and 36 should be referred to for the following discussion of the operational sequences which are employed in utilizing the random access memory 2356 to replace the programmable read-only memory which is illustrated as the microcontrol program memory 2302. While the random access memory is being programmed, the 2900 microprocessor is disabled. Once programming has been completed, the 6800 interface to the random access memory is disabled and the 2900 microprocessor is enabled to control the random access memory as if it were the microcontrol program memory 2302. This allows all of the 2900 microprocessor programs to be written and worked within a well-documented and supported software/hardware area (6800 microprocessor system) before any programmable read-only memory is programmed. Using the random access memory 2356, it is possible to load and run one diagnostic or program after another. In fact, the entire instruction set and/or program can be changed in a few seconds. This greatly reduces the expense involved in changing programs which have been programmed into a programmable read-only memory. It also greatly simplifies the task of developing programs for the 2900 microprocessor system.

To utilize the random access memory 2356, the reset, inhibit and halt signals are first set so as to disable the 2900 microprocessor. Specifically, the microcontrol program memory 2302 and the microinstruction output latch 2304 are disabled by setting both to their high-impedance state. The address input buffer 2357 is also set to a high-impedance state which enables the address of the random access memory 2356 to be controlled by the peripheral interface adapter 2354. The random access memory 2356 is thus completely controlled by the 6800 microprocessor system.

The random access memory 2356 is programmed by supplying addresses and writing data from the 6800 microprocessor system into the random access memory 2356. The output disable signal, which is supplied from the peripheral interface adapter 2354 to the tristate buffer 2358, is first set so as to disable the tristate buffer 2358 so that return data from the random access memory 2356 will be inhibited. An address and data are then provided from the 6800 microprocessor system to the random access memory 2356. The address and data are strobed into the random access memory by means of the read/write input to the random access memory 2356. The entire random access memory is programmed in this manner.

When it is desired to read data from the random access memory 2356 with the 6800 microprocessor, the output disable, supplied from the peripheral interface adapter 2354 to the tristate buffer 2358, is reset to allow the 32-bit output from the random access memory 2356 to be supplied back through the tristate buffer 2358 to the peripheral interface adapter 2354. Data is read from the random access memory 2356 through the peripheral interface adapter 2354 by the 6800 microprocessor.

After a program has been set up in the random access memory 2356 and the program has been tested by using the 6800 microprocessor, control is transferred to the 2900 microprocessor to test the program. The 2900 microprocessor utilizes the random access memory 2356 in the same manner as the microcontrol program memory 2302 which is disabled when the random access memory 2356 is connected. When it is desired to transfer control to the 2900 microprocessor, the tristate buffer 2358 is disabled to inhibit the transfer of data from the random access memory 2356 to the peripheral interface adapter 2354. The peripheral interface adapter 2354 is programmed to designate address and data lines as inputs. This is equivalent to tristating the peripheral interface adapter and thus disabling the peripheral interface adapter 2354. The halt signal to the 2900 microprocessor is reset, which removes the tristate condition at the microprogram sequencer 2301. This also enables the address input buffer 2357. Control has now been transferred to the 2900 microprocessor, which means that the microinstruction word is now being sourced from the random access memory 2356 under control of the 2900 microprogram sequencer 2301. By releasing the reset, program execution is then allowed to proceed.

At any time desired, by applying the halt and reset, program alteration or examination by the 6800 microprocessor system can be accomplished. The 6800 microprocessor system provides highspeed tape reader inputs and CRT outputs for ease of checkout and programming of the random access memory 2356. Therefore, the random access memory 2356 allows an easy method for checkout of programs for the 2900 microprocessor prior to burning the program into the microcontrol program memory 2302. This greatly facilitates programming of the 2900 microprocessor and alleviates the cost of having to reburn the program in the microcontrol program memory 2302 to change the program.

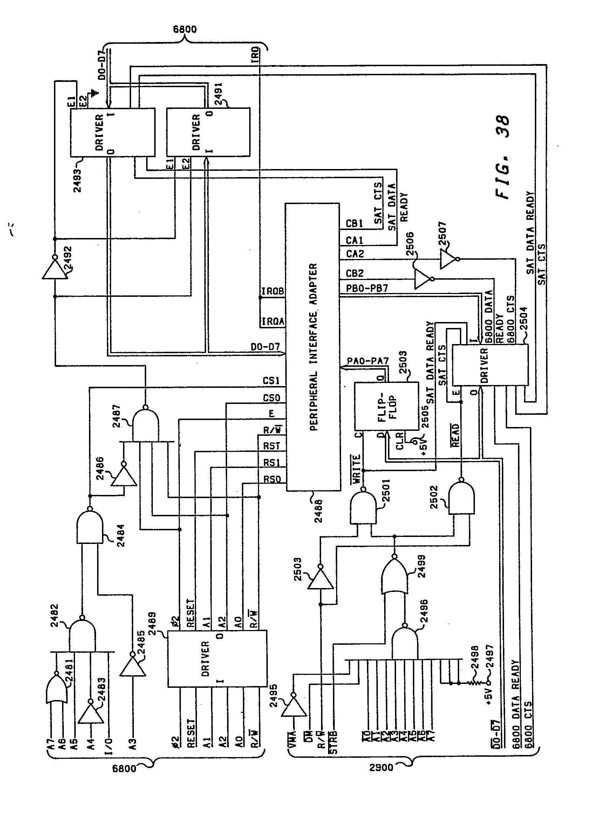

The computer-to-computer interface 58, illustrated in Figure 2a, is more fully illustrated in Figure 38. As has been previously stated, the computer-to-computer interface 58, illustrated in Figure 2a, is a circuit which allows communication between the 6800 microprocessor and the 2900 microprocessor. The computer-to-computer interface 58 supplies the required interrupts which inform the 6800 microprocessor and the 2900 microprocessor when either computer is ready to send data to the other computer. Essentially the address and command lines from the 6800 microprocessor and the 2900 microprocessor are utilized to control the operation of the computer-to-computer interface 58. The data lines from the 6800 microprocessor and the 2900 microprocessor are utilized to transfer data between the 6800 microprocessor and the 2900 microprocessor. The address and command lines from the 6800 microprocessor and the 2900 microprocessor are also utilized to generate signals which indicate when data is available to be written from either computer to the other computer and also when each computer is ready to receive data.

Referring now to Figure 38, the A7 address line from the 6800 microprocessor is supplied as the first input to the NOR gate 2481. The A6 address line from the 6800 microprocessor is supplied as the second input to the NOR gate 2481. The output from the NOR gate 2481 is supplied as the first input to the NAND gate 2482. The A5 address line from the 6800 microprocessor is supplied as the second input to the NAND gate 2482. The A4 address line from the 6800 microprocessor is supplied through inverter 2483 as a third input to the NAND gate 2482. The input/output (I/O) line from the 6800 microprocessor is tied as a fourth input to the NAND gate 2482.

The output from the NAND gate 2482 is supplied as a first input to the NAND gate 2484. The A3 address line from the 6800 microprocessor is supplied as a second input to the NAND gate 2484 through the inverter 2485. The output from the NAND gate 2484 is supplied through inverter 2486 as a first input to the NAND gate 2487 and is also supplied to the chip select 1 (CS1) input of the peripheral interface adapter 2488.

The $\emptyset 2$ clock from the 6800 microprocessor is supplied through the driver 2489 as a second input to the NAND gate 2487 and is also supplied to the enabling input of the peripheral interface adapter 2488. The reset line from the 6800 microprocessor is supplied through the driver 2489 to the reset input of peripheral interface adapter 2488. The A1 address line from the 6800 microprocessor is supplied through the driver 2489 to the register select 1 (RS1) input of the peripheral interface adapter 2488. The A2 address line from the 6800 microprocessor is supplied through the driver 2489 to the chip select 0 (CS0) input of the peripheral interface adapter 2488 and is also supplied as the third input to the NAND gate 2487. The A0 address line from the 6800 microprocessor is supplied through the driver 2489 to the register select 0 (RS0) input of the peripheral interface adapter 2488. The read/write (R/W) line from the 6800 microprocessor is supplied through the driver 2489 to the read/write input of the peripheral interface adapter 2488 and is also supplied as a fourth input to the NAND gate 2487.

The output from the NAND gate 2487 is supplied as an enabling signal to the E2 enabling input of the driver 2491. The output from the NAND gate 2487 is also supplied through the inverter 2492 as an enabling input to the E1 input of the driver 2491 and to the E1 enabling input of the driver 2493. The E2 enabling input of the driver 2493 is tied to ground.

The D0—D7 data lines from the 6800 microprocessor are tied to the input side of the driver 2493 and are also tied to the output side of the driver 2491. The output side of the driver 2493, which corresponds to the inputs to which the D0—D7 data lines from the 6800 microprocessor are tied, are tied to the D0—D7 data terminals of the peripheral interface adapter 2488. The D0—D7 data inputs of the peripheral interface adapter 2488 are also supplied to the input side of the driver 2491. The interrupt line from the 6800 microprocessor is supplied to the interrupt request A (IRQA) and interrupt request B (IRQB) inputs of the peripheral interface adapter 2488.

The valid memory address (VMA) line from the 2900 microprocessor is tied through inverter 2495 as a first input to the NAND gate 2496. The DM line from the 2900 microprocessor is tied as a second input to the NAND gate 2496. The A0—A7 address lines from the 2900 microprocessor are supplied as third through tenth input to the NAND gate 2496. The eleventh, twelfth and thirteenth inputs of the NAND gate 2496 are tied to the +5 volt power supply 2497 through the resistor 2498. The output of the NAND gate 2496 is supplied as the first input to the NOR gate 2499. The strobe (STRB) line from the 2900 microprocessor is supplied as a second input to the NOR gate 2499. The output of the NOR gate 2499 is supplied as the first input to the NAND gate 2501 and the NAND gate 2502. The read/write line from the 2900 microprocessor is supplied directly as a second input to the NAND gate 2502 and is supplied through the inverter 2503 as a second input to the NAND gate 2501.

The output from the NAND gate 2501 goes low when data is available to be written from the 2900 microprocessor to the 6800 microprocessor. The output from the NAND gate 2501 is supplied to the clock input of the flip-flop 2503. The output from the NAND gate 2501 is also supplied to the input of the driver 2504 and provides an indication that the 2900 microprocessor is ready to send data. The output from the NAND gate 2502 goes low when data can be read into the 2900 microprocessor from the 6800 microprocessor. The output from the NAND gate 2502 is supplied as an enabling input to the driver 2504 and is also supplied to the input side of the driver 2504 as an indication that the 2900 satellite microprocessor is clear to receive data.

The D0—D7 data lines from the 6800 microprocessor are supplied to the input side of the driver 2504 and are supplied to the D inputs of the flip-flop 2503. The clear input of the flip-flop 2503 is tied to the +5 volt power supply 2505. The Q outputs from the flip-flop 2503 are tied to the PA0—PA7 peripheral data lines of the peripheral interface adapter 2488.

The PB0—PB7 peripheral data lines from the peripheral interface adapter 2488 are tied to the input side of the driver 2504. The CB2 peripheral control line from the peripheral interface adapter 2488 is tied through inverter 2506 to the input side of the driver 2504. The CB2 control line from the peripheral interface adapter 2488 is utilized to provide an indication to the 2900 microprocessor that data is available for transmission from the 6800 microprocessor to the 2900 microprocessor. The CA2 peripheral control line from the peripheral interface adapter 2488 is tied through inverter 2507 to the input side of the driver 2504. The CA2 peripheral control line is utilized to provide an indication to the 2900 microprocessor that the 6800 microprocessor is clear to receive data.

The 6800 microprocessor data-ready signal and the 6800 clear-to-send signal are supplied through the driver 2504 to the 2900 microprocessor. The 2900 data-ready signal and the 2900 clear-to-send signal are supplied through the driver 2504 as inputs to the driver 2493. From the driver 2493, the 2900 data-ready signal and the 2900 clear-to-send signal are supplied to the peripheral interface adapter 2488. The 2900 data-ready signal is supplied to the CA1 interrupt input while the 2900 clear-to-send signal is supplied to the CB1 interrupt input.

The peripheral interface adapter 2488 forms the heart of the computer-to-computer interface 58 illustrated in Figure 2a. Data is supplied from the 2900 microprocessor to the PA0—PA7 peripheral data lines of the peripheral interface adapter 2488. This data can be supplied from the peripheral interface adapter 2488 to the 6800 microprocessor by means of the D0—D7 data lines of the 6800 microprocessor which are tied to the D0—D7 data lines of the peripheral interface adapter 2488. In like manner, the D0—D7 data lines from the 6800 microprocessor can be utilized to supply data to the peripheral interface adapter 2488 by means of the D0—D7 data inputs of the peripheral interface adapter 2488. Data from the 6800 microprocessor is supplied to the 2900 microprocessor by means of the PB0—PB7 peripheral data lines of the peripheral interface adapter 2488.

The address lines and the command lines from the 2900 microprocessor are used to generate the write signal which is output from the NAND gate 2501 and the read signal which is output from the NAND gate 2502. The write signal 2501 is utilized to clock the flip-flop 2503 to supply data from the 2900 microprocessor to the PA0—PA7 peripheral data lines of the peripheral interface adapter 2488. The write signal from the NAND gate 2501 is utilized also to supply the 2900 data-ready signal which indicates that data is available to be written from the 2900 microprocessor to the 6800 microprocessor. The 2900 ready-signal is supplied through the driver 2504 and the driver 2493 to the CA1 interrupt of the peripheral interface adapter 2488. The peripheral interface adapter 2488 provides an indication that data is available to be written from the 2900 microprocessor to the 6800 microprocessor by means of the interrupt request (IRQ) A and interrupt request (IRQ) B lines of the peripheral interface adapter 2488.

In the same manner, the read signal from the NAND gate 2502 is utilized to provide the 2900 clear-to-send signal which indicates that the 2900 microprocessor is clear and can receive data from the 6800 microprocessor. The 2900 clear-to-send signal is supplied from the driver 2504 through the driver 2493 to the CB1 interrupt input of the peripheral interface adapter 2488. The peripheral interface adapter 2488 supplies the 2900 clear-to-send signal to the 6800 microprocessor by means of the interrupt request (IRQ) A and interrupt request (IRQ) B outputs from the peripheral interface adapter 2488.

The address lines and command lines from the 6800 microprocessor are utilized to control the CB2 and CA2 control outputs from the peripheral interface adapter so as to generate the 6800 data-ready signal and the 6800 clear-to-send signal. The 6800 data-ready signal indicates that data is available at the 6800 microprocessor to be transferred to the 2900 microprocessor. The 6800 clear-to-send signal indicates that the 6800 microprocessor is clear to receive data from the 2900 microprocessor. The 6800 data-ready signal and the 6800 clear-to-send signal are supplied through the driver 2504 to the 2900 microprocessor.

Commercially available components which can be utilized in the circuit illustrated in Figure 38 are as follows:

| | |
|---|---|
| NOR gates 2481 and 2499 | 74LS02, National Semiconductor |
| NAND gates 2482 and 2487 | 74LS21, National Semiconductor |
| NAND gates 2484, 2501 and 2502 | 74LS00, National Semiconductor |
| NAND gate 2496 | 74LS133, National Semiconductor |
| Inverters 2483, 2485, 2492, 2486, 2495, 2503, 2506 and 2507 | 74LS04, National Semiconductor |
| Driver 2489 | 74LS365, National Semiconductor |
| Driver 2491 and 2493 | 74LS367, National Semiconductor |
| Driver 2504 | 74LS368 (2 required) National Semiconductor |
| Flip-flop 2503 | 74LS175 (2 required) National Semiconductor |
| Peripheral interface Adapter 2488 | MC6820, Motorola Semiconductor |
| Resistor 2498 | 5 K ohms, RN55D, Dale |

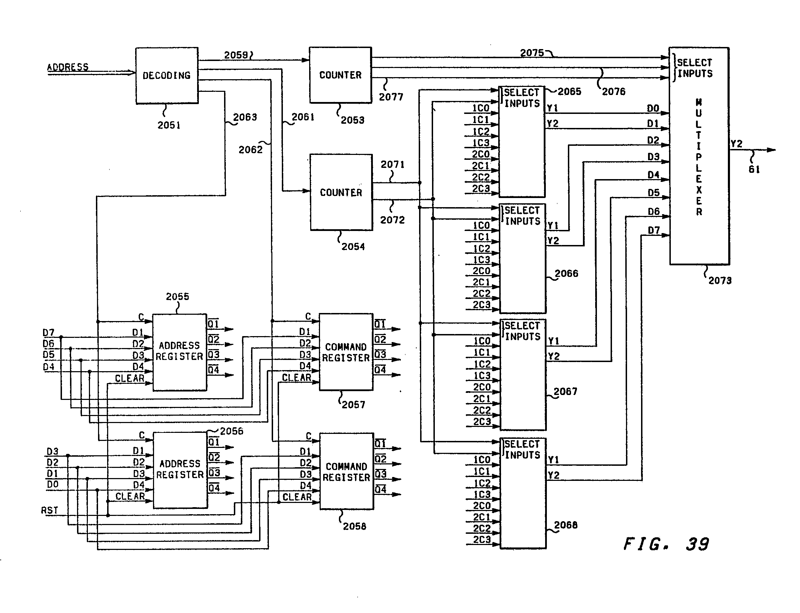

The command formatter 52 illustrated in Figure 2a is more fully illustrated in Figure 39. The command formatter 52 is used primarily to convert the commands and data from the 6800 microprocessor, which is illustrated as computer 51 in Figure 2a, from a parallel to a serial format. Referring now to Figure 39, the address from the 6800 microprocessor is supplied to decoding block 2051. In response to the address from the 6800 microprocessor, the decoding block 2051 supplies control signals and clock signals to the counters 2053 and 2054, the address registers 2055 and 2056, and the command registers 2057 and 2058. Signal 2059 is supplied from the decoding section 2051 as an enabling signal to counter 2053. Signal 2061 is supplied from the decoding section 2051 as an enabling signal to the counter 2054. Signal 2063 is supplied as a clock signal to the clock inputs of address registers 2055 and 2056. Signal 2062 is supplied from the decoding section 2051 to the clock input of the command registers 2057 and 2058.

The D4—D7 data lines from the 6800 microprocessor are loaded into the D1—D4 data inputs of the address register 2055 and into the D1—D4 data inputs of the command register 2057. The D0—D3 data lines from the 6800 microprocessor are loaded into the D1—D4 data inputs of the address register 2056 and into the D1—D4 data inputs of the command register 2058. The reset line from the 6800 microprocessor is supplied to the clear inputs of the address registers 2055 and 2056 and the command registers 2057 and 2058. Data or commands are loaded into the address registers or command registers in response to the clock signals from the decoding section 2051. The data or commands are supplied from the address registers and command registers as inputs to the multiplexers 2065—2068. The $\overline{Q4}$ output from the address register 2056 is tied to the 1C3 data input of the multiplexer 2065. The $\overline{Q3}$ output from the address register 2056 is tied to the 2C3 data input of the multiplexer 2065. The $\overline{Q2}$ output from the address register 2056 is supplied to the 1C3 input of the multiplexer 2066. The $\overline{Q1}$ output from the address register 2056 is tied to the 2C3 input of the multiplexer 2066. The $\overline{Q4}$ output from the address register 2055 is tied to the 1C3 data input of the multiplexer 2067. The $\overline{Q3}$ output from the address register 2055 is tied to the 2C3 data input of the multiplexer 2067. The $\overline{Q2}$ output from the address register 2055 is tied to the 1C3 input of the multiplexer 2068. The $\overline{Q1}$ output from the address register 2055 is tied to the 2C3 data input of the multiplexer 2068. The $\overline{Q4}$ output from the command register 2058 is tied to the 1C2 data input of the multiplexer 2065. The $\overline{Q3}$ output from the command register 2058 is tied to the 2C2 data input of the multiplexer 2065. The $\overline{Q2}$ output from the command register 2058 is tied to the 1C2 input of the multiplexer 2066. The $\overline{Q1}$ output from the command register 2058 is tied to the 2C3 data input of the multiplexer 2066. The $\overline{Q4}$ output from the command register 2057 is tied to the 1C2 data input of the multiplexer 2067. The $\overline{Q3}$ data output from the command register 2057 is tied to the 2C2 data input of the multiplexer 2067. The $\overline{Q2}$ output from the command register 2057 is tied to the 1C2 data input of the multiplexer 2068. The $\overline{Q1}$ output from the command register 2057 is tied to the 2C2 data input of the multiplexer 2068.

The 1C0, 1C1, 2C0 and 2C1 data inputs of the multiplexers 2065—2068 are strapped inputs which may be strapped in any manner desirable to provide the desired address or preamble from the central recording station, illustrated in Figure 2a, to the remote telemetry unit illustrated in Figure 2b.

The multiplexers 2065—2068 are capable of outputting two of the eight input signals. One of the inputs 1C0—1C3 is selected and one of the inputs 2C0—2C3 is selected. The inputs selected are determined by the signals 2071 and 2072 which are supplied from the counter 2054 to the select inputs of the multiplexers 2065—2068. In response to the signals 2071 and 2072, the multiplexers 2065—2068 provide a plurality of output signals to the multiplexer 2073. The Y1 and Y2 outputs from the multiplexer 2065 are supplied to the D0 and D1 data inputs of the multiplexer 2073. The Y1 and Y2 outputs from the multiplexer 2066 are supplied to the D2 and D3 data inputs of the multiplexer 2073. The Y1 and Y2 outputs from the multiplexer 2067 are supplied to the D4 and D5 data inputs of the multiplexer 2073. The Y1 and Y2 outputs from the multiplexer 2068 are supplied to the D6 and D7 data inputs of the multiplexer 2073.

The multiplexer 2073 provides a single output signal 61 which is illustrated in Figure 2a. The multiplexer 2073 is controlled in such a manner that one of the D0—D7 inputs is supplied to the Y2 output of the multiplexer 2073 in a sequential manner such that the parallel command or address is converted to a serial command or address and is thus supplied to the remote telemetry unit illustrated in Figure 2b. The manner in which the D0—D7 inputs to the multiplexer 2073 are provided as output signals is determined by the control signals 2075—2077 which are provided from the counter 2053 to the select inputs of the multiplexer 2073.

The address from the 6800 microprocessor, which is supplied to the decoding section 2051, determines the manner in which data or commands are supplied over signal line 61 to the RF transmitter 59 illustrated in Figure 2a. An address from the 6800 microprocessor is loaded into the address registers 2055 and 2056 in response to the control signal 2063 from the decoding section 2051. In like manner a command may be loaded into the command registers 2057 and 2058 in response to the clock signal 2062 from the decoding section 2051. The address or command is then supplied to the multiplexers 2065—2068 and the manner in which the address or command is supplied from the multiplexers 2065—2068 to the multiplexer 2073 is controlled by the counter 2054 in response to the control signal 2061 from the decoding section 2051. In like manner, the manner in which the address or command is supplied from the multiplexer 2073 is controlled by the counter 2053 in response to the control signal 2059 from the decoding section 2051. Thus the 6800 microprocessor not only supplies the address and command to the command formatter 52, illustrated in Figure 2a, but also controls the manner in which the address or command is supplied from the command formatter 52 illustrated in Figure 2a.

Commercially available components which can be utilized in the circuit illustrated in Figure 39 are as follows:

| | |
|---|---|
| Address registers 2055 and 2056 and Command registers 2057 and 2058 | 74LS175, National Semiconductor |
| Multiplexers 2065—2068 | 93L09, Fairchild Semiconductor |
| Multiplexer 2073 | 93L12, Fairchild Semiconductor |
| Counter 2053 | 74LS197 (2 required) National Semiconductor |
| Counter 2054 | 93L10 (3 required) Fairchild Semiconductor |

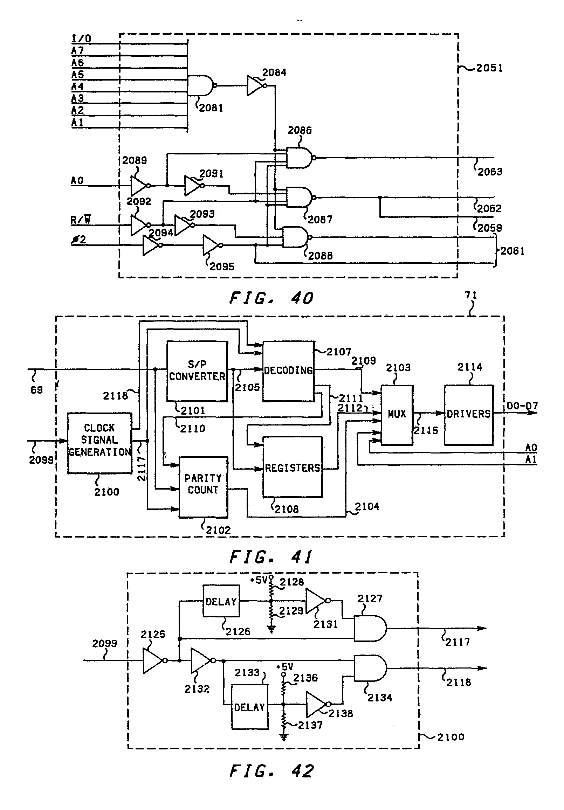

The decoding section 2051, illustrated in Figure 39, is more fully illustrated in Figure 40. The I/O line from the 6800 microprocessor together with the A1—A7 address line from the 6800 microprocessor are supplied as inputs to the NAND gate 2081. The A7 address line is supplied through inverter 2082 while the A6 address line is supplied through inverter 2083. The output from the NAND gate 2081 is supplied through inverter 2084 as an input to NAND gates 2086—2088. The A0 address line from the 6800 microprocessor is supplied through inverter 2089 to the NAND gate 2086 and is also supplied through inverter 2089 and inverter 2091 to the NAND gate 2087. The R/W line from the 6800 microprocessor is supplied through inverter 2092 to the NAND gate 2087 and the NAND gate 2086. The R/W line from the 6800 microprocessor is also supplied through inverter 2092 and inverter 2093 to the NAND gate 2088. The $\emptyset$ clock from the 6800 microprocessor is supplied through inverter 2094 and 2095 as an input to the NAND gates 2086—2088 and is also supplied as one part of signal 2061 illustrated in Figure 39. The output signal from the NAND gate 2088 makes up the second part of the signal 2061 illustrated in Figure 39. The output from the NAND gate 2087 is supplied as both signal 2059 and signal 2062 illustrated in Figure 39. The output from the NAND gate 2086 is supplied as the output signal 2063 illustrated in Figure 39.

Commercially available components which can be utilized in the circuit illustrated in Figure 40 are as follows:

| | |
|---|---|
| Inverters 2083—2084 and 2089—2095 | 74LS04, National Semiconductor |
| NAND gate 2081 | 74LS30, National Semiconductor |
| NAND gate 2086 and 2087 | 74LS20, National Semiconductor |
| NAND gate 2088 | 74LS10, National Semiconductor |

The data formatter 71, illustrated in Figure 2a is more fully illustrated in Figure 41. Referring to Figure 41, data is supplied from the RF receiver 68 by the means of signal line 69 as illustrated in Figure 2a. The data is supplied from the RF receiver 68 to the serial-parallel converter 2101 and parity count circuit 2102. The data is transmitted from the remote telemetry unit, illustrated in Figure 2b, in 20-bit blocks. The parity count circuit 2102 maintains a count of the number of ones in the 20-bit blocks and outputs this count to the multiplexer 2103 by means of signal line 2104. Signal line 2104 will either be high or low depending on the number of ones contained in the data block.

The data from the RF receiver 68 is in serial form. The data is converted to parallel form by the serial-to-parallel converter 2101. The output signal 2105 from the serial-to-parallel converter 2101 is representative of a 20-bit word in parallel form and thus is representative of 20 signal lines. The 20 signal lines from the serial-to-parallel converter 2101, which are represented by signal 2105, are supplied as inputs to the decoding circuit 2107 and the registers 2108. The registers 2108 are utilized as storage to allow additional time for processing of the incoming data from the remote telemetry unit illustrated in Figure 2b. The decoding section 2107 is utilized to supply a clock signal to the register 2108 to enable the registers to load data and also supplies a data-available signal to the multiplexer 2103 as well as a control signal 2110 to the parity count circuit 2102. The data-available signal, which is illustrated as signal line 2109, is utilized to inform the 2900 microprocessor that data is available. The clock signals supplied from the decoding section 2107 is illustrated as signal 2111.

The clock signal generation circuit 2100 is utilized to supply the clock or timing signals for the data formatter 71. A clock signal 2099 is supplied from the RF receiver 68 by means of the signal line 69 which is illustrated in Figure 2a. In response to signal 2099, the clock signal generation circuit 2100 generates a pair of clock signals 2117 and 2118 which are 180° out of phase. Clock signal 2117 is provided to both the parity count circuit 2102 and the decoding circuit 2107. Clock signal 2118 is provided to the decoding circuit 2107.

The output 2112 from the registers 2108 is supplied to the multiplexer 2103. Again, the output signal 2112 from the register 2108 is representative of 20 signal lines.

The A0 and A1 address lines from the 2900 microprocessor are supplied to the multiplexer 2103 and are utilized to select which input signals will be provided as outputs to the drivers 2114 by means of signal line 2115. The output signal line 2115 from the multiplexer 2103 are representative of 8 signal lines. The output signal line from the driver 2114 is connected to the D0—D7 data lines of the 2900 microprocessor.

Essentially, the data formatter 71, illustrated in Figure 41, is utilized to convert the serial data from the remote telemetry unit to parallel form and to provide a parity count to the 2900 microprocessor. The decoding circuit 2107 provides synchronization for the data formatter. The manner in which the data is supplied to the 2900 microprocessor is controlled by the 2900 microprocessor by means of the A0 and A1 address lines.

Commercially available components which can be utilized in the circuit illustrated in Figure 41 are as follows:

| | |
|---|---|
| S/P converter 2101 | 74LS164, National Semiconductor |
| Register 2108 | 74LS175, National Semiconductor |
| Multiplexer 2103 | 93L09, National Semiconductor |
| Drivers 2114 | 74LS368, National Semiconductor |

The clock signal generation circuit 2100 which is illustrated in Figure 41 is more fully illustrated in Figure 42. The clock signal 2099 from the RF receiver 68, illustrated in Figure 2a, is supplied through inverter 2125 as an input to the delay 2126 and as a first input to the AND gate 2127. The output from the delay 2126 is supplied through the voltage divider network made up of resistors 2128 and 2129 and through inverter 2131 as a second input to the AND gate 2127. The output from the AND gate 2127 forms the clock signal 2117 which is illustrated in Figure 41.

The clock signal 2099, from the RF receiver 68 illustrated in Figure 2a, is also supplied through inverters 2125 and 2132 as an input to the delay 2133 and as a first input to the AND gate 2134. The output from the delay 2133 is supplied through the voltage divider network made up of resistors 2136 and 2137 and through the inverter 2138 as a second input to the AND gate 2134. The output from the AND gate 2134 is the clock signal 2118 which is illustrated in Figure 41. As has been previously stated, the clock signals 2117 and 2118 are 180 degrees out of phase.

Commercially available components which can be utilized in the circuit illustrated in Figure 42 are as follows:

| | |
|---|---|
| Inverters 2125, 2132, 2131 and 2138 | 74LS04, National Semiconductor |
| Delay 2126 and 2133 | 1504—1000, Data Delay |
| Resistors 2128 and 2136 | 470 ohms, 1%, 1/8W, RN55D, Dale |
| Resistors 2129 and 2137 | 680 ohms, 1%, 1/8W, RN55D, Dale |
| AND gates 2127 and 2134 | 74LS08, National Semiconductor |

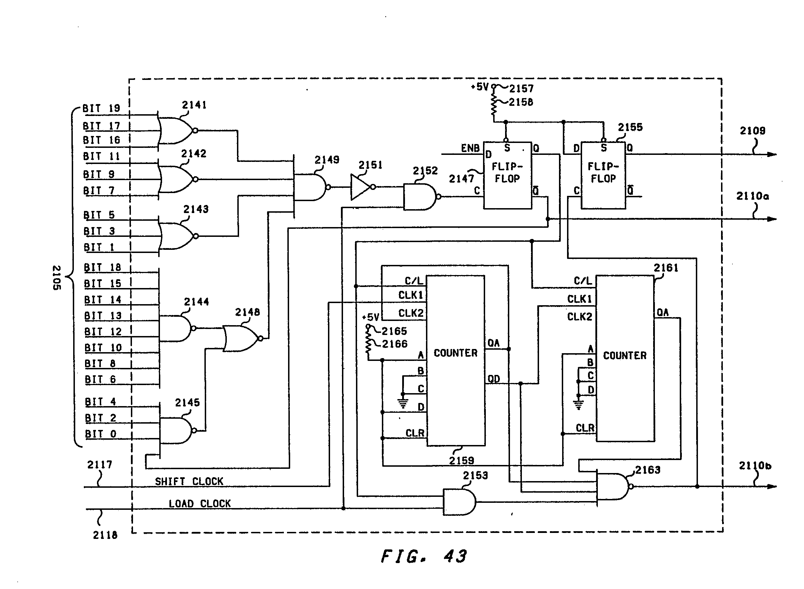

The decoding circuit 2107 illustrated in Figure 41 is more fully illustrated in Figure 43. Referring to Figure 43, signal 2105 from the serial-to-parallel converter 2101, illustrated in Figure 41, is made up of 20 bits. The 20 bits are supplied to a plurality of NOR gates and NAND gates as is illustrated in Figure 43. Bits 19, 17 and 16 are supplied as inputs to the NOR gate 2141. Bits 11, 9 and 7 are supplied as inputs to the NOR gate 2142. Bits 5, 3 and 1 are supplied to the NOR gate 2143. Bits 18, 15, 14, 13, 12, 10, 8 and 6 are supplied as inputs to the NAND gate 2144. Bits 4, 2 and 0 are supplied as inputs to the NAND gate 2145. The NAND gate 2145 is also supplied with the $\overline{Q}$ output from the flip-flop 2147. The output from the NAND gate 2144 is supplied as a first input to the NOR gate 2148. The output from the NAND gate 2145 is supplied as second input to the NOR gate 2148. The output from the NOR gate 2148 is supplied as a first input to the NOR gate 2149. The output from the NOR gates 2141—

2143 are also supplied as inputs to the NAND gate 2149. The output from the NAND gate 2149 is supplied through inverter 2151 as a first input to the NAND gate 2152.

The clock signal 2118 from the clock signal generation circuit 2100 is supplied as a second input to the NAND gate 2152 and is also supplied as a first input to the AND gate 2153. The output from the NAND gate 2152 is supplied to the clock input of the flip-flop 2147. The D input of the flip-flop 2147 is supplied with an enabling pulse which indicates that data is available. The set input of the flip-flop 2147, the set input of the flip-flop 2155 and the D input of the flip-flop 2155 are all tied to the +5 volt power supply 2157 through resistor 2158. The Q output of the flip-flop 2147 is tied to the count/load input of the counter 2159, to the count/load input of the counter 2161 and as a second input to the AND gate 2153. The output of the AND gate 2153 is supplied as one input to the NAND gate 2163. The Q̄ output from the flip-flop 2147 is tied as one input to the NAND gate 2145, as has been previously stated, and is also supplied as signal 2110A which forms a part of signal 2110 illustrated in Figure 41. The Q output from the flip-flop 2115 is utilized as the data-available signal 2109 which is illustrated in Figure 41.

The clock signal 2117, from the clock signal generation circuit 2100 illustrated in Figure 41, is supplied to the first clock input of the counter 2159. The A and D data inputs of the counter 2159, as well as the clear input of the counter 2159, together with the A data input and the clear input of counter 2161, are tied to the +5 volt power supply 2165 through resistor 2166. The B and C data inputs of counter 2159 are tied to ground. The B, C and D data inputs of counter 2161 are tied to ground. The QA output from the counter 2159 is tied to the second clock input of the counter 2159 and is supplied as a second input to the NAND gate 2163. The QD output from the counter 2159 is tied to the first clock input of the counter 2161 and is supplied as a third input to the NAND gate 2163. The QA output from the counter 2161 is supplied as a fourth input to the NAND gate 2163. The output from the NAND gate 2163 is supplied to the clock input of the flip-flop 2155 and is also supplied as signal 2110B which forms a second part of signal 2110 illustrated in Figure 41.

The circuit illustrated in Figure 43 is utilized to provide an indication that data is available to the 2900 microprocessor by means of the decoding of the 20 bits of signal 2105 from the serial-to-parallel converter 2101 illustrated in Figure 41. The decoding circuit, illustrated in Figure 43, also counts the number of bits by means of counters 2159 and 2161 to provide an indication of when each 20-bit word has been transmitted.

Commercially available components which can be utilized in the circuit illustrated in Figure 43 are as follows:

| | |
|---|---|
| NOR gates 2141, 2142 and 2143 | 74LS27, National Semiconductor |
| NAND gate 2144 | 74LS30, National Semiconductor |
| NAND gate 2145, 2149 and 2163 | 74LS20, National Semiconductor |
| NOR gate 2148 | 74LS02, National Semiconductor |
| NAND gate 2152 | 74LS00, National Semiconductor |
| AND gate 2153 | 74LS08, National Semiconductor |
| Inverter 2151 | 74LS04, National Semiconductor |
| Flip-flops 2147 and 2155 | 74LS74, National Semiconductor |
| Counter 2159 | 74LS196, National Semiconductor |
| Counter 2161 | 74LS197, National Semiconductor |
| Resistors 2158 and 2166 | 4.7 K ohms, RN60D, Dale |

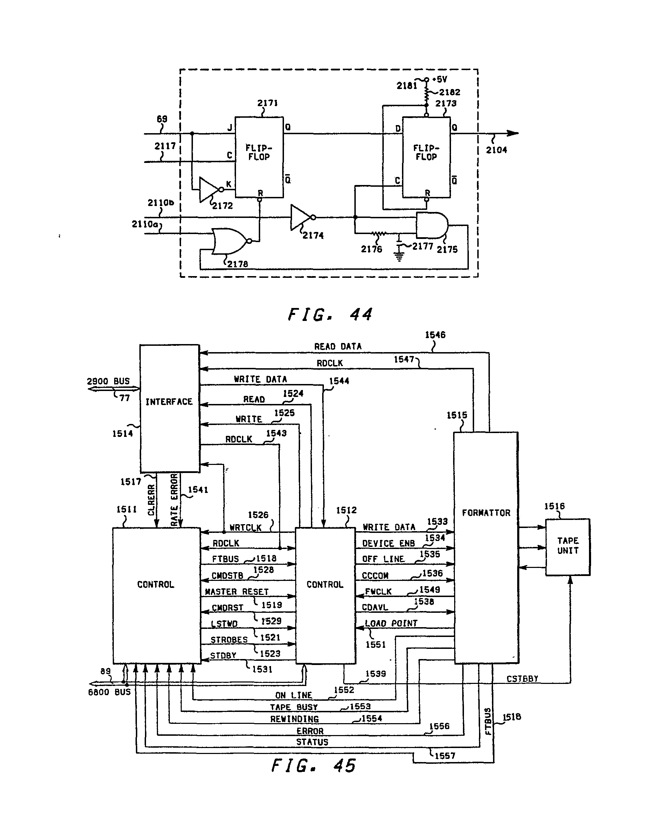

The parity count circuit 2102, illustrated in Figure 41, is more fully illustrated in Figure 44. The data signal 69 from the RF receiver 68, illustrated in Figure 2a, is supplied to the J input of the flip-flop 2171 and is supplied through inverter 2172 to the K input of the flip-flop 2171. The clock signal 2117, which is supplied from the clock signal generation circuit 2100, is supplied to the clock input of the flip-flop 2171. Signal 2110B, which is illustrated in Figure 43, is supplied through inverter 2174 to the clock input of the flip-flop 2173. Signal 2110B is also supplied through the inverter 2174 directly as a first input to the AND gate 2175 and through the resistance capacitance network made up of resistor 2176 and capacitor 2177 as a second input to the NAND gate 2175. The output from the NAND gate 2175 is supplied as a first input to the NAND gate 2178. Signal 2110A, which is illustrated in Figure 43, is supplied as a second input to the NOR gate 2178. The output from the NOR gate 2178 is tied to the reset input of the flip-flop 2171.

The Q output from the flip-flop 2171 is supplied to the D input of the flip-flop 2173. The set input and the reset input of the flip-flop 2173 are tied to the +5 volt power supply 2181 through the resistor 2182. The Q output from the flip-flop 2173 is supplied as the parity count signal 2104 which is illustrated and described in Figure 41.

The circuit illustrated in Figure 44 simply counts the number of ones in the data being transmitted in the data blocks from the receiver 68 illustrated in Figure 2a. Preferably, even parity is used and the Q output from flip-flop 2171 is utilized. If odd parity is desired, then the Q̄ output from the flip-flop 2171 would be utilized. Signal 2104 provides an indication of whether or not the number of ones transmitted in a particular data block was even. If the number of ones is not even, then signal 2104 indicates to the 2900 microprocessor that an error has occurred in the particular data block being transmitted.

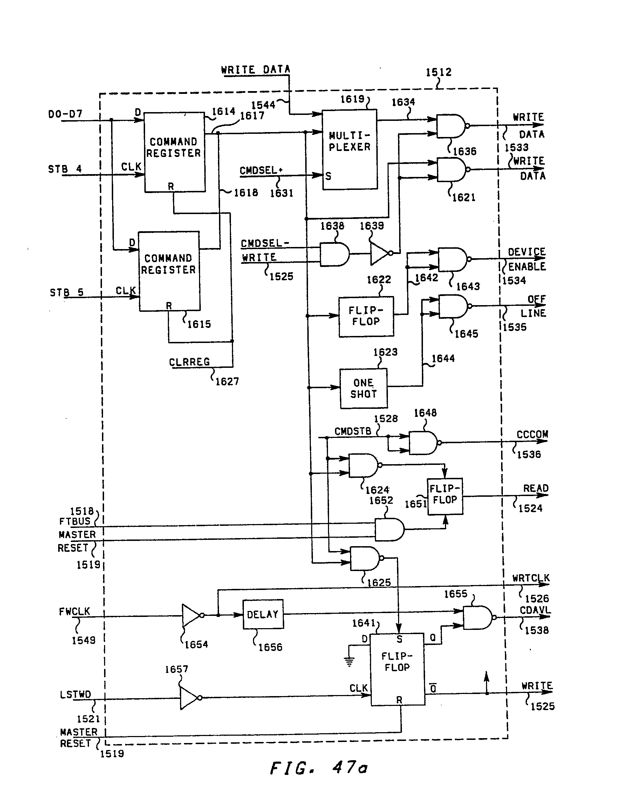

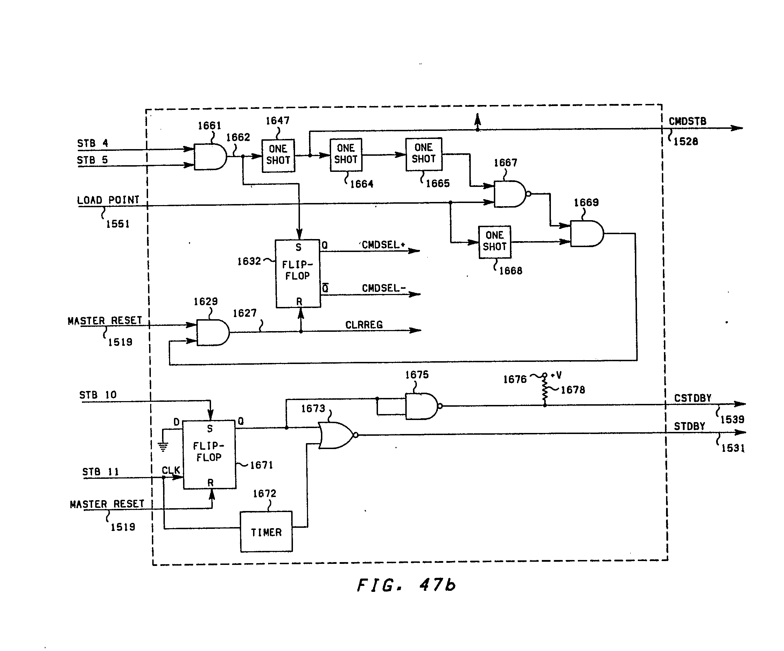

Commercially available components which can be utilized in the circuit illustrated in Figure 47 are as follows:

| | |
|---|---|
| Inverter 2172 and 2174 | 74LS04, National Semiconductor |
| Flip-flop 2171 | 74LS109, National Semiconductor |
| Flip-flop 2173 | 74LS74, National Semiconductor |
| NOR gate 2178 | 74LS02, National Semiconductor |
| NAND gate 2175 | 74LS08, National Semiconductor |
| Resistor 2182 | 10K ohms, RN55D, Dale |
| Resistor 2176 | 1 K ohms, RN55D, Dale |
| Capacitor 2177 | .01 microfarads, Type 25B, SE & I |

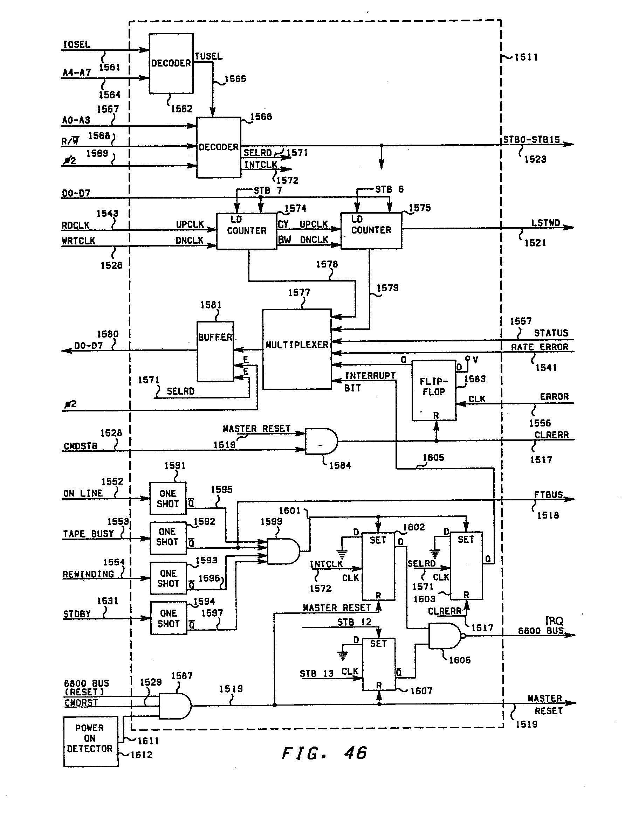

The magnetic tape unit 79, the magnetic tape controller 88, and the magnetic tape interface 78, illustrated in Figure 2a, are more fully illustrated in Figure 45. Control blocks 1511 and 1512 correspond to the magnetic tape controller illustrated in Figure 2a. Interface block 1514 corresponds to the magnetic tape interface 78 illustrated in Figure 2a. The formatter 1515 and the tape unit 1516 corresponds to the magnetic tape unit 79 illustrated in Figure 2a. In this preferred embodiment of the invention the formatter 1515 is a Kennedy Model 9218 and the tape unit 1516 is a Kennedy Model 9800.

To the extent possible, the signal lines illustrated in Figure 45 have been labelled consistently with the specifications for the formatter 1515 and the tape unit 1516. The general manner in which the formatter 1515 and the tape unit 1516 are interfaced to the 2900 microprocessor and the 6800 microprocessor is illustrated in Figure 45. The primary problem encountered in interfacing the formatter 1515 and the tape unit 1516 to the 2900 microprocessor and the 6800 microprocessor is the fact that the tape unit 1516 and the two microprocessors are running asynchronously. A means had to be developed to determine whether the data transferred from the 2900 microprocessor had been completely transferred to the tape unit 1516. Also, a means had to be developed for alerting the control computer, which is the 6800 microprocessor, of the fact that an error had occurred in the transfer of data from the 2900 to the tape unit 1516.

The control 1511 and the control 1512 are tied to the 6800 microprocessor bus by means of bus line 89 as is illustrated in Figure 2a. Control 1511 provides a plurality of output signals to the interface 1514 and to the control 1512. Signal 1517 is provided from the control 1511 to the interface 1514 and is utilized to clear any error indications that have been previously set in the interface 1514. The master reset signal 1519 is provided from the control 1511 to the control 1512 and is utilized to reset the logic chips located in control 1512. The last-word signal 1521 is provided from the control 1511 to the control 1512 and provides an indication that the last word of a data block has been transmitted from the 2900 microprocessor to the tape unit 1516. The strobe signals 1523 are provided from the control 1511 to the control 1512. The strobe signals 1523 are a plurality of clock signals which are utilized to clock the logic circuitry of the control 1512.

Control unit 1512, which is also tied to the 6800 microprocessor by means of bus line 89, provides a plurality of outputs to the formatter 1515, the tape unit 1516, the control unit 1511 and the interface 1514. The read signal 1524 and write signal 1525 are supplied from control 1512 to the interface 1514 to control the direction of data transfer. The write clock signal 1526 is provided from the control block 1512 to the control block 1511 and to the interface 1514. The write clock signal 1526 is utilized to clock data into the tape unit 1516. The command strobe signal 1528 is provided from the control 1512 to the control 1511 and is utilized to clear the status and error flip flops as well as to generate the clear error signal 1517. The command reset signal 1529 is provided from the control 1512 to the control 1511 and is utilized to generate the master reset signal 1519. The standby signal 1531 is provided from the control 1512 to the control 1511 and provides an indication that the power-up sequence for tape unit 1516 has been completed. The write data signal lines 1533 are provided from the control 1512 to the formatter 1515. Data is written from the 2900 microprocessor to the formatter 1515 by means of the write data lines 1533 and 1544. The device enable signal 1534 is provided from the control 1512 to the formatter 1515 and is utilized to enable all of the interface drivers and receivers in the formatter 1515. The off-line signal 1535 is provided from the control 1512 to the formatter 1515 and is utilized to place the tape unit 1516 under manual control. The command control signal 1536 is provided from the control 1512 to the formatter 1515 to indicate that a command has been generated from the 6800 microprocessor. The data available strobe 1538 is provided from the control 1512 to the formatter 1516 and is a pulse supplied to the formatter 1515 for each character to be written to the tape unit 1516. The standby power supply line 1539 is provided from the control 1512 to the tape unit 1516 and is utilized to control the operate or standby power mode the tape unit 1516.

The interface 1514 is tied to the 2900 microprocessor bus by means of bus line 77 as is illustrated in Figure 2a. The interface 1514 provides a plurality of outputs to the control 1511 and to the control 1512. The rate error signal 1541 is provided from the interface 1514 to the control 1511 and is an indication of whether or not an error has occurred in the transfer of data from the 2900 microprocessor to the tape unit 1516. The read clock signal 1543 is provided from the interface 1514 to the control 1511 and to the control 1512. The read clock signal 1543 clocks the reading of characters from the tape unit 1516 and increments the character counter in control 1511.

The write data signal lines 1544 are provided from the interface 1514 to the control 1512 and provides a means by which data may be transferred from the 2900 microprocessor to the control 1512 and hence to the formatter 1515.

The formatter 1515 provides a plurality of input and output signals as is set forth in the specification for the formatter 1515. Only those output signals which are essential to an understanding of the manner in which the tape unit 1516 is interfaced to the 6800 microprocesor and the 2900 microprocessor are described. The read data lines 1546 are provided from the formatter 1515 to the interface 1514 and provide a means by which data may be transferred from the tape unit 1516 to the interface 1514. The read clock signal 1547 is provided from the formatter 1515 to the interface 1514 and provides the clock signal for reading data from the tape unit 1516 to the interface 1514. The write clock signal 1549 is provided from the formatter 1515 to the control 1512 and is utilized to clock the writing of data into the tape unit 1516. The load point signal 1551 is provided from the formatter 1515 to the control 1512. The load point signal 1551 indicates that a tape unit has been selected, is on line, is not rewinding, and the tape load point marker is under the photosensor. The on-line signal 1552 is provided from the formatter 1515 to the control 1511. The on-line signal 1552 provides an indication of whether the selected tape transport is under remote or local control. The tape busy signal 1553 is provided from the formatter 1515 to the control 1511 and provides an indication that the tape unit 1516 is not ready to receive data. The rewinding signal 1554 is provided from the formatter 1515 to the control 1511 and provides an indication that the tape unit 1516 is being rewound. A plurality of output signals, represented by the error signal 1556, are provided from the formatter 1515 to the control 1511. The error signals 1556 identify a variety of error conditions which may occur in the operation of the tape unit 1516. The status signal 1557, which is representative of a plurality of signals, is provided from the formatter 1515 to the control 1511 and provide operating status information for the tape unit 1516.

The control 1511 illustrated in Figure 45 is more fully illustrated in Figure 46. The input/output select signal 1561 is provided from the 6800 microprocessor to the decoder 1562. The input/output select signal 1561 is obtained by decoding the eight most significant bits of the address from the 6800 microprocessor. The decoded signal is then ANDED with the valid memory address (VMA) from the 6800 microprocessor to provide the input/output select signal 1561 (this decoding is accomplished in computer 51 illustrated in Figure 2a). Decoder 1562 is also provided with the A4—A7 address bits from the 6800 microprocessor by means of a plurality of address lines which are represented as address lines 1564. In response to the input/output select signal 1561 and the A4—A7 address bits, the decoder 1562 provides a tape unit select signal 1565 to the decoder 1566. The decoder 1566 is also provided with the A0—A3 address lines from the 6800 microprocessor by means of a plurality of address lines which are represented as address lines 1567. The decoder 1566 is also provided with the read/write (R/$\overline{W}$) signal 1568 and the Ø2 clock signal 1569 from the 6800 microprocessor. In response to the tape unit select signal 1565, address bits A0—A3, the read/write signal 1568, and the Ø2 clock signal 1569, the decoder 1566 provides a plurality of clock signals for use in the control 1511 and the control 1512 illustrated in Figure 45. Sixteen clock signals, which are called strobe signals are provided by a plurality of signal lines which are represented by signal line 1523. The select read signal 1571 and the interrupt clock signal 1572 are also provided from the decoder 1566.

The D0—D7 data lines from the 6800 microprocessor are provided as inputs to the counter 1574 and the counter 1575. The seventh strobe signal from the decoder 1566 is provided to the load input of the counter 1574. The sixth strobe signal from the decoder 1566 is provided to the load input of the counter 1575. The read clock signal 1543 is provided to the up clock input of the counter 1574. The write clock signal 1526 is provided to the down clock input of the counter 1574. Eight output lines from the counter 1574 are supplied to the multiplexer 1577 and are represented as signal line 1578. In like manner, eight output lines are supplied from the counter 1575 to the multiplexer 1577 and are represented by signal line 1579.

The counter 1574 and the counter 1575 together make up a 16 bit up/down character counter. The character counter is used in both read and write operations. In write operations, the character counter is preset to the number of characters to be written on the tape unit 1516 illustrated in Figure 45. The character counter is decremented by the write clock signal 1526 as each character is written on tape, thus providing a count to the multiplexer 1577 of the number of characters which have been written on tape. The borrow output from the counter 1575 is utilized as a signal to the control 1512 that the last word of the data block has been written to the tape unit. This signal is designated as the last-word signal 1521.

In the read operation, the character counter is preset to zero and incremented by the read clock signal 1543 as each character is read from the tape unit 1516. At the end of the read operation, the contents of the character counter are examined to determine the number of characters which have been read from the tape unit. The number of characters which have been read from the tape unit are supplied to the multiplexer 1577 by means of signal lines 1578 and 1579. This information is supplied to the 6800 microprocessor from the multiplexer 1577 through the buffer 1581 which is tied to the D0—D7 data lines of the 6800 microprocessor. The buffer 1581 is enabled by the select read signal 1571 which is provided from the decoder 1566 and the Ø2 clock from the 6800 microprocessor.

The multiplexer 1577 selects one of four eight-bit words according to the status of the A0 and A1 address bits of the 6800 computer bus. Of the 4 available words the first word is the output of counter 1574 represented by signal 1578, the second word is signal 1579. A third word is the various status signals represented by 1557. The fourth word is represented by 1556 and provides error information.

The Q output from the flip-flop 1583 is set by the error signal 1556 to indicate that an error has occurred in the operation of the tape unit 1516. The Q output from the flip-flop 1583 remains set in an error condition until it is cleared by the clear error signal 1517 from the AND gate 1584. The status signal 1557, the rate error signal 1541 and the error signal 1556 are provided through the multiplexer 1557 and a buffer 1581 to the 6800 microprocessor by means of the D0—D7 data lines 1580.

The command strobe signal 1528 is provided as one input to the AND gate 1584. The master reset signal 1519, which is provided from the AND gate 1587, is also provided as an input to the AND gate 1584. The clear error signal 1517 goes low when either the master reset 1519 or the command strobe 1528 goes low. A low condition on the clear error signal 1517 is used to clear the error condition of the flip-flop 1583 and is also used to clear any error set in the interface 1514 illustrated in Figure 45.

The on-line signal 1552 is provided to the one shot 1591. The $\overline{Q}$ output 1595 from the one shot 1591 is provided as a first input to the AND gate 1599. The tape busy signal 1553 is provided to the one shot 1592. The $\overline{Q}$ output from the one shot 1592 is provided as a second input to AND gate 1599 and is also provided as the formatter busy signal 1518 to the control 1512. The rewinding signal 1554 is provided to the one shot 1593. The $\overline{Q}$ output 1596 from the one shot 1593 is provided as a third input to the AND gate 1599. The standby signal 1531 is provided to the one shot 1594. The $\overline{Q}$ output 1597 from the one shot 1594 is provided as a fourth input to the AND gate 1599.

The output signal 1601 from the AND gate 1599 is provided to the set input of the flip-flop 1602 and 1603. The D inputs of the flip-flop 1602 and 1603 are grounded. The interrupt clock signal 1572 is provided to the clock input of the flip-flop 1602. The select read signal 1571 enables the buffer 1581 and clears the interrupt flip-flop 1603. The master reset signal 1519 is provided as a reset signal to the flip-flop 1602. The clear error signal 1517, which is provided from the AND gate 1584, is provided as a reset signal to the flip-flop 1603. The Q output from the flip-flop 1602 is provided as one input to the NAND gate 1605. The Q output from the flip-flop 1603 is provided as the interrupt bit signal 1605 to the multiplexer 1577 and is provided to the 6800 microprocessor by means of the multiplexer 1577 and the buffer 1581.

The twelfth strobe signal from the decoder 1566 is provided to the set input of the interrupt enable flip-flop 1607. The D input of the flip-flop 1607 is tied to ground while the clock input of the flip-flop 1607 is tied to the thirteenth strobe signal from the decoder 1566. The master reset signal 1519 is provided as a reset signal to the flip-flop 1607. The $\overline{Q}$ output from the flip-flop 1607 is provided as a second input to the NAND gate 1605. The output from the NAND gate 1605 is tied to the interrupt request (IRQ) line of the 6800 microprocessor.

The four status signals, on line 1552, tape busy 1553, rewinding 1554 and standby 1531, are capable of initiating an interrupt request to the 6800 microprocessor. The interrupt request is provided to the 6800 microprocessor by means of the output from the NAND gate 1605. Any of the status signals can trigger the one shot associated with the status signal to generate a pulse. This pulse is provided through AND gate 1599 to the set input of the flip-flop 1602 and 1603. Signals indicating that an interrupt has been requested are provided from the flip-flop 1602 to the 6800 microprocessor through the NAND gate 1605 and from the flip-flop 1603 through the multiplexer 1577.

The conditions for generating an interrupt are as follows:

1. The on-line status signal 1552 will become low and generate an interrupt when the tape unit is manually placed on line or when a device enable command is received from the 6800 microprocessor.

2. The tape busy signal 1553 goes high at the completion of each command generating an interrupt indicating that the tape unit is in a condition to accept the next command.

3. The rewinding signal 1554 goes high indicating a completion of a rewind sequence.

4. The standby signal line 1531 goes high approximately 1.5 seconds after a command to power up the tape unit has been issued, indicating that the power-up sequence is complete.

The reset signal from the 6800 microprocessor is provided as a first input to the AND gate 1587. The command reset signal 1529 is provided as a second input signal to the AND gate 1587. The power-on signal 1611 is provided as a third input to the AND gate 1587. The power-on signal 1611 is provided from the power-on detector 1612 and provides a reset signal when power is applied to the logic. The output signal 1519 from the AND gate 1587 is the master reset signal 1519.

Commercially available components which can be utilized in the circuits illustrated in Figure 46 are as follows:

| Decoders 1562 and 1566 | 74LS138, National Semiconductor |
| Counters 1574 and 1575 | 74LS193 (4 required) National Semiconductor |
| Multiplexer 1578 | 74LS253 (4 required) National Semiconductor |
| Buffer 1581 | 74LS365 (2 required) National Semiconductor |
| Flip-flop 1583, 1602, 1603 and 1607 | 74LS74, National Semiconductor |
| AND gate 1584 | 74LS08, National Semiconductor |
| One shot 1591—1594 | 74L123, National Semiconductor |
| AND gate 1599, 1587 | 74LS20, National Semiconductor |
| NAND gate 1605 | 74LS38, National Semiconductor |

Control 1512, illustrated in Figure 45, is more fully illustrated in Figure 47a and b. Referring now to Figure 47a, the D0—D7 data lines from the 6800 microprocessor are provided to the data input of the command registers 1614 and 1615. The fourth strobe output from the decoder 1566, illustrated in Figure 46, is provided to the clock input of the command register 1614. The fifth strobe output from the decoder 1566 is provided to the clock input of the command register 1615. The output signals 1617 and 1618 from the command registers 1614 and 1615 are tied to the multiplexer 1619, the NAND gate 1621, the flip-flop 1622, the one-shot 1623, the NAND gate 1623 and the NAND gate 1625. Signal 1617 is representative of eight output lines from the command register 1614. In like manner signal 1618 is representative of eight output lines from the command register 1615. Of the sixteen output lines from the command register 1614 and the command register 1615, eight output lines are supplied to the multiplexer 1619, five output lines are supplied to the NAND gate 1621, one output line is supplied to the flip-flop 1622, one output line is supplied to the one-shot 1623, and one output line is supplied to both NAND gates 1624 and 1625. The clear register signal 1627, which is output from the AND gate 1629, is provided to the reset input of both the command register 1615 and the command register 1614.

The write data signal 1544, which is representative of eight data lines, is supplied as a second set of input signals to the multiplexer 1619. The command select plus signal 1631, which is provided from the flip-flop 1632 illustrated in Figure 47b, is provided to the select input of the multiplexer 1619. The command select plus signal is utilized to select either the command, which has been provided by means of the D0—D7 data lines from the 6800 microprocessor, or the data from the 2900 microprocessor, which is being provided by data lines 1544, to be provided to the formatter 1515. The eight output signal lines from the multiplexer 1619, which are represented as signal lines 1634, are provided as inputs to the NAND gate 1636. The NAND gate 1636 is representative of eight NAND gates. The outputs from the plurality of NAND gates, which are represented by NAND gate 1636, are provided as eight of the write data lines to the formatter 1515. The remaining five of the write data lines 1533 are provided from the NAND gate 1621 which is representative of five NAND gates.

The command select minus signal, which is provided from the flip-flop 1632 illustrated in Figure 47b, is provided as a first input to the AND gate 1638. The write signal 1525, which is established by the flip-flop 1641 illustrated in Figure 47a, is provided as a second input to the AND gate 1638. The output from the AND gate 1638 is provided through inverter 1639 to the NAND gates represented by NAND gates 1636 and NAND gate 1621. The output signal from the inverter 1639 is utilized to enable the NAND gates represented by NAND gates 1636 and 1621.

The output signal 1642 from the flip-flop 1622 is provided to both inputs of the NAND gate 1643. The output from the NAND gate 1643 is the device enable signal 1534. The output signal 1644 from the one shot 1623 is provided to both inputs of the NAND gate 1645. The output from the NAND gate 1645 is the off-line signal 1535.

The command strobe signal 1528, which is provided as an output from the one shot 1646 illustrated in Figure 47b, is provided to both of the inputs of the NAND gate 1648 and as a second input to the NAND gate 1624 and the NAND gate 1625. The output from the NAND gate 1648 is the control command signal 1536. The output from the NAND gate 1624 is provided to the set input of the flip-flop 1651. The output from the AND gate 1652 is provided to the reset input of the flip-flop 1651. The formatter busy signal 1518 and the master reset signal 1519 are provided as inputs to the AND gate 1652. The output from the flip-flop 1651 is the read signal 1524.

The formatter write clock signal 1549 is provided through the inverter 1654 to the delay 1656. The output from the inverter 1654 is the write clock signal 1526. The output from the delay 1656 is provided as a first input to the NAND gate 1655. The output from the NAND gate 1625 is provided to the set input of the flip-flop 1541. The last-word signal 1521 is provided through inverter 1657 to the clock input of the flip-flop 1641. The master reset signal 1519 is provided to the reset input of the flip-flop 1641. The D input of the flip-flop 1641 is tied to ground. The Q output from the flip-flop 1641 is provided as a second input to the NAND gate 1655. The output from the NAND gate 1655 is the data available signal 1538. The $\overline{Q}$ output from the flip-flop 1641 is the write signal 1525.

Referring now to Figure 47b, the fourth strobe signal from the decoder 1566, illustrated in Figure 46, is provided as a first input to the AND gate 1661. The fifth strobe output from the decoder 1566 is provided as a second input to the AND gate 1661. The output signal 1662, from the AND gate 1661, is provided as an input to the one shot 1647 and is provided to the set input of the flip-flop 1632.

The output from the one shot 1647 is the command strobe signal 1528. The output from the one shot 1657 is also provided to the one shot 1664. The output from the one shot 1664 is provided to the one shot 1665. The output from the one shot 1665 is provided as one input to the NAND gate 1667. The load point signal 1551 is provided as a second input to the NAND gate 1667. The load point signal 1551 is also provided as input to the one shot 1668. The output from the one shot 1668 is provided as a first input to the AND gate 1669. The output from the NAND gate 1667 is provided as a second input to the AND gate 1669. The output from the AND gate 1669 is provided as a first input to the AND gate 1629. The master reset signal 1519 is provided as a second input to the AND gate 1629. The output signal from the AND gate 1629 is the clear register signal 1627. Signal 1627 is provided to the command register 1614 and the command register 1615 as well as to the reset input of the flip-flop 1632. The Q output from the flip-flop 1632 is the command select plus signal 1631 which is supplied to the multiplexer 1619. The Q̄ output from the flip-flop 1632 is the command select minus signal which is provided as an input to the AND gate 1638.

The tenth strobe signal from the decoder 1566, illustrated in Figure 46, is supplied to the set input of the flip-flop 1671. The eleventh strobe signal from the decoder 1566 is provided to the clock input of the flip-flop 1671 and is provided as an input to the timer 1672. The master reset signal 1519 is provided to the reset input of the flip-flop 1671. The D input of the flip-flop 1671 is tied to ground. The Q output from the flip-flop 1671 is provided as a first input to the NOR gate 1673 and to both inputs of the NAND gate 1675. The output from the timer 1672 is provided as a second input to the NOR gate 1673. The timer 1672 is utilized essentially to provide a delay while the tape unit 1566 is being powered up. The voltage supply 1676 is tied through resistor 1678 to the output 1539 from the NAND gate 1675. The output from the NAND gate 1675 forms the standby power signal 1539. The output from the NOR gate 1673 forms the standby signal 1531 which indicates that the power-up sequence of the tape unit 1516 has been completed.

Referring now to Figures 45, 46, 47a and 47b, when a write command is issued from the 6800 microprocessor, the write flip-flop 1641 is set. The contents of the command registers 1614 and 1615 are sent to the formatter 1515. The formatter will bring the tape unit 1516 up to speed, write a preamble to the tape unit 1516 and, at the appropriate time, the formatter 1515 will generate the formatter write clock signal 1549. This signal is delayed slightly by delay means 1656 and is NANDED with the output from the write flip-flop 1641 to be provided to the formatter as the data available signal 1538. The data available signal 1538 causes the formatter to accept the data characters that are on the write data lines 1533.

The write clock signal 1526, which is derived from the formatter write clock signal 1549, decrements the character counters 1574 and 1575 illustrated in Figure 46. The write process continues until the character counter provides the last-word output signal 1521. The last-word output signal 1521 clocks the write flip-flop 1641. Since the write flip-flop 1641 is reset before the delayed formatter write clock signal 1549 arrives, there is no signal applied to the data available line 1538. Failure to receive the data available signal 1538 within a prescribed time following the formatter write clock signal 1549 is interpreted by the formatter as completion of the write operation.

When a read command is issued, the read flip-flop 1651 is set. The read data 1546 and the read clock 1547 are supplied directly from the formatter 1515 to the interface 1514. The read clock signal 1543 from the interface 1514 increments the counters 1574 and 1575 illustrated in Figure 46. The end of a data block is detected in the formatter 1515 and is signalled to the control 1512 by the formatter busy signal 1518 going high (false). At the conclusion of the read operation, the read flip-flop 1651 is reset by the formatter busy signal 1518 going high (false).

Commercially available components which can be utilized in the circuit illustrated in Figures 47a and 47b are as follows:

| | |
|---|---|
| Command register 1614 and 1615 | 74LS174, National Semiconductor |
| Multiplexer 1619 | 74LS257 (2 required) National Semiconductor |
| NAND gates 1636, 1621, 1643, 1645, 1648, 1655 and 1675 | 74LS38, National Semiconductor |
| AND gates 1629, 1638, 1652, 1661 and 1669 | 74LS08, National Semiconductor |
| Flip-flop 1622, 1651, 1641, 1632 and 1671 | 74LS74, National Semiconductor |
| One shot 1623, 1647, 1664, 1665 and 1668 | 74L123, National Semiconductor |
| NAND gates 1624, 1625 and 1667 | 74LS10, National Semiconductor |
| Inverters 1654 and 1657 | 74LS04, National Semiconductor |
| Delay 1656 | 74LS14, National Semiconductor |
| Resistor 1678 | 10 K ohms, RN55D, Dale |
| Timer 1672 | SE556, Signetics |
| NOR gate 1673 | 74LS02, National Semiconductor |

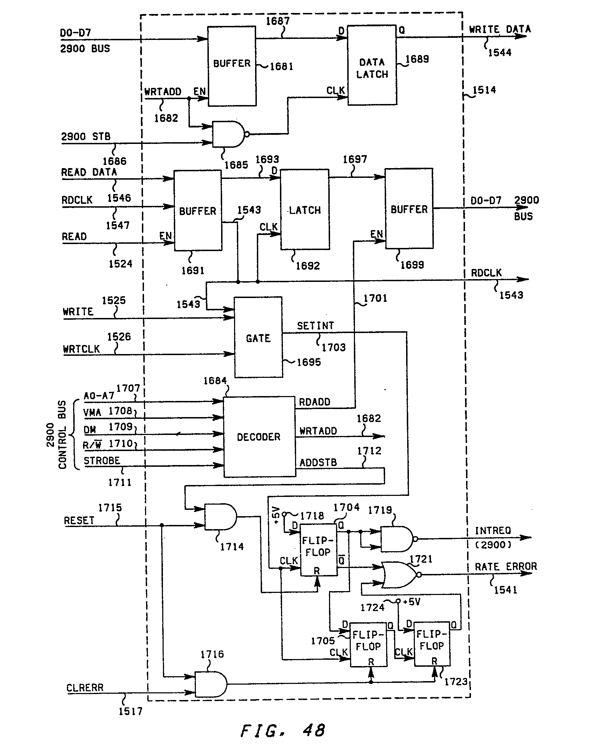

The interface 1514, illustrated in Figure 45, is more fully illustrated in Figure 48. The D0—D7 data lines from the 2900 microprocessor are provided to the buffer 1681. The buffer 1681 is also provided with the write address signal 1682 which is provided from the decoder 1684. The write address signal 1682 is provided as an enabling pulse to the buffer 1681 and is also provided as a first input to the NAND gate 1685. The NAND gate 1685 is also provided with a strobe signal 1686 from the 2900 microprocessor. The buffered data from the 2900 microprocessor is provided to the data latch 1689 by means of a plurality of data lines of which data line 1687 is representative. The output from the NAND gate 1685 is provided as a clock input to the data latch 1689. The 8 outputs from the data latch 1689 are tied to the control 1512, illustrated in Figure 45, and data is written from the 2900 microprocessor to the tape unit over the write data lines 1544 and 1533.

The read data line 1546, the read clock 1547 and the read signal 1524 are all supplied to the buffer 1691. The read data line 1546 is representative of 8 data lines. The read signal 1524 is provided as an enabling signal to the buffer 1691. Buffered data is provided from the buffer 1691 to the latch 1692 by means of the output data line 1693 from the buffer 1691. Data line 1693 is representative of 8 data lines. The read clock signal 1543 is provided to the clock input of the data latch 1692 and is also provided as an input to the gate 1695. The read clock signal 1543 is also provided to the control 1511 and the control 1512. The 8 data lines from the latch 1692, of which data line 1697 is representative, are provided to the buffer 1699. The buffer 1699 is provided with the read address signal 1701 from the decoder 1684 as an enabling signal. The output from the buffer 1699 is tied to the D0—D7 data lines from the 2900 microprocessor. Data is read from the tape unit 1516 to the 2900 microprocessor by means of the read data line 1546 which is supplied through the buffer 1691, the latch 1692 and the buffer 1699 to the 2900 microprocessor by means of the D0—D7 data lines of the 2900 microprocessor.

The gate 1695 is provided with the write signal 1525, the write clock siganl 1526 and the read clock signal 1543. The set interrupt output 1703 from the gate 1695 may be generated in response to any of the input signals to the gate 1695. The set interrupt output 1703 is provided as a clock signal to the flip-flop 1704 and the flip-flop 1705.

The A0—A7 address lines, which are represented as address line 1707, are provided to the decoder 1684 from the 2900 microprocessor. In like manner, the valid memory address (VMA) signal 1708, the DM signal 1709, the read/write (R/W̄) signal 1710 and the strobe signal 1711 from the control bus of the 2900 microprocessor are provided to the decoder 1684. In response to the address from the 2900 microprocessor, the decoder 1684 provides the read address signal 1701, the write address signal 1682 and the address strobe 1712 as output signals. The read address signal 1701 and the write address signal 1682 are utilized as previously described. The address strobe signal 1712 is provided as one input to the AND gate 1714.

The reset signal 1715 from the 2900 microprocessor is supplied as a second input to the AND gate 1714 and as a first input to the AND gate 1716. The output from the AND gate 1714 is supplied to the reset input of the flip-flop 1704. The D input to the flip-flop 1704 is tied to the +5 volt supply 1718. The Q output from the flip-flop 1704 is tied to both inputs of the NAND gate 1719 and is also supplied to the D input of the flip-flop 1705. The output from the NAND gate 1719 is an interrupt request signal to the 2900 microprocessor. (The 2900 microprocessor does not respond to the interrupt request as an interrupt but periodically polls the line).

The clear error signal 1517 is provided as the second input to the AND gate 1716. The output from the AND gate 1716 is provided to the reset inputs of the flip-flop 1705 and the flip-flop 1723. The Q output from the flip-flop 1705 is provided to the clock input of the flip-flop 1723. The D input of the flip-flop 1723 is tied to the +5 volt supply 1724. The Q output from the flip-flop 1723 is provided as a first input to the NOR gate 1721. The $\overline{Q}$ output from the flip-flop 1704 is provided as a second input to the NOR gate 1721. The output from the NOR gate 1721 is the rate error signal 1541.

The logic of the interface 1514, illustrated in Figure 48, detects that a write operation is being initialized by the write signal 1525 going low. The write signal 1525 is utilized to generate the set interrupt signal 1703.

The set interrupt signal 1703 clocks the interrupt request flip-flop 1704 and the rate error flip-flop 1705. Since the 2900 microprocessor has been previously initialized for a write operation by the 6800 microprocessor, the 2900 microprocessor responds to the interrupt request, which is generated in response to the set interrupt 1703, by placing a tape data character on the data bus and generating the proper address and control signals. The data character is buffered by buffer 1681 and is latched into the data latch 1689. The latched character data is provided to the formatter 1515 through the control 1512. The logic of the interface 1514 will remain in this condition until the first write clock signal 1526 occurs. There is a delay of approximately 17 milliseconds while the tape unit 1516 brings the tape up to speed and writes the 41 character preamble before the write clock signal 1526 occurs. The write clock signal 1526 propagates through the gate 1695 and the set interrupt signal 1703 is again generated. The set interrupt signal 1703 again clocks the interrupt request flip-flop 1704 and the rate error flip-flop 1705. This results in the setting of the interrupt request flip-flop 1704 which indicates that the previous data character has been accepted by the formatter 1515 and another data character is needed. After the initial delay, the write clock signal 1526 will occur at approximately 25 microsecond intervals.

The address strobe 1712, which is generated by decoder 1684 for either a read or write operation of the 2900 microprocessor, is applied as a first input to gate 1714. The output of gate 1714 resets the interrupt request flip-flop 1704 so that the Q output of flip-flop 1704 is low prior to the next set interrupt clock 1703 with the result that the flip-flop 1705 is never set. Should the 2900 microprocessor fail to provide data to the interface 1514 prior to the next write clock 1526 or read clock 1546, the Q output of flip-flop 1704 will be high and flip-flop 1705 will be set. Setting of flip-flop 1705 will cause flip-flop 1723 to be set. While flip-flop 1705 may be cleared by subsequent data transfers, flip-flop 1723 will remain set until cleared by clear error 1517 or reset signals.

A tape read operation is detected by the read signal 1524 going high and enabling the read data bus buffers 1691. The read data signal 1546 and read clock signal 1547 are passed through the buffer 1691 and latched into the data latch 1692. The read clock signal 1547 is utilized to clock the data into the latch 1692, to increment the character counter composed of counters 1574 and 1575 illustrated in Figure 46, and to generate a set interrupt signal 1703 for the read operation. The set interrupt signal 1703 will again clock both the interrupt request flip-flop 1704 and the rate error flip-flop 1705.

In response to the setting of the interrupt request flip-flop 1704, the 2900 microprocessor will activate address and control signals to permit the read address signal 1701 to be generated by the decoder 1684. The read address signal 1701 enables the buffer 1699 to place the character from the read data line 1546 on the 2900 microprocessor data bus. After a short delay, the 2900 microprocessor will issue the strobe pulse 1711 indicating that the data character has been accepted. The strobe pulse 1711 causes the decoder 1684 to generate address strobe 1712 which clears the interrupt request flip-flop 1704.

Additional read clock pulses 1547 will occur at an average rate of 25 microseconds until the read operation has been completed. The character counters 1574 and 1575, which are illustrated in Figure 46, may be read by the 6800 microprocessor to determine the number of characters read from tape.

The data transfer between the 2900 microprocessor and the formatter 1515 is an asynchronous process with both devices running at variable rates. The number of characters to be transferred in a data block can be as high as 65,536. The transfer must be perfect or it must be definitely known that at least one error has occurred.

The rate error logic, illustrated in Figure 48, verifies that each character read from the tape was accepted by the 2900 microprocessor within the allowable time frame and that a character was made available to the formatter 1515 for writing onto the tape unit 1516 within the allowable time. Failure of either of these conditions will result in a setting of the rate error flip-flop 1705.

The rate error detection logic requires three flip-flops. The set interrupt signal 1703 clocks the interrupt request flip-flop 1704 and the rate error flip-flop 1705. Since the interrupt request flip-flop 1704 is initially in a reset state, the rate error flip-flop 1705 will remain in the reset state. If, for any reason, the strobe signal from the 2900 microprocessor does not occur prior to the next set interrupt signal, the rate error flip-flop 1705 will be set. The rate error flip-flop 1705 will clock the output flip-flop 1723 which remains set until a reset signal 1715 or a clear error signal 1517 is received. It is possible that the last character was not accepted by the 2900 microprocessor. Therefore, the $\overline{Q}$ output from the interrupt request flip-flop 1704 is ORed with the Q output from the flip-flop 1723 to produce the rate error signal 1541 that is sent to the multiplexer 1577, illustrated in Figure 46.

If an error occurs in the transfer of data from the 2900 microprocessor to the tape unit 1516 or from the tape unit 1516 to the 2900 microprocessor then the 6800 microprocessor commands the data to be retransmitted to thereby correct any error which has occurred in the previous data transfer.

Commercially available components which can be utilized in the circuit illustrated in Figure 48 are as follows:

| | |
|---|---|
| Buffer 1681, 1691 and 1699 | 74LS366 (2 required) National Semiconductor |
| Data latch 1689 and 1692 | 74LS174, National Semiconductor |
| AND gates 1714 and 1716 | 74LS08, National Semiconductor |
| Flip-flops 1704, 1705 and 1723 | 74LS74, National Semiconductor |
| NAND gate 1719 | 74LS38, National Semiconductor |
| NOR gate 1721 | 74LS00, National Semiconductor |

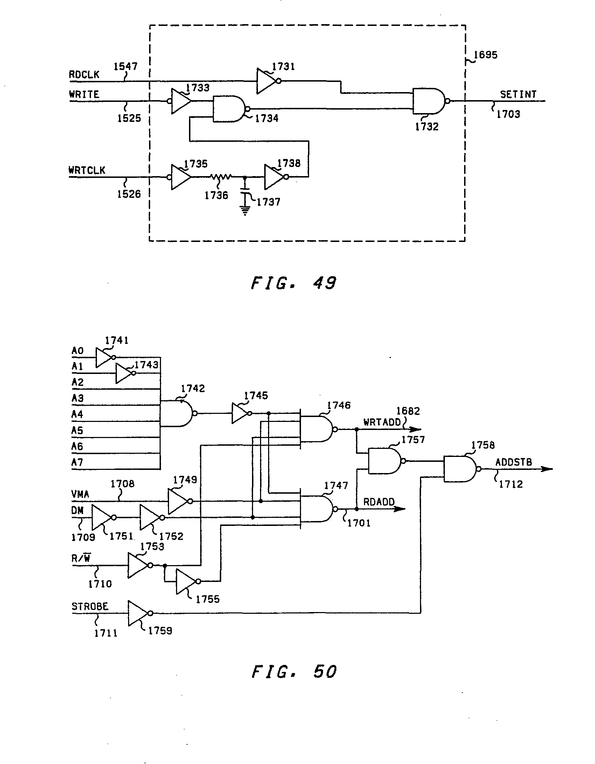

The gate 1695 illustrated in Figure 48 is more fully illustrated in Figure 49. The read clock signal 1543 is provided through the inverter 1731 as a first input to the NAND gate 1732. The write signal 1525 is provided through the inverter 1733 as a first input to the NAND gate 1734. The write clock signal 1526 is also provided through the inverter 1735, the resistor-capacitor network made up of resistor 1736 and capacitor 1737, and the inverter 1738 as a second input to the NAND gate 1734. The output from the NAND gate 1734 is provided as a second input to the NAND gate 1732. The output from the NAND gate 1732 is the set interrupt signal 1703 illustrated in Figure 48.

Commercially available components which can be utilized in the circuit illustrated in Figure 49 are as follows:

| | |
|---|---|
| Inverters 1731, 1733, 1735 and 1738 | 74LS14, National Semiconductor |
| Resistor 1736 | 39 ohms, RN55D, Dale |
| Capacitor 1737 | 0.005 mfd., Type CKR05, Sprague |
| NAND gates 1734 and 1732 | 74LS00, National Semiconductor |

The decoder 1684, illustrated in Figure 48, is more fully illustrated in Figure 50. The A0 address bit from the 2900 microprocessor is supplied through the inverter 1741 as a first input to the NAND gate 1742. The A1 address line from the 2900 microprocessor is supplied through the inverter 1743 as a second input to the NAND gate 1742. The A2—A7 address lines from the 2900 microprocessor are supplied directly as third through eighth inputs to the NAND gate 1742. The output signal from the NAND gate 1742 is supplied through the inverter 1745 as a first input to the NAND gate 1746 and as a first input to the NAND gate 1747.

The valid memory address (VMA) line 1708 is supplied through the inverter 1749 as a second input to the NAND gate 1746 and as a second input to the NAND gate 1747. The DM signal 1709, from the 2900 microprocessor, is supplied through inverters 1751 and 1752 as a third input to the NAND gate 1747 and as a third input to the NAND gate 1746.

The read/write (R/W̄) signal 1710 is supplied through inverter 1753 as a fourth input to the NAND gate 1746. The read/write (R/W̄) signal 1710 is supplied through inverter 1753 and inverter 1755 as a fourth input to the NAND gate 1747.

The output signal from the NAND gate 1746 is the write address signal 1682 which is illustrated in Figure 48. The write address signal is utilized as is illustrated in Figure 48 and is also supplied as a first input to the NAND gate 1757. The output from the NAND gate 1747 is the read address signal 1701 which is illustrated in Figure 48. The read address signal 1701 is utilized as is illustrated in Figure 48 and is also supplied as a second input to the NAND gate 1757.

The output from the NAND gate 1757 is supplied as a first input to the NAND gate 1758. The strobe signal 1711, from the 2900 microprocessor, is supplied through the inverter 1759 as a second input to the NAND gate 1758. The output from the NAND gate 1758 is the address strobe signal 1712 which is illustrated in Figure 48.

Commercially available components which can be utilized in the circuit illustrated in Figure 50 are as follows:

| | |
|---|---|
| Inverters 1741, 1743, 1745, 1749, 1751, 1752, 1753, 1755 and 1759 | 74LS04, National Semiconductor |
| NAND gate 1742 | 74LS30, National Semiconductor |
| NAND gates 1746 and 1747 | 74LS20, National Semiconductor |
| NAND gates 1757 and 1758 | 74LS00, National Semiconductor |

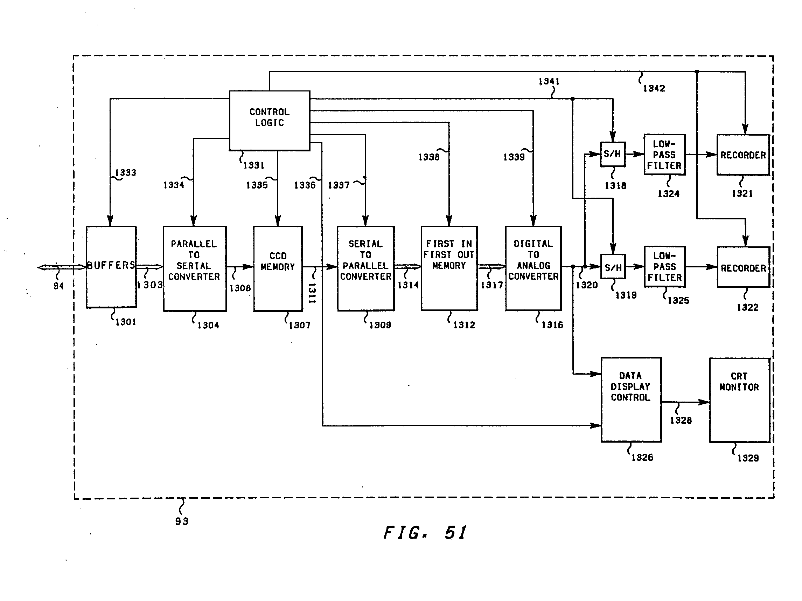

The data display unit 93, illustrated in Figure 2a, is more fully illustrated in Figure 51. Referring now to Figure 51, seismic data is supplied to the buffers 1301 by means of data bus line 94 which is operably connected to the computer data bus line 75 illustrated in Figure 2a. The seismic data, which has been transmitted from the RTU to the CRS illustrated in Figure 2a, is supplied from computer means 74 to the data display unit 93 in parallel form. The seismic data is supplied from the buffers 1301 to the parallel-to-serial (P/S) converter 1304 by means of data line 1303. The P/S converter 1304 converts the seismic data to serial form and supplies the seismic data to the charge coupled device (CCD) memory 1307 by means of signal line 1308.

When it is desired to display the seismic data, the seismic data stored in the CCD memory 1307 is supplied to the serial-to-parallel (S/P) converter 1309 by means of signal line 1311. The seismic data from the CCD memory, which is in a serial format, is converted to a parallel format by the S/P 1309 and is supplied to the first-in-first-out (FIFO) memory 1312 by means of signal line 1314. The FIFO memory 1312 is provided to compensate for speed variations between the recirculating speed of the CCD memory 1307 and the recorder speed of the recorders 1321 and 1322. The FIFO memory 1312 is made up of two buffers. While one of the buffers is being read and its data displayed, the other buffer is being loaded with data from the CCD memory 1307.

The seismic data is supplied from the FIFO memory to the digital-to-analog (D/A) converter 1316 by means of signal line 1317. The seismic data is converted to analog form by the D/A converter 1316 and is supplied to a plurality of sample-and-hold (S/H) circuits of which S/H circuits 1318 and 1319 are representative. In the preferred embodiment of the present invention, there may be as many as 72 S/H circuits to which data is supplied from the digital-to-analog (D/A) converter 1316. Only two S/H circuits 1318 and 1319 are illustrated both for the sake of convenience and because the principals of the system can be illustrated using only two S/H circuits. The number of S/H circuits to which data is supplied from the D/A converter 1316 is determined by the number of data channels that are being monitored by the RTUs employed in the seismic exploration system of the present invention. A data channel corresponds to a geophone string monitored by a particular RTU. In the present invention, four geophone strings can be monitored by each RTU and a plurality of RTUs may be utilized to monitor as many as 72 channels.

The seismic data is supplied from the S/H circuits 1318 and 1319 through the low-pass filters 1324 and 1325 to the recorders 1321 and 1322 respectively. The low-pass filters 1324 and 1325 are utilized to suppress the sampling frequency of the S/H circuits 1318 and 1319 to provide a smooth response. The recorders 1321 and 1322 are preferably oscillographs which provide a written trace of the data supplied from the S/H circuits 1318 and 1319.

Data is also supplied from the D/A converter 1316 to the data display control 1326. The seismic data is formatted by the data display control 1326 so as to provide an acceptable input signal 1328 to the CRT monitor 1329.

The data display unit 93 is controlled by means of the control logic 1331. The control logic 1331 provides a plurality of control and timing signals which control the operation of the data display unit 93 as illustrated in Figure 51. Control signal 1333 is provided to the buffers 1301 from the control logic 1331. In like manner control signal 1334 is provided to the parallel-to-serial converter 1304; control signal 1335 is provided to the CCD memory 1307; control signal 1336 is provided to the data display control 1326; control signal 1337 is provided to the S/P converter 1309; control signal 1338 is provided to the FIFO memory 1312; control signal 1339 is provided to the D/A converter 1316; control signal 1341 is provided to the S/H circuits 1318 and 1319; and control signal 1342 is provided to the recorders 1321 and 1322.

When it is desired to display data which has been obtained from the RTUs, the seismic data obtained from the RTUs is provided, by channel, to the CCD memory 1307. All of the channel 1 data is supplied to the CCD memory and is stored; then all of the channel 2 data is supplied to the CCD memory and stored. This process is continued until all of the data from the last channel which was utilized in a particular shot sequence has been stored in the CCD memory 1307.

The data is read from the CCD memory 1307 by samples. That is, sample 1 of channel 1 is read from the CCD memory 1307 and is supplied to S/H circuit 1318. Then sample 1 of channel 2 is read from the CCD memory 1307 and is supplied to the S/H circuit utilized for channel 2. This is continued until the first sample of the last data channel has been read from the CCD memory 1307 and supplied to the S/H circuit which is utilized for the last data channel. As illustrated in Fig. 51, the last S/H circuit would correspond to S/H circuit 1319. After the first sample of each data channel has been read from the CCD memory 1307, the second sample of each channel is read from the CCD memory in the same manner as previously described for sample 1. This process is continued until all of the samples of all of the data channels have been read from the CCD memory 1307 and recorded by the plurality of recording means of which recorder 1321 and recorder 1322 are representative.

The plurality of S/H circuits, of which S/H circuit 1318 and S/H circuit 1319 are representative, provide a means by which the seismic data can be separated into its respective channels after being stored in the CCD memory 1307.

If it is desired to display data by means of the CRT monitor and not by means of the recorders 1321 and 1322, the recorders 1321 and 1322 are disabled and the seismic data supplied to the data display control 1326. The seismic data is displayed with respect to the particular channel number by the CRT monitor 1329 and this display provides a quick visual indication of the operability of the seismic exploration system embodied in the present invention.

Commercially available components which can be utilized in the circuit illustrated in Figure 51 are as follows:

| | |
|---|---|
| Buffers 1301 | 8T97, Signetics |
| Parallel-to-serial converter 1304 | 74165, National Semiconductor |
| CCD memory 1307 | 2416, Intel |
| Serial-to-parallel converter 1309 | 74LS164, National Semiconductor |
| D/A converter 1316 | DAC 100, Precision Monolithics, Inc. |
| Recorders 1321 and 1322 (Multichannel Oscillograph) | ERC10-C, Southwest Industrial Electronics |
| CRT monitor 1329 | Model 86A122, Infodex |

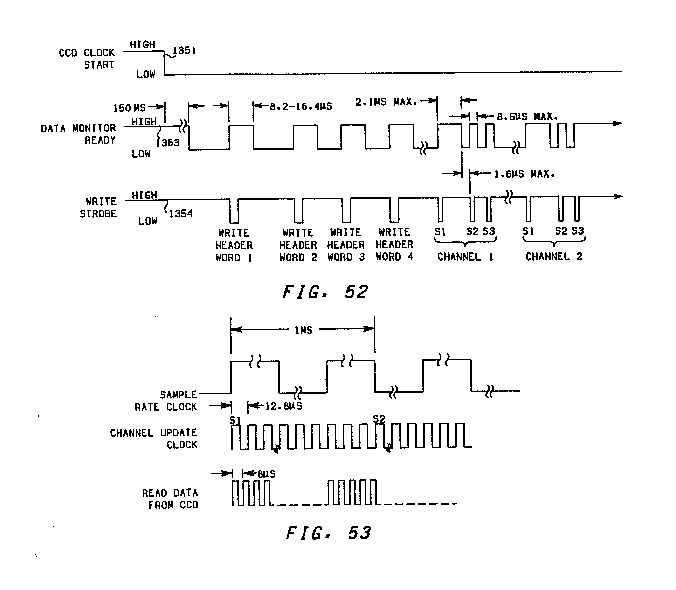

The data display system (DDS) may be more fully understood by referring to the timing diagrams illustrated in Figures 52 and 53. Figure 52 is illustrative of a manner in which data is written to the CCD memory 1307 illustrated in Figure 51. The CCD clock start signal 1351 is supplied from the 6800 microprocessor 51 illustrated in Figure 2a. The CCD clock start signal 1351 enables the CCD memory illustrated in Figure 51. The data monitor ready signal 1353 is supplied from the data display unit 93 to the 2900 microprocessor 74 illustrated in Figure 2a. The data monitor ready signal 1353 is supplied to bus line 94 by means of signal line 1333 illustrated in Figure 51. The write strobe signal 1354 is supplied to the data display unit from the 2900 microprocessor 74 illustrated in Figure 2a. Data is written from the 2900 microprocessor to the CCD memories 1307 in response to the write strobe signal 1354.

The CCD memory 1307 and the data display system is enabled when the CCD clock start signal 1351 goes low. After the CCD clock start signal goes low, a time of 150 milliseconds is allowed for the CCD memory to warm up and then the data monitor ready signal 1353 goes low signifying that data can be written to the CCD memory 1307. The data monitor ready signal 1353 is transmitted to the 2900 microprocessor. In response to the data monitor ready signal 1353 going low, the 2900 microprocessor first writes four header words to registers associated with the CCD memory 1307. The signal 1354 goes low when a header word is written to the CCD memory 1307. Each time the write strobe signal goes low the data monitor ready signal goes high for the period of time from 8.2 microseconds to 16.4 microseconds. After this time has elapsed, the data monitor ready signal returns to a low condition signifying that the second header word can be written. This process continues until four header words have been written.

After the four header words have been written, seismic data can be written to the CCD memory 1307. Figure 52 illustrates the writing of two channels of data each having three samples to the CCD memory 1307. After the four header words have been written to the CCD memory 1307, an indefinite time may elapse before data is written to the CCD memory 1307. When sample 1 of channel 1 is written to CCD memory 1307, the write strobe signal 1304 will go low. At the same time the data monitor ready signal will go high for a maximum time period of 2.1 milliseconds to enable the CCD memory 1307 to locate the correct sector to which sample 1 of channel 1 should be written. After the correct sector has been located, the data monitor ready signal will go low and, within 1.6 microseconds of the time from which the data monitor ready signal goes low, sample 2 of channel 1 must be written to the CCD memory 1307. After sample 2 of channel 1 is written to the CCD memory 1307, the data monitor ready signal will go high for a maximum time period of 8.5 microseconds and then will again return to a low condition at which time sample 3 of channel 1 must be written to the CCD memory 1307 within the 1.6 microseconds. This process continues until all samples of channel 1 have been written to the CCD memory 1307.

After all samples of channel 1 have been written to the CCD memory 1307, all samples of channel 2 are written to the CCD memory 1307 in the same manner as previously described for channel 1. This process is continued until all of the channels of data have been written to the CCD memory 1307 illustrated in Figure 51.

After all of the channels of data have been written to the CCD memory 1307, the data can then be read out to the recorders 1321 and 1322 and the CRT monitor 1329 illustrated in Figure 51. The manner in which data is read from the CCD memory 1307 is illustrated in Figure 53.

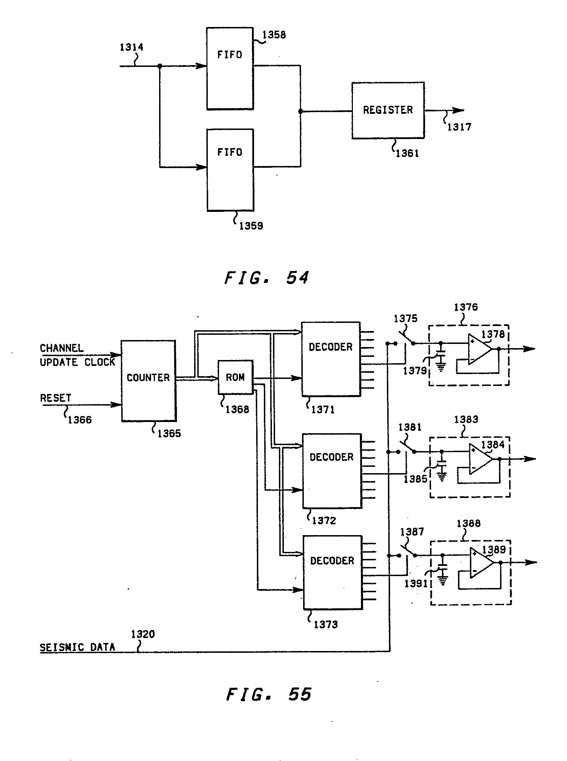

Figure 53 can be more readily understood in connection with Figure 54. As was previously stated, the FIFO memory 1312, illustrated in Figure 51, consists of two FIFO registers. As illustrated in Figure 54, the output signal 1314 from the S/P converter 1309, illustrated in Figure 51, is supplied as an input to both the FIFO register 1358 and the FIFO register 1359. The output from both FIFO registers 1358 and 1359 is provided to the register 1361. The output signal 1317 from the register 1361 is provided to D/A converter 1316 as is illustrated in Figure 51. The FIFO registers are provided to compensate for the difference in the time required to read data from the CCD memory 1307 and the time required for the S/H systems 1318 and 1319 to sample and hold the data signals provided from the D/A converter 1316. As is illustrated in Figure 53, data can be read from the CCD memory 1307 at a rate of 8 microseconds per sample. Thus, 576 microseconds are required to read 72 samples from the CCD memory 1307. As has been previously stated, data is read from the CCD memories as sample 1, channel 1; sample 1, channel 2; sample 1, channel 3; etc. until all sample 1's of all the data channels have been read from the CCD memory 1307. If 72 channels are available, then 72 sample 1s are

available and all sample 1s are read from the CCD memory before sample 2 of channel 1 is read from the CCD memory 1307.

After all sample 1s from all of the data channels have been read from the CCD memory 1307, approximately 160 to 200 microseconds is required to allow the CCD memory to find sample 2 of channel 1. Thus, all of the sample 1s of the data channels can be read from the CCD memory 1307 and the CCD memory 1307 can be prepared to output the sample 2s of the data channels within the one millisecond sample rate that is illustrated as the sample rate clock in Figure 53. All of the sample 1s of the data channels are stored in the FIFO register 1358. Then all of the sample 2s of each of the data channels are stored in the FIFO register 1359. Sample 1 of channel 1 is read from the CCD memory 1307 to the FIFO register 1358 when the sample rate clock goes high. All of the sample 1s of the data channels must be read from the CCD memory 1307 to the FIFO memory 1358 before the sample rate clock completes its cycle.

After the seismic data, represented by the first and second samples, has been stored in FIFO registers 1358 and 1359 respectively, the seismic data can be read from the FIFO registers 1358 and 1359 to the S/H circuits 1318 and 1319 illustrated in Figure 51. The samples are read from the FIFO registers 1358 and 1359 in response to the channel update clock, which has a period of 12.8 microseconds and is illustrated in Figure 53. Sample 1 would be provided to the S/H circuit 1318 for a period of 12.8 microseconds at the end of which time the S/H circuit 1318 would be set to the hold mode. This procedure would be continued until all of the available sample 1s have been provided to the S/H circuits of which S/H circuits 1318 and 1319 are representative. All of the first samples of the available data channels are read to the S/H circuits within the one millisecond period of the sample rate clock. When the sample rate clock repeats a cycle, all of the sample 2s of the available data channels will be read to the S/H circuits from the FIFO register 1359 while at the same time all of the sample 3s of the available data channels will be read from the CCD memory 1307 to the FIFO buffer 1358. In this manner, data is always available to be supplied to the S/H circuits and the difference between the rate at which data can be supplied to the S/H circuits and the rate at which data can be read from the CCD memory 1307 is compensated for.

Commercially available components which can be utilized in the circuit illustrated in Figure 54 are as follows:

| | |
|---|---|
| FIFO registers 1358 and 1359 | 33512DC, Fairchild Semiconductors |
| Register 1361 | 74LS175, National Semiconductor |

Figure 55 is illustrative of the manner in which the S/H circuits, of which S/H circuits 1318 and 1319 are representative, are addressed. The channel update clock, which is illustrated in Figure 53, is supplied as one input to the counter 1365. The counter 1365 is also supplied with a reset input 1366. In response to the channel update clock and the reset input 1366, the counter 1365 will count up to the number of data channels available and then will start the count again. The output from the counter 1365 is provided to the read only memory (ROM) 1368 and to the decoders 1371—1373. The output control signals from the ROM 1368 are also provided to the decoders 1371—1373.

As has been previously stated, 72 S/H circuits are utilized in the data display system. Only three S/H circuits are illustrated in Figure 55. The S/H circuits are divided up into three PC cards, each card holding 24 S/H circuits. Essentially, for the first 24 channels, the ROM 1368 operates to select the first PC card. For the second 24 channels, the ROM 1368 selects the second PC card and for the third 24 channels, the ROM 1368 selects the third PC card. There are also three decoders 1371—1373 on each PC card. The ROM 1368 also selects which decoder should be enabled. If the three decoders 1371—1373, illustrated in Figure 55, are considered to be on the first PC card, then the ROM 1368 will select decoder 1371 if channel 1 through channel 8 is being read from the CCD memory 1307; will select decoder 1372 if channels 9 through 16 are being read from the CCD memory 1307, and will select decoder 1373 if channels 17 through 24 are being read from the CCD memory 1307.

After the PC card and decoder have been selected by the ROM 1368, the three least significant bits output from the counter 1365 are utilized to select which S/H circuit thereof will be enabled. As is illustrated in Figure 55, each decoder controls eight S/H circuits. If channel 4 was being supplied to the S/H circuits, the decoder 1371 would effect the closing of switch 1375 which in turn would enable channel 4 to be supplied to the S/H circuit 1376. In like manner, the particular S/H circuit for each data channel is thus enabled when that respective data channel is output from the CCD memory 1307. Switch 1375, which is illustrative of the 72 switches utilized in the data display system, will be closed for 12.8 microseconds when channel 4 data is being supplied from the CCD memory 1307 to enable the S/H circuit 1376, which consists of the operational amplifier 1378 and the capacitor 1379, to sample the data provided by the seismic data line 1320. After 12.8 microseconds, the S/H circuit 1376 is set to the hold mode and the data will be supplied to the low-pass filter associated with that particular S/H circuit as is illustrated in Figure 51.

In the same manner as previously described, switch 1381 is closed to supply seismic data to the S/H circuit 1383, which is made up of operational amplifier 1384 and capacitor 1385. Switch 1387 is closed to supply data to the S/H circuit 1388 which is made up of operational amplifier 1389 and capacitor 1391. The 72 switches, of which switches 1375, 1381 and 1387 are representative, are closed only when data from a particular channel with which a respective switch is associated is being supplied from the CCD memory 1307.

Commercially available components which can be utilized in the circuit illustrated in Figure 55 are as follows:

| | |
|---|---|
| Counter 1365 | 74LS193, Motorola Semiconductor |
| ROM 1368 | 82S123, Signetics |
| Decoders 1371, 1372 and 1373 | 74LS138, National Semiconductor |
| Operational amplifiers 1378, 1384 and 1389 | 8043CPE, Intersil |
| Capacitors 1379, 1385 and 1391 | 0.001 $\mu$f, Type 25B, S & El |
| Switches 1375, 1381 and 1387 | DG201, Siliconix |

The control logic 1331 illustrated in Figure 51 is more fully illustrated in Figure 56. The oscillator 1401 is a 10 MHz oscillator in the preferred embodiment of this invention. The output signal 1402 from the oscillator 1401 is supplied as a clock input to the counter 1403, the counter 1404, the holding register 1405 and the frequency divider 1407. The counter 1403 acts as a frqeuency divider to divide the 10 MHz output signal 1402 from the oscillator 1401 down to a 18.125 KHz signal 1411. Signal 1411 corresponds to the clock signal having a period of 12.8 microseconds illustrated in Figure 53.

The frequency divider 1407, which is a plurality of counters, acts to divide the 10 MHz signal 1402 down to a 2 KHz signal 1412. The 2 KHz signal 1412 is supplied from the frequency divider 1407 to the counter 1414. In response to the 2 KHz signal 1412, the counter 1414 provides a plurality of output signals having different periods. Signal 1416 from the counter 1414 has a period of 8 milliseconds; signal 1417 has a period of 4 milliseconds; signal 1418 has a period of 2 milliseconds and signal 1419 has a period of 1 millisecond. Signals 1416—1419 from the counter 1414 are supplied as inputs to the multiplexer 1421. One of the signals 1416—1419 is selected by the multiplexer 1421 to be supplied as the sample rate clock 1423. The sample rate clock 1423 corresponds to the sample rate clock signal illustrated in Figure 53.

Signal 1419, having a period of 1 millisecond, is also supplied to the frequency divider 1425. The frequency divider divides the signal 1419, which has a frequency of 1000 Hz, by 10 to provide an output signal 1426 having a frequency of 100 Hz. Signal 1426 is utilized to provide line markings for recorder 1321 and recorder 1322 illustrated in Figure 51.

The plurality of output signals 1431 from the counter 1404 are supplied as inputs to the ROM 1432. The plurality of outputs 1435 from the ROM 1432 are provided to the holding register 1405. From the holding register 1405, the plurality of outputs 1437 from the ROM 1432 are provided as control signals for the data display system illustrated in Figure 51.

The plurality of output signals 1431 from the counter 1404 are also supplied as inputs to the ROM 1433. The plurality of output signals 1438 from the ROM 1433 are provided as inputs to the data input of the counter 1404. The counter 1404 is also supplied with a signal 1439 which is representative of a command to load the data represented by the signal lines 1438 into the counter 1404. The counter 1404 is also supplied with a clear input 1441 from the ROM 1432.

The ROM 1432 is programmed to provide required output signals in response to the count input from the counter 1404. Each time the counter 1404 reaches a specified count, the ROM 1432 will drive one of the output signals 1435 either high or low as required to control the data display system illustrated in Figure 51. The particular control signals output from the ROM 1432 will be repeated as the counter recycles each time. In this manner, the large number of clock and control signals which are required to control the data display system and particularly the CCD memory 1307, illustrated in Figure 51, can be provided.

The ROM 1433 is provided to allow the counter 1404 to skip portions of the count. This feature is utilized when it is desired to speed up certain operations of the CCD memory 1307. A portion of the count may be skipped simply by programming the ROM 1433 to command the counter 1404, by means of data lines 1438, to skip to a certain count when a specified count is reached by the counter 1404. For instance, the read only memory 1433 could be programmed to cause counter 1404 to skip to a count of 80 when a count of 10 is output from the counter 1404.

Commercially available components which can be utilized in the circuit illustrated in Figure 56 are as follows:

**0 010 660**

| | |
|---|---|
| Oscillator 1401 | 10 MHz oscillator K1091A, Motorola |
| Counter 1404 | 74LS163 (2 required) National Semiconductor |
| Counter 1403 | 74LS161 (2 required) National Semiconductor |
| Read only memories 1432 and 1433 | 82S129, Signetics |
| Holding registers 1405 | 74LS174, National Semiconductor |
| Frequency divider 1407 | 74LS161 (4 required) National Semiconductor |
| Counter 1414 | 74LS161, National Semiconductor |
| Multiplexer 1421 | 74LS153, National Semiconductor |
| Frequency divider 1425 | 9319, Fairchild |

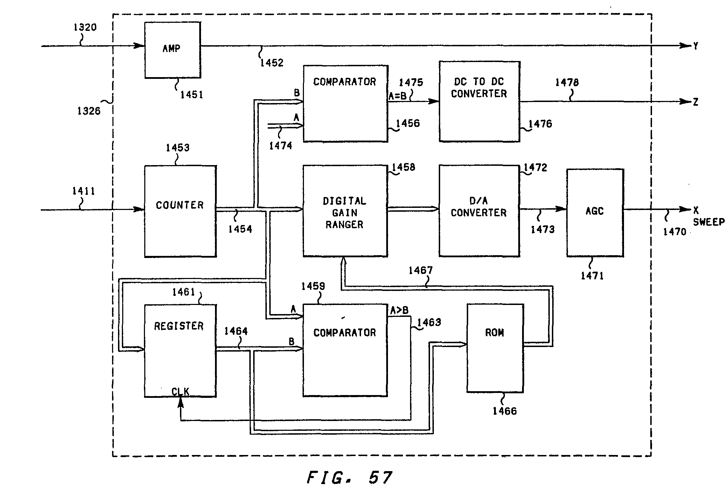

The data display control 1326, illustrated in Figure 51, is more fully illustrated in Figure 57. Signal 1320 from the D/A converter 1316, illustrated in Figure 51, is provided as an input to the amplifier 1451. The amplifier 1451 provides an output signal 1452, representative of the seismic data from RTUs, to the Y input of the CRT monitor 1329, illustrated in Figure 51.

Signal 1411 from the counter 1403, illustrated in Figure 56, is supplied as an input to the counter 1453. Signal 1411 has a period of 12.8 microseconds. In response to the input signal 1411, the counter 1453 provides a plurality of output signals which are represented as signal 1454. The output signals from the counter 1453 are provided as inputs to the comparator 1456, the digital gain ranger 1458, the comparator 1459 and the register 1461. The output 1463 from the comparator 1459 is provided as a clock signal to the register 1461. The plurality of outputs from the register 1461, which are designated as signal lines 1464, are provided as inputs to the comparator 1459 and to the ROM 1466.

As has been previously stated, data is output from the D/A converter 1316, illustrated in Figure 51, as channel 1, sample 1; channel 2, sample 1; channel 3, sample 1; etc. until sample 1 of the last channel has been read from the D/A converter 1316. Signal 1454, illustrated in Figure 57, is representative of the particular channel which is being read from the D/A converter 1316. Thus, the A input to the comparator 1459 will be representative of the channel count. The output from the comparator 1459 is used as the clock signal 1463 for the register 1461. The register 1461 is also supplied with the channel count signal 1454.

As an example of the operation of comparator 1459 and register 1461, consider a seismic exploration system having only three channels. When the D/A converter 1316 provides sample 1 of channel 1 as an output, the channel indicator signal 1454 will be representative of a 1. This 1 is provided to the A input of the comparator 1459. However, the B input of the comparator 1459 will still be at zero because the register has not been clocked to provide the channel count signal 1454 to the comparator 1459. Thus, the A input will be greater than the B input and the clock signal 1463 will enable the register 1461 to transfer the input count represented by the channel count signal 1454 to the B input of the comparator 1459. The A input will be equal to the B input after this transfer occurs.

When sample 1 of channel 2 is output from the D/A converter 1316, the A input to the comparator 1459 will go to 2. The A input will again be greater than the B input and the clock signal 1463 will allow the register 1461 to load the count signal 1454 into the B input of the comparator 1459. When this is done, the A input will again equal the B input. When sample 1 of channel 3 is output from the digital-to-analog converter 1316, the A input of the comparator 1459 will go to 3. Again, the A input will be greater than the B input and the clock signal 1463 will enable the register 1461 to load the channel count signal 1454 into the B input of the comparator 1459. This will again cause the A input to be equal to the B input.

After sample 1 of channel 3 has been read from the digital-to-analog converter 1316, sample 2 of channel 1 will be output from the digital-to-analog converter 1316 and the channel count signal 1454 will return to a count of 1. It is noted that the A input will not again be greater than the B input and the output signal 1464 from the register 1461 will thus be representative of the maximum number of channels that are being supplied from the RTUs. In reponse to signal 1464, the read only memory 1466 provides a plurality of output signals 1467, which are representative of the number of channels available, to the digital gain ranger 1458.

The digital gain ranger 1458 prepares the sweep signal, represented by the channel count signal 1454, for the automatic gain control (AGC) circuit 1471. If the output from the digital gain ranger 1458 is always supplied to the least significant bits inputs of the D/A converter 1472, the output from the D/A converter 1472 will have a dynamic range which is too great for the AGC circuit 1471 because the output level from the D/A converter 1472 would be a function of the number of channels of data being provided to the data display system. The digital gain ranger 1458 serves to overcome this dynamic range problem by controlling the manner in which the channel count signal 1454 is provided to the D/A converter 1472. If only a few channels of data are available, the channel count signal 1454 is supplied to the most significant bit input of the D/A converter 1472 in response to the control signal 1467 from the read only memory 1466. The digital gain ranger 1458 essentially consists of a plurality

66

of gates which are controlled by the output signals 1467 from the read only memory 1466 to enable the channel count signal to be provided to specific inputs of the D/A converter 1472. By using the most significant bit inputs of the D/A converter 1472, a signal having a dynamic range compatible with the input requirements of the AGC circuit 1471 is provided.

It is desirable to completely fill the screen of the CRT regardless of the number of channels of data available. To accomplish this, the voltage swing of the sweep voltage must be the same whether a few channels of data are available or whether 72 channels are available. This is accomplished by using the AGC circuit 1471 to provide a constant voltage swing in response to the output signal 1473 from the D/A converter 1472 in order to provide a constant sweep voltage 1470 to the CRT monitor 1329 illustrated in Figure 51.

The input to the CRT monitor 1329 is utilized to highlight a particular data channel of interest. This is accomplished by providing the channel count signal 1454 to the B input of the comparator 1456. A second input 1474, representative of the desired channel for enhancement, is supplied to the A input of the comparator 1456. In the preferred embodiment of the present invention, the signal 1474 is provided by means of a thumbwheel switch. When the channel count signal 1454 is equal to signal 1474, the output signal 1475 from the comparator 1456 is enabled. Signal 1475 is provided to the DC-to-DC converter 1476 which provides an output signal 1478 to the Z input of the CRT monitor 1329.

Commercially available components which can be utilized in the circuit illustrated in Figure 57 are as follows:

| | |
|---|---|
| Amplifier 1451 | TL084CN, Texas Instruments |
| Counter 1453 | 74LS193, National Semiconductor |
| Comparators 1456 and 1459 | 74LS85, National Semiconductor |
| Register 1461 | 74LS175, National Semiconductor |
| Read only memory 1466 | 82S129, Signetics |
| Digital gain ranger 1458 | 74LS368 (5 required) National Semiconductor |
| D/A converter 1472 | DAC100, Precision Monolithics |
| DC-to-DC converter 1476 | UD5-15D45, Semiconductor Circuits, Inc. |

The AGC circuit 1471 illustrated in Figure 57 is more fully illustrated in Figure 58.

Signal 1473 from the D/A converter 1472, illustrated in Figure 57, is provided to the full-wave rectifier 1481 and is also supplied as one input to the multiplier 1485. The output from the full-wave rectifier 1481 is provided to the integrator 1482. The output signal 1480 from the integrator 1482 is supplied as one input to the divider 1483. The divider 1483 is also supplied with a reference voltage 1484 as an input. The reference voltage 1484 is divided by the output from the integrator 1482 to provide an output signal 1486 from the divider 1483 which is provided as the second input to the multiplier 1485. The output from the multiplier 1485 is signal 1470 which has been previously illustrated and described in Figure 57.

As the signal strength of signal 1473 increases, the signal level of signal 1486 decreases because signal 1473 is essentially being divided into the reference voltage 1484 to provide signal 1486. In like manner, when the signal strength of signal 1473 decreases, the signal strength of signal 1486 increases. In this manner, a substantially constant sweep signal 1470 can be provided to the CRT monitor 1329 illustrated in Figure 51.

An AD 532, manufactured by Analog Devices, can be utilized for the divider 1483 and the multiplier 1485. A circuit which can be utilized for the full-wave rectifier 1481 and the integrator 1482, illustrated in Figure 58, is illustrated in Figure 59.

Referring now to Figure 59, signal 1473 is supplied to the inverting input of operational amplifier 1491. The output of the operational amplifier 1491 is tied to ground through the diode 1492 and the resistor 1493. The noninverting input of the operational amplifier 1491 is also tied to ground through resistor 1493. The output from the operational amplifier 1491 is also tied to the inverting input of the operational amplifier 1495 through diode 1496 and resistor 1497. The noninverting input of the operational amplifier 1495 is tied to ground through resistor 1498. The output from the operational amplifier 1495, which forms signal 1480 as illustrated in Figure 58, is fed back to the inverting input of the operational amplifier 1495 through the parallel combination of resistor 1499 and capacitor 1501. The output signal 1480 from the operational amplifier 1495 is also fed back to the inverting input of operational amplifier 1491 through resistor 1502.

Commercially available components which can be utilized in the circuit illustrated in Figure 59 are as follows. Resistance and capacitance values are also given.

67

## 0 010 660

| | |
|---|---|
| Operational amplifier 1491 and 1495 | TL084CN, Texas Instruments |
| Diodes 1492 and 1496 | IN914, Fairchild |
| Resistors 1473, 1497 and 1498 | 10 K ohms, 1/8W, 1%, RN55D, Dale |
| Resistor 1493 | 6.49 K ohms, 1/8W, 1%, RN55D, Dale |
| Resistor 1502 | 15 K ohms, 1/4W, 1%, RN60D, Dale |
| Resistor 1499 | 22 megohms, 5%, 1/4W, TRW/IRC, Type MEH |
| Capacitor 1501 | 0.1 microfarads, UR2020SX7R, Mepco/Electra |

The CRS countdown circuit 65, illustrated in Figure 2a, is more fully illustrated in Figure 60. The CRS countdown circuit 65 is utilized to provide status and interrupt signals to the 6800 microprocessor which is illustrated as computer means 51 in Figure 2a. The status and interrupt signals provided from the CRS countdown circuit 65 are provided in response to an address and command from the 6800 microprocessor. Essentially, the CRS countdown circuit 65 is utilized to prevent operation of the 6800 microprocessor from being completely halted by a failure of some part of the seismic exploration system illustrated in Figures 2a and 2b. The 6800 microprocessor loads the CRS countdown circuit 65 with the time required for an operation. The CRS countdown circuit 65 provides interrupt and status signals at the end of that time.

Referring now to Figure 60, the address and commands from the 6800 microprocessor which enable the CRS countdown circuit 65, illustrated in Figure 2a, are provided to the decoding circuit 2201. In response to the address and commands from the 6800 microprocessor, the decoding circuit 2201 provides an enabling signal 2213 to the counter 2202, an enabling signal 2214 to the counter 2203, an enabling signal 2211 to the enabling circuit 2204 and an enabling signal 2212 to the output circuit 2205. The counter 2202 is utilized to generate a 1 millisecond clock signal 2215 from the 1 microsecond Ø2 clock signal of the 6800 microprocessor. The 1 millisecond clock signal 2215 from the counter 2202 is provided as a clock signal to the counter 2203.

The data lines from the 6800 microprocessor are utilized to load the time required for an operation into the CRS countdown circuit 65, illustrated in Figure 60. The data lines are supplied to the inverting circuit 2206. The inverting circuit 2206, which is essentially a group of 74LS04 inverters supplied by National Semiconductor, supplies the data lines from the 6800 microprocessor to the counter 2203 by means of signal line 2217. The counter 2203 counts up to the time which has been loaded by means of the data lines from the 6800 microprocessor. When the counter 2203 reaches the specified count, an output signal 2219 is supplied to the output circuit 2205 and the enabling circuit 2204 from the counter 2203. In response to the enabling signal 2211 from the decoding circuit 2201 and the output from the counter 2203, the enabling circuit 2204 in turn enables the output circuit 2205, by means of signal line 2221, to provide the interrupt signal 2207 and the status signal 2208 to the 6800 microprocessor. The interrupt signal 2207 is provided to the 6800 microprocessor by means of the interrupt request (IRQ) line. The status signal 2208 is provided to the 6800 microprocessor by means of the D7 data line.

The enabling circuit 2204 also supplies an enabling signal 2222 to the counter 2202. The output 2220 from the output circuit 2205 is tied to the enabling circuit 2204.

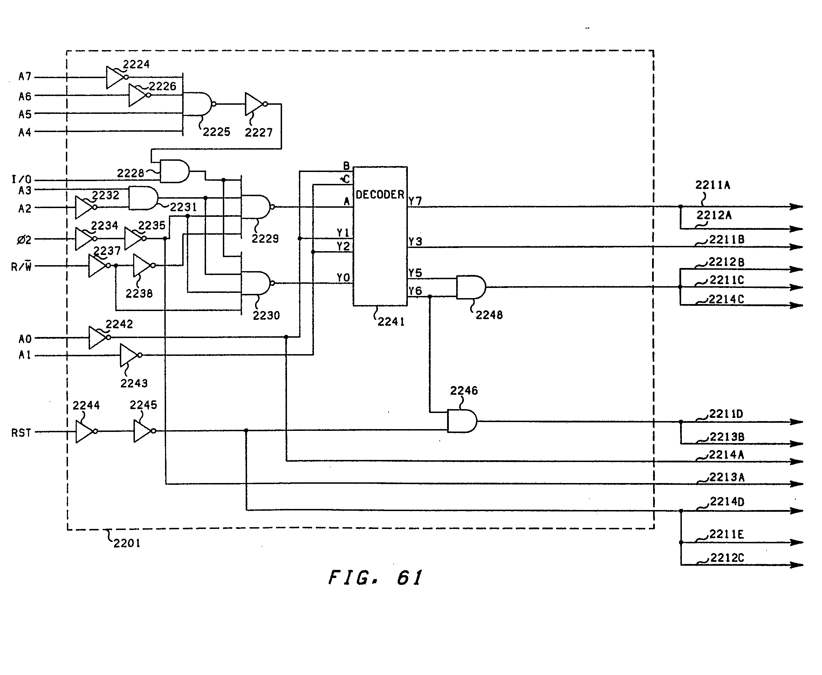

The decoding circuit 2201, illustrated in Figure 60, is more fully illustrated in Figure 61. Referring to Figure 61, the A7 address line from the 6800 microprocessor is supplied through inverter 2224 as a first input to the NAND gate 2225. The A6 address line from the 6800 microprocessor is supplied through inverter 2226 as a second input to the NAND gate 2225. The A4 and A5 address lines from the 6800 microprocessor are supplied directly, as third and fourth inputs respectively, to the NAND gate 2225. The output from the NAND gate 2225 is supplied through inverter 2227 as a first input to the AND gate 2228. The input/output (I/O) line from the 6800 microprocessor is supplied as a second input to the AND gate 2228. The output from the AND gate 2228 is supplied as a first input to both NAND gate 2229 and NAND gate 2230.

The A3 address line from the 6800 microprocessor is supplied as a first input to the AND gate 2231. The A2 address line from the 6800 microprocessor is supplied through inverter 2232 as a second input to the AND gate 2231. The output from the AND gate 2231 is supplied as a second input to both NAND gates 2229 and 2230.

The Ø2 clock from the 6800 microprocessor is supplied through inverters 2234 and 2235 as a third input to both the NAND gate 2229 and the NAND gate 2230. The Ø2 clock from the 6800 microprocessor is also supplied through inverters 2234 and 2235 as the output signal 2213A which forms a part of signal 2213 illustrated in Figure 60.

The read/write (R/W̄) signal from the 6800 microprocessor is supplied through inverter 2237 as a fourth input to the NAND gate 2230. The (R/W̄) signal is also supplied through the inverter 2237 and inverter 2238 as a fourth input to the NAND gate 2229. The output from the NAND gate 2229 is provided to the A-select input of the decoder 2241. The output of the NAND gate 2230 is supplied to the Y0 input of the decoder 2241.

The A0 address line from the 6800 microprocessor is supplied through inverter 2242 to the B-select input of the decoder 2241 and the Y1 output of the decoder 2241. The A0 address line from the

# 0010660

6800 microprocessor is also supplied through inverter 2242 as the output signal 2214A which forms a part of signal 2214 illustrated in Figure 60.

The A1 address line from the 6800 microprocessor is supplied through inverter 2243 to the C-select input and the Y2 port of the decoder 2241. The reset (RST) signal from the 6800 microprocessor is supplied through 2244 and 2245 as a first input to the AND gate 2246. The reset signal output from inverter 2245 is also provided as the output signal 2214D, which forms a part of signal 2214 illustrated in Figure 60; output signal 2211E, which forms a part of signal 2211 illustrated in Figure 60; and output signal 2212C, which forms a part of signal 2212 illustrated in Figure 60.

The Y7 output from the decoder 2241 is provided as the output signal 2211A, which forms a part of signal 2211 illustrated in Figure 60 and is also provided as the output signal 2212A which forms a part of signal 2212 illustrated in Figure 60. The Y3 output from the decoder 2241 is provided as the output signal 2211B which also forms a part of signal 2211 illustrated in Figure 60. The Y5 output from the decoder 2241 is provided as a first input to the AND gate 2248. The Y6 output from the decoder 2241 is provided as a second input to the AND gate 2246 and as a second input to the AND gate 2248. The Y6 output from the decoder 2241 is also provided as the output signal 2214B which forms a part of signal 2214 illustrated in Figure 60. The output signal from the AND gate 2248 forms three output signals 2211C, 2212B and 2214C with the output signal 2211C forming a part of signal 2211, illustrated in Figure 60, the output signal 2212B forming a part of the signal 2212 illustrated in Figure 60, and the output signal 2214C forming a part of signal 2214 illustrated in Figure 60. The output signal from the AND gate 2246 also provides two output signals 2211D and 2213B. Signal 2211D forms a part of signal 2211, illustrated in Figure 60, while signal 2213B forms a part of signal 2213 illustrated in Figure 60.

Commercially available components which can be utilized in the circuit illustrated in Figure 61 are as follows:

| | |
|---|---|
| Inverters 2224, 2226, 2227, 2232, 2234, 2235, 2237, 2238, 2242, 2243, 2244 and 2245 | 74LS04, National Semiconductor |
| NAND gates 2225, 2229 and 2230 | 74LS20, National Semiconductor |
| AND gates 2228, 2231, 2248 and 2246 | 74LS08, National Semiconductor |
| Decoder 2241 | 74LS139, National Semiconductor |

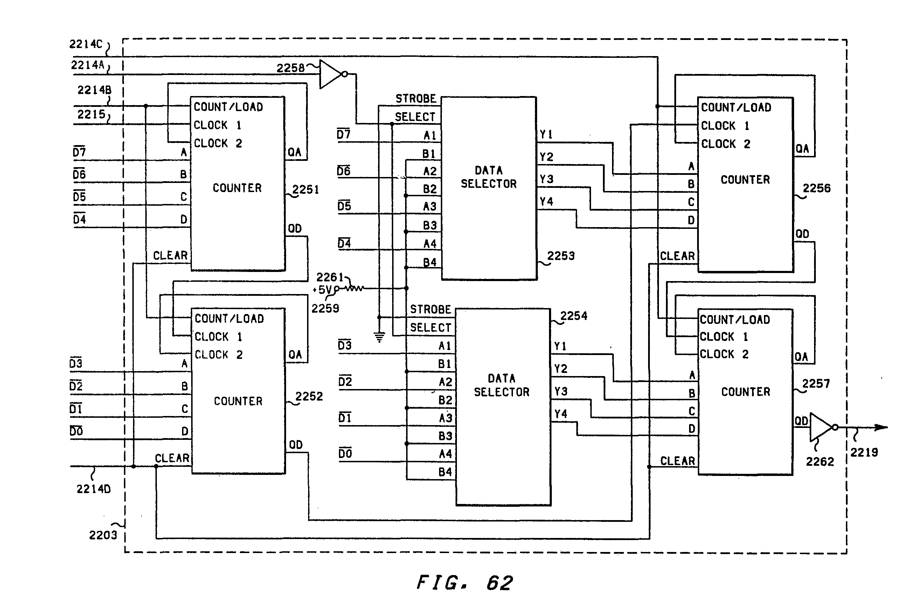

The counter 2203, illustrated in Figure 60, is more fully illustrated in Figure 62.

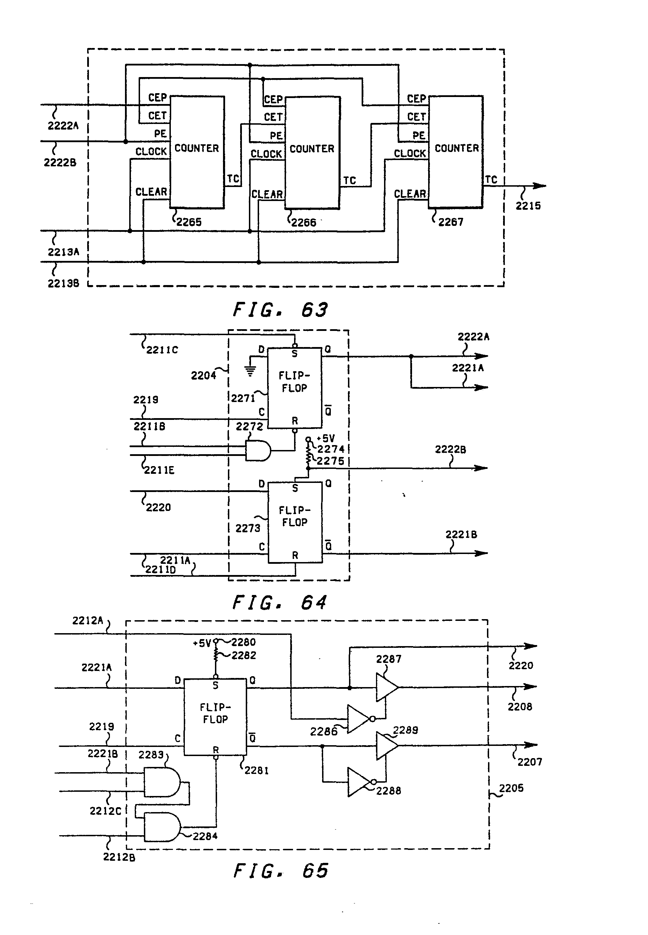

Signal 2214C, which is illustrated in Figure 61, is provided as an input to the count/load input of the counter 2256 and to the count/load input of the counter 2257. Signal 2214A, which is illustrated in Figure 61, is provided through inverter 2258 to the select input of the data selector 2253 and the data selector 2254. Signal 2214B, which is illustrated in Figure 61, is provided as an input to the count/load input of the counter 2251 and the counter 2252. Signal 2215, which is illustrated in Figures 60 and 64 is provided as an input to the first clock input of the counter 2251. The $\overline{D7}$—$\overline{D4}$ data lines, which are illustrated in Figure 62, are provided to the A—D data inputs of the counter 2251 and to the A1—A4 data inputs of the data selector 2253. The $\overline{D3}$—$\overline{D0}$ data lines which are illustrated in Figure 60 are provided to the A—D data inputs of the counter 2252 and to the A1—A4 data inputs of the data selector 2254. The reset signal 2214D, which is illustrated in Figure 61, is provided to the clear input of the counters 2251, 2252, 2256 and 2257.

The second clock input of the counter 2251 is tied to the $Q_a$ data output of the counter 2251. The first clock input of the counter 2252 is tied to the $Q_d$ data output of the counter 2251. The second clock input of the counter 2252 is tied to the $Q_a$ data output of the counter 2252. The $Q_d$ output of the counter 2252 is tied to the first clock input of the counter 2256.

The strobe input of both the data selector 2253 and the data selector 2254 is tied to ground. The D1—D4 inputs of both the data selector 2253 and the data selector 2254 are tied to the +5 volt power supply 2259 through resistor 2261. The Y1—Y4 data outputs from the data selector 2253 are tied to the A—D data inputs of the counter 2256. The Y1—Y4 data outputs from the data selector 2254 are tied to the A—D data inputs of the counter 2257.

The second clock input of the counter 2256 is tied to the $Q_a$ output of the counter 2256. The first clock input of the counter 2257 is tied to the $Q_d$ output of the counter 2256. The second clock input of the counter 2257 is tied to the $Q_a$ output of the counter 2257. The $Q_d$ output of the counter 2257 is provided to inverter 2262 as signal 2219 which is illustrated in Figure 60.

The D0—D7 data lines, from the 6800 microprocessor, are utilized to load the counters 2252 and 2251 with the time required for an operation. The counters 2251 and 2252, together with the data selectors 2253 and 2254 and counters 2256 and 2257, are enabled by the output signals from the decoding circuit 2201 which is illustrated in Figure 61. The clock signal for the counting circuit 2203 is provided from the counter 2202.

Commercially available components which can be utilized in the circuit illustrated in Figure 62 are as follows:

69

**0 010 660**

| Counters 2251, 2252, 2256 and 2257 | 74LS197, National Semiconductor |
| Data selectors 2253 and 2254 | 74LS158, National Semiconductor |
| Resistor 2261 | 10 K ohms, RN55D, Dale |
| Inverter 2262 | 74LS04, National Semiconductor |

The counter 2202, illustrated in Figure 60, is more fully illustrated in Figure 63. Signal 2222A, which is illustrated in Figure 64, is provided to both the count enable parallel (CEP) input and the count enable trickle (CET) input of the counter 2265. The signal 2222A is also provided to the CEP input of the counter 2266 and the CEP input of the counter 2267. The signal 2222B, which is illustrated in Figure 64, is provided to the parallel enable PE input of the counters 2265, 2266 and 2267. The signal 2213A, which is illustrated in Figure 61, is provided to the clock input of the counters 2265, 2266 and 2267. The signal 2213B, which is illustrated in Figure 61, is provided to the clear input of the counters 2265, 2266 and 2267. The terminal count (TC) output from the counter 2265 is tied to the CET input of the counter 2266. The TC output from the counter 2266 is provided to the CET input of the counter 2267. The TC output from the counter 2267 is provided as the output signal 2215 which is illustrated in Figure 60.

As has been previously stated, the counters illustrated in Figure 63 are utilized to generate a 1 millisecond clock signal 2215 from the 1 microsecond $\emptyset 2$ clock signal of the 6800 microprocessor. An integrated circuit which may be used for counters 2265, 2266 and 2267 is the 93L10 manufactured by Fairchild Semiconductor.

The enabling circuit 2204, illustrated in Figure 60, is more fully illustrated in Figure 64. Signal 2211C, which is illustrated in Figure 61, is provided to the set input of the flip-flop 2071. The D input of the flip-flop 2271 is grounded. Signal 2219, which is illustrated in Figure 60 and Figure 62, is provided to the clock input of the flip-flop 2271. Signal 2211B, which is illustrated in Figure 61, is provided as a first input to the AND gate 2272. Signal 2211E, which is also illustrated in Figure 61, is provided as a second input to the AND gate 2272. The output from the AND gate 2272 is provided to the reset input of the flip-flop 2271. The Q output from the flip-flop 2271 is provided as the output signal 2221, which forms a part of the output signal 2221 illustrated in Figure 60 and is also provided as the output signal 2222A which forms a part of signal 2222 illustrated in Figure 60.

The set input of the flip-flop 2273 is tied to the +5 volt power supply 2274 through the resistor 2275. The +5 volt power supply 2274 also provides the output signal 2222B through the resistor 2275. Signal 2222B forms a part of the output signal 2222 illustrated in Figure 60. Signal 2220, which is illustrated in Figures 60 and 65, is provided to the D input of the flip-flop 2273. Signal 2211A, which is illustrated in Figure 61, is provided to the clock input of the flip-flop 2273. Signal 2211D, which is illustrated in Figure 61, is provided to the reset input of the flip-flop 2273. The $\overline{Q}$ output from the flip-flop 2273 is provided as the output signal 2221B which forms a part of signal 2221 illustrated in Figure 60.

Commercially available components which can be utilized in the circuit illustrated in Figure 64 are as follows:

| Flip-flops 2271 and 2273 | 74LS74, National Semiconductor |
| AND gate 2272 | 74LS08, National Semiconductor |
| Resistor 2275 | 10 K ohms, RN55D, Dale |

The output circuit 2205, illustrated in Figure 60, is more fully illustrated in Figure 65. Signal 2212A, which is illustrated in Figure 61, is provided through the inverter 2286 to the enabling input of the tri-state buffer 2287. The set input of the flip-flop 2281 is tied to the +5 volt power supply 2280 through the resistor 2282. The signal 2221A, which is illustrated in Figure 65, is provided to the D input of the flip-flop 2281. The signal 2219, which is illustrated in Figure 60, is provided to the clock input of the flip-flop 2281. Signal 2221B, which is illustrated in Figure 65, is provided as a first input to the AND gate 2283. Signal 2212C, which is illustrated in Figure 61, is provided as a second input to the AND gate 2283. The output from the AND gate 2283 is tied as a first input to the AND gate 2283. Signal 2212B, which is illustrated in Figure 61, is provided as a second input to the AND gate 2284. The output from the AND gate 2284 is tied to the reset input of the flip-flop 2281.

The Q output from the flip-flop 2281 is utilized as the output signal 2220 and is also provided through the tri-state buffer 2287 as the output signal 2208 which is illustrated in Figure 60. The $\overline{Q}$ output from the flip-flop 2281 is provided through the tri-state buffer 2289 as the output signal 2207 which is illustrated in Figure 60. The $\overline{Q}$ output from the flip-flop 2281 is also provided through inverter 2288 to the enabling input of the tri-state buffer 2289.

Commercially available components which can be utilized in the circuit illustrated in Figure 65 are as follows:

## 0010660

| | |
|---|---|
| AND gates 2283 and 2284 | 74LS08, National Semiconductor |
| Flip-flop 2281 | 74LS74, National Semiconductor |
| Resistor 2282 | 10 K ohms, RN55D, Dale |
| Inverters 2286 and 2288, and Tri-state buffers 2287 and 2289 | DM8097, National Semiconductor |

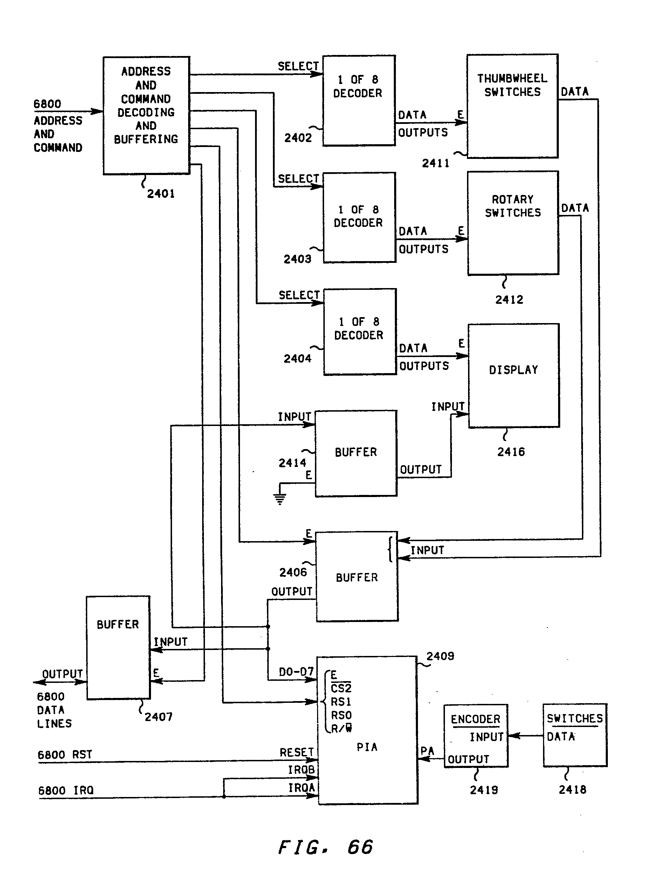

The switch and display interface 43 and the portion of the operator and display panel 41 which is related to the switch and display interface 43, both of which are illustrated in Figure 2a, are more fully illustrated in Figure 66. Referring now to Figure 66, the address and command lines from the 6800 microprocessor are supplied as inputs to the address and command decoding and buffering circuit 2401. In response to the address and commands from the 6800 microprocessor, the address and command decoding and buffering circuit 2401 provides a plurality of output signals which are utilized to control the functions of the switch and display interface 43 and the portion of the operator control and display panel 41 which is related to the switch and display interface 43. In response to the address and commands from the 6800 microprocessor, the address and command decoding and buffering circuit 2401 provides control signals to the select inputs of the one-of-eight decoders 2402—2404, an enabling signal to the enabling inputs of buffers 2406 and 2407, and a plurality of output signals to the enable input (E), the chip select 2 input (CS2), the register select 0 (RS0) and 1 (RS1), and the read/write (R/$\overline{\text{W}}$) input of the peripheral interface adapter 2409.

In response to the output signal from the address and command decoding and buffering circuit 2401, the one-of-eight decoder 2402 provides a plurality of enabling outputs to a plurality of thumbwheel switches which are located on the operator control and display panel 41 illustrated in Figure 2a. The thumbwheel switches 2411 provide one means by which the operator can provide commands and data to the 6800 microprocessor. Data from the thumbwheel switches 2411 is provided to the input of the buffer 2406.

In response to the output signals from the address and command decoding and buffering circuit 2401, the one-of-eight decoder 2403 provides a plurality of enabling signals to the rotary switches 2412 which are located on the operator control and display panel 41 illustrated in Figure 2a. The plurality of rotary switches 2412 provides another means by which the operator can supply data and commands to the 6800 microprocessor. Data from the rotary switches is provided from the data output of the rotary switches 2412 to the input of the buffer 2406.

The output from the buffer 2406 is tied to the D0—D7 data lines of the peripheral interface adapter 2409. The output from the buffer 2406 is also supplied to the input of the buffer 2407 and to the input of the buffer 2414. By means of the buffer 2406, data can be transferred from the thumbwheel switches 2411 and the rotary switches 2412 to the data input of the peripheral interface adapter 2409 and to the input of the buffer 2407. The output of the buffer 2407 is tied to the 6800 microprocessor data lines. The buffer 2407 provides a means by which the bidirectional data lines of the 6800 microprocessor can be tied to the thumbwheel switches 2411 and the rotary switches 2412 as well as the D0—D7 data lines of the peripheral interface adapter 2409.

In response to the output signal from the address and command decoding and buffering circuit 2401, the one-of-eight decoder 2404 provides a plurality of enabling signals to the enabling inputs of the display 2416. The display 2416 is made up of a plurality of light emitting diode, numeric displays. The output from the buffer 2414 is tied to the data input of the display 2416. The buffer 2414 provides a means by which the data from the thumbwheel switches 2411 or the rotary switches 2412 can be displayed at the display 2416. Data from the 6800 microprocessor can also be displayed at the display 2416. The display 2416 is located in the operator control and display panel 41 illustrated in Figure 2a.

The reset line from the 6800 microprocessor is tied to the reset input of the peripheral interface adapter 2409. The interrupt line from the 6800 microprocessor is tied to the A and B interrupt inputs of the peripheral interface adapter 2409.

A plurality of pushbutton switches 2418 may be utilized to provide data from the operator to the peripheral interface adapter 2409. The data output of the switches 2418 are provided to the input of the encoder circuit 2419. The output of the encoder circuit 2419 is provided to section A of the peripheral data lines of the peripheral interface adapter 2409. Data appearing on the peripheral data lines of the peripheral interface adapter 2409 may be transferred to the 6800 microprocessor by means of the D0—D7 data lines of the peripheral interface adapter 2409. The data appearing on the peripheral data lines of the peripheral interface adapter 2409 may also be displayed on the display 2416 if desired.

Essentially, the circuit illustrated in Figure 66 provides a means by which the operator can use a plurality of switches to transfer data and commands to the 6800 microprocessor. These data and commands may be displayed by the operator if desired and also data from the 6800 microprocessor may be displayed if desired. Addresses and commands from the 6800 microprocessor are utilized to enable the thumbwheel switches 2411 and the rotary switches 2412. The switches 2418 are always in an enabled condition. Thus, the circuit illustrated in Figure 66 provides a means by which the operator can control operation of the seismic exploration system illustrated in Figures 2a and 2b by

71

**0 010 660**

means of a plurality of switches which are available at the operator control and display panel 41 illustrated in Figure 2a.

Commercially available components which can be used in the circuit illustrated in Figure 66 are as follows:

| | |
|---|---|
| Decoders 2402, 2403 and 2404 | 74LS138, National Semiconductor |
| Buffer 2406 | 340098, Fairchild |
| Buffer 2414 | 74LS365, National Semiconductor |
| Buffer 2407 | 74LS367, National Semiconductor |
| Peripheral interface adapter 2409 | M6820, Motorola Semiconductor |
| Thumbwheel switches 2411 | Series 19000, Digitran |
| Rotary switches 2412 | Type 50A90, Grayhill |
| Pushbutton switches 2418 | 101SN11, Microswitch |
| Display 2416 | 5082-7300, Hewlett-Packard |
| Encoder 2419 | 93L18, Fairchild Semiconductor |

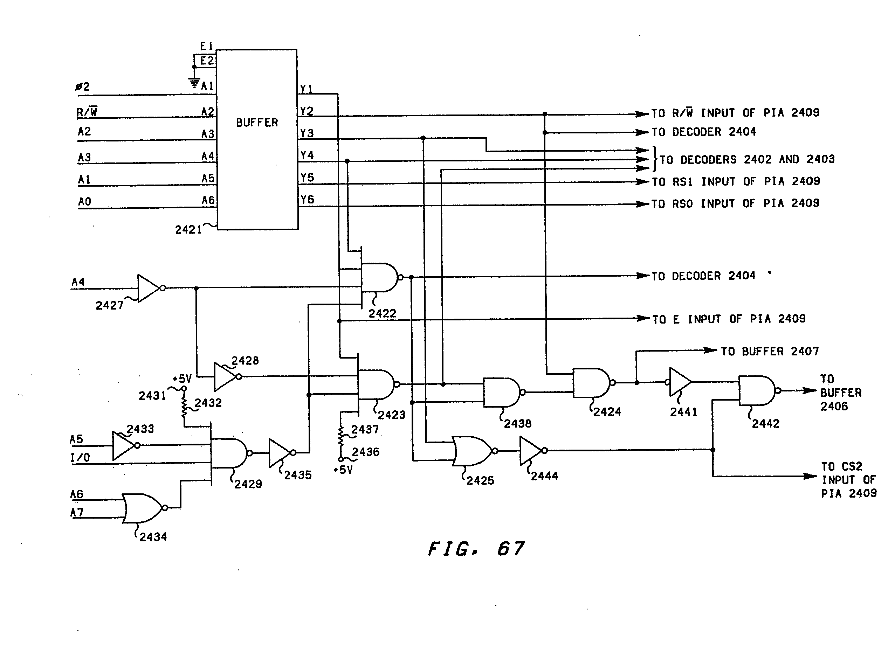

The address and command decoding and buffering circuit 2401, illustrated in Figure 66, is more fully illustrated in Figure 67. Referring now to Figure 67, the E1 and E2 enabling inputs of the buffer 2421 are both tied to ground. The Ø2 clock signal from the 6800 microprocessor is tied to the A1 address input of the buffer 2421. The read/write (R/W̄) signal from the 6800 microprocessor is tied to the A2 address input of the buffer 2421. The A2 address line from the 6800 microprocessor is tied to the A3 address input of the buffer 2421. The A3 address line from the 6800 microprocessor is tied to the A4 address input of the buffer 2421. The A1 address line from the 6800 microprocessor is tied to the A5 address input of the buffer 2421. The A0 address line from the 6800 microprocessor is tied to the A6 address input of the buffer 2421.

The Y1 output from the buffer 2421 is supplied as a first input to the NAND gate 2422 and as a first input to the NAND gate 2423. The Y1 output from the buffer 2421 is also supplied to the enabling input of the peripheral interface adapter 2409 illustrated in Figure 66. The Y2 data output from the buffer 2421 is supplied to the read-write (R/W̄) input of the peripheral interface adapter 2409. The Y2 output from the buffer 2421 is also supplied to the decoder 2404 illustrated in Figure 66 and is supplied to the first input to the NAND gate 2424. The Y3 output from the buffer 2421 is supplied as an input to both decoders 2402 and 2403, illustrated in Figure 66, and is supplied as a first input to the NOR gate 2425. The Y4 output from the buffer 2421 is supplied as an input to both decoder 2402 and 2403 and is supplied as a second input to the NAND gate 2422. The Y5 output from the buffer 2421 is supplied to the register select 1 (RS1) input of the peripheral interface adapter 2409. The Y6 output from the buffer 2421 is tied to the read select 0 (RS0) input of the peripheral interface adapter 2409.

The A4 address line from the 6800 microprocessor is tied to the input of the inverter 2427. The output of the inverter 2427 is supplied as a third input to the NAND gate 2422 and is supplied through inverter 2428 as a second input to the NAND gate 2423.

The first input of the NAND gate 2429 is tied to the +5 volt power supply 2431 through the resistor 2432. The A5 address line from the 6800 microprocessor is supplied as a second input to the NAND gate 2429 through inverter 2433. The input/output (I/O) line from the 6800 microprocesor is supplied as a third input to the NAND gate 2429. The A6 address line from the 6800 microprocessor is supplied as a first input to the NOR gate 2434. The A7 address line from the 6800 microprocessor is supplied as a second input to the NOR gate 2434. The output from the NOR gate 2434 is supplied as a fourth input to the NAND gate 2429. The output from the NAND gate 2429 is supplied through inverter 2435 as a fourth input to the NAND gate 2422 and as a third input to the NAND gate 2423. The fourth input of the NAND gate 2423 is tied to the +5 volt power supply 2436 through the resistor 2437.

The output of the NAND gate 2422 is supplied to the decoder 2404 illustrated in Figure 66. The output from the NAND gate 2422 is also supplied as a first input to the NAND gate 2438 and as a second input to the NOR gate 2425. The output from the NAND gate 2423 is supplied as a second input to the NAND gate 2438 and is also supplied to the decoders 2402 and 2403 illustrated in Figure 66.

The output of the NAND gate 2438 is supplied as a second input to the NAND gate 2424. The output of the NAND gate 2424 is supplied to the buffer 2407 illustrated in Figure 66 and is also supplied to the inverter 2441 as a first input to the NAND gate 2442. The output of the NOR gate 2425 is supplied as a second input to the NAND gate 2442 through the inverter 2444. The output of the NOR gate 2425 is also tied to the chip select 2 (CS2) input of the peripheral interface adapter 2409 through the inverter 2444. The output of the NAND gate 2442 is supplied to the buffer 2406 illustrated in Figure 66.

Commercially available components which can be utilized in the circuit illustrated in Figure 67 are as follows:

72

| | |
|---|---|
| Buffer 2421 | 74LS365, National Semiconductor |
| Inverters 2427, 2428, 2433, 2435, 2444 and 2441 | 74LS04, National Semiconductor |
| NOR gates 2434 and 2425 | 74LS02, National Semiconductor |
| NAND gates 2429, 2423 and 2422 | 74LS20, National Semiconductor |
| NAND gates 2438, 2424 and 2442 | 74LS00, National Semiconductor |
| Resistors 2437 and 2432 | 5.1 K ohms, RN55D, Dale |

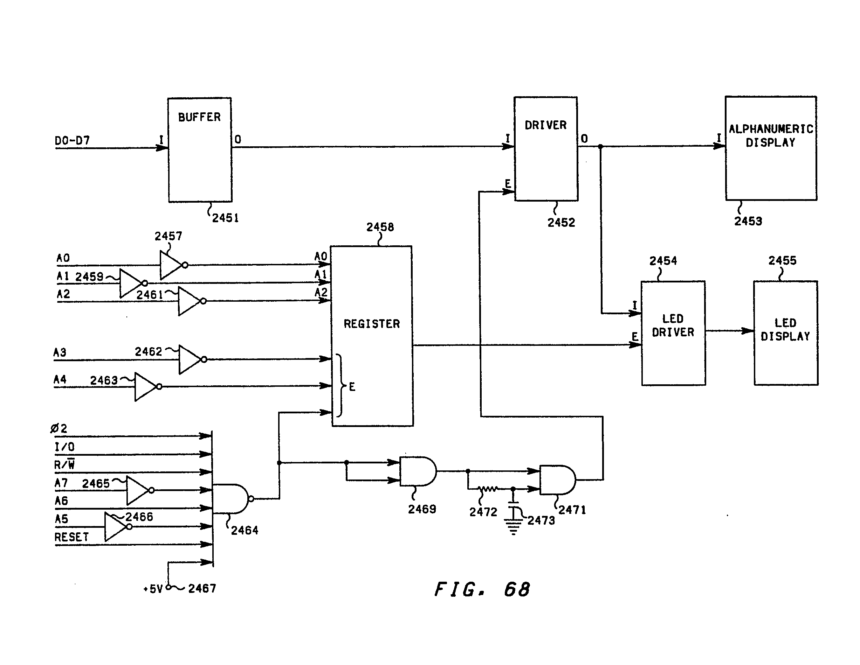

The roll-along panel interface 37 and the portion of the operator control and display panel 41 which is related to the roll-along panel interface 37, both of which are illustrated in Figure 2a, are more fully illustrated in Figure 68. The roll-along display panel on the operator control and display panel provides visual identification of the programmed spread configuration for the seismic exploration system of the present invention. The data lines from the 6800 microprocessor are utilized to drive LED displays and an alphanumeric display to provide the desired information.

Referring now to Figure 68, the D0—D7 data lines from the 6800 microprocessor are supplied to the input side of the buffer 2451. The buffer data lines from the 6800 microprocessor are supplied from the output of the buffer 2451 to the input of the driver 2452. From the output of the driver 2452, the data lines from the 6800 microprocessor are supplied to the alphanumeric display 2453 and also to the light-emitting diode (LED) driver 2454. From the LED driver 2454, the data lines from the 6800 microprocessor are supplied to a plurality of light-emitting diodes located in the LED display 2455. The data lines from the 6800 microprocessor are utilized to drive both the alphanumeric display 2453 and the light-emitting diodes located in the LED display 2454.

The A0 address line from the 6800 microprocessor is supplied through inverter 2457 to the A0 input of the register 2458. The A1 address line from the 6800 microprocessor is supplied to the A1 input of the register 2458 through inverter 2459. The A2 address line from the 6800 microprocessor is supplied through inverter 2461 to the A2 input of the register 2458. The A3 address line from the 6800 microprocessor is supplied through inverter 2462 as a first enabling input to the register 2458. The A4 address line from the 6800 microprocessor is supplied through inverter 2463 as a second enabling input to the register 2458.

The $\emptyset$2 clock signal from the 6800 microprocessor is supplied as a first input to the NAND gate 2464. The input/output (I/O) line from the 6800 microprocessor is supplied as a second input to the NAND gate 2464. The read/write (R/$\overline{W}$) line from the 6800 microprocessor is supplied as a third input to the NAND gate 2464. The A7 address line from the 6800 microprocessor is supplied through inverter 2465 as a fourth input to the NAND gate 2464. The A6 address line from the 6800 microprocessor is supplied as a fifth input to the NAND gate 2464. The A5 address line from the 6800 microprocessor is supplied through inverter 2466 as a sixth input to the NAND gate 2464. The reset line from the 6800 microprocessor is supplied as a seventh input to the NAND gate 2464. The eighth input of the NAND gate 2464 is tied to the +5 volt power supply 2467.

The output signal from the NAND gate 2464 is supplied as a third enabling signal to the register 2458 and is also supplied to both inputs of the AND gate 2469. The output of the AND gate 2469 is tied directly to one input of the AND gate 2471 and is also tied to the second input of the AND gate 2471 through the RC network made up of resistor 2472 and capacitor 2473. The output from the AND gate 2471 is supplied as an enabling signal to the driver 2452. The output from the register 2458 is supplied as an enabling signal to the LED driver 2454.

When it is desired to set up a display on the roll-along status display which is located in the operator control and display panel 41, illustrated in Figure 2a, the roll-along panel interface 37, illustrated in Figure 2a, is enabled by the address and command lines from the 6800 microprocessor. Specifically, the A5—A7 address lines and the command lines from the 6800 microprocessor which are illustrated in Figure 68, are utilized to enable the register 2458 and also are utilized to enable the driver 2452. When the driver 2452 is enabled, the data on the D0—D7 data lines from the 6800 microprocessor is supplied to the alphanumeric display 2453. The data is also supplied to the LED driver 2454. When the LED driver 2454 is enabled in response to the output signal of the register 2458, the data is transferred to the LED display 2455. In this manner, a status display providing a visual identification of the spread configuration of the seismic exploration system is provided to the operator at the operator control and display panel 41 illustrated in Figure 2a.

Commercially available components which can be utilized in the circuit illustrated in Figure 68 are as follows:

# 0 010 660

| | |
|---|---|
| Buffer 2451 and Inverters 2457, 2459, 2461, 2462, 2463, 2465 and 2466 | 74LS04, National Semiconductor |
| Register 2458 | 74LS138, National Semiconductor |
| NAND gate 2464 | 74LS30, National Semiconductor |
| AND gate 2469, 2471 | 74LS08, National Semiconductor |
| Resistor 2472 | 220 ohms, RN55D, Dale |
| Capacitor 2473 | 100 picofarads, Series 25B, S & El |
| Driver 2452 | DM8096, National Semiconductor |
| LED Driver 2454 | DM8869, National Semiconductor |
| Alphanumeric Display 2454 | HP5082-7300, Hewlett-Packard |
| LED Display 2455 | HP5082-4657, Hewlett-Packard |

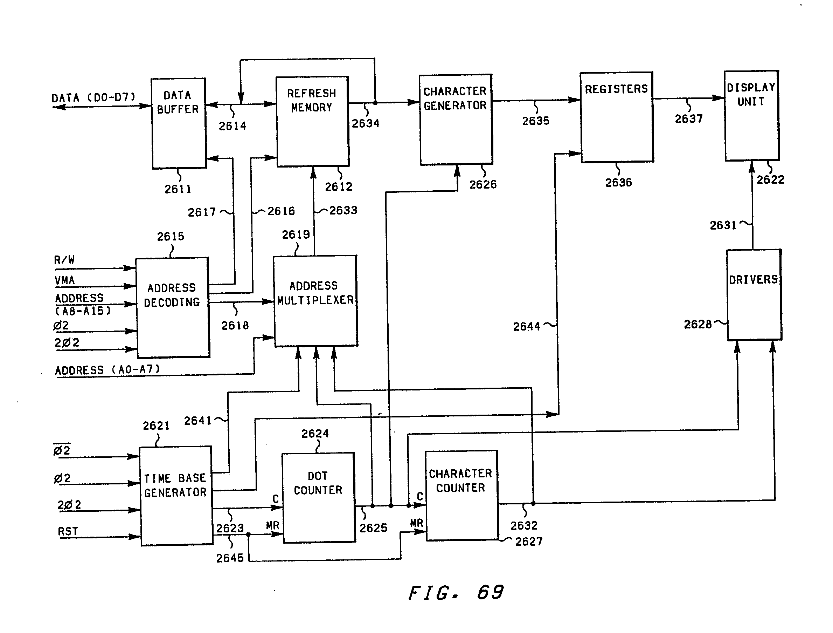

The self scan interface 33, illustrated in Figure 2a, is more fully illustrated in Figure 69. The portion of the operator control and display panel 41 which is associated with the self scan interface 33 is also illustrated in Figure 69. Referring now to Figure 69, the D0—D7 data lines from the 6800 microprocessor are tied through the data buffer 2611 to the refresh memory 2612 by means of signal lines 2614. The A8—A15 address lines from the 6800 microprocessor are provided to the address decoding circuit 2615. The read/write (R/$\overline{W}$) line, valid memory address (VMA) line, Ø2 clock line, and 2Ø2 clock line from the 6800 microprocessor are also supplied to the address decoding circuit 2615. In response to the address and commands from the 6800 microprocessor, the address decoding circuit 2615 provides three enabling signals 2616, 2617 and 2618. The enabling signal 2616 is provided from the address decoding circuit 2615 to the refresh memory 2612. Signal 2617 is provided as an enabling signal to the data buffer 2617. Signal 2618 is provided as an enabling signal to the address multiplexer 2619.

The A0—A7 address lines from the 6800 microprocessor are tied as inputs to the address multiplexer 2619. The A0—A7 address lines are utilized to control the location in the refresh memory to which data is written from the 6800 microprocessor or from which data is read to the 6800 microprocessor.

The time base generator 2621 provides a plurality of clock signals utilized in the self scan interface illustrated in Figure 69. The time base generator circuit 2621 is provided with the $\overline{Ø2}$ clock, the Ø2 clock and the 2Ø2 clock from the 6800 microprocessor. The time base generator circuit 2621 is also provided with the reset (RST) line from the 6800 microprocessor. The output signal 2623 from the time base generator 2621 is provided as an input to the dot counter circuit 2624. The dot counter circuit is utilized to provide a sweep of the display unit 2622 and is also utilized to provide a portion of the address for the character to be displayed on display unit 2622. The output signal 2625 from the dot counter circuit 2624 is provided as an input to the address multiplexer 2619, the character generator 2626, the character counter 2627 and the drivers 2628. From the drivers 2628, the output from the dot counter 2624 is provided by signal line 2631 to the display unit 2622.

The time base generator circuit 2621 provides one address signal 2641 to the address multiplexers 2619. An enabling signal 2644 is supplied from the time base generator 2621 to the registers 2636. The reset signal 2645 is provided from the time base generator 2621 to the master reset (MR) of both the dot counter 2624 and the character counter 2627.

The character counter 2627 is utilized to provide a portion of the address for the character to be displayed on display unit 2622. The output signal 2632 from the character counter 2627 is provided as an input to the drivers 2628 and is also provided as an input to address multiplexer 2619. The output signal 2632 from the character counter 2627 is provided through the drivers 2628 to the display unit 2622 by means of signal line 2631.

The output signal 2633 from the address multiplexer 2619 is provided as an input to the refresh memory 2612. The address signal 2633 is representative of a location to which data is to be written or to be read from or will correspond to the location at which data is to be displayed on display unit 2622 depending on whether the A0—A7 address lines from the 6800 microprocessor or signals 2632, 2641 and 2625 are selected to be provided from the address multiplexer 2619 to the refresh memory 2612.

The output signal 2634 from the refresh memory 2612 is provided as an input to the character generator 2626. The output from the refresh memory 2612 is also tied back through the data buffer 2611 to the 6800 microprocessor. In this manner, data can be read from the refresh memory 2612 out to the 6800 microprocessor if desired.

The character generator 2626 is utilized to generate a binary address which determines which indicators on the display unit 2622 will be activated. This binary address is generated in response to the output signal 2634 from the refresh memory 2612 and also in response to the output signal 2625 from the dot counter 2624. The binary address from the character generator 2626 is provided by means of signal line 2635 to the registers 2636. The output from the registers is provided to the display unit 2622 by means of signal line 2637.

Signal 2631 is utilized to sweep the display unit 2622. As the display unit is being swept, various indicators on the display unit 2622 will be activated in response to the binary address from the

74

character generator 2626. In this manner, data can be supplied from the 6800 microprocessor to the display unit 2622 which is located on the operator control and display panel 41 illustrated in Figure 2a. The display unit 2622 may be viewed by the CRS operator and thereby the operational status of the seismic exploration system of the present invention can be known.

Commercially available components which can be utilized in the circuit illustrated in Figure 69 are as follows:

| | |
|---|---|
| Dot counter 2624 | 74290, Motorola |
| Character counter 2623 | 74293, Motorola |
| Registers 2636 | 74175, Motorola |
| Drivers 2628 | 9311, Fairchild Semiconductor |
| Display unit 2622 | HP5082-7300, Hewlett-Packard |
| Refresh memory 2612 | 3538F, American Microsystems, Inc. |
| Address multiplexer 2619 | 74157, Motorola |
| Character generator 2626 | 82S115, Signetics |
| Data buffer 2611 | 74LS368, National Semiconductor |

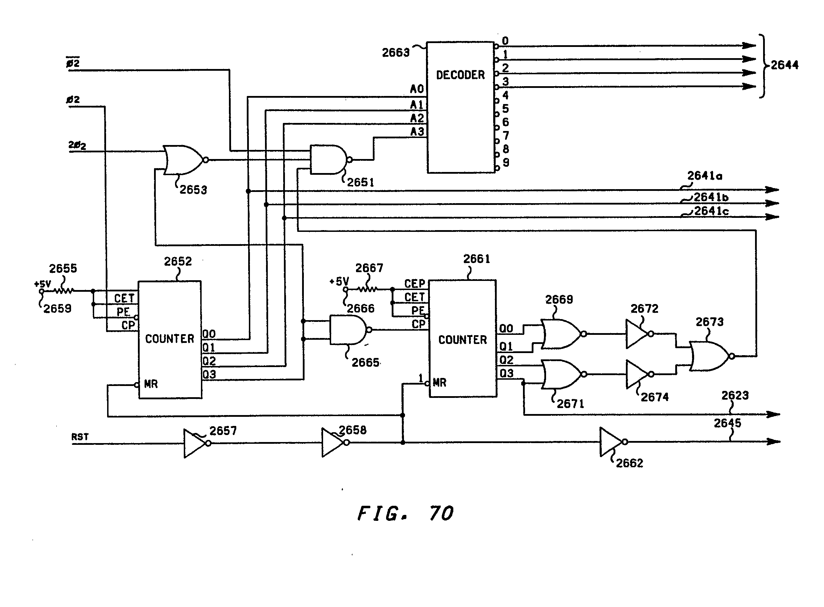

The time base generator 2621, illustrated in Figure 69, is more fully illustrated in Figure 70. Referring now to Figure 70, the $\emptyset 2$ clock from the 6800 microprocessor is supplied as a first input to the NAND gate 2651. The $\emptyset 2$ clock from the 6800 microprocessor is supplied to the clock input of the counter 2652. The $2\emptyset 2$ clock is supplied as a first input to the NOR gate 2653. The count enable parallel (CEP) input, the count enable trickle (CET) input and the parallel enable (PE) input of the counter 2652 are all tied high to the +5 volt power supply 2654 through the resistor 2655.

The reset signal (RST) from the 6800 microprocessor is supplied through inverters 2657 and 2658 to the master reset (MR) of the counter 2652 and the counter 2651. The reset signal (RST) from the 6800 microprocessor is also supplied through inverter 2657, 2658 and 2662 to the master reset (MR) of the dot counter 2624 and the character counter 2627 illustrated in Figure 69.

The $Q_0$ parallel output from the counter 2652 is supplied to the $A_0$ input of the one-of-sixteen decoder 2663. The $Q_0$ output from the counter 2652 is also supplied as signal 2641A to the address multiplexer 2619 illustrated in Figure 69. The $Q_1$ parallel output from the counter 2652 is provided to the $A_1$ input of the one-of-sixteen decoder 2663 and is also provided as signal 2641B to the address multiplexer 2619. The $Q_2$ output from the counter 2652 is supplied to the $A_2$ input of the one-of-sixteen decoder 2663 and is also provided as signal 2641C to the address multiplexer 2619. The $Q_3$ output from the counter 2652 is tied to both inputs of the NAND gate 2665 and is also supplied as a second input to the NOR gate 2653.

The output from the NOR gate 2653 is supplied to the clock input (CP) of the counter 2661. The count enable parallel (CEP) input, the count enable trickle (CET) input and the parallel input (PE) of the counter 2661 are all tied to the +5 volt power supply 2666 to the resistor 2667. The $Q_0$ and $Q_1$ output from the counter 2661 are supplied as first and second inputs respectively to the NOR gate 2669. The $Q_2$ and $Q_3$ output from the counter 2661 are tied as first and second inputs respectively to the NOR gate 2671. The $Q_3$ output from the counter 2661 is also supplied to the clock input of the dot counter 2624 illustrated in Figure 69.

The output from the NOR gate 2669 is supplied through the inverter 2672 as a first input to NOR gate 2673. The output from the NOR gate 2671 is supplied through the inverter 2674 as a second input to the NOR gate 2673. The output from the NOR gate 2673 is tied as a third input to the NAND gate 2651.

The output from the NAND gate 2651 is tied to $A_3$ input of the one-of-sixteen 2663. The 0—3 outputs from the one-of-sixteen decoder 2663 are supplied as enabling signals 2644 to the register 2636 illustrated in Figure 69.

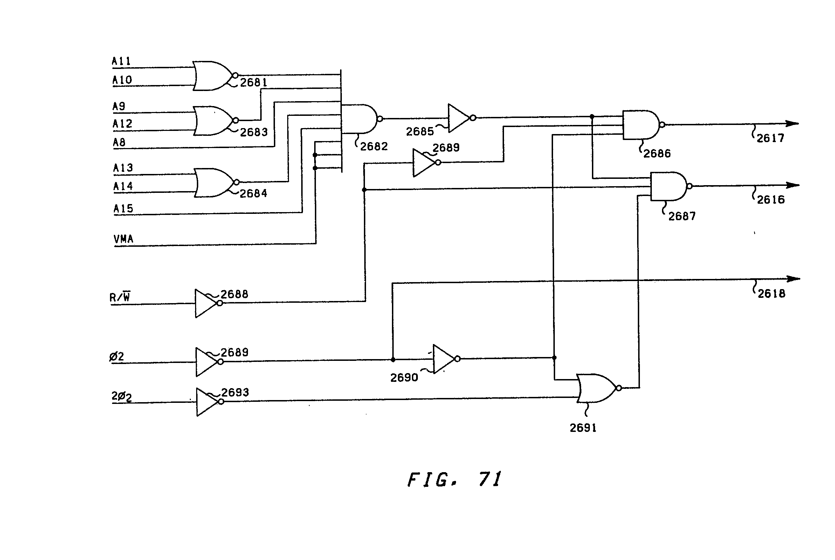

Commercially available components which can be utilized in the circuits illustrated in Figure 71 are as follows:

| | |
|---|---|
| NOR gate 2653, 2669, 2671 and 2673 | 74LS02, National Semiconductor |
| NAND gate 2651 | 74LS10, National Semiconductor |
| AND gate 2665 | 74LS02, National Semiconductor |
| Inverters 2657, 2658, 2672, 2674 and 2662 | 74LS04, National Semiconductor |
| Counters 2652 and 2661 | 9310, Fairchild Semiconductor |
| Decoder 2663 | A7442, Fairchild Semiconductor |
| Resistors 2655 and 2667 | 1 K ohm, 1/4W, RN 60 D Dale |

The address decoding circuit 2615, illustrated in Figure 69 is more fully illustrated in Figure 71. Referring now to Figure 71, the A11 address line is supplied as a first input to the NOR gate 2681. The A10 address line is supplied as a second input to the NOR gate 2681. The output from the NOR gate 2681 is supplied as a first input to the NAND gate 2682. The A9 address line is tied as a first input to the NOR gate 2683. The A12 address line is tied as a second input to the NOR gate 2683. The output from the NOR gate 2683 is tied as a second input to the NAND gate 2682. The A8 address line is tied directly as a third input to the NAND gate 2682. The A8 address line is tied directly as a third input to the NAND gate 2682. The A13 address line is tied as a first input to the NOR gate 2684. The A14 address line is tied as a second input to the NOR gate 2684. The output from the NOR gate 2684 is tied as a fourth input to the NAND gate 2682. The A15 address line is tied directly as a fifth input to the NAND gate 2682. The valid memory address (VMA) line is tied as the sixth, seventh and eighth inputs to the NAND gate 2682. The output from the NAND gate 2682 is supplied through the inverter 2685 as a first input to the NAND gate 2686 and as a first input to the NAND gate 2687. The read/write (R/$\overline{\text{W}}$) line is supplied through inverter 2688 as a second input to the NAND gate 2687 and is also supplied through inverter 2688 and inverter 2689 as a second input to the NAND gate 2686.

The $\emptyset 2$ clock signal is supplied through inverter 2689 as signal 2618 illustrated in Figure 69. The $\emptyset 2$ clock signal is also supplied through inverter 2689 and inverter 2690 as a first input to NOR gate 2691 and as a third input to NAND gate 2686.

The $2\emptyset 2$ clock signal is supplied through inverter 2693 as a second input to NOR gate 2691. The output from NOR gate 2691 is tied as a third input to NAND gate 2687. The output from NAND gate 2687 is signal 2616 which is illustrated in Figure 69 and which is supplied to the read/write (R/$\overline{\text{W}}$) input of the refresh memory 2612 illustrated in Figure 69. Signal 2616 is utilized to control whether data is being written into the refresh memory 2612 from the 6800 microprocessor or whether data is being read from the refresh memory 2612 to the 6800 microprocessor.

The output signal from the NAND gate 2686 is signal 2617 which is illustrated in Figure 69 and which is supplied from the address decoding circuit 2615 to the data buffer 2611. The data buffer 2611 is enabled by signal 2617 to either transfer data from the 6800 microprocessor to the refresh memory 2612 or to transfer data from the refresh memory 2612 to the 6800 microprocessor.

Commercially available components which can be utilized in the circuit illustrated in Figure 71 are as follows:

| | |
|---|---|
| NOR gates 2681, 2683, 2684 and 2691 | 74LS02, National Semiconductor |
| Inverters 2688, 2689, 2693, 2689 and 2690 | 74LS04, National Semiconductor |
| NAND gate 2682 | 74LS30, National Semiconductor |
| NAND gates 2686 and 2687 | 74LS10, National Semiconductor |

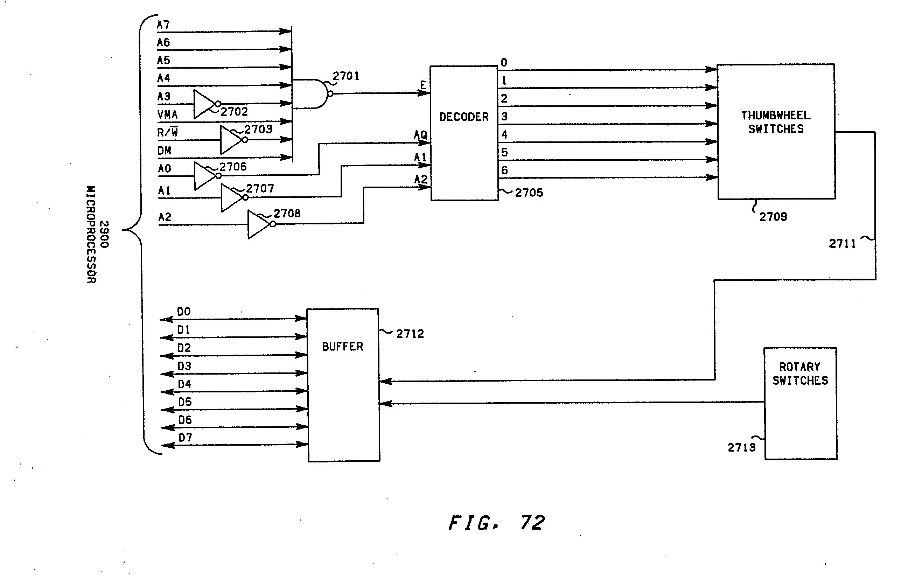

The data display control panel 95 and the data display interface 97, both of which are illustrated in Figure 2a, are more fully illustrated in Figure 72. Referring now to Figure 72, all of the address lines, command lines and data lines illustrated are from the 2900 microprocessor. The A7 address line is supplied as a first input to the NAND gate 2701. The A6 address line is provided as a second input to the NAND gate 2701. The A5 address line is provided as a third input to the NAND gate 2701. The A4 address line is provided as a fourth input to the NAND gate 2701. The A3 address line is provided through inverter 2702 as a fifth input to the NAND gate 2701. The valid memory address (VM$\overline{\text{A}}$) line is supplied through inverter 2703 as a sixth input to the NAND gate 2701. The read/write (R/$\overline{\text{W}}$) line is provided as a seventh input to the NAND gate 2701. The display mode (DM) line is provided as an eighth input to the NAND gate 2701. The output of the NAND gate 2701 is provided to the enabling (E) input of the decoder 2705.

The AO address line is supplied through inverter 2706 to the $A_0$ input of the decoder 2705. The A1 address line is provided through inverter 2707 to the $A_1$ input of the decoder 2705. The A2 address line is provided through inverter 2708 to the $A_2$ input of the decoder 2705. The AO—A2 address lines are utilized to enable a particular one of the thumbwheel switches 2709.

The 0—6 outputs from the decoder 2705 are supplied to the enabling inputs of the thumbwheel switches 2709. The thumbwheel switches 2709 are located on the data display control panel 95, illustrated in Figure 2a and may be utilized by the operator to control the manner in which data is displayed at the data display unit 93. The thumbwheel switches 2709 are encoded so as to provide a binary coded decimal (BCD) output signal 2711. Signal 2711, which is actually representative of a plurality of signal lines, is provided to the buffers 2712.

The rotary switches 2713 are located on the data display control panel 95 and provide another means by which the operator may control the manner in which data is displayed at the data display unit 93. The output from the rotary switches 2713 is also provided to the buffers 2712. The buffers 2712 are tied to the D0—D7 data lines of the 2900 microprocessor. In this manner, the commands set up by the operator by means of the thumbwheel switches 2709 and the rotary switches 2713 may be transferred to the 2900 microprocessor by means of the 2900 microprocessor data bus. In response to these commands, the 2900 microprocessor controls the manner in which data is displayed at the data display unit 93 illustrated in Figure 2a.

Commercially available components which can be utilized in the circuit illustrated in Figure 72 are as follows:

**0 010 660**

| | |
|---|---|
| Inverters 2702, 2703, 2706, 2707 and 2708 | 74LS04, National Semiconductor |
| NAND gate 2701 | 74LS30, National Semiconductor |
| Decoder 2705 | 74S138, National Semiconductor |
| Buffers 2712 | 74LS366, National Semiconductor |
| Thumbwheel switches 2709 | Series 19000, Digitran |
| Rotary switches 2713 | Type 50A90, Grayhill |

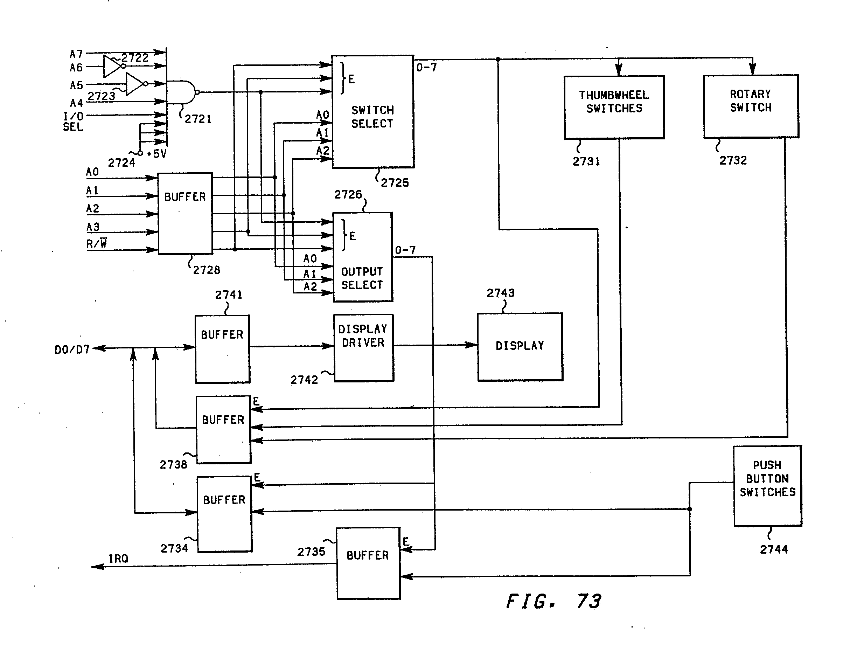

The magnetic tape panel 83 and the magnetic tape panel interface 84, which are illustrated in Figure 2a, are more fully illustrated in Figure 73. The magnetic tape panel 83 and the magnetic tape panel interface 84 primarily provide for operator control of the recording of seismic data on magnetic tape at the central recording station. Referring now to Figure 73, the A7 address line from the 6800 microprocessor is supplied as a first input to NAND gate 2721. The A6 address line is supplied through inverter 2722 as a second input to NAND gate 2721. The A5 address line is supplied through inverter 2723 as a third input to NAND gate 2721. The A4 address line is supplied directly as a fourth input to NAND gate 2721. The input-output (I/O) select line is supplied as a fifth input to NAND gate 2721. The remaining inputs of NAND gate 2721 are tied high to the +5 volt power supply 2724. The output from NAND gate 2721 is tied as a first enabling input to switch-select circuit 2725 and as a first enabling input to output-select circuit 2726. The A4—A7 address lines from the 6800 microprocessor and the input-output (I/O) select line are primarily utilized to enable either switch-select circuit 2725 or output-select circuit 2726.

The A0 address line from the 6800 microprocessor is supplied through buffer 2728 to the $A_0$ input of select-switch circuit 2725 and to the $A_0$ input of output-select circuit 2726. The A1 address line is supplied through the buffer 2728 to the $A_1$ input of select-switch circuit 2725 and to the $A_1$ input of output-select circuit 2726. The A2 address line is tied through buffer 2728 to the $A_2$ input of switch-select circuit 2725 and to the $A_2$ input of output-select circuit 2726. The A3 address line is supplied through buffer 2728 as a second enabling input to switch-select circuit 2725 and to output-select circuit 2726. The read/write (R/$\overline{W}$) signal line is supplied through buffer 2728 as a third enabling input to switch-select circuit 2725 and as a third enabling input to output-select circuit 2726. The A3 address line and the read/write (R/$\overline{W}$) line are further used to enable either switch-select circuit 2725 or output-select circuit 2726. If the switch-select circuit 2725 is enabled, then either one of the thumbwheel switches 2731 or the rotary switch 2732 will be enabled. If the output-select circuit 2726 is enabled, then either the buffer 2734 or the buffer 2735 will be enabled. The A0—A2 address lines from the 6800 microprocessor are utilized to determine which of the thumb wheel switches will be enabled. The rotary switch 2732 may also be enabled by the A0—A2 address lines. In like manner, the A0—A2 address lines are utilized to determine whether buffer 2734 or buffer 2735 will be enabled. The 0—7 output lines from switch-select circuit 2725 are tied to the ground inputs of the thumbwheel switches 2731 and the ground input of rotary switch 2732. The 0—7 output lines from switch-select circuit 2725 are utilized to enable thumbwheel switches 2732 or rotary-switch 2732 by supplying a currentsink at the ground of either one of thumbwheel switches 2731 or rotary-switch 2732.

Information set up on thumbwheel switches 2731 and rotary-switch 2732 may be transferred to the 6800 microprocessor through buffer 2738, the output side of which is tied to the D0—D7 data lines of the 6800 microprocessor. The buffer 2738 is enabled by the 0—7 output lines from switch-select circuit 2725.

The D0—D7 data lines from the 6800 microprocessor are supplied through the buffer 2741 to display driver 2742. From display driver 2742 the D0—D7 data lines are supplied to display 2743. Data from the 6800 microprocessor may be displayed for the operator by means of display 2743.

The pushbutton switches 2744 are provided to allow the operator to start the tape unit, to write header information on the magnetic tape, and to set the file number at which the data from the first shot is to be stored. The output from pushbutton switches 2744 is tied through buffer 2734 to the 6800 microprocessor by means of the D0—D7 data lines. The output from pushbutton switches 2744 also provides an interrupt to the 6800 microprocessor through buffer 2735.

The rotary switch 2732 is utilized primarily to allow the operator to instruct the 6800 microprocessor as to what operation is needed in a search of the magnetic tape. The rotary switch has four positions. The rotary switch 2732 may be set to instruct the 6800 to automatically position the magnetic tape after the last data record has been recorded, to reverse and locate the last record on the tape, to reverse and to search for the file number set on thumbwheel switches 2731 or to go forward and search for the file number set on thumbwheel switches 2731.

The pushbutton switches 2744 are utilized to allow the operator to enable operation of the magnetic tape unit. Three switches are provided which are labeled "set file", "write header" and "start". When the "start" button is pushed, an interrupt is provided to the 6800 microprocessor through the buffer 2735. The 6800 microprocessor will then enable buffer 2738 and the position of rotary switch 2732 will be read to determine what action is needed. If the "set file" pushbutton switch is pressed, buffer 2738 is again enabled but this time the 6800 microprocessor will read and store the

77

**0 010 660**

file number which is set on thumbwheel switches 2731. This information is also displayed at display 2743.

It is noted that thumbwheel switches 2731 are utilized to set only the initial file number for recording of seismic data on the magnetic tape. After the initial file number has been set, the 6800 microprocessor will automatically increment the file number with each shot fired. The incremented file number will appear at display 2743 and will change after each shot is fired.

The "write header" pushbutton switch may be activated to allow the 6800 microprocessor to write header information on the magnetic tape.

The thumbwheel switches 2731, the rotary switch 2732 and the pushbutton switches 2744 are provided to allow operator control of the recording of seismic data on magnetic tape. The thumbwheel switches 2731 are utilized to set up the file number for the initial recording to begin and the rotary switches 2732 are utilized to set up different operations. The pushbutton switches 2744 are utilized to start the operation of the magnetic tape unit and also to provide interrupts to the 6800 microprocessor to enable the 6800 microprocessor to read the data set on thumbwheel switches 2731 and rotary switch 2732. Data is read from thumbwheel switches 2731 or rotary switch 2732 by enabling switch-select circuit 2725 and enabling buffer 2738 by means of the A0—A2 address lines from the 6800 microprocessor. The position of the pushbutton switches is read by the 6800 microprocessor by enabling output-select circuit 2726 which in turn enables buffer 2734 or buffer 2735.

Commercially available components which can be utilized in the circuit illustrated in Figure 73 are as follows:

| | |
|---|---|
| Inverter 2722 and 2723 | 74LS04, National Semiconductor |
| Buffer 2728 | 74LS04, National Semiconductor |
| NAND Gate 2721 | 74LS30, National Semiconductor |
| Switch-select circuit 2725, and | 74LS138, National Semiconductor |
| Output select circuit 2726 | |
| Thumbwheel switches 2731 | Series 19000, Digitran |
| Rotary switch 2732 | Type 50A90, Grayhill |
| Pushbutton switches 2744 | 101SN11, Microswitch |
| Buffer 2741 | 74LS04, National Semiconductor |
| Display driver 2742 | 74LS00, National Semiconductor |
| Display 2743 | 5082-7300, Hewlett-Packard |
| Buffer 2738 | 7438, National Semiconductor |
| Buffer 2734 | 74LS04, National Semiconductor |
| Buffer 2738 | 74LS365, National Semiconductor |

The heart of the seismic exploration system of the present invention is the computers associated with the central recording station illustrated in Figure 2a and the remote telemetry unit illustrated in Figure 2b. Computer 51, which is illustrated in Figure 2a, is a 6800 microprocessor and is the master control computer for the seismic exploration system. The 2900 microprocessor which is illustrated as computer 74 in Figure 2a is a peripheral microprocessor which is utilized primarily in the seismic data acquisition sequences. The 2900 microprocessor is under the control of the 6800 microprocessor which is illustrated as computer 51. Computer 111 which is illustrated in Figure 2b is also a 6800 microprocessor. Computer 111 controls the functions of the remote telemetry unit, illustrated in Figure 2b, but computer 111 is also under the control of computer 51.

Specific references are the *M6800 Microprocessor Programming Manual* (1976) and *Microprocessor Course* (1976) both of which are provided by Motorola Semiconductor.

The invention has been described in terms of a preferred embodiment in which detailed schematics have been set forth. The invention is not limited to these detailed schematics. It is well known that there are many circuit configurations which can be utilized to perform specified functions. This is especially true with regard to many elements in the circuits which may be supplied by a plurality of manufacturers.

While the invention has been described in terms of the presently preferred embodiments, reasonable variations and modifications are possible by those skilled in the art, within the scope of the appended claims.

**Claims**

1. A system for seismic geophysical exploration including a plurality of remote geophone monitoring means (11a—11f), each of which is adapted to receive electrical signals from at least one geophone means (13—19), to convert the electrical signals into digital seismic data and to store them in first data storage means (124, 125), each remote geophone monitoring means including first RF-transmitter/receiver means (104, 110, 106, 127) to transmit the digital seismic data to a central control means (23) having second RF-transmitter/receiver means (59, 68) in response to a transmit command from the central control means (23), the central control means (23) including data checking means (51, 71) to determine if errors are present in the data, characterized in that the central control means (23) is arranged to command the particular geophone monitoring means (11a—11f) to retransmit the data which was found to have been received, at least in part with errors, to correct the errors in the data, and in that there are provided means (74) for utilizing the retransmitted data to replace the erroneous data and second data storage means (2312, 2315) to store the data which, if necessary after correction following repeated retransmission, is substantially error free data.

2. A system in accordance with claim 1 wherein said remote geophone monitoring means (11a—11f) include means for sampling said electrical signals, provided from said at least one geophone means (13—19), and for converting said sampled electrical signals into digital seismic data, said means comprises:

a preamplifier means (135);

means (136—139) for supplying said electrical signals to said preamplifier means (135) to therein amplify said electrical signals;

a notch filter means (151) for filtering undesired frequencies;

an alias filter means (161) for preventing aliasing;

a gain ranging amplifier means (171);

an analog to digital conversion means (141);

means for supplying the thus amplified electrical signals from said preamplifier means (135) through said notch filter means (151) and said alias filter means (161) to said gain ranging amplifier means (171) to therein sample and amplify the samples of said amplified electrical signals to produce an output (175) having a voltage level which is compatible with the required input voltage level of said analog to digital conversion means (141); and

means for supplying the output, from said gain ranging amplifier means (171), to said analog to digital conversion means (141) to therein convert to digital form the electrical signals, supplied from the output of said gain ranging amplifier means (171).

3. A system in accordance with claim 1 wherein said data checking means (71, 51) comprises means for detecting the position of any error in a block of said data and said means for utilizing retransmitted data (74) to correct said data comprises means for replacing any detected error in a block of data from a particular geophone monitoring means (11a—11f) with corresponding retransmitted data.

4. A system in accordance with claim 1 wherein said remote geophone monitoring means (11a—11f) additionally comprises:

means for conducting a self test (111) in response to a test command from said central control means (23); and

means (201, 211, 108) for providing test data, representative of the results of said self test, to said first radio frequency transmitter means (127, 107, 104) to thereby transmit said test data to said central control means (23).

5. A system in accordance with claim 1 or 4 wherein said central control means (23) additionally comprises:

means for displaying data (93); and

means (75, 94) for providing data from said data checking means (51, 71) to said means for displaying data (93).

6. A system in accordance with claim 4 wherein each of said plurality of remote geophone monitoring means (11a—11f) comprises:

means for providing said test data to said first data storage means (124, 125) to therein store said test data;

first radio frequency transmitter means (127) for transmitting the thus stored test data to said central control means (23) in response to a transmit command from said central control means (23);

means for providing said test data from said first data storage means (124, 125) to said first radio frequency transmitter means (127);

first radio frequency receiver means (106) for receiving said test command and said transmit command from said central control means (23);

said central control means (23) including:

means for generating said test command;

means for generating said transmit command;

79

second radio frequency transmitter means (59) for transmitting commands to said plurality of remote geophone monitoring means (11a—11f);

means for providing said test command and said transmit command to said second radio frequency transmitter means (59) to thereby provide said test command and said transmit command to at least one of said plurality of remote geophone monitoring means (11a—11f);

second radio frequency receiver means (68) for receiving said test data from at least one of said plurality of remote geophone monitoring means (93); and

means for providing said test data from said second radio frequency receiver means (68) to said means for displaying data (93) to thereby provide an immediate indication of the operability of at least one of said plurality of remote geophone monitoring means (11a—11f).

7. A system in accordance with claim 4 or 6 wherein said means for performing a self test comprises:

means for determining the temperature (148) of the respective remote geophone monitoring means (11a—11f);

means for determining if power is available (186; 188—199) for the respective remote geophone monitoring means (11a—11f); and

means for determining if said means for sampling electrical signals (171), provided from at least one geophone means (13—19), and for converting the sampled electrical signals into digital seismic data (141) is operational.

8. A system in accordance with claim 6 wherein said means for providing said test data from said second radio frequency receiver means (68) to said means for displaying data (93) comprises:

error detection means (71);

means for supplying said test data from said second radio frequency receiver means (68) to said error detection means (71); and

means for supplying said test data from said error detection means to said means for displaying data (93).

9. A system in accordance with claim 8 wherein said error detection means comprises:

means for detecting the position of any error in a block of information; and

means for replacing any thus detected error in a block of data from a particular remote geophone monitoring means (11a—11f) with corresponding good data, which is provided from said particular remote geophone monitoring means (11a—11f) in the response to a command from said central control means (23) to said particular remote geophone monitoring means to retransmit the information which was found to have been received, at least in part, with errors.

10. A method for performing a seismic geophysical survey wherein a central control means (23) is utilized to control and acquire data from a plurality of remote geophone monitoring means (11a—11f), each of said remote geophone monitoring means (11a—11f) being adapted to receive analog electrical signals from at least one geophone means (13—19), comprising the steps of: activating at least one of said plurality of remote geophone monitoring means (11a—11f); providing electrical signals, representative of seismic waves, from at least one of a plurality of geophone means (13—19) to a respective one of each activated remote geophone monitoring means (11a—11f), said remote geophone monitoring means (11a—11f) performing preselected data processing operations on said analog electrical signals, said preselected data processing operations comprising:

sampling said analog electrical signals;

converting the thus sampled analog electrical signals from analog form to digital form; and

storing the sampled electrical signals, which have been converted to digital form, as seismic data;

generating a first command to transmit data after seismic data has been stored in all of the remote geophone monitoring means (11a—11f) which were activated;

transmitting said first command to transmit data from said central control means (23) through a two-way radio frequency link (64, 104, 110) to a first one of the activated remote geophone monitoring means (11a—11f);

retrieving said seismic data from storage and transmitting said seismic data from said first one of the activated remote geophone monitoring means through said two-way radio frequency link (64, 104, 110) to said central control means (23) in response to said first command to transmit data signal;

detecting any errors in said seismic data provided from the first one of said activated geophone monitoring means (11a—11f);

characterized by the steps of: storing said seismic data at said central control means (23) if the number of errors which are detected in the seismic data provided from the first one of said activated remote geophone monitoring means (11a—11f) is less than a predetermined value;

generating a first retransmit data command if the number of errors present in the seismic data provided from the first one of said activated remote geophone monitoring means is more than said predetermined value;

transmitting said first retransmit command from said central control means (23) through said two-way radio frequency link (68, 104, 110) to the first one of said activated remote geophone monitoring means (11a—11f);

retransmitting the seismic data from said first one of said activated remote geophone monitoring means (11a—11f) through said two-way radio frequency link (64, 104, 110) to said central control means (23) in response to said first retransmit command;

utilizing the retransmitted seismic data from the first one of said activated remote geophone monitoring means to correct errors in the seismic data which was transmitted from the first one of said activated remote geophone monitoring means (11a—11f) in response to said first command to transmit data.

11. A method in accordance with claim 10 additionally comprising the steps of:

(A) generating a second command to transmit data after the seismic data from said first one of said activated remote geophone monitoring means has been stored at said central control means;

(B) transmitting said second command to transmit data from said central control means through said two-way radio frequency link to a second one of said activated remote geophone monitoring means;

(C) retrieving said seismic data from storage and transmitting said seismic data from the second one of said activated remote geophone monitoring means through said two-way radio frequency link to said central control means in response to said second command to transmit data signal;

(D) detecting any errors in said seismic data provided from the second one of said activated remote geophone monitoring means;

(E) storing said seismic data at said central control means if the number of errors which are detected in the seismic data provided from the second one of said of activated remote geophone monitoring means is less than said predetermined value;

(F) generating a second retransmit data command if the number of errors present in the seismic data provided from the second one of said activated remote geophone monitoring means is more than said predetermined value;

(G) transmitting said second retransmit command from said central control means through said two-way radio frequency link to the second one of said activated remote geophone monitoring means;

(H) retransmitting the seismic data from the second one of said activated remote geophone monitoring means through said two-way radio frequency link to said central control means in response to said second retransmit command;

(I) utilizing the retransmitted seismic data from the second one of said activated remote geophone monitoring means to correct errors in the seismic data which was transmitted from the second one of said activated remote geophone monitoring means in response to said first command to transmit data; and

(J) continuing to retrieve data from each one of said activated remote geophone monitoring means in the manner set forth in steps A—H until the seismic data stored in each one of said activated remote geophone monitoring means has been received correctly and stored at said central control means.

12. A method in accordance with claim 10 wherein said step of using the retransmitted seismic data to correct the seismic data transmitted from the first one of said activated remote geophone monitoring means in response to said first command to transmit data comprises using error-free data blocks in the seismic data transmitted from a first one of said activated remote geophone monitoring means in response to said first retransmit command to replace bad data blocks in the seismic data transmitted from a first one of said activated remote geophone monitoring means in response to said first command to transmit data to thereby correct errors in the seismic data provided from the first one of said activated remote geophone monitoring means in response to said first command to transmit data.

13. A method in accordance with claim 10 additionally comprising the steps of:

generating a fire command signal representative of a command to a seismic energy source to impart seismic energy into the earth and representative of a command to a remote geophone monitoring means to activate for seismic data acquisition; and

**0010660**

transmitting said fire command signal from said central control means through said two-way radio frequency link to said seismic energy source and to at least one of said plurality of remote geophone monitoring means, said seismic energy source imparting energy into the earth in response to the reception of said fire command signal to thereby generate seismic waves through the earth, at least one of said plurality of remote geophone monitoring means being activated to receive seismic data from said geophone means in response to the reception of said fire command signal.

14. A method in accordance with claim 10 wherein said method for performing a seismic geophysical survey comprises the additional steps of:

generating a test command representative of a command to perform a self test;

transmitting said test command from said central control means through said two-way radio frequency link to at least one of said plurality of remote geophone monitoring means, at least one of said plurality of remote geophone monitoring means being activated to perform a predetermined self test operation and to store the results of said predetermined self test operation in response to said test command;

means for generating a first command to transmit test data after all of said remote geophone monitoring means, which were activated to perform the self test operation by said test command, have completed the self test operation and have stored the results of the self test;

transmitting said first command to transmit test data from said central control means through said two-way radio frequency link to a first one of said remote geophone monitoring means, which were activated to perform the self test operation;

retrieving the self test data from storage and transmitting the self test data from said first one of said remote geophone monitoring means, which were activated to perform the self test operation, through said two-way radio frequency link to said central control means in response to said first command to transmit test data;

detecting any errors in the test data provided from said first one of said remote geophone monitoring means, which were activated to perform the self test operation;

displaying the test data, if the number of errors which are present in the test data is less than said predetermined value, to provide an immediate indication of the operability of said first one of the remote geophone monitoring means, which were activated to perform the self test operation;

generating a first retransmit command if the number of errors present in the test data provided from said first one of said remote geophone monitoring means which were activated to perform the self test operation is more than said predetermined value;

transmitting said first retransmit command from said central control means through said two-way radio frequency link to said first one of said remote geophone monitoring means, which were activated to perform the self test operation:

retransmitting the test data from said first one of said remote geophone monitoring means, which were activated to perform the self test operation, through said two-way radio frequency link to said central control means; and

using the retransmitted test data to correct the test data which was provided from said first one of said remote geophone monitoring means, which were activated to perform the self test operation, in response to said first command to transmit test data.

15. A method in accordance with claim 14 additionally comprising the steps of:

(A) generating a second command to transmit test data after the test data from said first one of said remote geophone monitoring means, which were activated to perform the self test operation, has been correctly transmitted to said central control means;

(B) transmitting said second command to transmit test data from said central control means through said two-way radio frequency link to a second one of the remote geophone monitoring means which were activated to perform the self test operation;

(C) retrieving said test data from storage and transmitting said test data from said second one of said remote geophone monitoring means, which were activated to perform the self test operation through said two-way radio frequency link to said central control means in response to said second command to transmit test data;

(D) detecting any errors in said test data provided from said second one of said remote geophone monitoring means which were activated to perform the self test operation;

(E) displaying said test data at said central control means if the number of errors which are detected in the test data provided from said second one of said remote geophone monitoring means which were activated to perform the self test operation is less than said predetermined value;

(F) generating a second retransmit data command if the number of errors present in the test seismic data provided from said second one of said remote geophone monitoring means which were activated to perform the self test operation is more than said predetermined value;

(G) transmitting said second retransmit command from said central control means through said two-way radio frequency link to said second one of said remote geophone monitoring means which were activated to perform the self test operation;

(H) retransmitting the test data from said second one of said remote geophone monitoring means, which were activated to perform the self test operation, through said two-way radio frequency link to said central control means in response to said second retransmit command;

(I) utilizing the retransmitted test data from said second one of said remote geophone monitoring means, which were activated to perform the self test operation, to correct errors in the test seismic data which was transmitted from said second one of said remote geophone monitoring means, which were activated to perform the self test operation, in response to said second command to transmit test data; and

(J) continuing to retrieve data from each one of said plurality of activated remote geophone monitoring means in the manner set forth in steps A—I until the test data stored in each one of said plurality of remote geophone monitoring means, which were activated to perform the self test operation, has been received correctly at said central control means.

16. A method in accordance with claim 14 wherein said step of using the retransmitted seismic data to correct the seismic data transmitted from said first one of said remote geophone monitoring means, which were activated to perform the self test operation, in response to said first command to transmit test data comprises using error-free data blocks in the seismic data transmitted from said first one of said remote geophone monitoring means, which were activated to perform the self test operation, in response to said first retransmit command to replace bad data blocks in the seismic data transmitted from said first one of said remote geophone monitoring means, which were activated to perform the self test operation, in response to said first command to transmit test data to thereby correct errors in the seismic data provided from said first one of said remote geophone monitoring means, which were activated to perform the self test operation, in response to said first command to transmit data.

17. A method in accordance with claim 14 wherein said predetermined self test operation comprises:

determining the temperature of said remote geophone monitoring means;
determining if power is available to said remote geophone monitoring means; and
determining if said means for performing said preselected data processing operation is operational.

## Patentansprüche

1. System für die seismisch geophysikalische Exploration mit einer Vielzahl von entfernten geophonen Aufzeichnungseinrichtungen (11a—11f) wobei jede elektrische Signale von mindestens einer geophonen Einrichtung (13—19) empfängt und die elektrischen Signale in digitale seismische Daten umsetzt und in ersten Datenspeichern (124, 125) speichert, wobei die geophonen Aufzeichnungseinrichtungen erste RF-Sender/Empfängereinrichtungen (104, 110, 106, 127) für die Übertragung der digitalen seismischen Daten zu einer zentralen Steuereinrichtung (23) umfassen, welche zweite RF-Sender/Empfängereinrichtungen (59, 68) enthalten, die auf ein Sendekommando von der zentralen Steuereinrichtung (23) hin erfolgt, wobei die zentrale Steuereinrichtung (23) Daten-überprüfungseinrichtungen (51, 71) zur Feststellung von Fehlern in den Daten umfaßt, dadurch gekennzeichnet, daß die zentrale Steuereinrichtung (23) bestimmte geophone Aufzeichnungseinrichtungen (11a—11f) veranlaßt, erneut Daten, welche auch nur teilweise mit Fehlern empfangen wurden, erneut zu übertragen um die Fehler zu korrigieren, und daß Einrichtungen (74) für das Ersetzen der erneut übertragenen Daten gegen die fehlerhaften Daten vorhanden sind, und zweite Datenspeichereinrichtungen (2312, 2315) vorhanden sind, um die Daten zu speichern, die wenn nötig nach einer mehrfachen erneuten Übertragung und Korrektur als substantiell fehlerfreie Daten vorhanden sind.

2. System nach Anspruch 1, wobei dei geophonen Aufzeichnungseinrichtungen (11a—11f) Abtasteinrichtungen für die elektrischen Signale umfassen, welche von mindestens einer der geophonen Einrichtungen (13—19) stammen, und zum Umsetzen der abgetasteten elektrischen Daten in digitale seismische Daten wobei die Einrichtungen umfassen:

Vorverstärkereinrichtungen (135);
Einrichtungen (136—139) für die Zuführung der elektrischen Signale zu den Vorverstärkereinrichtungen (135) zum verstärken der elektrischen Signale;
einen Rasterfilter (151) zum Ausfiltern unerwünschter Frequenzen;
Aliasfiltereinrichtungen (161) zur Vermeidung unerwünschter Nebenerscheinungen des Abtastens;
Gewinnbereich-Verstärkereinrichtungen (171);
Analog/Digitalumwandlereinrichtungen (141);

83

Einrichtungen für die Zuführung der verstärkten elektrischen Signale von den Vorverstärkereinrichtungen (135) durch die Rasterfiltereinrichtungen (151) und die Aliasfiltereinrichtungen (161) zu den Gewinnbereichverstärkereinrichtungen (171) zur Abtastung und Verstärkung der Abtastungen der verstärkten elektrischen Signale, zum Erzeugen eines Ausgangs (175) welcher einen Spannungspegel hat, welcher mit dem benötigten Eingangsspannungspegel der Analog/Digitalumwandlereinrichtungen (141) kompatibel ist; und Einrichtungen für die Zuführung des Ausgangs der Gewinnbereichsverstärkereinrichtungen (171) zu den Analog/Digitalumwandlereinrichtungen (141) zur Umwandlung in digitale Form der elektrischen Signale, welche vom Ausgang der Gewinnbereichsverstärkereinrichtungen (17)1 bereitgestellt werden.

3. System nach Anspruch 1, wobei die Datenüberprüfungseinrichtung (71, 51) Einrichtungen für die Detektion der Position irgendeines Fehlers in einem Block der Daten umfaßt sowie Einrichtungen für die Benutzung der wiederholt übertragenen Daten (74) zur Korrektur dieser Daten, wobei Einrichtungen umfaßt sind zum Ersatz jedes aufgespürten Fehlers in einem Block von Daten aus bestimmten geophonen Aufzeichnungseinrichtungen (11a—11f) mit entsprechenden erneut übertragenen Daten.

4. System nach Anspruch 1 wobei die geophonen Aufzeichnungseinrichtungen (11a—11f) weiter umfassen:

Einrichtungen zum Ausführen von Selbsttests (111) auf einen Testbefehl von der zentralen Steuereinrichtung (23) hin; und

Einrichtungen (201, 211, 108) zum Bereitstellen von Testdaten, welche repräsentativ sind für die Ergebnisse des Selbsttests, zu den ersten Radiofrequenzübertragungseinrichtungen (127, 197, 104) zum Übertragen der Testdaten zu der zentralen Steuerungseinrichtung (23).

5. System nach Anspruch 1 oder 4, wobei die zentrale Steuereinrichtung (23) weiterhin umfaßt:

Einrichtung für die Darstellung von Daten (93); und

Einrichtungen (75, 94) zum Bereitstellen der Daten von den Datenprüfeinrichtungen (51, 71) zu den Datendarstellungseinrichtungen (93).

6. System nach Anspruch 4, wobei jede aus der Vielzahl der entfernten geophonen Aufzeichnungseinrichtungen (11a—11f) umfaßt:

Einrichtungen zum Zuführen der Testdaten zu den ersten Datenspeichereinrichtungen (124, 125) zum Speichern der Testdaten;

erste Radiofrequenzübertragungseinrichtungen (127) zum Übertragen der gespeicherten Testdaten zu der zentralen Steuereinrichtung (23) auf einen Übertragungsbefehl von der zentralen Steuerungseinrichtung (23) hin;

Einrichtungen zum Zuführen der Testdaten von den ersten Datenspeichereinrichtungen (124, 125) zu den ersten Radiofrequenzübertragungseinrichtungen (127);

erste Radiofrequenzempfängereinrichtungen (106) zum Empfang des Testbefehls und des Übertragungsbefehls von der zentralen Steuereinrichtung (23);

wobei die zentrale steuereinrichtung (23) Einrichtungen für die Erzeugung des Testbefehls umfaßt:

Einrichtungen für die Erzeugung des Übertragungsbefehls;

zweite Radiofrequenzübertragungseinrichtungen (59) zur Übertragung von Befehlen zu der Vielzahl der entfernten geophonen Aufzeichnungseinrichtungen (11a—11f);

Einrichtungen zum Zuführen des Testbefehls und des Übertragungsbefehls zu den zweiten Radiofrequenzübertragungseinrichtungen (59) zum Bereitstellen des Testbefehls und des Übertragungsbefehls zu mindestens einer aus der Vielzahl der entfernten geophonen Aufzeichnungseinrichtungen (11a—11f);

zweite Radiofrequenzempfängereinrichtungen (68) zum Empfang der Testdaten von mindestens einer der aus der Vielzahl der entfernten geophonen Aufzeichnungseinrichtungen (93); und

Einrichtungen zum Zuführen der Testdaten von den zweiten Radiofrequenzempfängereinrichtungen (68) zu den Einrichtungen für die Anzeige von Daten (93) um eine unmittelbare Anzeige für die Arbeitbereitschaft zumindest einer aus der Vielzahl der entfernten geophonen Aufzeichnungseinrichtungen (11a—11f) bereitzustellen.

5. Einrichtung nach Anspruch 4 oder 6, wobei die Einrichtungen zum Ausführen eines Selbsttests weiter umfassen:

Einrichtungen zum Feststellen der Temperatur (148) der entsprechenden entfernten geophonen Aufzeichnungseinrichtungen (11a—11f);

Einrichtunge zum Feststellen, ob Energie vorhanden ist (186; 188—199) für die entsprechende entfernte geophone Aufzeichnungseinrichtung (11a—11f); und

**0010660**

Einrichtungen zum Feststellen, ob die Einrichtungen zum Abtasten elektrischer Signale (171), bereitgestellt von mindestens einer der geophonen Einrichtungen (13—19) und zum Umwandeln der abgetasteten elektrischen Signale in digitale seismische Daten (141), einsatzbereit sind.

8. System nach Anspruch 6, wobei die Einrichtungen zum Bereitstellen der Testdaten von den zweiten Radiofrequenzempfängereinrichtungen (68) zu den Einrichtungen zur Darstellung von Daten (93) umfassen:

Fehlerdetektionseinrichtungen (71);
Einrichtungen zum Zuführen der Testdaten von den zweiten Rationfrequenzempfängereinrichtungen (68) zu den Fehlderdetektionseinrichtungen (71); und
Einrichtungen zum Zuführen der Testdaten von den Fehlerdetektionseinrichtungen zu den Einrichtungen zur Darstellung von Daten (93).

9. System nach Anspruch 8, wobei die Fehlerdetektionseinrichtungen umfassen:

Einrichtungen für die Detektionen der Position jeden Fehlers in einem Block von Informationen; und
Einrichtungen zum Ersetzen jedes detektierten Fehlers in einen Block von Daten von einer bestimmten entfernten geophonen Aufzeichnungseinrichtung (11a—11f) mit entsprechenden guten Daten, welche bereitgestellt werden von der bestimmten entfernten geophonen Aufzeichnungseinrichtung (11a—11f) auf einen Befehl von der zentralen Steuereinrichtung (23) hin zu der bestimmten entfernten geophonen Aufzeichnungseinrichtung für die erneute Übertragung der Information, welche zumindest teilweise mit Fehlern als Übertragung erkannte worden ist.

10. Verfahren zum Ausführen einer seismischen geophysikalischen Beobachtung, wobei eine zentrale Steuereinrichtung (23) zur Steuerung und zum Erwerb von Daten von einer Vielzahl von entfernten geophonen Aufzeichnungseinrichtungen (11a—11f) dient, wobei jede der entfernten geophonen Aufzeichnungseinrichtungen (11a—11f) dazu dient, analoge elektrische Signale von mindestens einer geophonen Einrichtung (13, 19) zu empfangen, mit folgenden Schritten:

Aktivierung von zumindest einer aus der Vielzahl der entfernten geophonen Aufzeichnungseinrichtungen (11a—11f);
Bereitstellung elektrischer Signale, welche repräsentativ sind für seismische Wellen von zumindest einer der Vielzahl geophoner Einrichtungen (13—19) zu einer entsprechenden, der aktivierten entfernten geophonen Aufzeichnungseinrichtungen (11a—11f), wobei die entfernten geophonen Aufzeichnungseinrichtungen (11a—11f) vorausgewählte Datenverarbeitungsoperationen mit den analogen elektrischen Signalen ausführen, wobei die vorausgewählten Datenverarbeitungsoperationen umfassen:
Abtastung der analogen elektrischen Signale;
Umwandlung der abgetasteten analogen elektrischen Signale von analoger in digitale Form; und
Speicherung der abgetasteten elektrischen Signale, welche in digitale Form umgewandelt worden sind, als seismische Daten;
Erzeugung eines ersten Befehls zum Übertragen von Daten nachdem seismische Daten in alle der entfernten geophonen Aufzeichnungseinrichtungen (11a—11f), welche aktiviert wurden, gespeichert worden sind;
Übertragung ersten Befehls für die Übertragung von Daten von der zentralen Steuereinrichtung (23) durch einen Zwei-Weg Radiofrequenzverbindung (64, 104, 110) zu einer ersten der aktivierten entfernten geophonen Aufzeichnungseinrichtung (11a—11f);
Entnahme der seismischen Daten vom Speicher und Übertragung der seismischen Daten vom der ersten der aktivierten entfernten geophonen Aufzeichnungseinrichtungen durch die Zwei-Wege Radiofrequenzverbindung (64, 104, 110) zu der zentralen Steuereinrichtung (23) auf den ersten Befehl zur Übertragung von Datensignalen hin;
Aufspüren jeden Fehlers in den seismischen Daten welche von der ersten der aktivierten geophonen Aufzeichnungseinrichtung (11a—11f) bereitgestellt wurden;

gekennzeichnet durch die Schritte:

Speicherung der seismischen Daten in der zentralen Steuereinrichtung (23) wenn die Anzahl der Fehler welche in den seismischen Daten detektiert wurden, bereitgestellt von der ersten der aktivierten entfernten geophonen Aufzeichnungseinrichtungen (11a—11f), geringer ist als ein vorgegebener Wert;
Erzeugung eines ersten Befehlssignals zum erneuten Übertragen wenn die Anzahl der Fehler in den seismischen Daten bereitgestellt von der ersten der aktivierten entfernten geophonen Aufzeichnungseinrichtungen einen vorbestimmten Wert überschreitet;

**0 010 660**

Übertragung des ersten Befehls zur erneuten Übertragung von der zentralen Steuereinrichtung (23) durch die Zwei-Wege Radiofrequenzverbindung (68, 104, 110) zu der ersten aktivierten entfernten geophonen Aufzeichnungseinrichtung (11a—11f);

erneute Übertragung der seismische Daten von der ersten der aktivierten entfernten geophonen Übertragungseinrichtung (11a—11f) durch die Zwei-Wege Radiofrequenzverbindung (64, 104, 110) zu der zentralen Steuereinrichtung (23) auf den Erstbefehl zur Übertragung hin, Verwendung der erneuten übertragenen seismischen Daten von der ersten der aktivierten entfernten geophonen Einrichtungen zur Korrektur von Fehlern in den seismischen Daten welche von der ersten aktivierten entfernten geophonen Aufzeichnungseinrichtung (11a—11f) auf den ersten Befehl zur Übertragung von Daten übertragen worden sind.

11. Verfahren nach Anspruch 10 mit den weiteren Schritten:

(A) Erzeugung eines zweiten Befehls für die Übertragung von Daten nachdem die seismischen Daten von der ersten der aktivierten entfernten geophonen Aufzeichnungseinrichtung in der zentralen Steuereinrichtung gespeichert worden sind;

(B) Übertragung des zweiten Befehls zum Übertragen von Daten von der zentralen Steuereinrichtung über die Zwei-Wege Radiofrequenzverbindung zu einer zweiten de aktivierten entfernten geophonene Aufzeichnungseinrichtungen;

(C) Entnahme der seismischen Daten vom Speicher und Übertragung der seismischen Daten von der zweiten der aktivierten entfernten geophonen Aufzeichnungseinrichtungen über die Zwei-Wege Radiofrequenzverbindung zu der zentralen Steuereinrichtung auf den zweiten Befehl zur Übertragung von Daten hin;

(D) Aufspüren jeden Fehlers in den seismischen Daten von der zweiten der aktivierten entfernten Aufzeichnungseinrichtungen;

(E) Speicherung der seismischen Daten in der zentralen Steuereinrichtung wenn die Anzahl der in den seismischen Daten aufgespürten Fehler aus der zweiten aktivierten entfernten geophonen Aufzeichnungseinrichtung geringer als ein vorbestimmter Wert ist;

(F) Erzeugung eines zweiten Befehls zur erneuten Übertragung von Daten wenn die Anzahl der Fehler in den seismischen Daten von der zweiten der aktivierten entfernten geophonen Aufzeichnungseinrichtung einen vorbestimmten Wert überschreitet;

(G) Übertragung des zweiten Befehls zur erneuten Übertragung von der zentralen Steuereinrichtung über die Zwei-Wege Radiofrequenzverbindung zu der zweiten der entfernten aktivierten geophonen Aufzeichnungseinrichtungen;

(H) erneute Übertragung der seismischen Daten von der zweiten aktivierten entfernten geophonen Aufzeichnungseinrichtung über die Zwei-Wege Radiofrequenzverbindung zu der zentralen Steuereinrichtung auf den zweiten Befehl zur erneuten Übertragung hin;

(I) Verwendung der erneut übertragenen seismischen Daten von der zweiten der aktivierten entfernten geophonen Aufzeichnungseinrichtungen zur Fehlerkorrektur in den seismischen Daten, welche von der zweiten der aktivierten entfernten geophonenen Aufzeichnungseinrichtung auf den ersten Befehl zur Übertragung von Daten hin übertragen worden sind; und

(J) Fortsetzung der Entnahme von Daten von jeder der aktivierten entfernten geophonen Aufzeichnungseinrichtung in der Weise wie in den Schritten A—H beschrieben solange bis die seismischen Daten, welche in jeder der aktivierten entfernten geophonen Aufzeichnungseinrichtungen gespeichert sind, korrekt empfangen und in der zentralen Steuereinrichtung

12. Verfahren nach Anspruch 10, wobei der Schritt der Benutzung erneut übertragener seismischer Daten zur Korrektur der von der ersten der aktivierten entfernten geophonenen Aufzeichnungseinrichtungen übertragenen seismischen Daten auf einen ersten Befehl zur Übertragung von Daten hin, umfaßt, die Verwendung von fehlerfreien Datenblöcken in den seismischen Daten welche von einer ersten der aktivierten entfernten geophonen Aufzeichnungseinrichtung auf einen ersten Befehl zur erneuten Übertragung von Daten hin zum ersetzen von schlechten Datenblöcken in den seismischen Daten welche von einer ersten der aktivierten entfernten geophonen Aufzeichnungseinrichtungen übertragen wurden auf einen ersten Befehl zur Übertragung von Daten hin um damit Fehler in den seismischen Daten zu korrigieren, welche von der ersten der aktivierten geophonen Aufzeichnungseinrichtung auf einen ersten Befehl zur Übertragung von Daten hin bereitgestellt worden sind.

13. Verfahren nach Anspruch 10 mit den weiteren Schritten Erzeugung eines ersten Feuerbefehlsignals entsprechend eines Befehls an eine seismische Energiequelle um seismische Energie in die Erde einzuführen sowie repräsentativ ist für einen Befehl an eine entfernte geophone Aufzeichnungseinrichtung zur Aktivierung der Aufnahme seismischer Daten; und Übertragung des Feuerbefehlsignals von der zentralen Steuereinrichtung durch die Zwei-Wege Radiofrequenzverbindung zu der seismischen Energiequelle und zu mindestens einer aus der Vielzahl der entfernten geophonen Aufzeichnungseinrichtungen, wobei die seismische Energiequelle Energie in die Erde auf den Empfang des Feuerbefehlsignals hin abgibt, so daß seismische Energien durch die Erde gehen und daß mindestens eine aus der Vielzahl der entfernten geophonen Aufzeichnungseinrichtungen aktiviert ist um seismische Daten von den geophonen Einrichtungen auf den Empfang des Feuerbefehlsignals hin aufnehmen zu können.

14. Verfahren nach Anspruch 10, wobei das Verfahren zur Durchführung einer seismischen geophysikalischen Beobachtung die weiteren Schritte umfaßt:

Erzeugung eines Testbefehls repräsentativ für einen Befehl zur Ausführung eines Selbsttests;

Übertragung eines Testbefehls von der zentralen Steuereinrichtung durch die Zwei-Wege Radiofrequenzverbindung zu mindestens einer aus der Vielzahl der entfernten geophonen Aufzeichnungseinrichtungen, wobei mindestens eine aus der Vielzahl der entfernten geophonen Aufzeichnungseinrichtungen aktiviert wird um einen vorbestimmten Selbsttest auszuführen und die Ergebnisse des vorbestimmten Selbsttestes auf den Testbefehl hin zu speichern;

Einrichtungen zur Erzeugung eines ersten Befehls zur Übertragung von Testdaten nachdem alle der entfernten geophonen Aufzeichnungseinrichtungen, welche aktiviert wurden durch einen Testbefehl zur Ausführung des Selbsttestes, den Selbsttest ausgeführt und die Ergebnisse des Selbsttestes abgespeichert haben;

Übertragung des Befehls zur Übertragung von Testdaten von der zentralen Steuereinrichtung durch die Zwei-Wege Radiofrequenzverbindung zu einer ersten der entfernten geophonen Aufzeichnungseinrichtungen, welche zur Ausführung des Selbsttestes aktiviert wurde;

Entnahme der Selbsttestdaten vom Speicher und Übertragung der Selbsttestdaten von der ersten der entfernten geophonen Aufzeichnungseinrichtungen welche zur Ausführung des Selbsttestes aktiviert worden war, über die Zwei-Wege Radiofrequenzverbindung zu der zentralen Steuereinrichtung auf einen ersten Befehl zur Übertragung von Testdaten hin;

Aufspüren jeden Fehlers in den Testdaten von der ersten der entfernten geophonen Aufzeichnungseinrichtungen, welche zur Ausführung des Selbsttestes aktiviert worden waren;

Anzeige der Testdaten für den Fall, daß die Anzahl der Fehler, welche in den Testdaten vorhanden sind geringer als ein vorbestimmter Wert ist, so daß eine unmittelbare Anzeige der Einsatzfähigkeit der ersten der entfernten geophonen Aufzeichnungseinrichtungen erfolgt, welche zur Ausführung des Selbsttests aktiviert wurden;

Erzeugung eines ersten Befehls zur erneuten Übertragung, für den Fall, daß die Anzahl der Fehler in den Testdaten von der ersten entfernten geophonen Aufzeichnungseinrichtung, welche zur Ausführung des Selbsttestes aktiviert wurde, größer als ein vorbestimmter Wert ist;

Übertragung des ersten Befehls zur erneuten Übertragung von der zentralen Steuereinrichtung über die Zwei-Wege Radiofrequenzverbindung zu der ersten der entfernten geophonen Aufzeichnungseinrichtung welche zur Ausführung des Selbsttests aktiviert wurde;

erneute Übertragung der Testdaten von der ersten der entfernten geophonen Aufzeichnungseinrichtung, welche zur Ausführung des Selbsttests aktiviert wurde, über die Zwei-Wege Radiofrequenzverbindung zu der zentralen Steuereinrichtung; und

Verwendung der erneut übertragenen Testdaten zur Korrektur der Testdaten welche von der ersten der entfernten geophonen Aufzeichnungseinrichtung bereitgestellt worden sind, welche zur Ausführung des Selbsttests auf einen ersten Befehl zur Übertragung von Daten hin aktiviert wurde.

15. Verfahren nach Anspruch 14 mit den weiteren Schritten:

(A) Erzeugung eines zweiten Befehls zur Übertragung von Testdaten nachdem die Testdaten von der ersten der entfernten geophonen Aufzeichnungseinrichtung, welche zur Ausführung des Selbsttests aktiviert wurde, korrekt zu der zentralen Steuereinrichtung übertragen worden sind;

(B) Übertragung des zweiten Befehls zur Übertragung von Testdaten von der zentralen Steuereinrichtung über die Zwei-Wege Radiofrequenzverbindung zu einer zweiten der entfernten geophonen Aufzeichnungseinrichtungen welche zur Ausführung des Selbsttests aktiviert wurde;

(C) Entnahme der Testdaten vom Speicher und Übertragung der Testdaten von der zweiten der entfernten geophonen Aufzeichnungseinrichtung, welche zur Ausführung des Selbsttestes über die Zwei-Wege Radiofrequenz aktiviert worden ist, zu der zentralen Steuereinrichtung auf einen zweiten Befehl zur Übertragung von Testdaten hin;

(D) Aufspüren jeden Fehlers in den Testdaten welche von der zweiten der entfernten geophonen Aufzeichnungseinrichtung bereitgestellt worden sind, welche zur Ausführung des Selbsttests aktiviert wurde;

(E) Anzeige der Testdaten an der zentralen Steuereinrichtung wenn die Anzahl der Fehler welche in den Testdaten aufgespürt worden sind, welche von der zweiten der entfernten geophonen Aufzeichnungseinrichtung bereitgestellt worden sind, welche zur Ausführung des Selbsttestes aktiviert wurde geringer ist als ein vorbestimmter Wert;

(F) Erzeugung eines zweiten Befehls zur erneuten Übertragung von Daten für den Fall daß die Anzahl der Fehler in den seismischen Testdaten, welche von der zweiten der entfernten geophonen Aufzeichnungseinrichtungen welche zur Ausführung des Selbsttestes aktiviert wurde bereitgestellt worden sind, für den Fall, daß ein vorbestimmter Wert überschritten wird;

(G) Übertragung des zweiten Befehls zur erneuten Übertragung von der zentralen Steuereinrichtung über die Zwei-Wege Radiofrequenzverbindung zur der zweiten der entfernten geophonen Aufzeichnungseinrichtung, welche zur Ausführung des Selbsttests aktiviert wurde;

(H) erneute Übertragung der Testdaten von der zweiten der entfernten geophonen Aufzeichnungseinrichtung welche zur Ausführung des Selbsttests aktiviert wurden, über die Zwei-Wege Radiofrequenzverbindung zu der zentralen Steuereinrichtung auf den zweiten Befehl zur erneuten Übertragung hin;

(I) Verwendung der erneut übertragenen Testdaten von der zweiten der entfernten geophonen Aufzeichnungseinrichtungen, welche zur Durchführung des Selbsttests aktiviert wurden, um Fehler in den seismischen Testdaten welche von der zweiten der entfernten geophonen Aufzeichnungseinrichtungen, welche zur Durchführung des Selbsttestes aktiviert wurden, um Fehler in den seismischen Testdaten welche von der zweiten der entfernten geophonen Aufzeichnungseinrichtungen übertragen worden sind auf den zweiten Befehl zum Übertragen von Testdaten hin zu korrigieren; und

(J) Fortfahren mit der Entnahme von jeder aus der Vielzahl der aktivierten entfernten geophonen Aufzeichnungseinrichtungen in der Weise der Schritte A—I so lange, bis die Testdaten, welche in der Vielzahl der entfernten geophonen Aufzeichnungseinrichtung, welche für die Ausführung des Selbsttests aktiviert wurden in der zentralen Steuereinrichtung korrekt empfangen worden sind.

16. Verfahren nach Anspruch 14 wobei der Schritt der Verwendung der erneut übertragenen seismischen Daten zur Korrektur der seismischen Daten welche von der ersten der entfernten geophonen Aufzeichnungseinrichtung übertragen worden sind, welche auf einen ersten Befehl zur Übertragung von Testdaten zur Ausführung eines Selbsttests aktiviert worden sind, weiterhin umfaßt die Verwendung von fehlerfreien Datenblöcken in den seismischen Daten, welche von der ersten entfernten geophonen Aufzeichnungseinrichtung übertragen worden sind, welche zur Durchführung des Selbsttests aktiviert wurde, auf den ersten Befehl zur erneuten Übertragung hin, um schlechte Datenblöcke in den seismischen Daten zu ersetzen, welche von der ersten der entfernten geophonen Aufzeichnungseinrichtung übertragen worden sind, welche zur Durchführung des Selbsttests aktiviert wurde, auf einen ersten Befehl hin zur Übertragung von Testdaten, so daß Fehler in den seismischen Daten korrigiert werden, welche von der ersten der entfernten geophonen Aufzeichnungseinrichtung bereitgestellt worden sind, welche zur Ausführung des Selbsttests aktiviert wurde, auf einen ersten Befehl zur Übertragung von Daten hin.

17. Verfahren nach Anspruch 14, wobei der vorbestimmte Selbsttest umfaßt:

Bestimmung der Temperatur der entfernten geophonen Aufzeichnungseinrichtungen; Bestimmung ob Energie in den entfernten geophonen Aufzeichnungseinrichtungen vorhanden ist; und
Bestimmung ob die Einrichtungen zur Ausführung der vorbestimmten Datenverarbeitung einsatzbereit sind.

## Revendications

1. Système d'exploration géophysique sismique comprenant une pluralité de moyens (11a—11f) de contrôle de géophone situés à distance, chacun d'eux étant destiné à recevoir des signaux électriques provenant d'au moins un moyen de géophone (13—19), pour transformer les signaux électriques en données sismiques numériques et les stocker dans un premier moyen de stockage de donnée (124, 125), chaque moyen de contrôle de géophone situé à distance comportant un premier moyen d'émetteur/récepteur HF (104, 110, 106, 127), pour transmettre la donnée sismique numérique à un moyen central de commande (23) ayant un second moyen d'émetteur/récepteur HF (59, 68) en réponse à un ordre d'émission provenant du moyen central de commande (23), le moyen central de commande (23) comprenant un moyen de vérification de donnée (51, 71) afin de déterminer si des erreurs sont présentes dans la donnée, caractérisé en ce que le moyen central de commande (23) est agencé pour donner l'ordre au moyen particulier de contrôle de géophone (11a—11f) de retransmettre la donnée dont il a été trouvé qu'elle avait été reçue, au moins en partie avec des erreurs, de corriger les erreurs dans la donnée, et en ce qu'on a prévu un moyen (74) pour utiliser la donnée retransmise afin de remplacer la donnée erronée et un second moyen de stockage de donnée (2312, 2315) pour stocker la donnée qui, si nécessaire après correction suivant une retransmission répétée, est une donnée sensiblement exempte d'erreurs.

2. Système selon la revendication 1, où les moyens (11a—11f) de contrôle de géophone situés à distance comprennent un moyen pour échantillonner les signaux électriques, fournis par au moins ledit moyen de géophone (13—19), et convertir les signaux électriques échantillonnés en donnée sismique numérique, ce moyen comprenant:

**0010660**

un moyen de préamplificateur (135);

un moyen (136—139) pour fournir les signaux électriques au moyen de préamplificateur (135) pour que les signaux électriques y soient amplifiés;

un moyen de filtre éliminateur de bande à flancs raides (151) pour filtrer les fréquences indésirables;

un moyen de filtre de pseudonyme (161) afin d'éviter les pseudonymes;

un moyen amplificateur de gamme de gain (171);

un moyen de conversion analogique/numérique (141);

un moyen pour fournir les signaux électriques ainsi amplifiés provenant du moyen de préamplificateur (135) par l'intermédiaire du moyen de filtre éliminateur de bande à flancs raides (151) et du moyen de filtre de pseudonyme (161) au moyen d'amplificateur de gamme de gain (171) pour y échantillonner et amplifier les échantillons des signaux électriques amplifiés afin de produire une sortie (175) ayant un niveau de tension qui est compatible avec le niveau de tension d'entrée requis du moyen de conversion analogique/numérique (141); et

un moyen pour fournir la sortie, provenant du moyen amplificateur de gamme de gain (171), au moyen de conversion analogique/numérique (141) pour y convertir les signaux électriques sous forme numérique, fournis par la sortie du moyen amplificateur de gamme de gain (171).

3. Système selon la revendication 1, où le moyen de vérification de donnée (71, 51) comprend un moyen pour détecter la position de toute erreur dans un bloc de ladite donnée et le moyen pour utiliser la donnée retransmise (74) afin de corriger ladite donnée comprend un moyen pour remplacer toute erreur détectée dans un bloc de donnée provenant d'un moyen (11a—11f) de contrôle de géophone particulier par une donnée retransmise correspondante.

4. Système selon la revendication 1, où les moyens (11a—11f) de contrôle de géophone situés à distance comprennent en outre:

un moyen pour conduire un auto-test (111) en réponse à un ordre de test provenant du moyen central de commande (23); et

un moyen (201, 211, 108) pour fournir une donnée de test, représentative des résultats de l'autotest, au premier moyen d'émetteur à haute fréquence (127, 107, 104) afin de transmettre ainsi la donnée de test au moyen central de commande (23).

5. Système selon la revendication 1 ou 4, où le moyen central de commande (23) comprend en outre:

un moyen pour afficher des données (93); et

un moyen (75, 94) pour fournir des données à partir du moyen de vérification de donnée (51, 71) au moyen pour afficher des données (93).

6. Système selon la revendication 4, où chaque moyen de la pluralité de moyens (11a—11f) de contrôle de géophone situés à distance comprend:

un moyen pour fournir la donnée de test au premier moyen de stockage de donnée (124, 125) pour y stocker la donnée de test;

un premier moyen d'émetteur à haute fréquence (127) pour transmettre la donnée de test ainsi stockée au moyen central de commande (23) en réponse à un ordre de transmission provenant du moyen central de commande (23);

un moyen pour fournir la donnée de test du premier moyen de stockage de donnée (124, 125) au premier moyen d'émetteur à haute fréquence (127);

un premier moyen de récepteur à haute fréquence (106) pour recevoir l'ordre de test et l'ordre de transmission provenant du moyen central de commande (23); le moyen central de commande comportant:

    —un moyen pour produire l'ordre de test;

    —un moyen pour produire l'ordre de transmission;

un second moyen d'émetteur à haute fréquence (59) pour transmettre des ordres à la pluralité de moyens (11a—11f) de contrôle de géophone situés à distance;

un moyen pour fournir l'ordre de test et l'ordre de transmission au second moyen d'émetteur à haute fréquence (59) afin de fournir ainsi l'ordre de test et l'ordre de transmission à au moins un moyen de la pluralité de moyens (11a—11f) de contrôle de géophone situés à distance;

un second moyen de récepteur à haute fréquence (68) pour recevoir la donnée de test provenant d'au moins un moyen de la pluralité de moyens de contrôle de géophone situés à distance; et

un moyen pour fournir la donnée de test du second moyen de récepteur à haute fréquence (68) au moyen d'affichage de données (93) afin de fournir ainsi une indication immédiate de l'état de fonctionnement d'au moins un moyen de la pluralité de moyens (11a—11f) de contrôle de géophone situés à distance.

**0 010 660**

7. Système selon la revendication 4 ou 6, où le moyen pour effectuer un auto-test comprend:

un moyen pour déterminer la température (148) du moyen (11a—11f) respectif de contrôle de géophone situé à distance;
un moyen pour déterminer si de l'énergie d'alimentation est disponible (186; 188—199) pour le moyen (11a—11f) respectif de contrôle de géophone situé à distance; et
un moyen pour déterminer si le moyen pour échantillonner des signaux électriques (171), fournis à partir d'au moins un moyen de géophone (13—19), et pour convertir les signaux électriques échantillonnés en donnée sismique numérique (141) est en état de fonctionnement.

8. Système selon la revendication 6, où le moyen pour fournir la donnée de test à partir du second moyen de récepteur à haute fréquence (68) au moyen d'affichage de données (93) comprend:

un moyen de détection d'erreur (71);
un moyen pour fournir la donnée de test du second moyen de récepteur à haute fréquence (68) au moyen de détection d'erreur (71); et
un moyen pour fournir la donnée de test du moyen de détection d'erreur au moyen d'affichage de données (93).

9. Système selon la revendication 8, où le moyen de détection d'erreur comprend:

un moyen pour détecter la position d'une erreur quelconque dans un bloc d'information; et
un moyen npour remplacer une erreur ainsi détectée dans un bloc de donnée provenant d'un moyen (11a—11f) particulier de contrôle de géophone situé à distance par une donnée bonne correspondante, qui est fournie à partir du moyen (11a—11f) particulier de contrôle de géophone situé à distance en réponse à un ordre provenant du moyen central de commande (23) au moyen particulier de contrôle de géophone situé à distance de retransmettre l'information qui a été trouvée comme ayant été reçue, au moins en partie, avec des erreurs.

10. Méthode d'exécution d'un levé géophysique sismique, où un moyen central de commande (23) est utilisé pour commander et acquérir des données en provenance d'une pluralité de moyens (11a—11f) de contrôle de géophone situés à distance, chaque moyen (11a—11f) de contrôle de géophone situé à distance étant destiné à recevoir des signaux électriques analogiques en provenance d'au moins un moyen de géophone (13—19), comprenant les étapes suivantes:

l'activation d'au moins un moyen de la pluralité de moyens (11a—11f) de contrôle de géophone situés à distance;
la fourniture de signaux électriques, représentatifs d'ondes sismiques, à partir d'au moins un moyen d'une pluralité de moyens de géophone (13—19), à un moyen respectif de chaque moyen (11a—11f) de contrôle de géophone situé à distance activé, ledit moyen (11a—11f) de contrôle de géophone situé à distance exécutant des opérations de traitement de donnée présélectionnées sur les signaux électriques analogiques, ces opérations de traitement de données présélectionnées comprenant:
—l'échantillonnage des signaux électriques analogiques;
—la conversion des signaux électriques analogiques ainsi échantillonnés, de la forme analogique à la forme numérique; et
—le stockage des signaux électriques échantillonnés, qui ont été convertis en forme numérique, comme donnée sismique;
la production d'un premier ordre de transmission de donnée après stockage de la donnée sismique dans tous les moyens (11a—11f) de contrôle de géophone situés à distance qui ont été activés;
la transmission du premier ordre de transmission de donnée du moyen central de commande (23) par l'intermédiaire d'une liaison bidirectionnelle à haute fréquence (64, 104, 110) à un premier moyen de moyens activés (11a—11f) de contrôle de géophone situés à distance;
la sortie de stockage de la donnée sismique et sa transmission du premier moyen des moyens activés de contrôle de géophone situés à distance par l'intermédiaire de la liaison bidirectionnelle à haute fréquence (64, 104, 110) au moyen central de commande (23) en réponse au premier ordre de transmission de signal de donnée;
la détection des erreurs dans la donnée sismique fournie à partir du premier moyen des moyens activés (11a—11f) de contrôle de géophone situés à distance;

caractérisée par les étapes suivantes:

le stockage de la donnée sismique au moyen central de commande (23) si le nombre d'erreurs qui ont été détectées dans la donnée sismique fournie à partir du premier moyen des moyens activés (11a—11f) de contrôle de géophone situés à distance est inférieur à une valeur prédéterminée;

90

## 0010660

la production d'un premier ordre de retransmission de donnée si le nombre d'erreurs présentes dans la donnée sismique fournie à partir du premier moyen des moyens activés de contrôle de géophone situés à distance est supérieur à la valeur prédéterminée;

la transmission de ce premier ordre de retransmission du moyen central de commande (23) par l'intermédiaire de la liaison bidirectionnelle à haute fréquence (68, 104, 110) au premier moyen des moyens activés (11a—11f) de contrôle de géophone situés à distance;

la retransmission de la donnée sismique du premier moyen des moyens (11a—11f) activés de contrôle de géophone situés à distance par l'intermédiaire de la liaison bidirectionnelle à haute fréquence (64, 104, 110) au moyen central de commande (23) en réponse au premier ordre de retransmission;

l'utilisation de la donnée sismique retransmise provenant du premier moyen des moyens activés de contrôle de géophone situés à distance afin de corriger des erreurs dans la donnée sismique qui fut transmise du premier moyen des moyens activés (11a—11f) de contrôle de géophone situés à distance en réponse au premier ordre de transmission de donnée.

11. Méthode selon la revendication 10, comprenant en outre les étapes de:

A) Production d'un second ordre de transmission de donnée après que la donnée sismique provenant du premier moyen des moyens activés de contrôle de géophone situés à distance ait été stockée au moyen central de commande;

B) transmission du second ordre de transmission de donnée du moyen central de commande par l'intermédiaire de la liaison bidirectionnelle à haute fréquence à un second moyen des moyens activés de contrôle de géophone situés à distance;

C) sortie de stockage de la donnée sismique et transmission de la donnée sismique du second moyen des moyens activés de contrôle de géophone situés à distance par l'intermédiaire de la liaison bidirectionnelle à haute fréquence au moyen central de commande en réponse au second ordre de transmission de signal de donnée;

D) détection des erreurs dans la donnée sismique fournie à partir du second moyen des moyens activés de contrôle de géophone situés à distance;

E) stockage de la donnée sismique au moyen central de commande si le nombre d'erreurs qui sont détectées dans la donnée sismique fournie à partir du second moyen des moyens activés de contrôle de géophone situés à distance est inférieur à la valeur prédéterminée;

F) production d'un second ordre de retransmission de donnée si le nombre d'erreurs présentes dans la donnée sismique fournie à partir du second moyen des moyens activés de contrôle de géophone situés à distance est supérieur à la valeur prédéterminée;

G) transmission du second ordre de retransmission du moyen central de commande par l'intermédiaire de la liaison bidirectionnelle à haute fréquence au second moyen des moyens activés de contrôle de géophone situés à distance;

H) retransmission de la donnée sismique du second moyen des moyens activés de contrôle de géophone situés à distance par l'intermédiaire de la liaison bidirectionnelle à haute fréquence au moyen central de commande en réponse au second ordre de retransmission;

I) utilisation de la donnée sismique retransmise à partir du second moyen des moyens activés de contrôle de géophone situés à distance pour corriger des erreurs dans la donnée sismique qui fut transmise à partir du second moyen des moyens activés de contrôle de géophone situés à distance en réponse au premier ordre de transmission de donnée; et

J) poursuite de la sortie de donnée de chacun des moyens activés de contrôle de géophone situés à distance selon la manière décrite dans les étapes A—H jusqu'à ce que la donnée sismique stockée dans chacun des moyens activés de contrôle de géophone situés à distance ait été reçue correctement et stockée au poste central de commande.

12. Méthode selon la revendication 10, où l'étape d'utilisation de la donnée sismique retransmise pour corriger la donnée sismique transmise à partir du premier moyen des moyens activés de contrôle de géophone situés à distance en réponse au premier ordre de transmission de donnée comprend l'emploi de blocs de donnée exempts d'erreurs dans la donnée sismique transmise à partir d'un premier moyen des moyens activés de contrôle de géophone situés à distance en réponse au premier ordre de retransmission pour remplacer de mauvais blocs de donnée dans la donnée sismique transmise à partir d'un premier moyen des moyens activés de contrôle de géophone situés à distance en réponse au premier ordre de transmission de donnée afin de corriger ainsi des erreurs dans la donnée sismique fournie à partir du premier moyen, des moyens activés de contrôle de géophone situés à distance en réponse au premier ordre de transmission de donnée.

13. Méthode selon la revendication 10, comprenant en outre les étapes de:

production d'un signal d'ordre de tir représentatif d'un ordre pour une source d'énergie sismique de conférer de l'énergie sismique à la terre et représentatif d'un ordre pour un moyen de contrôle de géophone situé à distance d'activer l'acquisition de données sismiques; et

91

transmission du signal d'ordre de tir depuis le moyen central de commande par l'intermédiaire de la liaison bidirectionnelle à haute fréquence jusqu'à la source d'énergie sismique et jusqu'à au moins un moyen de la pluralité de moyens de contrôle de géophone situés à distance, la source d'énergie sismique conférant de l'énergie à la terre en réponse à la réception du signal d'ordre de tir afin de produire ainsi des ondes sismiques dans la terre, au moins au moyen de la pluralité de moyens de contrôle de géophone situés à distance étant activé pour recevoir une donnée sismique en provenance du moyen de géophone en réponse à la réception du signal d'ordre de tir.

14. Méthode selon la revendication 10, où la méthode d'exécution d'un levé géophysique sismique comprend les étapes supplémentaires de:

production d'un order de test représentatif d'un ordre d'exécution d'un auto-test;
transmission de l'ordre de test depuis le moyen central de commande par l'intermédiaire de la liaison bidirectionnelle à haute fréquence jusqu'à au moins un moyen de la pluralité de moyens de contrôle de géophone situés à distance, au moins un moyen de la pluralité de moyens de contrôle de géophone situés à distance, étant activé pour exécuter une opération d'auto-test prédéterminée et pour stocker les résultats de l'opération d'auto-test prédéterminée en réponse à l'ordre de test;
un moyen pour produire un premier ordre de transmission de donnée de test après que tous les moyens de contrôle de géophone situés à distance, qui furent activés de manière à exécuter l'opération d'auto-test par l'ordre de test, ont terminé l'opération d'auto-test et ont stocké les résultats de l'auto-test;
transmission du premier ordre de transmission de donnée de test du moyen central de commande par l'intermédiaire de la liaison bidirectionnelle à haute fréquence à un premier moyen des moyens de contrôle de géophone situés à distance, qui furent activés pour exécuter l'opération d'auto-test;
sortie de stockage de la donnée d'auto-test et la transmission de la donnée d'auto-test du premier moyen des moyens de contrôle de géophone situés à distance, qui furent activés de façon à exécuter l'opération d'auto-test, par l'intermédiaire de la liaison bidirectionnelle à haute fréquence, au moyen central de commande en réponse au premier ordre de transmission de donnée de test;
détection des erreurs dans la donnée de test fournie à partir du premier moyen des moyens de contrôle de géophone situés à distance, qui furent activés pour exécuter l'opération de test;
affichage de la donnée de test, si le nombre d'erreurs qui sont présentes dans la donnée de test est inférieur à la valeur prédéterminée, afin de fournir une indication immédiate de l'état de fonctionnement du premier moyen des moyens de contrôle de géophone situés à distance, qui furent activés de manière à exécuter l'opération d'auto-test;
production d'un premier ordre de retransmission si le nombre d'erreurs présentes dans la donnée de test fournie à partir du premier moyen des moyens de contrôle de géophone situés à distance qui furent activés de manière à exécuter l'opération d'auto-test est supérieur à la valeur prédéterminée;
transmission du premier ordre de retransmission depuis le moyen central de commande par l'intermédiaire de la liaison bidirectionnelle à haute fréquence jusqu'au premier moyen des moyens de contrôle de géophone situés à distance, qui furent activés de manière à exécuter l'opération d'auto-test;
retransmission de la donnée de test depuis le premier moyen des moyens de contrôle de géophone situés à distance, qui furent activés de manière à exécuter l'opération d'auto-test, par l'intermédiaire de la liaison bidirectionnelle à haute fréquence, jusqu'au moyen central de commande; et
utilisation de la donnée de test retransmise pour corriger la donnée de test qui fut fournie à partir du premier moyen des moyens de contrôle de géophone situés à distance, qui furent activés de manière à exécuter l'opération d'auto-test, en réponse au premier ordre de transmission de donnée de test.

15. Méthode selon la revendication 14, comprenant en outre, les étapes de:

A) production d'un second ordre de transmission de donnée de test après que la donnée de test provenant du premier moyen des moyens de contrôle de géophone situés à distance, qui furent activés de manière à exécuter l'opération d'auto-test, ait été correctement transmise au moyen central de commande;

B) transmission du second ordre de transmission de donnée de test depuis le moyen central de commande par l'intermédiaire de la liaison bidirectionnelle à haute fréquence jusqu'à un second moyen des moyens de contrôle de géophone situés à distance qui furent activés de manière à exécuter l'opération d'auto-test;

C) sortie de stockage de la donnée de test et transmission de la donnée de test depuis le second moyen des moyens de contrôle de géophone situés à distance, qui furent activés de manière à exécuter

**0 010 660**

l'opération d'auto-test, par l'intermédiaire de la liaison bidirectionnelle à haute fréquence, jusqu'au moyen central de commande en réponse au second ordre de transmission de donnée de test;

D) détection des erreurs dans la donnée de test fournie à partir du second moyen des moyens de contrôle géophone situés à distance qui furent activés de manière à exécuter l'opération d'auto-test;

E) affichage de la donnée de test au moyen central de commande si le nombre d'erreurs qui sont détectées dans la donnée de test fournie à partir du second moyen des moyens de contrôle de géophone situés à distance qui furent activés de manière à exécuter l'opération d'auto-test est inférieur à la valeur prédéterminée;

F) production d'un second ordre de retransmission de donnée si le nombre d'erreurs présentes dans la donnée sismique de test provenant du second moyen des moyens de contrôle de géophone situés à distance qui furent activés de manière à exécuter l'opération d'auto-test est supérieur à la valeur prédéterminée;

G) transmission du second ordre de retransmission depuis le moyen central de commande par l'intermédiaire de la liaison bidirectionnelle à haute fréquence jusqu'au second moyen des moyens de contrôle de géophone situés à distance qui furent activés de manière à exécuter l'opération d'auto-test;

H) retransmission de la donnée de test du second moyen des moyens de contrôle de géophone situés à distance, qui furent activés de manière à exécuter l'opération d'auto-test, par l'intermédiaire de la liaison bidirectionnelle à haute fréquence au moyen central de commande en réponse au second ordre de retransmission;

I) utilisation de la donnée de test retransmise à partir du second moyen des moyens de contrôle de géophone situés à distance, qui furent activés de manière à exécuter l'opération d'auto-test, afin de corriger des erreurs dans la donnée sismique de test qui fut transmise du second moyen des moyens de contrôle de géophone situés à distance, qui furent activés de manière à exécuter l'opération d'auto-test, en réponse au second ordre de transmission de donnée d'essai; et

J) poursuite de la sortie de données de chaque moyen de la pluralité de moyens activés de contrôle de géophone situés à distance selon la manière décrite dans les étapes A—I jusqu'à ce que la donnée de test stockée dans chaque moyen de la pluralité des moyens de contrôle de géophone situés à distance, qui furent activés de manière à exécuter l'opération d'auto-test, ait été reçue correctement au moyen central de commande.

16. Méthode selon la revendication 14, où l'étape d'utilisation de la donnée sismique retransmise afin de corriger la donnée sismique transmise à partir du premier moyen des moyens de contrôle de géophone situés à distance, qui furent activés de manière à exécuter l'opération d'auto-test, en réponse au premier ordre de transmission de donnée de test, comprend l'emploi de blocs de donnée exempts d'erreurs dans la donnée sismique transmise à partir du premier moyen des moyens de contrôle de géophone situés à distance, qui furent activés de manière à exécuter l'opération d'auto-test, en réponse au premier ordre de retransmission afin de remplacer les mauvais blocs de donnée dans la donnée sismique transmise à partir du premier moyen des moyens de contrôle de géophone situés à distance, qui furent activés de manière à exécuter l'opération d'auto-test, en réponse au premier ordre de transmission de donnée de test de façon à corriger ainsi des erreurs dans la donnée sismique fournie à partir du premier moyen des moyens de contrôle de géophone situés à distance, qui furent activés de manière à exécuter l'opération d'auto-test, en réponse au premier ordre de transmission de donnée.

17. Méthode selon la revendication 14, où l'opération d'auto-test prédéterminée comprend:

la détermination de la température du moyen de contrôle de géophone situé à distance;

la détermination du fait que de l'énergie est présente pour le moyen de contrôle de géophone situé à distance; et

la détermination du fait que le moyen d'exécution de l'opération de traitement de donnée présélectionnée est en état de fonctionnement.

FIG. 1

FIG. 2a

FIG. 2b

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

0010660

FIG. 20

FIG. 21

FIG. 22a

FIG. 22 b

FIG. 23

FIG. 24

21

FIG. 25

FIG. 26

FIG. 27

FIG. 28

23

FIG. 29

24

COMMAND
DATA
IN

2565

CONDITIONER

2566

61

2562

2564

PRE-MODULATION
LP FILTER

VOICE IN

2561

LIMITER

50

2563

OSC | X3 | X3 | X2 | DRIVER | POWER AMPL. | LPF

2568    2569    2571    2572    2573    2574    2575

63

64

TO RCVR 68    2576

2577

FIG. 30

64

63

2581
RF AMPL.

2582
RF AMPL.

2583
1ST MIXER

2586
I.F. AMPL.

2588
10.7 MHz BANDPASS FILTER

2589
I.F. AMPL.

2592
DISCRIM- INATOR

2593
LOW PASS FILTER/ BUFFER

2594
DATA DECODER

DATA (NRZ)

69

CLOCK (100kHz)

TO TRANSMITTER 59

2584
OSCILLATOR

2585
BUFFER

2596
OSCILLATOR

2591
2ND MIXER

2597
455 kHz BANDPASS FILTER

2598
I.F. AMPL.

2599
PLL FM DETECTOR

2600
AUDIO AMPL.

2601

SPEAKER

FIG. 31

FIG. 32

0010660

**FIG. 33**

+5V 2324

I7
I6
I5
I4
I3
I2
INTERRUPT #1 I1
INTERRUPT #2 I0

ENCODER 2323

A2
A1
A0
GS

2326

VECTOR ADDRESS

+5V 2332

D SET

2331

SCLK CLK RST

TO MICROPROGRAM
SEQUENCER ADDRESS
SOURCE SELECT
MULTIPLEXER

+5V 2328

SET Q

SCLK CLK Q̄

RST

2327

2329 +5V

2338    IE 2339    2341

ENABLE

PUP

SCLK

2334 +5V    +5V 2330

D SET

2335    2336

CLK

RST Q̄

INTERRUPT

**FIG. 34**

STATUS LINES

SCLK CLK

DATA LATCH 2344

ARITHMETIC/LOGIC UNIT STATUS

DATA LATCH 2347

CLK

2349

C̄B̄L̄ S1
ĪĒ S0
SCLK E

DECODER

Q3
Q2

DATA LATCH 2348

CLK

1 OF 16 DECODER

2345

BRANCH CONDITION

FIG. 35

FIG. 36

0010660

D0
D1
D2
D3
D4
D5
D6
D7

A15  2364   2366   2367 +5V   2368

A14
A13
A12
A11   BUFFER
A10
A9
A8

A7
A6   2369
A5
A4

A3   2372   2373
A2          2374
2375   2371

VMA

A1
A0
R/W
Ø2
RESET

D0-D7
CS0
CS1
CS2   PERIPHERAL
RS0   INTERFACE
RS1   ADAPTER
R/W
ENABLE   2361
RESET

D0-D7
CS0
CS1
CS2   PERIPHERAL
RS0   INTERFACE
RS1   ADAPTER
R/W
ENABLE   2362
RESET

D0-D7
CS0
CS1
CS2   PERIPHERAL
RS0   INTERFACE
RS1   ADAPTER
R/W
ENABLE   2363
RESET

FIG. 37

FIG. 38

FIG. 39

FIG. 40

FIG. 41

FIG. 42

FIG. 43

**FIG. 44**

**FIG. 45**

FIG. 46

FIG. 47a

FIG. 47b

FIG. 48

FIG. 49

FIG. 50

FIG. 51

FIG. 52

FIG. 53

*FIG. 54*

*FIG. 55*

FIG. 56

FIG. 57

FIG. 58

FIG. 59

FIG. 60

FIG. 61

FIG. 62

FIG. 63

FIG. 64

FIG. 65

*FIG. 66*

FIG. 67

FIG. 68

FIG. 69

FIG. 70

FIG. 71

FIG. 72

FIG. 73